# EUROPÄISCHE PATENTSCHRIFT

(11) **EP 4 149 992 B1**
(45) Veröffentlichungstag und Bekanntmachung des Hinweises auf die Patenterteilung: **10.01.2024**
(21) Anmeldenummer: 20765023.5
(22) Anmeldetag: 07.09.2020
(51) Int. Cl.: C08G 65/48, C08G 63/60, C08G 63/66

(54) **VERFAHREN ZUR HERSTELLUNG VON MIT POLYCARBONSÄUREN VERNETZTEN POLYGLYCERINESTERN DER 3-HYDROXYBUTTERSÄURE**
PROCESS FOR PREPARING POLYCARBOXYLIC ACID ESTER-CROSS-LINKED POLYGLYCEROL ESTERS OF 3-HYDROXYBUTYRIC ACID
PROCÉDÉ DE PRÉPARATION D'ESTERS DE POLYGLYCÉROL RÉTICULÉS PAR UN ESTER D'ACIDE POLYCARBOXYLIQUE D'ACIDE 3-HYDROXYBUTYRIQUE

(30) Priorität: 13.07.2020 WO PCT/EP2020/069766
(43) Veröffentlichungstag der Anmeldung: 22.03.2023
(73) Patentinhaber: KetoLipix Therapeutics GmbH, 20459 Hamburg (DE)
(72) Erfinder: LOCHMANN, Dirk, 58453 Witten (DE); REYER, Sebastian, 58453 Witten (DE); STEHR, Michael, 58453 Witten (DE)
(74) Vertreter: Von Rohr Patentanwälte Partnerschaft mbB
(86) Internationale Anmeldenummer: PCT/EP2020/074896
(87) Internationale Veröffentlichungsnummer: WO 2022/012768

(56) Entgegenhaltungen:
- US-A- 4 701 443
- US-A- 5 693 850
- US-A1- 2018 195 096

## Beschreibung

Die vorliegende Erfindung betrifft das Gebiet der Ketokörper und des damit zusammenhängenden Stoffwechsels sowie die Therapie von damit im Zusammenhang stehenden Erkrankungen.

Insbesondere betrifft die vorliegende Erfindung ein Verfahren zur Herstellung von mit Polycarbonsäuren vernetzten Polyglycerinestern der 3-Hydroxybuttersäure, sowie die auf diese Weise erhältlichen bzw. hergestellten Reaktionsprodukte (d. h. mit Polycarbonsäuren vernetzte Polyglycerinester der 3-Hydroxybuttersäure) und deren Verwendung, insbesondere in pharmazeutischen Zusammensetzungen, wie Arzneimitteln oder Medikamenten, oder in Kosmetika oder kosmetischen Zusammensetzungen oder in Nahrungsmittel- und/oder Lebensmittelerzeugnissen, sowie deren weitere Anwendungen bzw. Verwendungen.

Des Weiteren betrifft die vorliegende Erfindung pharmazeutische Zusammensetzungen, insbesondere Arzneimittel oder Medikamente, welche die nach dem erfindungsgemäßen Herstellungsverfahren erhältlichen bzw. hergestellten Reaktionsprodukte (d. h. mit Polycarbonsäuren vernetzte Polyglycerinester der 3-Hydroxybuttersäure) umfassen, sowie deren Anwendungen bzw. Verwendungen.

Weiterhin betrifft die vorliegende Erfindung Kosmetika oder kosmetische Zusammensetzungen, welche die nach dem erfindungsgemäßen Herstellungsverfahren erhältlichen bzw. hergestellten Reaktionsprodukte (d. h. mit Polycarbonsäuren vernetzte Polyglycerinester der 3-Hydroxybuttersäure) umfassen, sowie deren Anwendungen bzw. Verwendungen.

Schließlich betrifft die vorliegende Erfindung Nahrungsmittel- und/oder Lebensmittelerzeugnisse, insbesondere Nahrungsergänzungsmittel, funktionelle Lebensmittel (*Functional Food*), *Novel Food*, Lebensmittelzusatzstoffe, Nahrungszusätze, diätetische Lebensmittel, Power-Snacks, Appetitzügler und Kraft- und/oder Ausdauersport-Supplements, welche die nach dem erfindungsgemäßen Herstellungsverfahren erhältlichen bzw. hergestellten Reaktionsprodukte (d. h. mit Polycarbonsäuren vernetzte Polyglycerinester der 3-Hydroxybuttersäure) umfassen, sowie deren Anwendungen bzw. Verwendungen.

Im menschlichen Energiestoffwechsel ist Glucose der kurzfristig zur Verfügung stehende Energieträger, welcher in den Mitochondrien unter Freisetzung von Wasser und Kohlendioxid zu Energie verstoffwechselt wird. Bereits durch die Schlafperiode während der Nacht sind aber die Glycogenspeicher der Leber geleert. Jedoch benötigen vor allem das menschliche zentrale Nervensystem (ZNS) und das Herz eine permanente Energieversorgung.

Die physiologische Alternative zu Glucose, welche vor allem dem zentralen Nervensystem zur Verfügung steht, sind die sogenannten Ketokörper (synonym auch als Ketonkörper bezeichnet oder Englisch auch als "*Keton Bodies*" bezeichnet).

Der Begriff der Ketokörper ist insbesondere eine Sammelbezeichnung für drei Verbindungen, welche vor allem in katabolen Stoffwechsellagen (wie z. B. bei Hunger, Reduktionsdiät oder kohlenhydratarmer Ernährung) gebildet werden und unter Umständen zu einer Ketose führen. Unter den Begriff der Ketokörper fasst man insbesondere die drei Verbindungen Acetoacetat (synonym auch Acetacetat genannt) und Aceton sowie 3-Hydroxybuttersäure (nachfolgend synonym auch als beta-Hydroxybuttersäure oder BHB oder 3-BHB bezeichnet) bzw. deren Salz (d. h. 3-Hydroxybutyrat oder beta-Hydroxybutyrat) zusammen, wobei letztere Verbindung die bedeutendste der drei vorgenannten Verbindungen ist. 3-Hydroxybuttersäure bzw. deren Salz kommt physiologisch als (R)-Enantiomer vor, d. h. als (R)-3-Hydroxybuttersäure (synonym auch (3R)-3-Hydroxybuttersäure genannt, um das Chiralitätszentrum in 3-Position hervorzuheben) bzw. deren Salz.

Diese Ketokörper werden auch in großer Zahl beim Fasten oder Hungern physiologisch aus im Körper eingelagerten Lipiden durch Lipolyse bereitgestellt und ersetzen den Energieträger Glucose fast vollständig.

Die Ketokörper werden in der Leber aus Acetyl-Coenzym A (= Acetyl-CoA) gebildet, welches aus der beta-Oxidation stammt; sie stellen eine transportable Form des Acetyl-Coenzyms A im menschlichen Körper dar. Zur Verwertung der Ketokörper müssen sich Gehirn und Muskeln aber zunächst umstellen, indem sie Enzyme exprimieren, welche zur Rückwandlung von Ketokörpern in Acetyl-Coenzym A benötigt werden. Insbesondere in Hungerzeiten tragen die Ketokörper einen beträchtlichen Anteil zur Energiegewinnung bei. So ist es beispielsweise dem Gehirn nach einiger Zeit möglich, mit nur einem Drittel der Tagesmenge an Glucose auszukommen.

Physiologisch erfolgt die Synthese der Ketokörper aus zwei Molekülen aktivierter Essigsäure in Form von Acetyl-Coenzym A, dem normalen Zwischenprodukt des Fettsäureabbaus, wobei zunächst mit Hilfe der Acetyl-Coenzym A-Acetyltransferase das Acetoacetyl-Coenzym A gebildet wird, welches unter Verwendung einer weiteren Acetyl-Coenzym A-Einheit und des Enzyms HMG-CoA-Synthase zum Zwischenprodukt 3-Hydroxy-3-methyl-glutaryl-CoA (HMG-CoA) verlängert wird, wobei schließlich die HMG-CoA-Lyase das Acetoacetat abspaltet. Diese drei Schritte finden ausschließlich in den Mitochondrien der Leber statt (Lynenzyklus), wobei 3-Hydroxybutyrat schließlich im Zytosol durch die D-beta-Hydroxybutyrat-Dehydrogenase entsteht. HMG-CoA ist außerdem ein Endprodukt beim Abbau der Aminosäure Leucin, während Acetoacetat beim Abbau der Aminosäuren Phenylalanin und Tyrosin entsteht.

Durch spontane Decarboxylierung entsteht aus Acetoacetat Aceton; es ist gelegentlich im Atem von Diabetikern und Diäthaltenden wahrzunehmen. Es kann vom Körper nicht weiterverwendet werden. Der Anteil von Aceton an den Ketokörpern ist allerdings gering.

Acetoacetat wird also reduktiv in die physiologisch relevante Form der 3-Hydroxybuttersäure bzw. des 3-Hydroxybutyrats überführt, kann aber auch unter Kohlenstoffdioxidfreisetzung in das physiologisch unbrauchbare Aceton zerfallen, was bei einer schweren Ketose, einer Ketoacidose (z. B. bei Diabetes mellitus Typ 1-Patienten ohne Insulinsubstitution), im Urin und in der Ausatemluft nachweisbar und olfaktorisch wahrnehmbar ist.

3-Hydroxybuttersäure wird derzeit im Bereich des Kraftsports als Natrium-, Magnesium- oder Calcium-Salz eingesetzt und in den Handel gebracht.

Jedoch ist 3-Hydroxybuttersäure für den Menschen evolutionär nicht oder in nur sehr geringer Menge bekannt, da Pflanzen keine 3-Hydroxybuttersäure produzieren und 3-Hydroxybuttersäure im tierischen Organismus nur bei toten ausgezehrten Tieren in der Ketose vorkommt, so dass 3-Hydroxybuttersäure bei peroraler Verabreichung Brechreiz auslöst. 3-Hydroxybuttersäure in Form der freien Säure sowie deren Salzen schmeckt zudem stark bitter und kann schweres Erbrechen und Übelkeit hervorrufen.

Zudem können Patienten, vor allem Neugeborene, aber auch Erwachsene größere Mengen an Salzen der 3-Hydroxybuttersäure nicht permanent verkraften, da diese Verbindungen nierenschädigend wirken können.

Außerdem ist die Plasmahalbwertszeit von 3-Hydroxybuttersäure und deren Salzen derart gering, dass selbst bei Einnahme von mehreren Gramm die Ketose nur für ca. drei bis vier Stunden vorhält, d. h. Patienten können insbesondere während der Nacht daher nicht von einer Therapie mit 3-Hydroxybuttersäure oder deren Salzen kontinuierlich profitieren. Bei Stoffwechselerkrankungen kann dies zu lebensbedrohlichen Situationen führen.

Daher werden im Fall der Therapie derartiger Stoffwechselerkrankungen heute sogenannte mittelkettige Triglyceride, sogenannte MCTs, für die ketogene Therapie eingesetzt, d. h. es wird die metabolische Umwandlung von Capron-, Capryl- und Caprinsäure (d. h. von gesättigten linearen C₆-, C₈- und C₁₀-Fettsäuren) aus den korrespondierenden Triglyceriden beabsichtigt.

Grundsätzlich stellt aber aus pharmazeutischer und klinischer Hinsicht 3-Hydroxybuttersäure demgegenüber ein wirksameres pharmazeutisch-pharmakologisches Zielmolekül, welches nach den Erkenntnissen des Standes der Technik prinzipiell für die Therapie einer Vielzahl von Erkrankungen zum Einsatz kommen könnte, aber aufgrund seiner mangelnden physiologischen Kompatibilität dort nicht zum Einsatz kommen kann (z. B. bei Erkrankungen im Zusammenhang mit einer Störung des Energiestoffwechsels, insbesondere Ketokörperstoffwechsels, oder neurodegenerativen Erkrankungen wie Demenz, Morbus Alzheimer, Morbus Parkinson etc., Fettstoffwechselerkrankungen usw.).

Die nachfolgende Tabelle veranschaulicht rein beispielhaft, aber keinesfalls beschränkend potentielle Therapiemöglichkeiten bzw. mögliche Indikationen für den Wirkstoff 3-Hydroxybuttersäure.

| **Indikation** | **Therapeutischer Effekt** |
|---|---|
| Schädel-Hirn-Trauma | Unter BHB sinkt die Apoptose und Nekrose-Rate von Nervenzellen. |
| Schlaganfall | Unter BHB sinkt die Apoptose und Nekrose-Rate von Nervenzellen. |
| Refeeding-Syndrom | Bei Anorexie, Absetzen enteraler oder parenteraler Ernährung und nach langen Hungerperioden kann der Konsum von Stärke oder Glucose zum Tod führen (siehe auch WHO-Schema Erdnusspaste). BHB kann hier als Therapeutikum zum schnelleren Erlangen einer normalen Nahrungsaufnahme eingesetzt werden. |
| Appetitzügler | BHB unterdrückt im Zentralnervensystem (ZNS) das Hungergefühl. |
| Epilepsie | Herkömmliche ketogene Diät zur signifikanten Reduzierung der Häufigkeit von Krampfanfällen hat extrem schlechte Patienten-Verträglichkeit. BHB bietet hier eine unmittelbar wirksame Alternative. |
| Morbus Alzheimer, Demenz | Unter BHB zeigen Patienten eine bessere kognitive Leistung. BHB ist auch für die Prävention von neurodegenerativen Erkrankungen wirksam. |
| Störungen der Fettsäureoxidation (z. B. Electron-Transfer-Protein Defekt) | Ausgleich eines Nährstoffmangels bei Defekt im Energiestoffwechsel. |

Daher ist es aus pharmazeutischer und klinischer Hinsicht wünschenswert, wirksame Präkursoren oder Metabolite auffinden zu können, welche physiologisch einen direkten oder indirekten Zugang zu 3-Hydroxybuttersäure oder deren Salzen ermöglichen, insbesondere im physiologischen Stoffwechsel des menschlichen oder tierischen Körpers.

Folglich hat es im Stand der Technik nicht an Versuchen gefehlt, physiologisch geeignete Präkursoren oder Metaboliten für 3-Hydroxybuttersäure bzw. deren Salze aufzufinden. Bislang wurden im Stand der Technik jedoch keine effizienten diesbezüglichen Verbindungen aufgefunden. Auch ist ein diesbezüglicher Zugang zu solchen Verbindungen nach dem Stand der Technik bislang nicht bzw. nicht ohne Weiteres möglich.

Die US 4,701,443 A betrifft synthetische Polyester, welche als Kalorienquelle für parenterale oder enterale Ernährung verwendet werden, wobei die Polyester vom Körper hydrolysiert und respiriert werden und eine hohe Kaloriendichte bereitstellen.

Weiterhin betrifft die US 5,693,850 A ein Verfahren zur Herstellung von wasserlöslichen Glycerinestern, welche als parenterale Nährstoffe geeignet sind, wobei das Verfahren die Reaktion von Glycerin oder einem geschützten Glycerin und einem Acetoacetatester oder einer Acetoacetatvorstufe umfasst, wobei ein Acetoacetylglycerin hergestellt wird, welches anschließend reduziert wird, wodurch ein Glycerinester von 3-Hydroxybuttersäure hergestellt wird.

Schließlich betrifft die US 2018/195096 A1 Verbindungen und Zusammensetzungen, welche (R)-3-Hydroxybutyratderivate enthalten, wobei die Verbindungen und Zusammensetzungen als Nahrungsergänzungsmittel zur Steigerung der körperlichen Leistungsfähigkeit und als Therapeutikum zur Linderung von Symptomen medizinischer Zustände, insbesondere neurologischer Zustände, wie Alzheimer und ähnlicher Zustände, verwendet werden. Weiterhin betrifft die US 2018/195096 A1 ein Verfahren zur Herstellung von R-3-Hydroxybutyratderivaten, wobei das Verfahren ein überkritisches Lösemittel, wie beispielsweise überkritisches Kohlendioxid, und eine Lipase-katalysierte Veresterungs- oder Umesterungsreaktion umfasst.

Das der vorliegenden Erfindung zugrundeliegende Problem liegt also in der Bereitstellung eines effizienten Herstellungsverfahrens von physiologisch geeigneten bzw. physiologisch kompatiblen Präkursoren und/oder Metaboliten von 3-Hydroxybuttersäure (d. h. beta-Hydroxybuttersäure bzw. BHB bzw. 3-BHB) oder deren Salzen.

Ein solches Verfahren soll insbesondere die betreffenden BHB-Präkursoren und/oder BHB-Metaboliten in effizienter Weise zugänglich machen, insbesondere auch in größeren Mengen und ohne nennenswerte Mengen an toxischen Nebenprodukten.

In vollkommen überraschender Weise hat die Anmelderin nunmehr herausgefunden, dass mit Polycarbonsäuren vernetzte Polyglycerinester der 3-Hydroxybuttersäure einen effizienten und physiologisch wirksamen bzw. physiologisch kompatiblen Präkursor und/oder Metaboliten für den Ketokörper 3-Hydroxybuttersäure bzw. deren Salze darstellen, und hat in diesem Zusammenhang ein effizientes Herstellungsverfahren für diese Verbindungen auffinden bzw. entwickeln können, welches einen direkten und wirksamen, insbesondere ökonomischen wie auch großtechnisch umsetzbaren Zugang zu diesen Verbindungen ermöglicht.

Zur Lösung des zuvor geschilderten Problems schlägt die vorliegende Erfindung daher - gemäß einem **ersten** Aspekt der vorliegenden Erfindung - ein Verfahren zur Herstellung von mit Polycarbonsäuren vernetzten Polyglycerinestern der 3-Hydroxybuttersäure gemäß Anspruch 1 vor; weitere, insbesondere besondere und/oder vorteilhafte Ausgestaltungen des erfindungsgemäßen Verfahrens sind Gegenstand der diesbezüglichen Verfahrensunteransprüche.

Weiterhin betrifft die vorliegende Erfindung - gemäß einem **zweiten** Aspekt der vorliegenden Erfindung - ein nach dem erfindungsgemäßen Verfahren erhältliches Reaktionsprodukt bzw. einen mit Polycarbonsäuren vernetzten Polyglycerinester der 3-Hydroxybuttersäure gemäß den diesbezüglichen Ansprüchen (Ansprüche 8 bis 18) bzw. ein diesbezügliches Gemisch von mindestens zwei mit Polycarbonsäuren vernetzten Polyglycerinestern der 3-Hydroxybuttersäure gemäß dem diesbezüglichen Anspruch (Anspruch 19); weitere, insbesondere besondere und/oder vorteilhafte Ausgestaltungen dieses Erfindungsaspekts sind Gegenstand der diesbezüglichen Unteransprüche.

Gleichermaßen betrifft die vorliegende Erfindung - gemäß einem **dritten** Aspekt der vorliegenden Erfindung - eine pharmazeutische Zusammensetzung, insbesondere Arzneimittel oder Medikament, gemäß dem diesbezüglichen unabhängigen Anspruch (Anspruch 20).

Darüber hinaus betrifft die vorliegende Erfindung - gemäß einem **vierten** Aspekt der vorliegenden Erfindung - ein erfindungsgemäßes Reaktionsprodukt bzw. einen erfindungsgemäßen mit Polycarbonsäuren vernetzten Polyglycerinester der 3-Hydroxybuttersäure bzw. ein erfindungsgemäßes Gemisch von mindestens zwei mit Polycarbonsäuren vernetzten Polyglycerinestern der 3-Hydroxybuttersäure zur prophylaktischen und/oder therapeutischen Behandlung bzw. zur Verwendung bei der prophylaktischen und/oder therapeutischen Behandlung von Erkrankungen des menschlichen oder tierischen Körpers gemäß dem diesbezüglichen unabhängigen Anspruch (Anspruch 21).

Darüber hinaus betrifft die vorliegende Erfindung - gemäß einem **fünften** Aspekt der vorliegenden Erfindung - die Verwendung eines erfindungsgemäßen Reaktionsprodukts bzw. eines erfindungsgemäßen mit Polycarbonsäuren vernetzten Polyglycerinesters der 3-Hydroxybuttersäure bzw. eines erfindungsgemäßen Gemischs von mindestens zwei mit Polycarbonsäuren vernetzten Polyglycerinestern der 3-Hydroxybuttersäure gemäß dem diesbezüglichen unabhängigen Anspruch (Anspruch 22).

Weiterhin betrifft die vorliegende Erfindung - gemäß einem **sechsten** Aspekt der vorliegenden Erfindung - ein Kosmetikum oder eine kosmetische Zusammensetzung gemäß dem diesbezüglichen unabhängigen Anspruch (Anspruch 23).

Des Weiteren betrifft die vorliegende Erfindung - gemäß einem **siebten** Aspekt der vorliegenden Erfindung - ein Nahrungsmittel und/oder Lebensmittelerzeugnis gemäß dem diesbezüglichen unabhängigen Anspruch (Anspruch 24).

Es versteht sich bei den nachfolgenden Ausführungen von selbst, dass Ausgestaltungen, Ausführungsformen, Vorteile und dergleichen, welche nachfolgend zu Zwecken der Vermeidung von Wiederholungen nur zu einem Erfindungsaspekt ausgeführt sind, selbstverständlich auch in Bezug auf die übrigen Erfindungsaspekte entsprechend gelten, ohne dass dies einer gesonderten Erwähnung bedarf.

Des Weiteren versteht es sich von selbst, dass einzelne Aspekte und Ausführungsformen der vorliegenden Erfindung auch in beliebiger Kombination mit anderen Aspekten und Ausführungsformen der vorliegenden Erfindung als offenbart gelten und insbesondere auch eine beliebige Kombination von Merkmalen und Ausführungsformen, wie sie sich aus den Rückbezügen aller Patentansprüche ergibt, umfangreich als offenbart gilt, und zwar im Hinblick auf alle sich ergebenden Kombinationsmöglichkeiten.

Bei allen nachstehend genannten relativen bzw. prozentualen gewichtsbezogenen Angaben, insbesondere relativen Mengen- oder Gewichtsangaben, ist weiterhin zu beachten, dass diese im Rahmen der vorliegenden Erfindung vom Fachmann derart auszuwählen sind, dass sie sich in der Summe unter Einbeziehung aller Komponenten bzw. Inhaltsstoffe, insbesondere wie nachfolgend definiert, stets zu 100 % bzw. 100 Gew.-% ergänzen bzw. addieren; dies versteht sich aber für den Fachmann von selbst.

Im Übrigen gilt, dass der Fachmann - anwendungsbezogen oder aber einzelfallbedingt - von den nachfolgend angeführten Bereichsangaben erforderlichenfalls abweichen kann, ohne dass er den Rahmen der vorliegenden Erfindung verlässt.

Zudem gilt, dass alle im Folgenden genannten Werte- bzw. Parameterangaben oder dergleichen grundsätzlich mit genormten bzw. standardisierten oder explizit angegebenen Bestimmungsverfahren oder andernfalls mit dem Fachmann auf diesem Gebiet an sich geläufigen Bestimmungs- bzw. Messmethoden ermittelt bzw. bestimmt werden können.

Dies vorausgeschickt, wird die vorliegende Erfindung nunmehr nachfolgend im Detail erläutert.

Gegenstand der vorliegenden Erfindung - gemäß einem **ersten** Aspekt der vorliegenden Erfindung - ist somit ein Verfahren zur Herstellung von mit Polycarbonsäuren vernetzten Polyglycerinestern der 3-Hydroxybuttersäure,
wobei
(i) mindestens eine 3-Hydroxybuttersäureverbindung der allgemeinen Formel (I)

   CH₃ - CH(OH) - CH₂ - C(O)OR¹ (I)

   wobei in der allgemeinen Formel (I) der Rest R¹ Wasserstoff, einen Rest - (O)C - CH₂ - CH(OH) - CH₃ oder ein C₁-C₄-Alkyl, insbesondere ein C₁-C₄-Alkyl, bevorzugt Methyl oder Ethyl, besonders bevorzugt Ethyl, darstellt,
(ii) mindestens einem Polyglycerin (II) der allgemeinen Formel (IIa)

   HO - CH₂ - CH(OH) - CH₂ - [O - CH₂ - CH(OH) - CH₂]ₚ - OH (IIa)

   wobei in der allgemeinen Formel (IIa) die Variable p eine ganze Zahl von 1 bis 6 darstellt,
   und
(iii) mindestens eine Polycarbonsäure (III), insbesondere mindestens eine mindestens zwei Carboxylgruppen enthaltende Polycarbonsäure, wobei die Polycarbonsäure (III) in Form der freien Polycarbonsäure, in Form eines Salzes der Polycarbonsäure, in Form eines Polycarbonsäureesters oder in Form des Polycarbonsäureanhydrids eingesetzt wird,

miteinander umgesetzt und/oder zur Reaktion gebracht werden,
wobei das Verfahren in Abwesenheit von Lösemitteln und/oder ohne jedwedes Lösemittel durchgeführt wird,
so dass als Reaktionsprodukt (IV) ein oder mehrere mit Polycarbonsäuren vernetzte Polyglycerinester der 3-Hydroxybuttersäure, insbesondere ein oder mehrere ein- oder mehrwertige mit Polycarbonsäuren vernetzte Polyglycerinester der 3-Hydroxybuttersäure, der allgemeinen Formel (IVa) 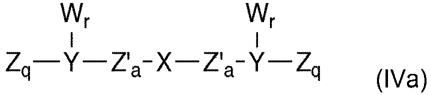 erhalten werden,
wobei in der allgemeinen Formel (IVa)
   - X einen Rest - C(O) - X' -C(O) - darstellt, wobei X' einen von einer Polycarbonsäure abgeleiteten Rest, insbesondere einen 1 bis 10, vorzugsweise 2 bis 6 Kohlenstoffatome enthaltenden und gegebenenfalls ein- oder mehrfach substituierten, insbesondere mit einem oder mehreren Hydroxyl-Resten und/oder Carboxyl-Resten substituierten, gesättigten oder ungesättigten organischen Rest, darstellt;
   - Y einen von einem Polyglycerin abgeleiteten Rest, insbesondere einen Rest der allgemeinen Formel (llc) 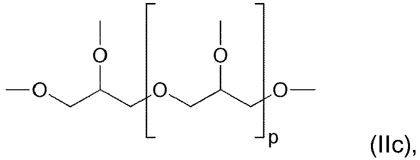 darstellt, wobei die Variable p eine ganze Zahl von 1 bis 6 ist;
   - Z einen Rest - C(O) - CH₂ - CH(OH) - CH₃ darstellt und die Variable q unabhängig voneinander eine ganze Zahl von 1 bis (p + 2) mit p wie zuvor definiert ist;
   - Z' einen Rest - C(O) - CH₂ - CH(CH₃) - O - darstellt und die Variable a unabhängig voneinander 0 oder 1 ist;
   - W unabhängig voneinander darstellt: Wasserstoff oder - X - OH mit X wie zuvor definiert oder aber einen oder mehrere Blöcke 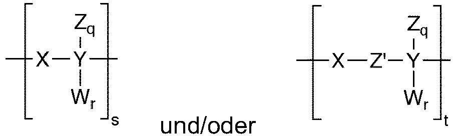 mit X, Y, Z, Z' und q jeweils wie zuvor definiert, wobei die Variablen s und t, jeweils unabhängig voneinander, eine ganze Zahl von 0 bis 30 sind und die Variable r unabhängig voneinander eine ganze Zahl von 0 bis (p + 1) mit p wie zuvor definiert ist, wobei das Kettenende der Blöcke jeweils durch Wasserstoff, - X - OH oder Z gebildet ist.

Gemäß der vorliegenden Erfindung wird somit insbesondere ein Herstellungsverfahren für polycarbonsäurevernetzte 3-Hydroxybuttersäure-Polyglycerinester bereitgestellt.

Im Rahmen des erfindungsgemäßen Verfahrens fungiert also die 3-Hydroxybuttersäureverbindung der allgemeinen Formel (I) als Veresterungs-Säure und reagiert hierüber insbesondere mit einer Hydroxylgruppe des Polyglycerins (II).

Im Rahmen der vorliegenden Erfindung ist die eingesetzte Polycarbonsäure (III) eine organische Polycarbonsäure; d. h. die Polycarbonsäure (III) ist eine organische Verbindung mit mehreren Carboxylgruppen (-COOH), welche folglich einen aciden Charakter aufweist.

Bei den erfindungsgemäß erhaltenen Polyglycerinestern handelt es sich Ester von Polyglycerin (wie beispielsweise von Diglycerin) und gerade nicht um mehrfach verestertes Glycerin (d. h. es handelt sich insbesondere nicht um Mono-, Di- und Triglyceride, also die ein-, zwei- und dreiwertigen Ester des Glycerins bzw. des 1,2,3-Propantriols).

Die Ein- und Mehrwertigkeit bezieht sich im Rahmen der vorliegenden Erfindung also auf die Anzahl der veresterten Gruppen des Polyglycerins (d. h. mit 3-Hydroxybuttersäure veresterte Gruppen).

Überraschenderweise hat die Anmelderin eine effiziente wie wirksame Möglichkeit gefunden 3-Hydroxybuttersäure bzw. deren Derivat in einer physiologisch wie organoleptisch kompatiblen Form bereitzustellen, wobei die 3-Hydroxybuttersäure dennoch gut freigesetzt werden kann, insbesondere vom tierischen oder menschlichen Körper.

Darüber hinaus ist es der Anmelderin gelungen, die organoleptisch und physiologisch kompatible Form der 3-Hydroxybuttersäure derart bereitzustellen, dass ein Retardierungseffekt vorliegt; d. h. die 3-Hydroxybuttersäure wird über einen längeren Zeitraum kontinuierlich freigesetzt, insbesondere vom menschlichen oder tierischen Körper.

Außerdem sind auch die weiteren Abbau- bzw. Abspaltprodukte (d. h. die Abspaltprodukte, welche neben bzw. zusätzlich zu der 3-Hydroxybuttersäure freigesetzt werden) vom Körper verwertbar, zumindest aber vom Körper verarbeitbar. Insbesondere werden u. a. Abspaltprodukte freigesetzt, welche Edukte, Produkte oder Zwischenprodukte des Citratzyklus sind oder aber Derivate bzw. Salze sind, welche durch Oxidation eines Edukts, Produkts oder Zwischenprodukts des Citratzyklus gebildet werden. Somit können auch die weiteren Abbau- bzw. Abspaltprodukte, welche bei der Freisetzung von 3-Hydroxybuttersäure gebildet werden, als Energiequelle vom tierischen oder menschlichen Körper genutzt werden. Bei diesen Abspaltprodukten handelt es sich typischerweise um die Polycarbonsäure (III). Darüber hinaus ist das Polyglycerin (II) ein nicht-toxischer und physiologisch kompatibler Träger, welcher vom Körper ohne Weiteres ausgeschieden wird.

Durch die Verwendung von Polyglycerin, welches eine Vielzahl von Hydroxylgruppen aufweist, ist es möglich, ein Molekül mit hoher Wirkstoffdichte, insbesondere hoher Dichte an 3-Hydroxybutanoaten bzw. 3-BHB oder entsprechenden Derivaten, bereitzustellen. Weiterhin kann in diesem Zusammenhang eine hohe Dichte auch an Polycarbonsäuren bereitgestellt werden, welche - wie zuvor ausgeführt - als weitere Energiequelle vom tierischen und/oder menschlichen Körper genutzt werden können. Darüber hinaus kann auch eine hohe Vernetzungsdichte erzielt werden. Es werden im Allgemeinen gelförmige Produkte erhalten, welche unter physiologischen Bedingungen 3-BHB und die Polycarbonsäure als weitere Energiequelle kontrolliert bzw. retardiert freisetzen.

Wie zuvor ausgeführt, hat die Anmelderin nämlich vollkommen überraschend herausgefunden, dass die auf diese Weise hergestellten mit Polycarbonsäuren vernetzten Polyglycerinester der 3-Hydroxybuttersäure, insbesondere ein- oder mehrwertigen mit Polycarbonsäuren vernetzten Polyglycerinester der 3-Hydroxybuttersäure, effiziente, da physiologisch verträgliche und auch organoleptisch kompatible Präkursoren und/oder Metabolite der 3-Hydroxybuttersäure bzw. deren Salzen darstellen, welche daher auch pharmazeutisch bzw. klinisch auch in größeren Mengen zum Einsatz kommen können.

Die vorgenannten mit Polycarbonsäuren vernetzten Polyglycerinester der 3-Hydroxybuttersäure, insbesondere ein- oder mehrwertigen mit Polycarbonsäuren vernetzten Polyglycerinester der 3-Hydroxybuttersäure, welche durch das erfindungsgemäße Herstellungsverfahren erstmals in effizienter Weise zugänglich sind, stellen somit eine physiologisch und pharmakologisch relevante Alternative zu der freien 3-Hydroxybuttersäure bzw. deren Salzen dar und sind zudem organoleptisch kompatibel.

Die Herstellung von mit Polycarbonsäuren vernetzten Polyglycerinester der 3-Hydroxybuttersäure, insbesondere ein- oder mehrwertigen mit Polycarbonsäuren vernetzten Polyglycerinester der 3-Hydroxybuttersäure, mittels herkömmlicher organischer Synthese ist komplex und aufwendig, da 3-Hydroxybuttersäure sowie deren Salze und Ester verstärkt zur Polymerisation und anderen unerwünschten Nebenreaktionen (z. B. Wasserabspaltung, Zersetzung etc.) neigen. Im Rahmen der vorliegenden Erfindung konnte erstmals ein effizient arbeitendes Herstellungsverfahren bereitgestellt werden, mit welchem sich mit Polycarbonsäuren vernetzte Polyglycerinester der 3-Hydroxybuttersäure, insbesondere ein- oder mehrwertige mit Polycarbonsäuren vernetzte Polyglycerinester der 3-Hydroxybuttersäure, mit verringerter Nebenproduktbildung herstellen lassen.

Das erfindungsgemäße Verfahren ermöglicht somit erstmalig die Bereitstellung untoxischer mit Polycarbonsäuren vernetzter Polyglycerinester der 3-Hydroxybuttersäure, insbesondere ein- oder mehrwertiger mit Polycarbonsäuren vernetzter Polyglycerinester der 3-Hydroxybuttersäure, aus an sich bekannten, kommerziell verfügbaren und vor allem physiologisch unbedenklichen Komponenten bzw. Edukten (Ausgangsverbindungen). Die resultierenden mit Polycarbonsäuren vernetzten Polyglycerinester der 3-Hydroxybuttersäure, insbesondere ein- oder mehrwertigen mit Polycarbonsäuren vernetzten Polyglycerinester der 3-Hydroxybuttersäure, können physiologisch, insbesondere im Magen und/oder im Darm, aufgespalten werden und das Zielmolekül "3-Hydroxybuttersäure" bzw. deren Salze oder Ester als Wirkstoff bzw. Wirkkomponente freisetzen bzw. generieren. Darüber hinaus weisen die vorgenannten mit Polycarbonsäuren vernetzten Polyglycerinester der 3-Hydroxybuttersäure, insbesondere ein- oder mehrwertigen mit Polycarbonsäuren vernetzten Polyglycerinester der 3-Hydroxybuttersäure, auch einen akzeptablen Geschmack auf, um eine Kompatibilität auch bei oraler Verabreichung größerer Mengen über einen längeren Zeitraum zu gewährleisten (z. B. Verabreichung von 50 g Tagesdosis oder mehr).

Gleichermaßen ermöglicht es das erfindungsgemäße Herstellungsverfahren, die mit Polycarbonsäuren vernetzten Polyglycerinester der 3-Hydroxybuttersäure, insbesondere ein- oder mehrwertigen mit Polycarbonsäuren vernetzten Polyglycerinester der 3-Hydroxybuttersäure, frei von toxischen Verunreinigungen bereitzustellen.

Darüber hinaus kann bei entsprechenden Ausgangsmaterialien die Herstellung auch enantioselektiv durchgeführt werden. So ermöglicht es beispielsweise das erfindungsgemäße Herstellungsverfahren, die biologisch relevante Form, d. h. das (R)-Enantiomer von BHB anzureichern, beispielsweise durch Enzymkatalyse oder die gezielte Auswahl der eingesetzten Ausgangsverbindungen (Edukte), um bei oraler Verabreichung das renale System von Patienten nicht zu belasten (d. h. Elimination über die Nieren). Grundsätzlich ist es aber auch möglich und kann es unter bestimmten Voraussetzungen zweckdienlich sein, das (S)-Enantiomer von BHB anzureichern.

Darüber hinaus ist das erfindungsgemäße Herstellungsverfahren, einschließlich optionaler Weiterverarbeitungs- bzw. Aufreinigungsverfahrensschritte, wirtschaftlich bzw. ökonomisch betreibbar und auch großtechnisch umsetzbar.

Insbesondere verwendet das erfindungsgemäße Herstellungsverfahren kommerziell verfügbare Edukte oder Edukte, welche durch einfache und großtechnisch durchführbare Verfahren synthetisiert werden können und ermöglicht darüber hinaus insgesamt eine relativ einfache Verfahrensführung auch bei großtechnischer Umsetzung.

Im Gegensatz zu herkömmlichen Herstellungsverfahren des Standes der Technik kommt das erfindungsgemäße Herstellungsverfahren ohne komplexe Edukte und ohne die Verwendung von Schutzgruppen aus. Dennoch werden im Rahmen des erfindungsgemäßen Herstellungsverfahrens exzellente Ausbeuten erzielt, wobei in gleicher Weise die Bildung von Nebenprodukten minimiert wird.

Darüber hinaus ist das erfindungsgemäße Verfahren einfach und wirtschaftlich. Insbesondere wird das erfindungsgemäße Verfahren in Abwesenheit von Lösemitteln und/oder ohne jedwedes Lösemittel durchgeführt (d. h. also als Reaktion in Masse bzw. als Reaktion in Substanz bzw. als sogenannte *Bulk Reaction*); folglich sind die erhaltenen Reaktionsprodukte nicht mit Lösemittel verunreinigt und es muss kein Lösemittel nach Durchführung des Verfahrens bzw. der Reaktion aufwendig und energieträchtig entfernt und entsorgt bzw. rezykliert werden. Es werden zudem auch keine toxischen Nebenprodukte gebildet.

Das erfindungsgemäße Herstellungsverfahren führt üblicherweise zu einem Gemisch verschiedener mit Polycarbonsäuren vernetzter Polyglycerinester der 3-Hydroxybuttersäure, insbesondere ein- oder mehrwertiger mit Polycarbonsäuren vernetzter Polyglycerinester der 3-Hydroxybuttersäure, d. h. zu einem Gemisch von mindestens zwei voneinander verschiedenen mit Polycarbonsäuren vernetzten Polyglycerinestern der 3-Hydroxybuttersäure, insbesondere ein- oder mehrwertigen mit Polycarbonsäuren vernetzten Polyglycerinestern der 3-Hydroxybuttersäure. Das resultierende Rohreaktionsprodukt bzw. Rohgemisch kann mit an sich bekannten Methoden ohne Weiteres aufgereinigt werden, insbesondere von gegebenenfalls noch vorhandenen Edukten und/oder gegebenenfalls vorhandenen Nebenprodukten befreit werden, und darüber hinaus - sofern gewünscht - mit ebenfalls an sich bekannten Methoden aufgespalten werden, insbesondere destillativ und/oder chromatographisch (z. B. Fraktionierung in die einzelnen mit Polycarbonsäuren vernetzten Polyglycerinester der 3-Hydroxybuttersäure, d. h. z. B. Trennung der entsprechenden Ester, oder aber Fraktionierung in Fraktionen mit angereicherten und abgereicherten Anteilen einzelner etc.).

Wie zuvor ausgeführt, betrifft die vorliegende Erfindung also gemäß dem ersten Aspekt ein Verfahren zur Herstellung von mit Polycarbonsäuren vernetzten Polyglycerinestern der 3-Hydroxybuttersäure,
wobei
(i) mindestens eine 3-Hydroxybuttersäureverbindung der allgemeinen Formel (I)

   CH₃ - CH(OH) - CH₂ - C(O)OR¹ (I)

   wobei in der allgemeinen Formel (I) der Rest R¹ Wasserstoff, einen Rest - (O)C - CH₂ - CH(OH) - CH₃ oder ein C₁-C₄-Alkyl, insbesondere ein C₁-C₄-Alkyl, bevorzugt Methyl oder Ethyl, besonders bevorzugt Ethyl, darstellt,
(ii) mindestens einem Polyglycerin (II) der allgemeinen Formel (IIa)

   HO - CH₂ - CH(OH) - CH₂ - [O - CH₂ - CH(OH) - CH₂]ₚ - OH (IIa)

   wobei in der allgemeinen Formel (IIa) die Variable p eine ganze Zahl von 1 bis 6 darstellt,
   und
(iii) mindestens eine Polycarbonsäure (III), insbesondere mindestens eine mindestens zwei Carboxylgruppen enthaltende Polycarbonsäure, wobei die Polycarbonsäure (III) in Form der freien Polycarbonsäure, in Form eines Salzes der Polycarbonsäure, in Form eines Polycarbonsäureesters oder in Form des Polycarbonsäureanhydrids eingesetzt wird,

miteinander umgesetzt und/oder zur Reaktion gebracht werden,
wobei das Verfahren in Abwesenheit von Lösemitteln und/oder ohne jedwedes Lösemittel durchgeführt wird,
so dass als Reaktionsprodukt (IV) ein oder mehrere mit Polycarbonsäuren vernetzte Polyglycerinester der 3-Hydroxybuttersäure, insbesondere ein oder mehrere ein- oder mehrwertige mit Polycarbonsäuren vernetzte Polyglycerinester der 3-Hydroxybuttersäure, der allgemeinen Formel (IVa) 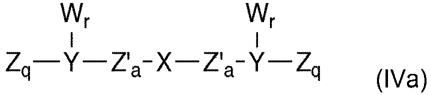 erhalten werden,
wobei in der allgemeinen Formel (IVa)
   - X einen Rest - C(O) - X' -C(O) - darstellt, wobei X' einen von einer Polycarbonsäure abgeleiteten Rest, insbesondere einen 1 bis 10, vorzugsweise 2 bis 6 Kohlenstoffatome enthaltenden und gegebenenfalls ein- oder mehrfach substituierten, insbesondere mit einem oder mehreren Hydroxyl-Resten und/oder Carboxyl-Resten substituierten, gesättigten oder ungesättigten organischen Rest, darstellt;
   - Y einen von einem Polyglycerin abgeleiteten Rest, insbesondere einen Rest der allgemeinen Formel (llc) 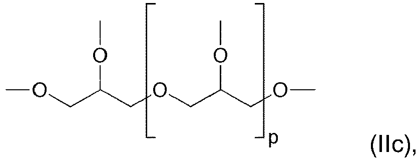 darstellt, wobei die Variable p eine ganze Zahl von 1 bis 6 ist;
   - Z einen Rest - C(O) - CH₂ - CH(OH) - CH₃ darstellt und die Variable q unabhängig voneinander eine ganze Zahl von 1 bis (p + 2) mit p wie zuvor definiert ist;
   - Z' einen Rest - C(O) - CH₂ - CH(CH₃) - O - darstellt und die Variable a unabhängig voneinander 0 oder 1 ist;
   - W unabhängig voneinander darstellt: Wasserstoff oder - X - OH mit X wie zuvor definiert oder aber einen oder mehrere Blöcke 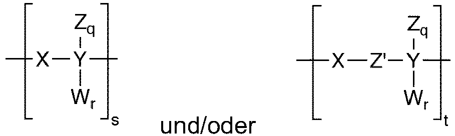 mit X, Y, Z, Z' und q jeweils wie zuvor definiert, wobei die Variablen s und t, jeweils unabhängig voneinander, eine ganze Zahl von 0 bis 30 sind und die Variable r unabhängig voneinander eine ganze Zahl von 0 bis (p + 1) mit p wie zuvor definiert ist, wobei das Kettenende der Blöcke jeweils durch Wasserstoff, - X - OH oder Z gebildet ist.

Insbesondere kann das erfindungsgemäße Verfahren mehrstufig, insbesondere zweistufig, durchgeführt werden. Wenn das erfindungsgemäße Verfahren mehrstufig durchgeführt wird, kann die Anzahl der Nebenprodukte reduziert werden, beispielsweise durch Aufreinigung der Reaktionszwischenprodukte.

Wie nachfolgend noch im Detail beschrieben, kann bei der mehrstufigen, insbesondere zweistufigen Vorgehensweise insbesondere derart vorgegangen werden, dass zunächst mindestens eine 3-Hydroxybuttersäureverbindung der allgemeinen Formel (I) mit mindestens einem Polyglycerin (II) umgesetzt und/oder zur Reaktion gebracht wird, gefolgt von einer weiteren Umsetzung des resultierenden Reaktionszwischenprodukts (IV'A) mit mindestens einer Polycarbonsäure (III) (Syntheseroute (A)), oder aber dass zunächst mindestens ein Polyglycerin (II) mit mindestens einer Polycarbonsäure (III) umgesetzt und/oder zur Reaktion gebracht wird, gefolgt von einer weiteren Umsetzung des resultierenden Reaktionszwischenprodukts(IV'B) mit mindestens einer 3-Hydroxybuttersäureverbindung der allgemeinen Formel (I) (Syntheseroute (B)).

Gemäß einer besonderen Ausführungsform betrifft die vorliegende Erfindung gemäß diesem Erfindungsaspekt auch ein Verfahren zur Herstellung von mit Polycarbonsäuren vernetzten Polyglycerinestern der 3-Hydroxybuttersäure, insbesondere ein wie zuvor beschriebenes Verfahren,
wobei gemäß einer (ersten) Syntheseroute (A):
   (a) in einem ersten Verfahrensschritt (a) mindestens eine 3-Hydroxybuttersäureverbindung der allgemeinen Formel (I)

      CH₃ - CH(OH) - CH₂ - C(O)OR¹ (I)

      wobei in der allgemeinen Formel (I) der Rest R¹ Wasserstoff, einen Rest - (O)C - CH₂ - CH(OH) - CH₃ oder ein C₁-C₄-Alkyl, insbesondere ein C₁-C₄-Alkyl, bevorzugt Methyl oder Ethyl, besonders bevorzugt Ethyl, darstellt, mit mindestens einem Polyglycerin (II) der allgemeinen Formel (IIa)

      HO - CH₂ - CH(OH) - CH₂ - [O - CH₂ - CH(OH) - CH₂]ₚ - OH (IIa)

      wobei in der allgemeinen Formel (IIa) die Variable p eine ganze Zahl von 1 bis 6 darstellt, umgesetzt und/oder zur Reaktion gebracht wird, insbesondere in einer Veresterungsreaktion und/oder unter Veresterungsbedingungen umgesetzt und/oder zur Reaktion gebracht wird,
      insbesondere sodass als Reaktionszwischenprodukt (IVA') des Verfahrensschritts (a) ein oder mehrere Polyglycerinester der 3-Hydroxybuttersäure, insbesondere ein oder mehrere ein- oder mehrwertige Polyglycerinester der 3-Hydroxybuttersäure, erhalten werden; und
   (b) nachfolgend in einem zweiten Verfahrensschritt (b) das in Verfahrensschritt (a) erhaltene Reaktionszwischenprodukt (IVA') mit mindestens einer Polycarbonsäure (III), insbesondere mit mindestens einer mindestens zwei Carboxylgruppen enthaltenden Polycarbonsäure, wobei die Polycarbonsäure (III) in Form der freien Polycarbonsäure, in Form eines Salzes der Polycarbonsäure, in Form eines Polycarbonsäureesters oder in Form des Polycarbonsäureanhydrids eingesetzt wird, umgesetzt und/oder zur Reaktion gebracht wird, insbesondere in einer Veresterungsreaktion und/oder unter Veresterungsbedingungen umgesetzt und/oder zur Reaktion gebracht wird,

wobei das Verfahren in Abwesenheit von Lösemitteln und/oder ohne jedwedes Lösemittel durchgeführt wird,
so dass als Reaktionsprodukt (IV) ein oder mehrere mit Polycarbonsäuren vernetzte Polyglycerinester der 3-Hydroxybuttersäure, insbesondere ein oder mehrere ein- oder mehrwertige mit Polycarbonsäuren vernetzte Polyglycerinester der 3-Hydroxybuttersäure, der allgemeinen Formel (IVa) 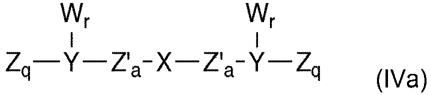 erhalten werden,
wobei in der allgemeinen Formel (IVa)
   - X einen Rest - C(O) - X' -C(O) - darstellt, wobei X' einen von einer Polycarbonsäure abgeleiteten Rest, insbesondere einen 1 bis 10, vorzugsweise 2 bis 6 Kohlenstoffatome enthaltenden und gegebenenfalls ein- oder mehrfach substituierten, insbesondere mit einem oder mehreren Hydroxyl-Resten und/oder Carboxyl-Resten substituierten, gesättigten oder ungesättigten organischen Rest, darstellt;
   - Y einen von einem Polyglycerin abgeleiteten Rest, insbesondere einen Rest der allgemeinen Formel (llc) 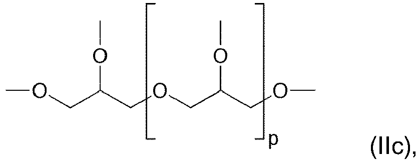 darstellt, wobei die Variable p eine ganze Zahl von 1 bis 6 ist;
   - Z einen Rest - C(O) - CH₂ - CH(OH) - CH₃ darstellt und die Variable q unabhängig voneinander eine ganze Zahl von 1 bis (p + 2) mit p wie zuvor definiert ist;
   - Z' einen Rest - C(O) - CH₂ - CH(CH₃) - O - darstellt und die Variable a unabhängig voneinander 0 oder 1 ist;
   - W unabhängig voneinander darstellt: Wasserstoff oder - X - OH mit X wie zuvor definiert oder aber einen oder mehrere Blöcke 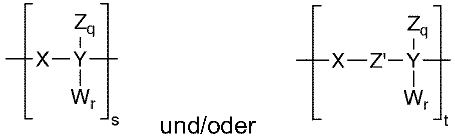 mit X, Y, Z, Z' und q jeweils wie zuvor definiert, wobei die Variablen s und t, jeweils unabhängig voneinander, eine ganze Zahl von 0 bis 30 sind und die Variable r unabhängig voneinander eine ganze Zahl von 0 bis (p + 1) mit p wie zuvor definiert ist, wobei das Kettenende der Blöcke jeweils durch Wasserstoff, - X - OH oder Z gebildet ist.

Im Folgenden ist beispielhaft und nicht-beschränkend ein möglicher Verlauf der (ersten) Syntheseroute (A) anhand der in Verfahrensschritt (a) erfolgenden Reaktion von 3-Hydroxybuttersäureethylester, Diglycerin und Bernsteinsäureanhydrid aufgezeigt. Im ersten Verfahrensschritt (a) werden 3-Hydroxybuttersäureethylester und Diglycerin umgesetzt und es werden insbesondere die Mono-, Di- und Tridiglycerinester der 3-Hydroxybuttersäure gebildet. Im nachfolgenden (zweiten) Verfahrensschritt (b) werden dann diese Mono-, Di- und Tridiglycerinester der 3-Hydroxybuttersäure mit Bernsteinsäureanhydrid umgesetzt. Im folgenden Schema ist eine nicht-beschränkende Auswahl an Produkten und Nebenprodukten abgebildet: 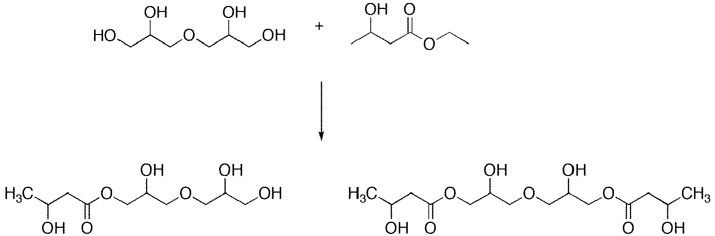 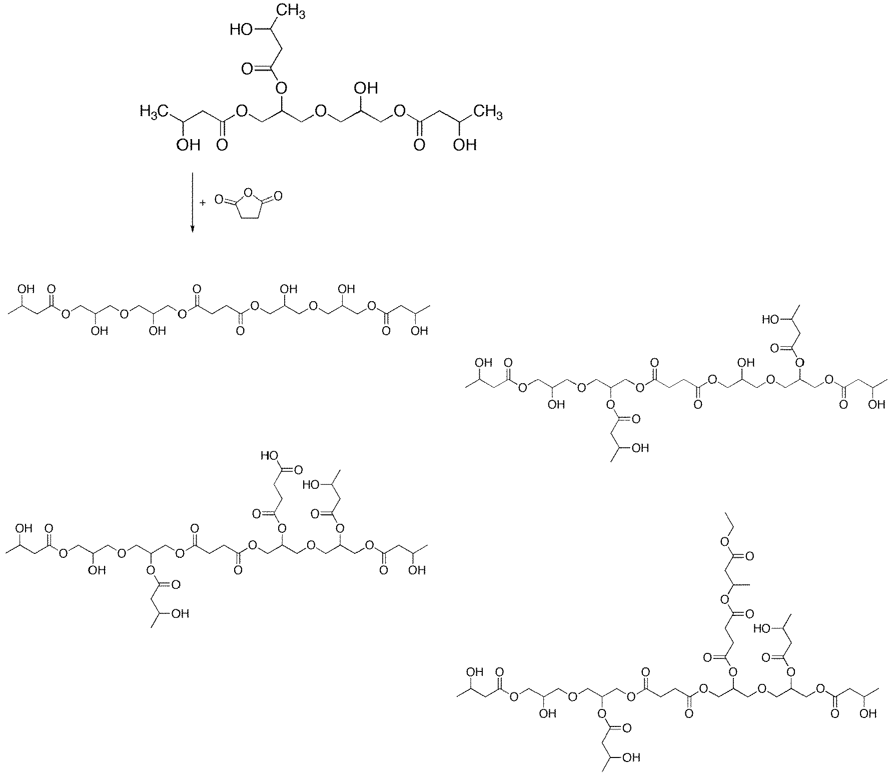 Gemäß einer alternativen besonderen Ausführungsform betrifft die vorliegende Erfindung gemäß diesem Erfindungsaspekt auch ein Verfahren zur Herstellung von mit Polycarbonsäuren vernetzten Polyglycerinestern der 3-Hydroxybuttersäure, insbesondere ein wie zuvor beschriebenes Verfahren,
wobei gemäß einer (zweiten) Syntheseroute (B):
   (a) in einem ersten Verfahrensschritt (a) mindestens ein Polyglycerin (II) der allgemeinen Formel (IIa)

      HO - CH₂ - CH(OH) - CH₂ - [O - CH₂ - CH(OH) - CH₂]ₚ - OH (IIa)

      wobei in der allgemeinen Formel (IIa) die Variable p eine ganze Zahl von 1 bis 6 darstellt, mit mindestens einer Polycarbonsäure (III), insbesondere mit mindestens einer mindestens zwei Carboxylgruppen enthaltenden Polycarbonsäure, wobei die Polycarbonsäure (III) in Form der freien Polycarbonsäure, in Form eines Salzes der Polycarbonsäure, in Form eines Polycarbonsäureesters oder in Form des Polycarbonsäureanhydrids eingesetzt wird, umgesetzt und/oder zur Reaktion gebracht wird, insbesondere in einer Veresterungsreaktion und/oder unter Veresterungsbedingungen umgesetzt und/oder zur Reaktion gebracht wird,
      insbesondere sodass als Reaktionszwischenprodukt (IVB') des Verfahrensschritts (a) ein oder mehrere Polyglycerinester der Polycarbonsäure (III), insbesondere ein oder mehrere ein- oder mehrwertige Polyglycerinester der Polycarbonsäure (III), erhalten werden; und
      (b) nachfolgend in einem zweiten Verfahrensschritt (b) das in Verfahrensschritt (a) erhaltene Reaktionszwischenprodukt (IVB') mit mindestens einer 3-Hydroxybuttersäureverbindung der allgemeinen Formel (I)

         CH₃ - CH(OH) - CH₂ - C(O)OR¹ (I)

         wobei in der allgemeinen Formel (I) der Rest R¹ Wasserstoff, einen Rest - (O)C - CH₂ - CH(OH) - CH₃ oder ein C₁-C₄-Alkyl, insbesondere ein C₁-C₄-Alkyl, bevorzugt Methyl oder Ethyl, besonders bevorzugt Ethyl, darstellt, umgesetzt und/oder zur Reaktion gebracht wird, insbesondere in einer Veresterungsreaktion und/oder unter Veresterungsbedingungen umgesetzt und/oder zur Reaktion gebracht wird,
wobei das Verfahren in Abwesenheit von Lösemitteln und/oder ohne jedwedes Lösemittel durchgeführt wird,
so dass als Reaktionsprodukt (IV) ein oder mehrere mit Polycarbonsäuren vernetzte Polyglycerinester der 3-Hydroxybuttersäure, insbesondere ein oder mehrere ein- oder mehrwertige mit Polycarbonsäuren vernetzte Polyglycerinester der 3-Hydroxybuttersäure,der allgemeinen Formel (Iva) 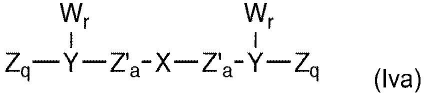 erhalten werden,
wobei in der allgemeinen Formel (Iva)
   - X einen Rest - C(O) - X' -C(O) - darstellt, wobei X' einen von einer Polycarbonsäure abgeleiteten Rest, insbesondere einen 1 bis 10, vorzugsweise 2 bis 6 Kohlenstoffatome enthaltenden und gegebenenfalls ein- oder mehrfach substituierten, insbesondere mit einem oder mehreren Hydroxyl-Resten und/oder Carboxyl-Resten substituierten, gesättigten oder ungesättigten organischen Rest, darstellt;
   - Y einen von einem Polyglycerin abgeleiteten Rest, insbesondere einen Rest der allgemeinen Formel (lic) 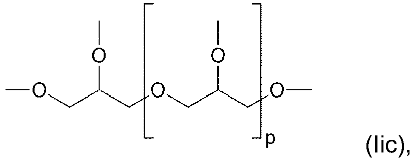 darstellt, wobei die Variable p eine ganze Zahl von 1 bis 6 ist;
   - Z einen Rest - C(O) - CH₂ - CH(OH) - CH₃ darstellt und die Variable q unabhängig voneinander eine ganze Zahl von 1 bis (p + 2) mit p wie zuvor definiert ist;
   - Z' einen Rest - C(O) - CH₂ - CH(CH₃) - O - darstellt und die Variable a unabhängig voneinander 0 oder 1 ist;
   - W unabhängig voneinander darstellt: Wasserstoff oder - X - OH mit X wie zuvor definiert oder aber einen oder mehrere Blöcke 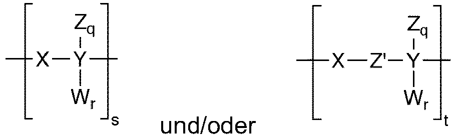
   mit X, Y, Z, Z' und q jeweils wie zuvor definiert, wobei die Variablen s und t, jeweils unabhängig voneinander, eine ganze Zahl von 0 bis 30 sind und die Variable r unabhängig voneinander eine ganze Zahl von 0 bis (p + 1) mit p wie zuvor definiert ist, wobei das Kettenende der Blöcke jeweils durch Wasserstoff, - X - OH oder Z gebildet ist.

Im Folgenden ist beispielhaft und nicht-beschränkend ein möglicher Verlauf der (zweiten) Syntheseroute (B) anhand der Reaktion von 3-Hydroxybuttersäureethylester, Diglycerin und Bernsteinsäureanhydrid aufgezeigt. Im ersten Verfahrensschritt (a) werden Diglycerin und Bernsteinsäureanhydrid umgesetzt und es werden Polyglycerinester der Bernsteinsäure gebildet, wobei im folgenden Schema nur eine nicht-beschränkende Auswahl abgebildet ist. Im nachfolgenden (zweiten) Verfahrensschritt (b) werden die Polyglycerinester der Bernsteinsäure mit 3-Hydroxybuttersäureethylester umgesetzt. Im folgenden Schema ist eine nicht-beschränkende Auswahl an Produkten und Nebenprodukten abgebildet, wobei der Rest R Wasserstoff oder - C(O) - CH₂ - CH(OH) - CH₃ darstellt.

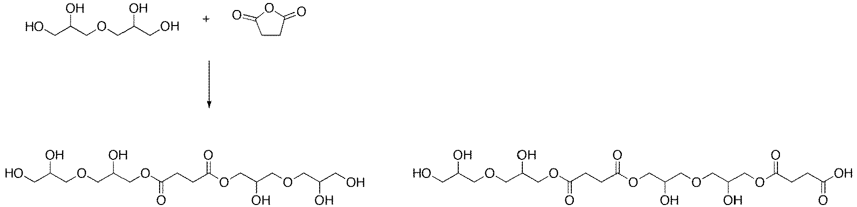

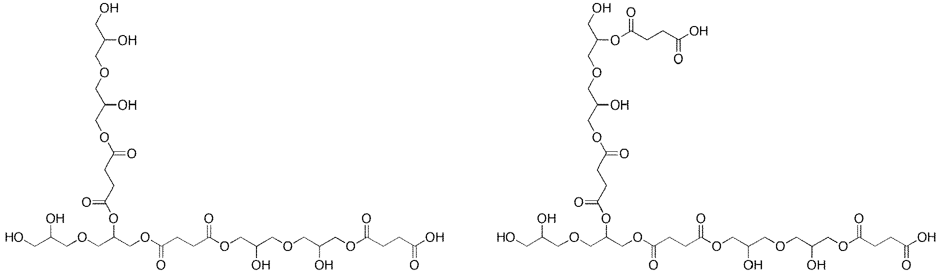

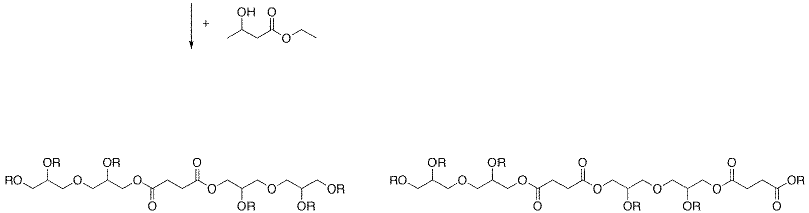

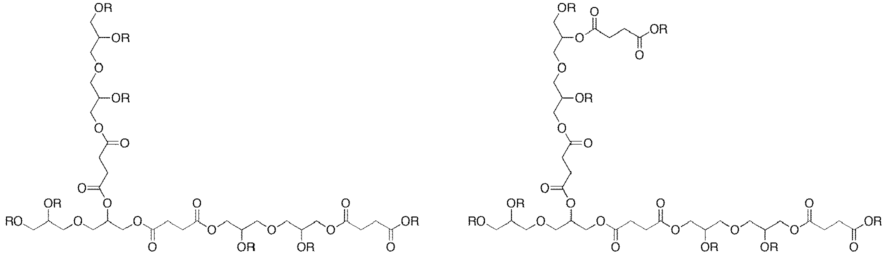

Insgesamt betrifft die vorliegende Erfindung gemäß diesem Erfindungsaspekt weiterhin ein Verfahren zur Herstellung von mit Polycarbonsäuren vernetzten Polyglycerinestern der 3-Hydroxybuttersäure, insbesondere Verfahren nach einem der vorangehenden Ansprüche,
wobei gemäß einer (ersten) Syntheseroute (A):
   (a) in einem ersten Verfahrensschritt (a) mindestens eine 3-Hydroxybuttersäureverbindung der allgemeinen Formel (I)

      CH₃ - CH(OH) - CH₂ - C(O)OR¹ (I)

      wobei in der allgemeinen Formel (I) der Rest R¹ Wasserstoff, einen Rest - (O)C - CH₂ - CH(OH) - CH₃ oder ein C₁-C₄-Alkyl, insbesondere ein C₁-C₄-Alkyl, bevorzugt Methyl oder Ethyl, besonders bevorzugt Ethyl, darstellt,
      mit mindestens einem Polyglycerin (II) der allgemeinen Formel (Iia)

         HO - CH₂ - CH(OH) - CH₂ - [O - CH₂ - CH(OH) - CH₂]ₚ - OH (Iia)
      wobei in der allgemeinen Formel (Iia) die Variable p eine ganze Zahl von 1 bis 6 darstellt, umgesetzt und/oder zur Reaktion gebracht wird, insbesondere in einer Veresterungsreaktion und/oder unter Veresterungsbedingungen umgesetzt und/oder zur Reaktion gebracht wird,
      insbesondere sodass als Reaktionszwischenprodukt (IVA') des Verfahrensschritts (a) ein oder mehrere Polyglycerinester der 3-Hydroxybuttersäure, insbesondere ein oder mehrere ein- oder mehrwertige Polyglycerinester der 3-Hydroxybuttersäure, erhalten werden; und
   (b) nachfolgend in einem zweiten Verfahrensschritt (b) das in Verfahrensschritt (a) erhaltene Reaktionszwischenprodukt (IVA') mit mindestens einer Polycarbonsäure (III), insbesondere mit mindestens einer mindestens zwei Carboxylgruppen enthaltenden Polycarbonsäure, wobei die Polycarbonsäure (III) in Form der freien Polycarbonsäure, in Form eines Salzes der Polycarbonsäure, in Form eines Polycarbonsäureesters oder in Form des Polycarbonsäureanhydrids eingesetzt wird, umgesetzt und/oder zur Reaktion gebracht wird, insbesondere in einer Veresterungsreaktion und/oder unter Veresterungsbedingungen umgesetzt und/oder zur Reaktion gebracht wird,
wobei das Verfahren in Abwesenheit von Lösemitteln und/oder ohne jedwedes Lösemittel durchgeführt wird,
so dass als Reaktionsprodukt (IV) ein oder mehrere mit Polycarbonsäuren vernetzte Polyglycerinester der 3-Hydroxybuttersäure, insbesondere ein oder mehrere ein- oder mehrwertige mit Polycarbonsäuren vernetzte Polyglycerinester der 3-Hydroxybuttersäure,der allgemeinen Formel (IVa) 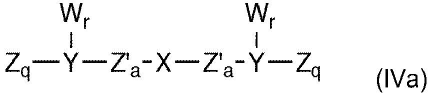 erhalten werden,
wobei in der allgemeinen Formel (IVa)
   - X einen Rest - C(O) - X' -C(O) - darstellt, wobei X' einen von einer Polycarbonsäure abgeleiteten Rest, insbesondere einen 1 bis 10, vorzugsweise 2 bis 6 Kohlenstoffatome enthaltenden und gegebenenfalls ein- oder mehrfach substituierten, insbesondere mit einem oder mehreren Hydroxyl-Resten und/oder Carboxyl-Resten substituierten, gesättigten oder ungesättigten organischen Rest, darstellt;
   - Y einen von einem Polyglycerin abgeleiteten Rest, insbesondere einen Rest der allgemeinen Formel (llc) 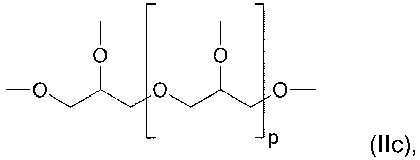 darstellt, wobei die Variable p eine ganze Zahl von 1 bis 6 ist;
   - Z einen Rest - C(O) - CH₂ - CH(OH) - CH₃ darstellt und die Variable q unabhängig voneinander eine ganze Zahl von 1 bis (p + 2) mit p wie zuvor definiert ist;
   - Z' einen Rest - C(O) - CH₂ - CH(CH₃) - O - darstellt und die Variable a unabhängig voneinander 0 oder 1 ist;
   - W unabhängig voneinander darstellt: Wasserstoff oder - X - OH mit X wie zuvor definiert oder aber einen oder mehrere Blöcke 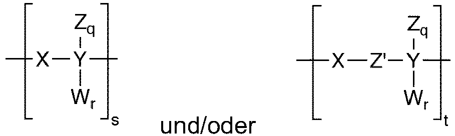 mit X, Y, Z, Z' und q jeweils wie zuvor definiert, wobei die Variablen s und t, jeweils unabhängig voneinander, eine ganze Zahl von 0 bis 30 sind und die Variable r unabhängig voneinander eine ganze Zahl von 0 bis (p + 1) mit p wie zuvor definiert ist, wobei das Kettenende der Blöcke jeweils durch Wasserstoff, - X - OH oder Z gebildet ist;
      oder aber
wobei gemäß einer (zweiten, zu (A) alternativen) Syntheseroute (B):
   (a) in einem ersten Verfahrensschritt (a) mindestens ein Polyglycerin (II) der allgemeinen Formel (IIa)

      HO - CH₂ - CH(OH) - CH₂ - [O - CH₂ - CH(OH) - CH₂]ₚ - OH (IIa)

      wobei in der allgemeinen Formel (IIa) die Variable p eine ganze Zahl von 1 bis 6 darstellt, mit mindestens einer Polycarbonsäure (III), insbesondere mit mindestens einer mindestens zwei Carboxylgruppen enthaltenden Polycarbonsäure, wobei die Polycarbonsäure (III) in Form der freien Polycarbonsäure, in Form eines Salzes der Polycarbonsäure, in Form eines Polycarbonsäureesters oder in Form des Polycarbonsäureanhydrids eingesetzt wird, umgesetzt und/oder zur Reaktion gebracht wird, insbesondere in einer Veresterungsreaktion und/oder unter Veresterungsbedingungen umgesetzt und/oder zur Reaktion gebracht wird,
      insbesondere sodass als Reaktionszwischenprodukt (IVB') des Verfahrensschritts (a) ein oder mehrere Polyglycerinester der Polycarbonsäure (III), insbesondere ein oder mehrere ein- oder mehrwertige Polyglycerinester der Polycarbonsäure (III), erhalten werden; und
   (b) nachfolgend in einem zweiten Verfahrensschritt (b) das in Verfahrensschritt (a) erhaltene Reaktionszwischenprodukt (IVB') mit mindestens einer 3-Hydroxybuttersäureverbindung der allgemeinen Formel (I)

      CH₃ - CH(OH) - CH₂ - C(O)OR¹ (I)

      wobei in der allgemeinen Formel (I) der Rest R¹ Wasserstoff, einen Rest - (O)C - CH₂ - CH(OH) - CH₃ oder ein C₁-C₄-Alkyl, insbesondere ein C₁-C₄-Alkyl, bevorzugt Methyl oder Ethyl, besonders bevorzugt Ethyl, darstellt, umgesetzt und/oder zur Reaktion gebracht wird, insbesondere in einer Veresterungsreaktion und/oder unter Veresterungsbedingungen umgesetzt und/oder zur Reaktion gebracht wird,
so dass als Reaktionsprodukt (IV) ein oder mehrere mit Polycarbonsäuren vernetzte Polyglycerinester der 3-Hydroxybuttersäure, insbesondere ein oder mehrere ein- oder mehrwertige mit Polycarbonsäuren vernetzte Polyglycerinester der 3-Hydroxybuttersäure,der allgemeinen Formel (IVa) 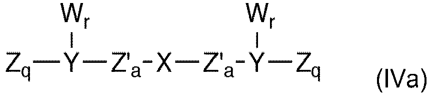 erhalten werden,
wobei in der allgemeinen Formel (IVa)
   - X einen Rest - C(O) - X' -C(O) - darstellt, wobei X' einen von einer Polycarbonsäure abgeleiteten Rest, insbesondere einen 1 bis 10, vorzugsweise 2 bis 6 Kohlenstoffatome enthaltenden und gegebenenfalls ein- oder mehrfach substituierten, insbesondere mit einem oder mehreren Hydroxyl-Resten und/oder Carboxyl-Resten substituierten, gesättigten oder ungesättigten organischen Rest, darstellt;
   - Y einen von einem Polyglycerin abgeleiteten Rest, insbesondere einen Rest der allgemeinen Formel (llc) 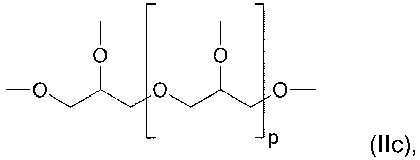 darstellt, wobei die Variable p eine ganze Zahl von 1 bis 6 ist;
   - Z einen Rest - C(O) - CH₂ - CH(OH) - CH₃ darstellt und die Variable q unabhängig voneinander eine ganze Zahl von 1 bis (p + 2) mit p wie zuvor definiert ist;
   - Z' einen Rest - C(O) - CH₂ - CH(CH₃) - O - darstellt und die Variable a unabhängig voneinander 0 oder 1 ist;
   - W unabhängig voneinander darstellt: Wasserstoff oder - X - OH mit X wie zuvor definiert oder aber einen oder mehrere Blöcke 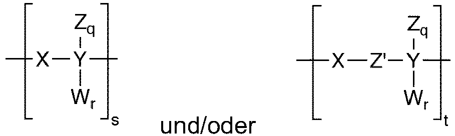 mit X, Y, Z, Z' und q jeweils wie zuvor definiert, wobei die Variablen s und t, jeweils unabhängig voneinander, eine ganze Zahl von 0 bis 30 sind und die Variable r unabhängig voneinander eine ganze Zahl von 0 bis (p + 1) mit p wie zuvor definiert ist, wobei das Kettenende der Blöcke jeweils durch Wasserstoff, - X - OH oder Z gebildet ist.

Gemäß einer besonderen Ausführungsform der vorliegenden Erfindung kann die 3-Hydroxybuttersäureverbindung der allgemeinen Formel (I) in racemischer Form oder in Form des (R)-Enantiomers eingesetzt werden. Die (R)-Konfiguration bezieht sich auf das chirale Kohlenstoffatom in 3-Position der 3-Hydroxybuttersäureverbindung der allgemeinen Formel (I).

Erfindungsgemäß bevorzugt ist es, wenn in der allgemeinen Formel (I) der Rest R¹ Ethyl darstellt.

Mit anderen Worten ist es erfindungsgemäß bevorzugt, dass als 3-Hydroxybuttersäureverbindung der allgemeinen Formel (I) Ethyl-3-hydroxybutyrat (synonym auch als 3-Hydroxybuttersäureethylester bzw. 4-Ethoxy-4-oxo-2-butanol bezeichnet) der Formel CH₃ - CH(OH) - CH₂ - C(O)OC₂H₅ eingesetzt wird.

Dies ermöglicht eine besonders effiziente Verfahrensführung und hohe Ausbeuten mit minimierter Nebenproduktbildung. Zudem ist der 3-Hydroxybuttersäureethylester bzw. 4-Ethoxy-4-oxo-2-butanol auch in großen Mengen kommerziell verfügbar und kann insbesondere großtechnisch (z. B. durch Claisen-Kondensation von Ethylacetat) ohne Weiteres gewonnen werden.

Erfindungsgemäß entspricht das Polyglycerin (II) der allgemeinen Formel (IIa)

HO - CH₂ - CH(OH) - CH₂ - [O - CH₂ - CH(OH) - CH₂]ₚ - OH (IIa)

wobei in der allgemeinen Formel (IIa) die Variable p eine ganze Zahl von 1 bis 6, insbesondere von 1 bis 4, vorzugsweise 1 oder 2, besonders bevorzugt 1, darstellt.

Gemäß einer weiteren besonderen Ausführungsform des erfindungsgemäßen Verfahrens kann das Polyglycerin (II) ein Diglycerin der Formel (IIb)

HO - CH₂ - CH(OH) - CH₂ - O - CH₂ - CH(OH) - CH₂ - OH (IIb)

sein.

Insbesondere ist das Polyglycerin (II) kein Propan-1,2,3-triol (Glycerin).

Gemäß der vorliegenden Erfindung wird die Polycarbonsäure (III) in Form der freien Polycarbonsäure, in Form eines Salzes der Polycarbonsäure, in Form eines Polycarbonsäureesters oder in Form des Polycarbonsäureanhydrids, insbesondere in Form der freien Polycarbonsäure oder in Form des Polycarbonsäureanhydrids, bevorzugt in Form des Polycarbonsäureanhydrids, besonders bevorzugt in Form eines cyclischen Polycarbonsäureanhydrids, eingesetzt.

Die Anhydride der Polycarbonsäure sind besonders reaktiv und eignen sich insbesondere für Veresterungsreaktionen. Bei der Verwendung von cyclischen Anhydriden werden im Rahmen einer Veresterungsreaktion keine Abspaltprodukte gebildet, welche gegebenenfalls energieträchtig entfernt werden müssten.

Gemäß einer weiteren besonderen Ausführungsform der vorliegenden Erfindung kann die Polycarbonsäure (III) der allgemeinen Formel (Illa)

HOOC - X' - COOH (IIIa)

entsprechen, wobei in der allgemeinen Formel (Illa) X' einen 1 bis 10, vorzugsweise 2 bis 6 Kohlenstoffatome enthaltenden und gegebenenfalls ein- oder mehrfach substituierten, insbesondere mit einem oder mehreren Hydroxyl-Resten und/oder Carboxyl-Resten substituierten, gesättigten oder ungesättigten organischen Rest darstellt;
insbesondere wobei mindestens eine Carboxylgruppe (COOH-Gruppe), vorzugsweise beide Carboxylgruppen (COOH-Gruppen), endständig ist/sind und/oder eine primäre Carboxylgruppe (COOH-Gruppe) ist/sind.

In diesem Zusammenhang ist es insbesondere bevorzugt, wenn in der allgemeinen Formel (Illa) X' einen 2 bis 6 Kohlenstoffatome enthaltenden und gegebenenfalls ein- oder mehrfach substituierten, insbesondere mit einem oder mehreren Hydroxyl-Resten und/oder Carboxyl-Resten substituierten, gesättigten oder ungesättigten organischen Rest darstellt;
insbesondere wobei mindestens eine Carboxylgruppe (COOH-Gruppe), vorzugsweise beide Carboxylgruppen (COOH-Gruppen), endständig ist/sind und/oder eine primäre Carboxylgruppe (COOOH-Gruppe) ist/sind.

Insbesondere durch die Verwendung einer zuvor definierten Polycarbonsäure mit mindestens einer, vorzugsweise zwei endständigen bzw. primären Carboxylgruppen können Veresterungsreaktionen besonders effektiv und mit minimierter Nebenproduktbildung ablaufen, ohne dass extreme Reaktionsbedingungen (z. B. sehr hohe Temperatur, sehr niedriger Druck etc.) notwendig sind. Darüber hinaus kann durch die Anzahl der vorhandenen Carboxylgruppen der Vernetzungsgrad (d. h. Verzweigungsgrad) beeinflusst werden.

Im Rahmen des erfindungsgemäßen Verfahrens kann es bevorzugt sein, wenn die Polycarbonsäure (III) ausgewählt ist aus der Gruppe von Bernsteinsäure, Weinsäure, Citronensäure, Äpfelsäure, Adipinsäure, Fumarsäure und Maleinsäure und deren Anhydriden sowie deren Kombinationen oder Mischungen, insbesondere ausgewählt ist aus der Gruppe von Bernsteinsäure, Weinsäure, Citronensäure, Äpfelsäure, Adipinsäure und Fumarsäure und deren Anhydriden sowie deren Kombinationen oder Mischungen, bevorzugt ausgewählt ist aus der Gruppe von Bernsteinsäure und Adipinsäure und deren Anhydriden sowie deren Kombinationen oder Mischungen.

Die zuvor genannten Carbonsäuren sind kommerziell erhältlich und zudem gut in Veresterungsreaktionen umsetzbar.

Insbesondere ist es im Rahmen des erfindungsgemäßen Verfahrens bevorzugt, wenn die Polycarbonsäure (III) eine natürlich vorkommende Carbonsäure oder deren Anhydrid oder Derivat, insbesondere Umsetzungsprodukt, ist, insbesondere eine im menschlichen und/oder tierischen Stoffwechsel vorkommende Carbonsäure oder deren Anhydrid oder Derivat, insbesondere Umsetzungsprodukt.

Insbesondere ist es in diesem Zusammenhang vorteilhaft, wenn Carbonsäuren oder deren Anhydride oder Derivate verwendet werden, welche im Citratzyklus vorkommen, aus dem Citratzyklus entstehen oder mit dem Citratzyklus im Zusammenhang stehen. Dabei können Derivate beispielsweise Salze oder Ester darstellen, welche durch Oxidation eines Stoffwechselprodukts (beispielsweise aus dem Citratzyklus) erhältlich werden. Durch die Verwendung von Carbonsäuren oder deren Anhydriden oder Derivaten, welche Teil des menschlichen und/oder tierischen Stoffwechsels bzw. Edukts bzw. Produkts bzw. Zwischenprodukts eines menschlichen und/oder tierischen Stoffwechsels darstellen, kann bei der Verwendung des erfindungsgemäßen Reaktionsprodukts dem menschlichen und/oder tierischen Körper eine weitere Energiequelle (zusätzlich zu dem Ketokörper 3-Hydroxybuttersäure bzw. 3-Hydroxybutanoat) bereitgestellt werden. Die erfindungsgemäßen Reaktionsprodukte sind besonders geeignet für die Verwendung in oder als Arzneimittel, Medikament oder Nahrungsmittel- und Lebensmittelerzeugnis.

Weiterhin kann es im Rahmen des erfindungsgemäßen Verfahrens auch bevorzugt sein, wenn die Polycarbonsäure (III) ein lebensmittelrechtlich zugelassener Inhaltsstoff, insbesondere Zusatzstoff, ist.

Lebensmittelrechtlich zugelassene Inhaltsstoffe bzw. Zusatzstoffe sind zur Verwendung in Lebensmitteln in bestimmten Mengen zugelassen und weisen keine Gesundheitsrisiken auf. EU-weit wird eine Liste für Lebensmittelzusatzstoffe geführt, worin jeder Lebensmittelzusatzstoff eine eigene Kennzeichnung (sogenannte E-Nummer) erhält. Beispielsweise werden die folgenden Carbonsäuren in der Lebensmittelzusatzstoffliste geführt: Bernsteinsäure (E363), Weinsäure (E334), Citronensäure (E330), Äpfelsäure (E296), Adipinsäure (E355) und Fumarsäure (E297). Diese Säuren sind alle Teil des Citratzyklus oder durch Oxidation eines Stoffwechselprodukts des Citratzyklus erhältlich. Der Citratzyklus ist ein Kreislauf biochemischer Reaktionen, der eine wichtige Rolle im Stoffwechsel (Metabolismus) aerober Zellen von Lebewesen spielt und hauptsächlich dem oxidativen Abbau organischer Stoffe zum Zweck der Energiegewinnung und der Bereitstellung von Zwischenprodukten für Biosynthesen dient. Somit können die Säuren, welche bei Verwendung des aus dem erfindungsgemäßen Verfahren erhältlichen Reaktionsprodukts (IV) durch Abbau gebildet werden, als eine weitere alternative Energiequelle vom Körper verwertet werden.

Gemäß einer besonderen Ausführungsform betrifft die vorliegende Erfindung gemäß diesem Erfindungsaspekt ein Verfahren zur Herstellung von mit Polycarbonsäuren vernetzten Polyglycerinestern der 3-Hydroxybuttersäure, insbesondere ein wie zuvor beschriebenes Verfahren,
wobei gemäß einer (ersten) Syntheseroute (A):
   (a) in einem ersten Verfahrensschritt (a) mindestens eine 3-Hydroxybuttersäureverbindung der allgemeinen Formel (I)

      CH₃ - CH(OH) - CH₂ - C(O)OR¹ (I)

      wobei in der allgemeinen Formel (I) der Rest R¹ Wasserstoff, einen Rest - (O)C - CH₂ - CH(OH) - CH₃ oder ein C₁-C₄-Alkyl, insbesondere ein C₁-C₄-Alkyl, bevorzugt Methyl oder Ethyl, besonders bevorzugt Ethyl, darstellt,
      mit mindestens einem Polyglycerin (II) der allgemeinen Formel (IIa)

         HO - CH₂ - CH(OH) - CH₂ - [O - CH₂ - CH(OH) - CH₂]ₚ - OH (IIa)
      wobei in der allgemeinen Formel (IIa) die Variable p eine ganze Zahl von 1 bis 6, insbesondere von 1 bis 4, vorzugsweise 1 oder 2, besonders bevorzugt 1, darstellt,
      umgesetzt und/oder zur Reaktion gebracht wird, insbesondere in einer Veresterungsreaktion und/oder unter Veresterungsbedingungen umgesetzt und/oder zur Reaktion gebracht wird,
      insbesondere sodass als Reaktionszwischenprodukt (IVA') des Verfahrensschritts (a) ein oder mehrere Polyglycerinester der 3-Hydroxybuttersäure, insbesondere ein oder mehrere ein- oder mehrwertige Polyglycerinester der 3-Hydroxybuttersäure, erhalten werden; und
   (b) nachfolgend in einem zweiten Verfahrensschritt (b) das in Verfahrensschritt (a) erhaltene Reaktionszwischenprodukt (IVA') mit mindestens einer Polycarbonsäure (III), insbesondere mit mindestens einer mindestens zwei Carboxylgruppen enthaltenden Polycarbonsäure, wobei die Polycarbonsäure (III) in Form der freien Polycarbonsäure, in Form eines Salzes der Polycarbonsäure, in Form eines Polycarbonsäureesters oder in Form des Polycarbonsäureanhydrids eingesetzt wird, umgesetzt und/oder zur Reaktion gebracht wird, insbesondere in einer Veresterungsreaktion und/oder unter Veresterungsbedingungen umgesetzt und/oder zur Reaktion gebracht wird,
wobei das Verfahren in Abwesenheit von Lösemitteln und/oder ohne jedwedes Lösemittel durchgeführt wird,
so dass als Reaktionsprodukt (IV) ein oder mehrere mit Polycarbonsäuren vernetzte Polyglycerinester der 3-Hydroxybuttersäure, insbesondere ein oder mehrere ein- oder mehrwertige mit Polycarbonsäuren vernetzte Polyglycerinester der 3-Hydroxybuttersäure,der allgemeinen Formel (IVa) 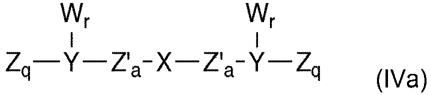 erhalten werden,
wobei in der allgemeinen Formel (IVa)
   - X einen Rest - C(O) - X' -C(O) - darstellt, wobei X' einen von einer Polycarbonsäure abgeleiteten Rest, insbesondere einen 1 bis 10, vorzugsweise 2 bis 6 Kohlenstoffatome enthaltenden und gegebenenfalls ein- oder mehrfach substituierten, insbesondere mit einem oder mehreren Hydroxyl-Resten und/oder Carboxyl-Resten substituierten, gesättigten oder ungesättigten organischen Rest, darstellt;
   - Y einen von einem Polyglycerin abgeleiteten Rest, insbesondere einen Rest der allgemeinen Formel (llc) 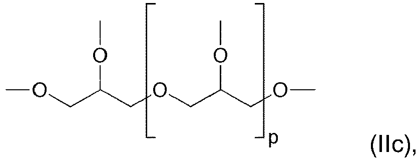 darstellt, wobei die Variable p eine ganze Zahl von 1 bis 6 ist;
   - Z einen Rest - C(O) - CH₂ - CH(OH) - CH₃ darstellt und die Variable q unabhängig voneinander eine ganze Zahl von 1 bis (p + 2) mit p wie zuvor definiert ist;
   - Z' einen Rest - C(O) - CH₂ - CH(CH₃) - O - darstellt und die Variable a unabhängig voneinander 0 oder 1 ist;
   - W unabhängig voneinander darstellt: Wasserstoff oder - X - OH mit X wie zuvor definiert oder aber einen oder mehrere Blöcke 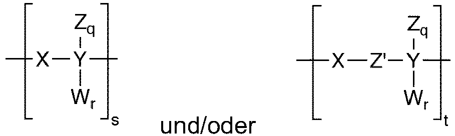 mit X, Y, Z, Z' und q jeweils wie zuvor definiert, wobei die Variablen s und t, jeweils unabhängig voneinander, eine ganze Zahl von 0 bis 30 sind und die Variable r unabhängig voneinander eine ganze Zahl von 0 bis (p + 1) mit p wie zuvor definiert ist, wobei das Kettenende der Blöcke jeweils durch Wasserstoff, - X - OH oder Z gebildet ist;
      oder aber
wobei gemäß einer (zweiten, zu (A) alternativen) Syntheseroute (B):
   (a) in einem ersten Verfahrensschritt (a) mindestens ein Polyglycerin (II) der allgemeinen Formel (IIa)

      HO - CH₂ - CH(OH) - CH₂ - [O - CH₂ - CH(OH) - CH₂]ₚ - OH (IIa)

      wobei in der allgemeinen Formel (IIa) die Variable p eine ganze Zahl von 1 bis 6, insbesondere von 1 bis 4, vorzugsweise 1 oder 2, besonders bevorzugt 1, darstellt,
      mit mindestens einer Polycarbonsäure (III), insbesondere mit mindestens einer mindestens zwei Carboxylgruppen enthaltenden Polycarbonsäure, wobei die Polycarbonsäure (III) in Form der freien Polycarbonsäure, in Form eines Salzes der Polycarbonsäure, in Form eines Polycarbonsäureesters oder in Form des Polycarbonsäureanhydrids eingesetzt wird, umgesetzt und/oder zur Reaktion gebracht wird, insbesondere in einer Veresterungsreaktion und/oder unter Veresterungsbedingungen umgesetzt und/oder zur Reaktion gebracht wird,
      insbesondere sodass als Reaktionszwischenprodukt (IVB') des Verfahrensschritts (a) ein oder mehrere Polyglycerinester der Polycarbonsäure (III), insbesondere ein oder mehrere ein- oder mehrwertige Polyglycerinester der Polycarbonsäure (III), erhalten werden; und
   (b) nachfolgend in einem zweiten Verfahrensschritt (b) das in Verfahrensschritt (a) erhaltene Reaktionszwischenprodukt (IVB') mit mindestens einer 3-Hydroxybuttersäureverbindung der allgemeinen Formel (I)

      CH₃ - CH(OH) - CH₂ - C(O)OR¹ (I)

      wobei in der allgemeinen Formel (I) der Rest R¹ Wasserstoff, einen Rest - (O)C - CH₂ - CH(OH) - CH₃ oder ein C₁-C₄-Alkyl, insbesondere ein C₁-C₄-Alkyl, bevorzugt Methyl oder Ethyl, besonders bevorzugt Ethyl, darstellt, umgesetzt und/oder zur Reaktion gebracht wird, insbesondere in einer Veresterungsreaktion und/oder unter Veresterungsbedingungen umgesetzt und/oder zur Reaktion gebracht wird,
wobei das Verfahren in Abwesenheit von Lösemitteln und/oder ohne jedwedes Lösemittel durchgeführt wird,
so dass als Reaktionsprodukt (IV) ein oder mehrere mit Polycarbonsäuren vernetzte Polyglycerinester der 3-Hydroxybuttersäure, insbesondere ein oder mehrere ein- oder mehrwertige mit Polycarbonsäuren vernetzte Polyglycerinester der 3-Hydroxybuttersäure,der allgemeinen Formel (IVa) 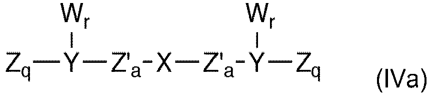 erhalten werden,
wobei in der allgemeinen Formel (IVa)
   - X einen Rest - C(O) - X' -C(O) - darstellt, wobei X' einen von einer Polycarbonsäure abgeleiteten Rest, insbesondere einen 1 bis 10, vorzugsweise 2 bis 6 Kohlenstoffatome enthaltenden und gegebenenfalls ein- oder mehrfach substituierten, insbesondere mit einem oder mehreren Hydroxyl-Resten und/oder Carboxyl-Resten substituierten, gesättigten oder ungesättigten organischen Rest, darstellt;
   - Y einen von einem Polyglycerin abgeleiteten Rest, insbesondere einen Rest der allgemeinen Formel (llc) 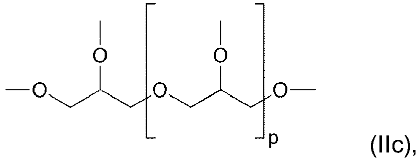 darstellt, wobei die Variable p eine ganze Zahl von 1 bis 6 ist;
   - Z einen Rest - C(O) - CH₂ - CH(OH) - CH₃ darstellt und die Variable q unabhängig voneinander eine ganze Zahl von 1 bis (p + 2) mit p wie zuvor definiert ist;
   - Z' einen Rest - C(O) - CH₂ - CH(CH₃) - O - darstellt und die Variable a unabhängig voneinander 0 oder 1 ist;
   - W unabhängig voneinander darstellt: Wasserstoff oder - X - OH mit X wie zuvor definiert oder aber einen oder mehrere Blöcke 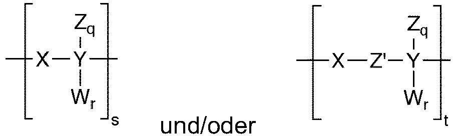 mit X, Y, Z, Z' und q jeweils wie zuvor definiert, wobei die Variablen s und t, jeweils unabhängig voneinander, eine ganze Zahl von 0 bis 30 sind und die Variable r unabhängig voneinander eine ganze Zahl von 0 bis (p + 1) mit p wie zuvor definiert ist, wobei das Kettenende der Blöcke jeweils durch Wasserstoff, - X - OH oder Z gebildet ist.

Gemäß einer weiteren bevorzugten Ausführungsform betrifft die vorliegende Erfindung gemäß diesem Erfindungsaspekt auch ein Verfahren zur Herstellung von mit Polycarbonsäuren vernetzten Polyglycerinestern der 3-Hydroxybuttersäure, insbesondere ein wie zuvor beschriebenes Verfahren,
wobei gemäß einer (ersten) Syntheseroute (A):
   (a) in einem ersten Verfahrensschritt (a) mindestens eine 3-Hydroxybuttersäureverbindung der allgemeinen Formel (I)

      CH₃ - CH(OH) - CH₂ - C(O)OR¹ (I)

      wobei in der allgemeinen Formel (I) der Rest R¹ Wasserstoff, einen Rest - (O)C - CH₂ - CH(OH) - CH₃ oder ein C₁-C₄-Alkyl, insbesondere ein C₁-C₄-Alkyl, bevorzugt Methyl oder Ethyl, besonders bevorzugt Ethyl, darstellt,
      mit mindestens einem Polyglycerin (II) der allgemeinen Formel (IIa)

         HO - CH₂ - CH(OH) - CH₂ - [O - CH₂ - CH(OH) - CH₂]ₚ - OH (IIa)
      wobei in der allgemeinen Formel (IIa) die Variable p eine ganze Zahl von 1 bis 6, insbesondere von 1 bis 4, vorzugsweise 1 oder 2, besonders bevorzugt 1, darstellt,
      umgesetzt und/oder zur Reaktion gebracht wird, insbesondere in einer Veresterungsreaktion und/oder unter Veresterungsbedingungen umgesetzt und/oder zur Reaktion gebracht wird,
      insbesondere sodass als Reaktionszwischenprodukt (IVA') des Verfahrensschritts (a) ein oder mehrere Polyglycerinester der 3-Hydroxybuttersäure, insbesondere ein oder mehrere ein- oder mehrwertige Polyglycerinester der 3-Hydroxybuttersäure, erhalten werden; und
   (b) nachfolgend in einem zweiten Verfahrensschritt (b) das in Verfahrensschritt (a) erhaltene Reaktionszwischenprodukt (IVA') mit mindestens einer Polycarbonsäure (III), ausgewählt aus der Gruppe von Bernsteinsäure, Weinsäure, Citronensäure, Äpfelsäure, Adipinsäure, Fumarsäure und Maleinsäure und deren Anhydriden sowie deren Kombinationen oder Mischungen, insbesondere ausgewählt aus der Gruppe von Bernsteinsäure, Weinsäure, Citronensäure, Äpfelsäure, Adipinsäure und Fumarsäure und deren Anhydriden sowie deren Kombinationen oder Mischungen, bevorzugt ausgewählt aus der Gruppe von Bernsteinsäure und Adipinsäure und deren Anhydriden sowie deren Kombinationen oder Mischungen, umgesetzt und/oder zur Reaktion gebracht wird, insbesondere in einer Veresterungsreaktion und/oder unter Veresterungsbedingungen umgesetzt und/oder zur Reaktion gebracht wird,
wobei das Verfahren in Abwesenheit von Lösemitteln und/oder ohne jedwedes Lösemittel durchgeführt wird,
so dass als Reaktionsprodukt (IV) ein oder mehrere mit Polycarbonsäuren vernetzte Polyglycerinester der 3-Hydroxybuttersäure, insbesondere ein oder mehrere ein- oder mehrwertige mit Polycarbonsäuren vernetzte Polyglycerinester der 3-Hydroxybuttersäure,der allgemeinen Formel (IVa) 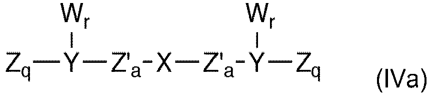 erhalten werden,
wobei in der allgemeinen Formel (IVa)
   - X abgeleitet ist von einer Polycarbonsäure, ausgewählt aus der Gruppe von Bernsteinsäure, Weinsäure, Citronensäure, Äpfelsäure, Adipinsäure, Fumarsäure und Maleinsäure sowie deren Kombinationen oder Mischungen, insbesondere ausgewählt aus der Gruppe von Bernsteinsäure, Weinsäure, Citronensäure, Äpfelsäure, Adipinsäure und Fumarsäure sowie deren Kombinationen oder Mischungen, bevorzugt ausgewählt aus der Gruppe von Bernsteinsäure und Adipinsäure und deren Anhydriden sowie deren Kombinationen oder Mischungen;
   - Y einen von einem Polyglycerin abgeleiteten Rest, insbesondere einen Rest der allgemeinen Formel (llc) 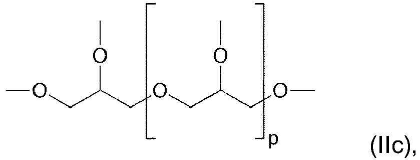 darstellt, wobei die Variable p eine ganze Zahl von 1 bis 6 ist;
   - Z einen Rest - C(O) - CH₂ - CH(OH) - CH₃ darstellt und die Variable q unabhängig voneinander eine ganze Zahl von 1 bis (p + 2) mit p wie zuvor definiert ist;
   - Z' einen Rest - C(O) - CH₂ - CH(CH₃) - O - darstellt und die Variable a unabhängig voneinander 0 oder 1 ist;
   - W unabhängig voneinander darstellt: Wasserstoff oder - X - OH mit X wie zuvor definiert oder aber einen oder mehrere Blöcke 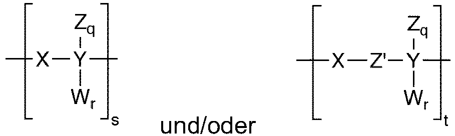 mit X, Y, Z, Z' und q jeweils wie zuvor definiert, wobei die Variablen s und t, jeweils unabhängig voneinander, eine ganze Zahl von 0 bis 30 sind und die Variable r unabhängig voneinander eine ganze Zahl von 0 bis (p + 1) mit p wie zuvor definiert ist, wobei das Kettenende der Blöcke jeweils durch Wasserstoff, - X - OH oder Z gebildet ist;
      oder aber
wobei gemäß einer (zweiten, zu (A) alternativen) Syntheseroute (B):
   (a) in einem ersten Verfahrensschritt (a) mindestens ein Polyglycerin (II) der allgemeinen Formel (IIa)

      HO - CH₂ - CH(OH) - CH₂ - [O - CH₂ - CH(OH) - CH₂]ₚ - OH (IIa)

      wobei in der allgemeinen Formel (IIa) die Variable p eine ganze Zahl von 1 bis 6, insbesondere von 1 bis 4, vorzugsweise 1 oder 2, besonders bevorzugt 1, darstellt,
      mit mindestens einer Polycarbonsäure (III), ausgewählt aus der Gruppe von Bernsteinsäure, Weinsäure, Citronensäure, Äpfelsäure, Adipinsäure, Fumarsäure und Maleinsäure und deren Anhydriden sowie deren Kombinationen oder Mischungen, insbesondere ausgewählt aus der Gruppe von Bernsteinsäure, Weinsäure, Citronensäure, Äpfelsäure, Adipinsäure und Fumarsäure und deren Anhydriden sowie deren Kombinationen oder Mischungen, bevorzugt ausgewählt aus der Gruppe von Bernsteinsäure und Adipinsäure und deren Anhydriden sowie deren Kombinationen oder Mischungen, umgesetzt und/oder zur Reaktion gebracht wird, insbesondere in einer Veresterungsreaktion und/oder unter Veresterungsbedingungen umgesetzt und/oder zur Reaktion gebracht wird,
      insbesondere sodass als Reaktionszwischenprodukt (IVB') des Verfahrensschritts (a) ein oder mehrere Polyglycerinester der Polycarbonsäure (III), insbesondere ein oder mehrere ein- oder mehrwertige Polyglycerinester der Polycarbonsäure (III), erhalten werden; und
   (b) nachfolgend in einem zweiten Verfahrensschritt (b) das in Verfahrensschritt (a) erhaltene Reaktionszwischenprodukt (IVB') mit mindestens einer 3-Hydroxybuttersäureverbindung der allgemeinen Formel (I)

      CH₃ - CH(OH) - CH₂ - C(O)OR¹ (I)

      wobei in der allgemeinen Formel (I) der Rest R¹ Wasserstoff, einen Rest - (O)C - CH₂ - CH(OH) - CH₃ oder ein C₁-C₄-Alkyl, insbesondere ein C₁-C₄-Alkyl, bevorzugt Methyl oder Ethyl, besonders bevorzugt Ethyl, darstellt, umgesetzt und/oder zur Reaktion gebracht wird, insbesondere in einer Veresterungsreaktion und/oder unter Veresterungsbedingungen umgesetzt und/oder zur Reaktion gebracht wird,
so dass als Reaktionsprodukt (IV) ein oder mehrere mit Polycarbonsäuren vernetzte Polyglycerinester der 3-Hydroxybuttersäure, insbesondere ein oder mehrere ein- oder mehrwertige mit Polycarbonsäuren vernetzte Polyglycerinester der 3-Hydroxybuttersäure,der allgemeinen Formel (IVa) 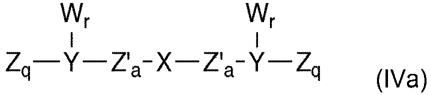
erhalten werden,
wobei in der allgemeinen Formel (IVa)
   - X abgeleitet ist von einer Polycarbonsäure, ausgewählt aus der Gruppe von Bernsteinsäure, Weinsäure, Citronensäure, Äpfelsäure, Adipinsäure, Fumarsäure und Maleinsäure sowie deren Kombinationen oder Mischungen, insbesondere ausgewählt aus der Gruppe von Bernsteinsäure, Weinsäure, Citronensäure, Äpfelsäure, Adipinsäure und Fumarsäure sowie deren Kombinationen oder Mischungen, bevorzugt ausgewählt aus der Gruppe von Bernsteinsäure und Adipinsäure und deren Anhydriden sowie deren Kombinationen oder Mischungen;
   - Y einen von einem Polyglycerin abgeleiteten Rest, insbesondere einen Rest der allgemeinen Formel (llc) 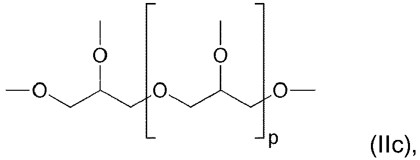 darstellt, wobei die Variable p eine ganze Zahl von 1 bis 6 ist;
   - Z einen Rest - C(O) - CH₂ - CH(OH) - CH₃ darstellt und die Variable q unabhängig voneinander eine ganze Zahl von 1 bis (p + 2) mit p wie zuvor definiert ist;
   - Z' einen Rest - C(O) - CH₂ - CH(CH₃) - O - darstellt und die Variable a unabhängig voneinander 0 oder 1 ist;
   - W unabhängig voneinander darstellt: Wasserstoff oder - X - OH mit X wie zuvor definiert oder aber einen oder mehrere Blöcke 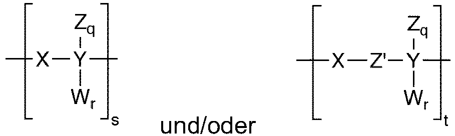 mit X, Y, Z, Z' und q jeweils wie zuvor definiert, wobei die Variablen s und t, jeweils unabhängig voneinander, eine ganze Zahl von 0 bis 30 sind und die Variable r unabhängig voneinander eine ganze Zahl von 0 bis (p + 1) mit p wie zuvor definiert ist, wobei das Kettenende der Blöcke jeweils durch Wasserstoff, - X - OH oder Z gebildet ist.

Gemäß der vorliegenden Erfindung wird das Verfahren, insbesondere der erste Verfahrensschritt (a) und/oder der zweite Verfahrensschritt (b), vorzugsweise der erste Verfahrensschritt (a) und der zweite Verfahrensschritt (b), in Abwesenheit von Lösemitteln und/oder ohne jedwedes Lösemittel durchgeführt werden.

D. h. das Verfahren bzw. der erste Verfahrensschritt (a) und/oder der zweite Verfahrensschritt (b) bzw. der erste Verfahrensschritt (a) und der zweite Verfahrensschritt (b) wird/werden also als Reaktion in Masse bzw. als Reaktion in Substanz bzw. als sogenannte *Bulk Reaction* durchgeführt. Dies hat den Vorteil, dass die erhaltenen Reaktionsprodukte nicht mit Lösemittel verunreinigt sind und kein Lösemittel nach Durchführung des Verfahrens bzw. der Reaktion aufwendig und energieträchtig entfernt und entsorgt bzw. rezykliert werden muss. Überraschenderweise verläuft das Verfahren bzw. die Reaktion dennoch mit hohen Umsätzen und Ausbeuten und zumindest im Wesentlichen ohne signifikante Nebenproduktbildung.

Gemäß einer besonderen Ausführungsform ist es möglich, dass das erfindungsgemäße Verfahren, insbesondere der erste Verfahrensschritt (a) und/oder der zweite Verfahrensschritt (b), vorzugsweise der erste Verfahrensschritt (a) und der zweite Verfahrensschritt (b), in Abwesenheit eines Katalysators und/oder ohne jedweden Katalysator durchgeführt werden kann oder aber in Gegenwart eines Katalysators, insbesondere eines Enzyms und/oder eines metallhaltigen und/oder metallbasierten, sauren oder basischen Katalysators, durchgeführt werden kann (insbesondere wobei der Katalysator nach der Umsetzung rezykliert werden kann).

Wie zuvor ausführt, kann gemäß einer besonderen Ausführungsform des erfindungsgemäßen Herstellungsverfahrens das Verfahren, insbesondere der erste Verfahrensschritt (a) und/oder der zweite Verfahrensschritt (b), vorzugsweise der erste Verfahrensschritt (a) und der zweite Verfahrensschritt (b), in Abwesenheit eines Katalysator und/oder ohne jedweden Katalysator durchgeführt werden.

Sofern das Verfahren, insbesondere der erste Verfahrensschritt (a) und/oder der zweite Verfahrensschritt (b), vorzugsweise der erste Verfahrensschritt (a) und der zweite Verfahrensschritt (b), in Abwesenheit eines Katalysators und/oder ohne jedweden Katalysator durchgeführt wird, ist es bevorzugt, wenn das Verfahren, insbesondere der erste Verfahrensschritt (a) und/oder der zweite Verfahrensschritt (b), vorzugsweise der erste Verfahrensschritt (a) und der zweite Verfahrensschritt (b), bei Temperaturen im Bereich von 20 °C bis 160°C, insbesondere im Bereich von 50 °C bis 150°C, vorzugsweise im Bereich von 70 °C bis 140°C, besonders bevorzugt im Bereich von 80 °C bis 135 °C, ganz besonders bevorzugt im Bereich von 100 °C bis 130 °C, durchgeführt wird.

Im Fall der Durchführung des Verfahrens, insbesondere des ersten Verfahrensschritts (a) und/oder des zweiten Verfahrensschritts (b), vorzugsweise des ersten Verfahrensschritts (a) und des zweiten Verfahrensschritts (b), in Abwesenheit eines Katalysators kann der angewendete Druckbereich in weiten Bereichen variieren. Insbesondere kann das Verfahren, insbesondere der erste Verfahrensschritt (a) und/oder der zweite Verfahrensschritt (b), vorzugsweise der erste Verfahrensschritt (a) und der zweite Verfahrensschritt (b), in Abwesenheit eines Katalysators und/oder ohne jedweden Katalysator bei einem Druck im Bereich von 0,0001 bar bis 10 bar, insbesondere im Bereich von 0,001 bar bis 5 bar, vorzugsweise im Bereich von 0,01 bar bis 2 bar, besonders bevorzugt im Bereich von 0,05 bar bis 1 bar, ganz besonders bei etwa 1 bar, durchgeführt werden.

Bei der Durchführung des Verfahrens, insbesondere des ersten Verfahrensschritts (a) und/oder des zweiten Verfahrensschritts (b), vorzugsweise des ersten Verfahrensschritts (a) und des zweiten Verfahrensschritts (b), in Abwesenheit eines Katalysators, ist es bevorzugt, wenn das Verfahren, insbesondere der erste Verfahrensschritt (a) und/oder der zweite Verfahrensschritt (b), vorzugsweise der erste Verfahrensschritt (a) und der zweite Verfahrensschritt (b), in Gegenwart eines Inertgases, insbesondere in Gegenwart von Helium, Argon oder Stickstoff, bevorzugt in Gegenwart von Stickstoff, durchgeführt wird. Insbesondere können hierdurch unerwünschte Nebenreaktionen, insbesondere aufgrund von Oxidation oder Hydrolyse, verhindert werden.

Alternativ zu dieser besonderen Ausführungsform ist es aber auch möglich, das Verfahren, insbesondere der erste Verfahrensschritt (a) und/oder der zweite Verfahrensschritt (b), vorzugsweise der erste Verfahrensschritt (a) und der zweite Verfahrensschritt (b), in Gegenwart eines Enzyms als Katalysator durchzuführen.

Dabei kann das Enzym insbesondere ausgewählt sein aus Synthetasen (Ligasen), Katalasen, Esterasen, Lipasen und deren Kombinationen. Erfindungsgemäß werden als Synthetasen (synonym Ligasen) insbesondere Enzyme aus der Klasse der Ligasen bezeichnet; Ligasen sind Enzyme, welche das Verknüpfen zweier oder mehrerer Moleküle durch eine kovalente Bindung katalysieren. Katalasen im Sinne der vorliegenden Erfindung sind insbesondere Enzyme, welche Wasserstoffperoxid zu Sauerstoff und Wasser umzusetzen imstande sind. Der Begriff der Esterasen bezeichnet insbesondere Enzyme, welche imstande sind, Ester hydrolytisch in Alkohol und Säure aufzuspalten (Verseifung); es handelt sich somit insbesondere um Hydrolasen, wobei fettspaltende Esterasen auch als Lipasen bezeichnet werden. Lipasen im Sinne der vorliegenden Erfindung sind insbesondere Enzyme, welche von Lipiden, wie Glyceriden, freie Fettsäuren abzuspalten imstand sind (Lipolyse).

In diesem Zusammenhang kann sich das als Katalysator eingesetzte Enzym insbesondere ableiten von *Candida antarctica, Mucor miehei* (*Rhizomucor miehei*), *Thermomyces lanuginosus, Candida rugosa, Aspergillus oryzae, Pseudomonas cepacia, Pseudomonas fluorescens, Rhizopus delemar* und *Pseudomonas* sp. sowie deren Kombinationen, vorzugsweise von *Candida antarctica*, *Mucor miehei* (*Rhizomucor miehei*) und *Thermomyces lanuginosus.*

Gemäß einer besonderen Ausführungsform kann das Enzym in immobilisierter Form, insbesondere immobilisiert auf einem Träger, vorzugsweise auf einem polymeren Träger, bevorzugt auf einem polymeren organischen Träger, besonders bevorzugt mit hydrophoben Eigenschaften, ganz besonders bevorzugt auf einem poly(meth)acrylharzbasierten Träger, eingesetzt werden.

Im Rahmen der vorliegenden Erfindung ist es bevorzugt, wenn im Fall der Verwendung eines Enzyms als Katalysator das Enzym nach dem Verfahren, insbesondere dem ersten Verfahrensschritt (a) und/oder dem zweiten Verfahrensschritt (b), vorzugsweise dem ersten Verfahrensschritt (a) und dem zweiten Verfahrensschritt (b), rezykliert wird.

Sofern das Verfahren, insbesondere der erste Verfahrensschritt (a) und/oder der zweite Verfahrensschritt (b), vorzugsweise der erste Verfahrensschritt (a) und der zweite Verfahrensschritt (b), im Rahmen des erfindungsgemäßen Herstellungsverfahrens in Gegenwart eines Enzyms als Katalysator durchgeführt wird, ist es bevorzugt, wenn das Verfahren, insbesondere der erste Verfahrensschritt (a) und/oder der zweite Verfahrensschritt (b), vorzugsweise der erste Verfahrensschritt (a) und der zweite Verfahrensschritt (b), bei Temperaturen im Bereich von 10 °C bis 80 °C, insbesondere im Bereich von 20 °C bis 80 °C, vorzugsweise im Bereich von 25 °C bis 75 °C, besonders bevorzugt im Bereich von 45 °C bis 75 °C, ganz besonders bevorzugt im Bereich von 50 °C bis 70 °C, durchgeführt wird.

Im Fall der Verwendung eines Enzyms als Katalysator kann die Menge des eingesetzten Enzyms in weiten Bereichen variieren. Insbesondere kann das Enzym in Mengen, bezogen auf die Gesamtmenge der Ausgangsverbindungen (I) und/oder (II) und/oder (III) und/oder (IV'A) und/oder (IV'B), im Bereich von 0,001 Gew.-% bis 20 Gew.-%, insbesondere im Bereich von 0,01 Gew.-% bis 15 Gew.-%, vorzugsweise im Bereich von 0,1 Gew.-% bis 15 Gew.-%, bevorzugt im Bereich von 0,5 Gew.-% bis 10 Gew.-%, eingesetzt werden. Dennoch kann es einzelfallbedingt oder anwendungsbezogen erforderlich sein, von den vorgenannten Mengen abzuweichen, ohne dass der Rahmen der vorliegenden Erfindung verlassen ist.

Wenn das erfindungsgemäße Verfahren gemäß Syntheseroute (A) durchgeführt wird, werden im ersten Verfahrensschritt (a) als Ausgangsverbindungen mindestens eine 3-Hydroxybuttersäureverbindung der allgemeinen Formel (I) und mindestens ein Polyglycerin (II) eingesetzt und im zweiten Verfahrensschritt (b) werden als Ausgangsverbindungen das Reaktionszwischenprodukt (IV'A) und mindestens eine Polycarbonsäure (III) eingesetzt. Wenn das erfindungsgemäße Verfahren gemäß Syntheseroute (B) durchgeführt wird, werden im ersten Verfahrensschritt (a) als Ausgangsverbindungen mindestens ein Polyglycerin (II) und mindestens eine Polycarbonsäure (III) eingesetzt und im zweiten Verfahrensschritt (b) werden als Ausgangsverbindungen das Reaktionszwischenprodukt (IV'B) und mindestens eine 3-Hydroxybuttersäureverbindung der allgemeinen Formel (I) eingesetzt.

Wenn gemäß einer besonderen Ausführungsform der vorliegenden Erfindung das Verfahren, insbesondere der erste Verfahrensschritt (a) und/oder der zweite Verfahrensschritt (b), vorzugsweise der erste Verfahrensschritt (a) und der zweite Verfahrensschritt (b), in Gegenwart eines Enzyms als Katalysator durchgeführt wird, kann auch der angewendete Druckbereich in weiten Bereichen variieren. Typischerweise kann das Verfahren, insbesondere der erste Verfahrensschritt (a) und/oder der zweite Verfahrensschritt (b), vorzugsweise der erste Verfahrensschritt (a) und der zweite Verfahrensschritt (b), in Gegenwart eines Enzyms als Katalysator bei einem Druck im Bereich von 0,0001 bar bis 10 bar, insbesondere im Bereich von 0,001 bar bis 5 bar, vorzugsweise im Bereich von 0,01 bar bis 2 bar, besonders bevorzugt im Bereich von 0,05 bar bis 1 bar, ganz besonders bei etwa 0,5 bar, durchgeführt werden.

Gemäß der besonderen Ausführungsform der vorliegenden Erfindung, wonach das Verfahren, insbesondere der erste Verfahrensschritt (a) und/oder der zweite Verfahrensschritt (b), vorzugsweise der erste Verfahrensschritt (a) und der zweite Verfahrensschritt (b), in Gegenwart eines Enzyms als Katalysator durchgeführt wird, ist es bevorzugt, wenn das Verfahren, insbesondere der erste Verfahrensschritt (a) und/oder der zweite Verfahrensschritt (b), vorzugsweise der erste Verfahrensschritt (a) und der zweite Verfahrensschritt (b), in Gegenwart eines Inertgases, insbesondere in Gegenwart von Helium, Argon oder Stickstoff, bevorzugt in Gegenwart von Stickstoff, durchgeführt wird. Wie zuvor bereits im Zusammenhang mit der Umsetzung in Abwesenheit eines Katalysators ausgeführt, können durch die Umsetzung in Gegenwart eines Inertgases unerwünschte Nebenreaktionen, insbesondere aufgrund von Oxidation oder Hydrolyse, verhindert werden.

Gemäß einer weiteren alternativen Ausführungsform der vorliegenden Erfindung kann das Verfahren, insbesondere der erste Verfahrensschritt (a) und/oder der zweite Verfahrensschritt (b), vorzugsweise der erste Verfahrensschritt (a) und der zweite Verfahrensschritt (b), in Gegenwart eins metallhaltigen und/oder metallbasierten, sauren oder basischen Katalysators durchgeführt werden.

Gemäß dieser alternativen Ausführungsform der vorliegenden Erfindung, wonach das Verfahren, insbesondere der erste Verfahrensschritt (a) und/oder der zweite Verfahrensschritt (b), vorzugsweise der erste Verfahrensschritt (a) und der zweite Verfahrensschritt (b), in Gegenwart eines metallhaltigen und/oder metallbasierten, sauren oder basischen Katalysators durchgeführt wird, kann der Katalysator insbesondere ausgewählt sein aus (i) basischen Katalysatoren, insbesondere Alkali- oder Erdalkalihydroxyden und Alkali- oder Erdalkalialkoholaten, wie NaOH, KOH, LiOH, Ca(OH)₂, NaOMe, KOMe und Na(OBu-tert.), (ii) sauren Katalysatoren, insbesondere Mineralsäuren, und organischen Säuren, wie Schwefelsäure, Salzsäure, Phosphorsäure, Salpetersäure, Sulfonsäuren, Methansulfonsäure, para-Toluolsulfonsäure und Carbonsäuren, (iii) Lewis-Säuren, insbesondere Lewis-Säuren auf der Basis von Titan-, Zinn-, Zink- und Aluminiumverbindungen, wie Titantetrabutylat, Zinnsäuren, Zinkacetat, Aluminiumtrichlorid und Aluminiumtriisopropyl und (iv) heterogenen Katalysatoren, insbesondere auf der Basis von mineralischen Silikaten, Germanaten, Carbonaten und Aluminiumoxiden, wie Zeolithen, Montmorilloniten, Mordeniten, Hydrotalciten und Tonerden, sowie deren Kombinationen.

Bei dieser Ausführungsform kann als Katalysator insbesondere eine Lewis-Säure auf der Basis von Titan-, Zinn-, Zink- und Aluminiumverbindungen, wie Titantetrabutylat, Zinnsäuren, Zinkacetat, Aluminiumtrichlorid und Aluminiumtriisopropyl, eingesetzt werden.

Insbesondere ist es auch bei dieser Ausführungsform bevorzugt, wenn der metallhaltige und/oder metallbasierte saure oder basische Katalysator nach der Umsetzung rezykliert wird.

Auch gemäß der besonderen Ausführungsform der vorliegenden Erfindung, wonach das Verfahren, insbesondere der erste Verfahrensschritt (a) und/oder der zweite Verfahrensschritt (b), vorzugsweise der erste Verfahrensschritt (a) und der zweite Verfahrensschritt (b), in Gegenwart eines metallhaltigen und/oder metallbasierten, sauren oder basischen Katalysators erfolgt, können die Temperaturen in weiten Bereichen variiert werden. Insbesondere kann das Verfahren, insbesondere der erste Verfahrensschritt (a) und/oder der zweite Verfahrensschritt (b), vorzugsweise der erste Verfahrensschritt (a) und der zweite Verfahrensschritt (b), in Gegenwart eines metallhaltigen und/oder metallbasierten, sauren oder basischen Katalysators bei Temperaturen im Bereich von 20 °C bis 160 °C, insbesondere im Bereich von 50 °C bis 150 °C, vorzugsweise im Bereich von 70 °C bis 140 °C, besonders bevorzugt im Bereich von 80 °C bis 135 °C, ganz besonders bevorzugt im Bereich von 100 °C bis 130 °C, durchgeführt werden.

Weiterhin kann auch bei dieser Ausführungsform der Katalysator (d. h. der metallhaltige und/oder metallbasierte, saure oder basische Katalysator) in weiten Mengenbereichen variiert werden: So kann der Katalysator in Mengen, bezogen auf die Gesamtmenge der Ausgangsverbindungen (I) und/oder (II) und/oder (III) und/oder (IV'A) und/oder (IV'B), im Bereich von 0,01 Gew.-% bis 30 Gew.-%, insbesondere im Bereich von 0,05 Gew.-% bis 15 Gew.-%, vorzugsweise im Bereich von 0,1 Gew.-% bis 15 Gew.-%, bevorzugt im Bereich von 0,2 Gew.-% bis 10 Gew.-%, eingesetzt werden. Dennoch ist es anwendungsbezogen oder einzelfallbedingt möglich, von den vorgenannten Mengen abzuweichen, ohne dass der Rahmen der vorliegenden Erfindung verlassen ist.

Wenn das erfindungsgemäße Verfahren gemäß Syntheseroute (A) durchgeführt wird, werden im ersten Verfahrensschritt (a) als Ausgangsverbindungen mindestens eine 3-Hydroxybuttersäureverbindung der allgemeinen Formel (I) und mindestens ein Polyglycerin (II) eingesetzt und im zweiten Verfahrensschritt (b) werden als Ausgangsverbindungen das Reaktionszwischenprodukt (IV'A) und mindestens eine Polycarbonsäure (III) eingesetzt. Wenn das erfindungsgemäße Verfahren gemäß Syntheseroute (B) durchgeführt wird, werden im ersten Verfahrensschritt (a) als Ausgangsverbindungen mindestens ein Polyglycerin (II) und mindestens eine Polycarbonsäure (III) eingesetzt und im zweiten Verfahrensschritt (b) werden als Ausgangsverbindungen das Reaktionszwischenprodukt (IV'B) und mindestens eine 3-Hydroxybuttersäureverbindung der allgemeinen Formel (I) eingesetzt.

Darüber hinaus kann gemäß dieser besonderen Ausführungsform der vorliegenden Erfindung, wonach das Verfahren, insbesondere der erste Verfahrensschritt (a) und/oder der zweite Verfahrensschritt (b), vorzugsweise der erste Verfahrensschritt (a) und der zweite Verfahrensschritt (b), in Gegenwart eines metallhaltigen und/oder metallbasierten, sauren oder basischen Katalysators erfolgt, der Druckbereich gleichermaßen in einem weiten Regime variieren: Insbesondere kann das Verfahren, insbesondere der erste Verfahrensschritt (a) und/oder der zweite Verfahrensschritt (b), vorzugsweise der erste Verfahrensschritt (a) und der zweite Verfahrensschritt (b), in Gegenwart eines metallhaltigen und/oder metallbasierten, sauren oder basischen Katalysators bei einem Druck im Bereich von 0,0001 bar bis 10 bar, insbesondere im Bereich von 0,001 bar bis 5 bar, vorzugsweise im Bereich von 0,01 bar bis 2 bar, besonders bevorzugt im Bereich von 0,05 bar bis 1 bar, ganz besonders bei etwa 1 bar, durchgeführt werden.

Weiterhin ist es auch gemäß dieser besonderen Ausführungsform der vorliegenden Erfindung, wonach das Verfahren, insbesondere der erste Verfahrensschritt (a) und/oder der zweite Verfahrensschritt (b), vorzugsweise der erste Verfahrensschritt (a) und der zweite Verfahrensschritt (b), in Gegenwart eines metallhaltigen und/oder metallbasierten, sauren oder basischen Katalysators durchgeführt wird, bevorzugt, wenn das Verfahren, insbesondere der erste Verfahrensschritt (a) und/oder der zweite Verfahrensschritt (b), vorzugsweise der erste Verfahrensschritt (a) und der zweite Verfahrensschritt (b), in Gegenwart eines Inertgases, insbesondere in Gegenwart von Helium, Argon oder Stickstoff, bevorzugt in Gegenwart von Stickstoff, durchgeführt werden. Wie zuvor bereits ausgeführt werden durch die Umsetzung in Gegenwart eines Inertgases unerwünschte Nebenreaktionen, insbesondere aufgrund von Oxidation oder Hydrolyse, verhindert.

Gemäß einer besonderen Ausführungsform des erfindungsgemäßen Verfahrens kann es bevorzugt sein, wenn das in Verfahrensschritt (a) erhaltene Reaktionszwischenprodukt (IV'A) bzw. (IV'B) nach erfolgter Umsetzung und/oder vor Verfahrensschritt (b) aufgereinigt, insbesondere fraktioniert wird, vorzugsweise destillativ aufgereinigt und/oder fraktioniert wird. Durch die Aufreinigung und/oder Fraktionierung können Reaktionsnebenprodukte entfernt werden und weiterhin Fraktionen mit angereicherten Anteilen einzelner Reaktionszwischenprodukte für den zweiten Verfahrensschritt (b) zielgerichtet bereitgestellt werden. Insgesamt kann somit die Nebenproduktbildung minimiert und die Zusammensetzung des Produktgemischs kann zielgerichtet gesteuert werden.

Was die Mengen an Edukten bzw. Ausgangsverbindungen insgesamt anbelangt, so können diese in weiten Bereichen variiert werden.

Unter Berücksichtigung von Verfahrensökonomie und Optimierung des Verfahrensablaufs, insbesondere im Hinblick auf die Minimierung von Nebenprodukten, ist es vorteilhaft, wenn im Verfahren die Ausgangsverbindungen (I), (II) und (III) in einem solchen Molverhältnis eingesetzt werden, dass im resultierenden Reaktionsprodukt (IV) ein vorgegebener Vernetzungsgrad (Verzweigungsgrad) eingestellt und/oder gesteuert wird und/oder dass im resultierenden Reaktionsprodukt (IV) ein jeweils vorgegebener Anteil an Einheiten, welche auf die Ausgangsverbindungen (I), (II) und (III) zurückgehen, eingestellt und/oder gesteuert wird.

Insbesondere kann es vorteilhaft sein, wenn im ersten Verfahrensschritt (a) gemäß Syntheseroute (A) die Ausgangsverbindungen (I) und (II) in einem solchen Molverhältnis eingesetzt werden, dass im resultierenden Reaktionszwischenprodukt (IV'A) pro Molekül mindestens eine freie Hydroxylgruppe verbleibt. Die mindestens eine freie Hydroxylgruppe pro Reaktionszwischenprodukt (IV'A) Molekül wird erfindungsgemäß im nachfolgenden zweiten Verfahrensschritt (b) umgesetzt, insbesondere in einer Veresterungsreaktion.

Weiterhin kann es erfindungsgemäß auch vorteilhaft sein, wenn im zweiten Verfahrensschritt (b) gemäß Syntheseroute (A) das Reaktionszwischenprodukt (IV'A) und die Polycarbonsäure (III) in einem solchen Molverhältnis eingesetzt werden, dass im resultierenden Reaktionsprodukt (IV) ein vorgegebener Vernetzungsgrad (Verzweigungsgrad) eingestellt und/oder gesteuert wird und/oder dass im resultierenden Reaktionsprodukt (IV) ein jeweils vorgegebener Anteil an Einheiten, welche auf die Ausgangsverbindungen (I), (II) und (III) zurückgehen, eingestellt und/oder gesteuert wird. Durch den Vernetzungsgrad (Verzweigungsgrad) kann beispielsweise die Löslichkeit des Reaktionsprodukts eingestellt werden.

Darüber hinaus kann es erfindungsgemäß vorteilhaft sein, wenn im ersten Verfahrensschritt (a) gemäß Syntheseroute (B) die Ausgangsverbindungen (II) und (III) in einem solchen Molverhältnis eingesetzt werden, dass im resultierenden Reaktionszwischenprodukt (IV'B) pro Molekül mindestens eine freie Hydroxylgruppe verbleibt und/oder dass im resultierenden Reaktionszwischenprodukt (IV'B) und im Reaktionsprodukt (IV) ein vorgegebener Vernetzungsgrad (Verzweigungsgrad) eingestellt und/oder gesteuert wird. Im nachfolgenden zweiten Verfahrensschritt (b) gemäß dieser Ausführungsform der vorliegenden Erfindung können noch freie Hydroxylgruppen mit der 3-Hydroxybuttersäureverbindung reagieren, insbesondere in einer Veresterungsreaktion.

Gleichermaßen kann es vorteilhaft sein, wenn im zweiten Verfahrensschritt (b) gemäß Syntheseroute (B) das Reaktionszwischenprodukt (IV'B) und die 3-Hydroxybuttersäureverbindung (I) in einem solchen Molverhältnis eingesetzt werden, dass im resultierenden Reaktionsprodukt (IV) ein jeweils vorgegebener Anteil an Einheiten, welche auf die Ausgangsverbindungen (I), (II) und (III) zurückgehen, eingestellt und/oder gesteuert wird.

Insbesondere kann es vorgesehen sein, dass im zweiten Verfahrensschritt (b) gemäß Syntheseroute (B) die 3-Hydroxybuttersäureverbindung (I), bezogen auf die Hydroxylgruppen des Reaktionszwischenprodukt (IV'B) in mindestens äquimolarer Menge und bevorzugt in molaren Mengen in einem Bereich von äquimolarer Menge bis zu einem molaren Überschuss von 200 Mol-%, insbesondere in einem Bereich von äquimolarer Menge bis zu einem molaren Überschuss von 150 Mol-%, vorzugsweise in einem Bereich von äquimolarer Menge bis zu einem molaren Überschuss von 100 Mol-%, eingesetzt wird. Durch den Einsatz der 3-Hydroxybuttersäureverbindung (I) in äquimolaren Mengen oder sogar im Überschuss bezogen auf die Hydroxylgruppen des Reaktionszwischenprodukt (IV'B) können vorzugsweise alle verbleibenden Hydroxylgruppen mit der 3-Hydroxybuttersäureverbindung verestert werden und somit kann die maximal mögliche Wirkstoffdichte (d. h. 3-Hydroxybuttersäure) im Reaktionsprodukt (IV) erreicht werden.

Typischerweise wird im Rahmen des erfindungsgemäßen Verfahrens im ersten Verfahrensschritt (a) gemäß der (ersten) Syntheseroute (A) gleichzeitig die Verbindung R¹ - OH, wobei der Rest R¹ Wasserstoff, einen Rest - (O)C - CH₂ - CH(OH) - CH₃ oder ein C₁-C₄-Alkyl, insbesondere ein C₁-C₄-Alkyl, bevorzugt Methyl oder Ethyl, besonders bevorzugt Ethyl, darstellt, gebildet. Insbesondere ist es bevorzugt, wenn die Verbindung R¹ - OH der Umsetzung entzogen wird, insbesondere kontinuierlich entzogen wird, insbesondere mittels vorzugsweise kontinuierlicher, insbesondere destillativer oder adsorptiver Entfernung. In diesem Zusammenhang ist die Verbindung R¹ - OH insbesondere Wasser oder ein entsprechender Alkohol (d. h. abhängig von der eingesetzten 3-Hydroxybuttersäureverbindung).

Üblicherweise wird im Rahmen des erfindungsgemäßen Verfahrens im zweiten Verfahrensschritt (b) gemäß der (ersten) Syntheseroute (A) bei Verwendung der Polycarbonsäure (III) in Form der freien Säure bei der Umsetzung gleichzeitig Wasser gebildet. Insbesondere ist es bevorzugt, wenn das Wasser der Umsetzung entzogen wird, insbesondere kontinuierlich entzogen wird, insbesondere mittels vorzugsweise kontinuierlicher, insbesondere destillativer oder adsorptiver Entfernung

Vorzugsweise wird im Rahmen des erfindungsgemäßen Verfahrens im zweiten Verfahrensschritt (b) gemäß der (ersten) Syntheseroute (A) bei Verwendung der Polycarbonsäure (III) in Form des Anhydrids die entsprechende freie Polycarbonsäure (III) gebildet. Insbesondere ist es bevorzugt, wenn die entstehende freie Polycarbonsäure (III) weiter umgesetzt wird oder nach erfolgter Reaktion entfernt und gegebenenfalls rezykliert wird, insbesondere in Abhängigkeit von den Mengen und/oder Mengenverhältnissen der eingesetzten Ausgangsverbindungen (I), (II) und (III).

Bei der Verwendung von inneren bzw. cyclischen Anhydriden (wie beispielsweise Bernsteinsäureanhydrid oder Maleinsäureanhydrid) wird jedoch der Ring geöffnet und kein Abspaltprodukt gebildet, so dass das Reaktionsprodukt eine endständige freie Säure aufweist. Dieser Verlauf ist im Folgenden am Beispiel der Reaktion von Maleinsäureanhydrid mit 3-Hydroxybuttersäureethylester als Veresterungsalkohol dargestellt:

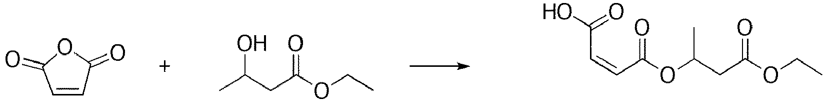

Alternativ kann im zweiten Verfahrensschritt (b) gemäß der (ersten) Syntheseroute (A) die Polycarbonsäure (III) in Form des Esters eingesetzt werden. Üblicherweise werden im Rahmen des erfindungsgemäßen Verfahrens bei Verwendung der Polycarbonsäure (III) in Form des Esters im zweiten Verfahrensschritt (b) gemäß der (ersten) Syntheseroute (A) der entsprechende Esteralkohol und Wasser gebildet. Insbesondere ist es bevorzugt, wenn der entstehende Esteralkohol und Wasser der Umsetzung entzogen werden, insbesondere kontinuierlich entzogen werden, insbesondere mittels vorzugsweise kontinuierlicher, insbesondere destillativer oder adsorptiver Entfernung.

Bei dem Esteralkohol handelt es sich erfindungsgemäß insbesondere um den Alkohol, der entsteht, wenn die Polycarbonsäure (III) in Form des Esters mit den freien Hydroxylgruppen des Reaktionszwischenprodukts (IV'A) entstehen. D. h. beispielsweise im Fall des Ethylesters der Polycarbonsäure (III) entsteht Ethanol.

Vorzugsweise wird im Rahmen des erfindungsgemäßen Verfahrens im ersten Verfahrensschritt (a) gemäß der (zweiten) Syntheseroute (B) bei Verwendung der Polycarbonsäure (III) in Form der freien Säure bei der Umsetzung gleichzeitig Wasser gebildet wird. Insbesondere ist es bevorzugt, wenn das Wasser der Umsetzung entzogen wird, insbesondere kontinuierlich entzogen wird, insbesondere mittels vorzugsweise kontinuierlicher, insbesondere destillativer oder adsorptiver Entfernung.

Üblicherweise wird im Rahmen des erfindungsgemäßen Verfahrens im ersten Verfahrensschritt (a) gemäß der (zweiten) Syntheseroute (B) bei Verwendung der Polycarbonsäure (III) in Form des Anhydrids die entsprechende freie Polycarbonsäure (III) gebildet. Insbesondere ist es bevorzugt, wenn die entstehende freie Polycarbonsäure (III) weiter umgesetzt wird oder nach erfolgter Reaktion entfernt und gegebenenfalls rezykliert wird, insbesondere in Abhängigkeit von den Mengen und/oder Mengenverhältnissen der eingesetzten Ausgangsverbindungen (I), (II) und (III).

Wie zuvor im Zusammenhang mit der (ersten) Syntheseroute (A) ausgeführt, wird im Fall von inneren bzw. cyclischen Carbonsäureanhydriden kein Nebenprodukt gebildet.

Vorzugsweise werden im Rahmen des erfindungsgemäßen Verfahrens im ersten Verfahrensschritt (a) gemäß der (zweiten) Syntheseroute (B) bei Verwendung der Polycarbonsäure (III) in Form des Esters der entsprechende Esteralkohol und Wasser gebildet. Insbesondere ist es bevorzugt, der entstehende Esteralkohol und Wasser der Umsetzung entzogen werden, insbesondere kontinuierlich entzogen werden, insbesondere mittels vorzugsweise kontinuierlicher, insbesondere destillativer oder adsorptiver Entfernung.

Normalerweise wird im Rahmen des erfindungsgemäßen Verfahrens im zweiten Verfahrensschritt (b) gemäß der (zweiten) Syntheseroute (B) gleichzeitig die Verbindung R¹ - OH, wobei der Rest R¹ Wasserstoff, einen Rest - (O)C - CH₂ - CH(OH) - CH₃ oder ein C₁-C₄-Alkyl, insbesondere ein C₁-C₄-Alkyl, bevorzugt Methyl oder Ethyl, besonders bevorzugt Ethyl, darstellt, gebildet. Insbesondere ist es bevorzugt, die Verbindung R¹ - OH der Umsetzung entzogen wird, insbesondere kontinuierlich entzogen wird, insbesondere mittels vorzugsweise kontinuierlicher, insbesondere destillativer oder adsorptiver Entfernung.

Wie zuvor im Zusammenhang mit der (ersten) Syntheseroute (A) ausgeführt, handelt es sich bei der Verbindung R¹ - OH insbesondere um Wasser oder einen entsprechender Alkohol (d. h. abhängig von der eingesetzten 3-Hydroxybuttersäureverbindung).

Durch die kontinuierliche Entfernung der gebildeten Nebenprodukte wird das chemische Gleichgewicht verschoben, wodurch die Ausbeute bzw. Produktbildung erhöht und die Nebenproduktbildung minimiert wird.

Im Rahmen des erfindungsgemäßen Herstellungsverfahren kann die Zusammensetzung des Reaktionsprodukts, insbesondere das Vorhandensein verschiedener mit Polycarbonsäuren vernetzter Polyglycerinester von 3-Hydroxybuttersäure, und deren Anteil im Fall eines Gemischs und/oder der Vernetzungsgrad (Verzweigungsgrad) und/oder das Molekulargewicht, mittels der Umsetzungsbedingungen kontrolliert und/oder gesteuert werden, insbesondere durch Auswahl der Umsetzungstemperatur (Reaktionstemperatur) und/oder Auswahl des Umsetzungsdrucks (Reaktionsdrucks) und/oder Abwesenheit oder Vorsehen eines Katalysators und dessen Auswahl in Bezug auf Art und/oder Menge und/oder Auswahl der Mengen der Ausgangsverbindungen (Edukte) und/oder Vorsehen der Entfernung der gegebenenfalls gebildeten Nebenprodukte.

Somit ist es möglich, die Zusammensetzung des Produkts bzw. Produktgemischs je nach Anwendung maßzuschneidern; insbesondere kann beispielsweise die Dichte an Ketokörpern (d. h. 3-Hydroxybuttersäure bzw. deren Derivate) pro Molekül zielgerichtet eingestellt werden.

Im Anschluss an die Umsetzung kann das erhaltene Reaktionsprodukt weiteren üblichen bzw. an sich bekannten Aufreinigungs- bzw. Aufarbeitungsschritten unterzogen werden.

In diesem Zusammenhang kann das erhaltene Reaktionsprodukt nach erfolgter Umsetzung beispielsweise fraktioniert werden, insbesondere destillativ fraktioniert werden.

Auch können nichtumgesetzte Ausgangsverbindungen, insbesondere nichtumgesetzte Ausgangsverbindungen (I) und/oder (II) und/oder (III), aus dem Reaktionszwischenprodukt (IV'A) bzw. (IV'B) und/oder aus dem Reaktionsprodukt (IV) abgetrennt und anschließend gegebenenfalls rezykliert werden.

Gemäß einer besonderen Ausführungsform des erfindungsgemäßen Herstellungsverfahrens kann insbesondere derart vorgegangen werden, dass im Reaktionsprodukt (IV) nach erfolgter Umsetzung noch vorhandene Hydroxylgruppen und/oder Carboxylgruppen zumindest teilweise, vorzugsweise vollständig, funktionalisiert, insbesondere verestert werden.

Mit anderen Worten kann sich der Umsetzung eine teilweise, insbesondere vollständige Funktionalisierung, insbesondere Veresterung, noch vorhandener Hydroxylgruppen und/oder Carboxylgruppen anschließen.

Bei dieser besonderen Ausführungsform des erfindungsgemäßen Verfahrens kann die Funktionalisierung, insbesondere die Veresterung noch vorhandener Hydroxylgruppen und/oder Carboxylgruppen, durch Reaktion mit einem Carbonsäureanhydrid von beispielsweise C₂-C₃₀-Carbonsäuren oder mit C₂-C₃₀-Fettsäuren oder mit C₂-C₃₀-Fettalkoholen erfolgen. Dabei kann es sich um lineare oder verzweigte, gesättigte oder ein- oder mehrfach ungesättigte C₂-C₃₀-Carbonsäureanhydride oder C₂-C₃₀-Fettsäuren oder C₂-C₃₀-Fettalkohole handeln. In diesem Zusammenhang können noch vorhandene Hydroxylgruppen insbesondere mit Carbonsäureanhydriden oder Fettsäuren umgesetzt werden und noch vorhandene Carboxylgruppen können insbesondere mit Fettalkoholen umgesetzt werden.

Wenn das erfindungsgemäße Verfahren gemäß einer besonderen Ausführungsform gemäß Syntheseroute (A) durchgeführt wird, können als Reaktionszwischenprodukt (IV'A) des Verfahrensschritts (a) gemäß Syntheseroute (A) ein oder mehrere Polyglycerinester der 3-Hydroxybuttersäure, insbesondere ein oder mehrere ein- oder mehrwertige Polyglycerinester der 3-Hydroxybuttersäure, der allgemeinen Formel (IV'Aa) 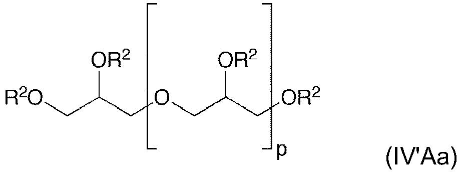 wobei der Rest R² unabhängig voneinander Wasserstoff oder einen Rest - (O)C - CH₂ - CH(OH) - CH₃ darstellt, jedoch mit der Maßgabe, dass mindestens ein Rest R² einen Rest - (O)C - CH₂ - CH(OH) - CH₃ darstellt, erhalten werden.

Wenn das erfindungsgemäße Verfahren gemäß einer alternativen besonderen Ausführungsform gemäß Syntheseroute (B) durchgeführt wird, können als Reaktionszwischenprodukt (IV'B) des Verfahrensschritts (a) gemäß Syntheseroute (B) ein oder mehrere Polyglycerinester der Polycarbonsäure (III), insbesondere ein oder mehrere ein- oder mehrwertige Polyglycerinester der Polycarbonsäure (III), der allgemeinen Formel (IV'Ba) 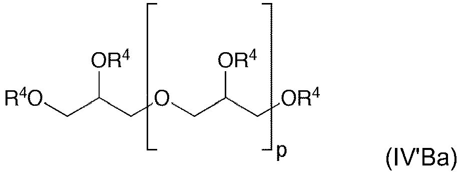 wobei der Rest R⁴ unabhängig voneinander darstellt: Wasserstoff oder einen Rest - C(O) - X - COOH, wobei X einen 1 bis 10, vorzugsweise 2 bis 6 Kohlenstoffatome enthaltenden und gegebenenfalls ein- oder mehrfach substituierten, insbesondere mit einem oder mehreren Hydroxyl-Resten und/oder Carboxyl-Resten substituierten, gesättigten oder ungesättigten organischen Rest darstellt, insbesondere wobei freie Carboxylgruppen mit weiteren Polyglycerinen (II) und/oder Polyglycerinester der Polycarbonsäure (III) verestert sind, insbesondere vernetzt sind, jedoch mit der Maßgabe, dass mindestens ein Rest R⁴ einen Rest - C(O) - X - COOH darstellt, erhalten werden.

Bei der Veresterung von freien Carboxylgruppen Polyglycerinester der Polycarbonsäure (III) mit weiteren Polyglycerinen (II) und/oder weiteren Polyglycerinestern der Polycarbonsäure (III) wird ein Netzwerk gebildet; d. h. eine Vielzahl von Polyglycerinen (II) bzw. Polyglycerinestern der Polycarbonsäure (III) ist durch Polycarbonsäuren (III) miteinander verbunden.

Im Rahmen des erfindungsgemäßen Verfahrens werden und/oder sind als Reaktionsprodukt (IV) ein oder mehrere mit Polycarbonsäuren vernetzte Polyglycerinester der 3-Hydroxybuttersäure, insbesondere ein oder mehrere ein- oder mehrwertige mit Polycarbonsäuren vernetzte Polyglycerinester der 3-Hydroxybuttersäure, der allgemeinen Formel (IVa) 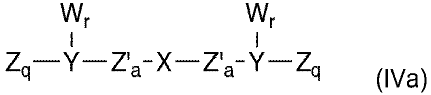 erhalten und/oder erhältlich,
wobei in der allgemeinen Formel (IVa)
- X einen Rest - C(O) - X' -C(O) - darstellt, wobei X' einen von einer Polycarbonsäure abgeleiteten Rest, insbesondere einen 1 bis 10, vorzugsweise 2 bis 6 Kohlenstoffatome enthaltenden und gegebenenfalls ein- oder mehrfach substituierten, insbesondere mit einem oder mehreren Hydroxyl-Resten und/oder Carboxyl-Resten substituierten, gesättigten oder ungesättigten organischen Rest, darstellt;
- Y einen von einem Polyglycerin abgeleiteten Rest, insbesondere einen Rest der allgemeinen Formel (IIc) 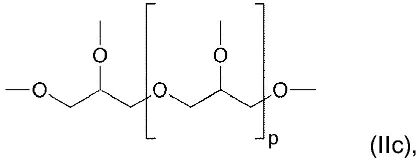 wobei die Variable p eine ganze Zahl von 1 bis 6, insbesondere von 1 bis 4, vorzugsweise 1 oder 2, besonders bevorzugt 1, ist, darstellt;
- Z einen Rest - C(O) - CH₂ - CH(OH) - CH₃ darstellt und die Variable q unabhängig voneinander eine ganze Zahl von 1 bis (p + 2) mit p wie zuvor definiert ist;
- Z' einen Rest - C(O) - CH₂ - CH(CH₃) - O - darstellt und die Variable a unabhängig voneinander 0 oder 1 ist;
- W unabhängig voneinander darstellt: Wasserstoff oder - X - OH mit X wie zuvor definiert oder aber einen oder mehrere Blöcke 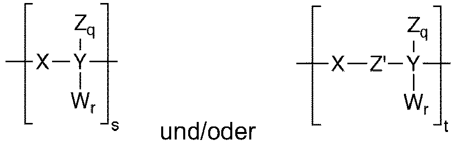 mit X, Y, Z, Z' und q jeweils wie zuvor definiert, wobei die Variablen s und t, jeweils unabhängig voneinander, eine ganze Zahl von 0 bis 30, insbesondere von 0 bis 25, vorzugsweise von 0 bis 20, besonders bevorzugt von 0 bis 10, ganz besonders bevorzugt von 0 bis 5, sind und die Variable r unabhängig voneinander eine ganze Zahl von 0 bis (p + 1) mit p wie zuvor definiert ist, wobei das Kettenende der Blöcke jeweils durch Wasserstoff, - X - OH oder Z gebildet ist.

Bei dem Kettenende handelt es sich erfindungsgemäß um die Einheit, welche die Wiederholungseinheiten (d. h. die sich wiederholenden Blöcke) abschließt und somit ist das Kettenende eine endständige Einheit im Reaktionsprodukt (IV).

Insgesamt handelt es sich bei dem erfindungsgemäßen Reaktionsprodukt insbesondere um ein Netzwerk, bei welchem eine Vielzahl von Verzweigungen möglich ist. Dadurch können auch Wiederholungseinheiten auch innerhalb von Wiederholungseinheiten vorliegen bzw. ausgehend von Wiederholungseinheiten Verzweigungen zu weiteren Wiederholungseinheiten gebildet werden.

Insbesondere können bei dem erfindungsgemäßen Herstellungsverfahren als Reaktionsprodukt (IV) ein oder mehrere mit Polycarbonsäuren vernetzte Polyglycerinester der 3-Hydroxybuttersäure, insbesondere ein oder mehrere ein- oder mehrwertige mit Polycarbonsäuren vernetzte Polyglycerinester der 3-Hydroxybuttersäure, der allgemeinen Formel (IVa) 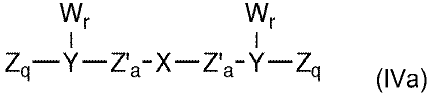 erhalten werden und/oder erhältlich sein,
wobei in der allgemeinen Formel (IVa)
- X einen Rest - C(O) - X' -C(O) - darstellt, wobei X' einen von einer Polycarbonsäure abgeleiteten Rest, insbesondere einen 1 bis 10, vorzugsweise 2 bis 6 Kohlenstoffatome enthaltenden und gegebenenfalls ein- oder mehrfach substituierten, insbesondere mit einem oder mehreren Hydroxyl-Resten und/oder Carboxyl-Resten substituierten, gesättigten oder ungesättigten organischen Rest, darstellt;
- Y einen von einem Polyglycerin abgeleiteten Rest, insbesondere einen Rest der allgemeinen Formel (IId) 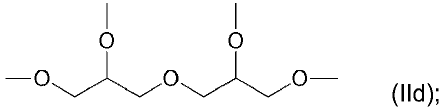
- Z einen Rest - C(O) - CH₂ - CH(OH) - CH₃ darstellt und die Variable q unabhängig voneinander eine ganze Zahl von 1 bis (p + 2) mit p wie zuvor definiert ist;
- Z' einen Rest - C(O) - CH₂ - CH(CH₃) - O - darstellt und die Variable a unabhängig voneinander 0 oder 1 ist;
- W unabhängig voneinander darstellt: Wasserstoff oder - X - OH mit X wie zuvor definiert oder aber einen oder mehrere Blöcke 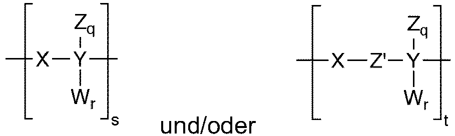 mit X, Y, Z, Z' und q jeweils wie zuvor definiert, wobei die Variablen s und t, jeweils unabhängig voneinander, eine ganze Zahl von 0 bis 30, insbesondere von 0 bis 25, vorzugsweise von 0 bis 20, besonders bevorzugt von 0 bis 10, ganz besonders bevorzugt von 0 bis 5, sind und die Variable r unabhängig voneinander eine ganze Zahl von 0 bis (p + 1) mit p wie zuvor definiert ist, wobei das Kettenende der Blöcke jeweils durch Wasserstoff, - X - OH oder Z gebildet ist.

Gemäß einer besonderen Ausführungsform des erfindungsgemäßen Verfahrens kann es bevorzugt sein, wenn als Reaktionsprodukt (IV) ein oder mehrere mit Polycarbonsäuren vernetzte Polyglycerinester der 3-Hydroxybuttersäure, insbesondere ein oder mehrere ein- oder mehrwertige mit Polycarbonsäuren vernetzte Polyglycerinester der 3-Hydroxybuttersäure, der allgemeinen Formel (IVa) 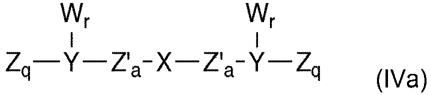 erhalten werden und/oder erhältlich sind,
wobei in der allgemeinen Formel (IVa)
- X einen Rest - C(O) - X' -C(O) - darstellt, wobei X' einen von einer Polycarbonsäure abgeleiteten Rest, insbesondere einen 2 bis 6 Kohlenstoffatome enthaltenden und gegebenenfalls ein- oder mehrfach substituierten, insbesondere mit einem oder mehreren Hydroxyl-Resten und/oder Carboxyl-Resten substituierten, gesättigten oder ungesättigten organischen Rest, darstellt;
- Y einen von einem Polyglycerin abgeleiteten Rest, insbesondere einen Rest der allgemeinen Formel (IId) 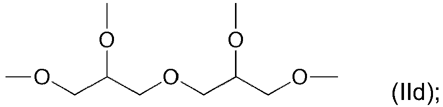
- Z einen Rest - C(O) - CH₂ - CH(OH) - CH₃ darstellt und die Variable q unabhängig voneinander eine ganze Zahl von 1 bis (p + 2) mit p wie zuvor definiert ist;
- Z' einen Rest - C(O) - CH₂ - CH(CH₃) - O - darstellt und die Variable a unabhängig voneinander 0 oder 1 ist;
- W unabhängig voneinander darstellt: Wasserstoff oder - X - OH mit X wie zuvor definiert oder aber einen oder mehrere Blöcke 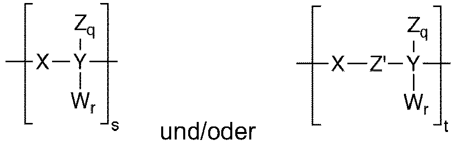 mit X, Y, Z, Z' und q jeweils wie zuvor definiert, wobei die Variablen s und t, jeweils unabhängig voneinander, eine ganze Zahl von 0 bis 30, insbesondere von 0 bis 25, vorzugsweise von 0 bis 20, besonders bevorzugt von 0 bis 10, ganz besonders bevorzugt von 0 bis 5, sind und die Variable r unabhängig voneinander eine ganze Zahl von 0 bis (p + 1) mit p wie zuvor definiert ist, wobei das Kettenende der Blöcke jeweils durch Wasserstoff, - X - OH oder Z gebildet ist.

Gemäß einer weiteren besonderen Ausführungsform des erfindungsgemäßen Verfahren können als Reaktionsprodukt (IV) ein oder mehrere mit Polycarbonsäuren vernetzte Polyglycerinester der 3-Hydroxybuttersäure, insbesondere ein oder mehrere ein- oder mehrwertige mit Polycarbonsäuren vernetzte Polyglycerinester der 3-Hydroxybuttersäure, der allgemeinen Formel (IVa) 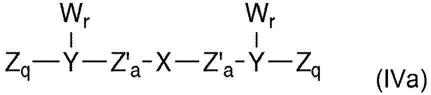 erhalten werden und/oder erhältlich sein,
wobei in der allgemeinen Formel (IVa)
- X abgeleitet ist von einer Polycarbonsäure, ausgewählt aus der Gruppe von Bernsteinsäure, Weinsäure, Citronensäure, Äpfelsäure, Adipinsäure, Fumarsäure und Maleinsäure sowie deren Kombinationen oder Mischungen, insbesondere ausgewählt aus der Gruppe von Bernsteinsäure, Weinsäure, Citronensäure, Äpfelsäure, Adipinsäure und Fumarsäure sowie deren Kombinationen oder Mischungen, bevorzugt ausgewählt aus der Gruppe von Bernsteinsäure und Adipinsäure und deren Anhydriden sowie deren Kombinationen oder Mischungen;
- Y einen von einem Polyglycerin abgeleiteten Rest, insbesondere einen Rest der allgemeinen Formel (IId) 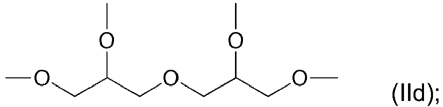
- Z einen Rest - C(O) - CH₂ - CH(OH) - CH₃ darstellt und die Variable q unabhängig voneinander eine ganze Zahl von 1 bis (p + 2) mit p wie zuvor definiert ist;
- Z' einen Rest - C(O) - CH₂ - CH(CH₃) - O - darstellt und die Variable a unabhängig voneinander 0 oder 1 ist;
- W unabhängig voneinander darstellt: Wasserstoff oder - X - OH mit X wie zuvor definiert oder aber einen oder mehrere Blöcke 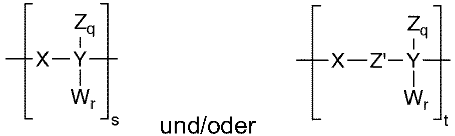 mit X, Y, Z, Z' und q jeweils wie zuvor definiert, wobei die Variablen s und t, jeweils unabhängig voneinander, eine ganze Zahl von 0 bis 30, insbesondere von 0 bis 25, vorzugsweise von 0 bis 20, besonders bevorzugt von 0 bis 10, ganz besonders bevorzugt von 0 bis 5, sind und die Variable r unabhängig voneinander eine ganze Zahl von 0 bis (p + 1) mit p wie zuvor definiert ist, wobei das Kettenende der Blöcke jeweils durch Wasserstoff, - X - OH oder Z gebildet ist.

In diesem Zusammenhang bedeutet "abgeleitet von", dass X aus den genannten Carbonsäuren gebildet wird; insbesondere wird durch Veresterung des Wasserstoffs des Carboxyls verestert; d. h. also, es liegt jeweils der Dicarboxylatrest der entsprechenden Säure als X vor.

Gemäß einer wiederum weiteren besonderen Ausführungsform des erfindungsgemäßen Verfahrens können als Reaktionsprodukt (IV) ein oder mehrere mit Polycarbonsäuren vernetzte Polyglycerinester der 3-Hydroxybuttersäure, insbesondere ein oder mehrere ein- oder mehrwertige mit Polycarbonsäuren vernetzte Polyglycerinester der 3-Hydroxybuttersäure, der allgemeinen Formel (IVa) 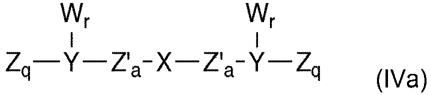 erhalten werden und/oder erhältlich sein,
wobei in der allgemeinen Formel (IVa)
- X einen der folgenden Reste darstellt: 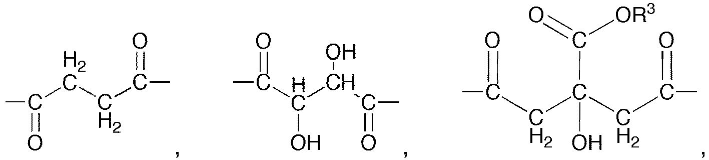 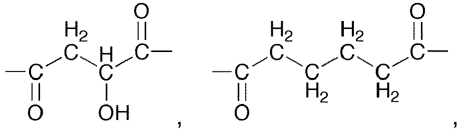 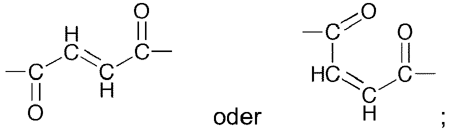 wobei in den vorstehenden Resten der Rest R³ Wasserstoff oder einen Rest - CH(CH₃) - CH₂ - C(O)OR¹ mit R¹ wie zuvor definiert oder einen gegebenenfalls substituierten Polyglycerinrest darstellt;
- Y einen von einem Polyglycerin abgeleiteten Rest, insbesondere einen Rest der allgemeinen Formel (IIc) 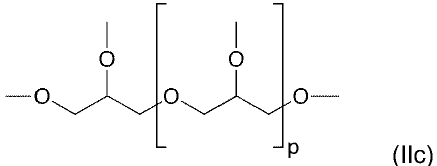 wobei die Variable p eine ganze Zahl von 1 bis 6, insbesondere von 1 bis 4, vorzugsweise 1 oder 2, besonders bevorzugt 1, ist, darstellt;;
- Z einen Rest - C(O) - CH₂ - CH(OH) - CH₃ darstellt und die Variable q unabhängig voneinander eine ganze Zahl von 1 bis (p + 2) mit p wie zuvor definiert ist;
- Z' einen Rest - C(O) - CH₂ - CH(CH₃) - O - darstellt und die Variable a unabhängig voneinander 0 oder 1 ist;
- W unabhängig voneinander darstellt: Wasserstoff oder - X - OH mit X wie zuvor definiert oder aber einen oder mehrere Blöcke 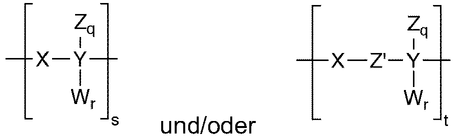 mit X, Y, Z, Z' und q jeweils wie zuvor definiert, wobei die Variablen s und t, jeweils unabhängig voneinander, eine ganze Zahl von 0 bis 30, insbesondere von 0 bis 25, vorzugsweise von 0 bis 20, besonders bevorzugt von 0 bis 10, ganz besonders bevorzugt von 0 bis 5, sind und die Variable r unabhängig voneinander eine ganze Zahl von 0 bis (p + 1) mit p wie zuvor definiert ist, wobei das Kettenende der Blöcke jeweils durch Wasserstoff, - X - OH oder Z gebildet ist.

Darüber hinaus können gemäß einer besonderen Ausführungsform des erfindungsgemäßen Verfahrens als Reaktionsprodukt (IV) ein oder mehrere mit Polycarbonsäuren vernetzte Polyglycerinester der 3-Hydroxybuttersäure, insbesondere ein oder mehrere ein- oder mehrwertige mit Polycarbonsäuren vernetzte Polyglycerinester der 3-Hydroxybuttersäure, der allgemeinen Formel (IVa) 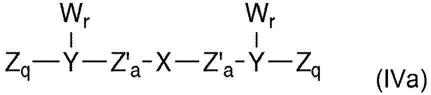 erhalten werden und/oder erhältlich sein,
wobei in der allgemeinen Formel (IVa)
- X einen der folgenden Reste darstellt: 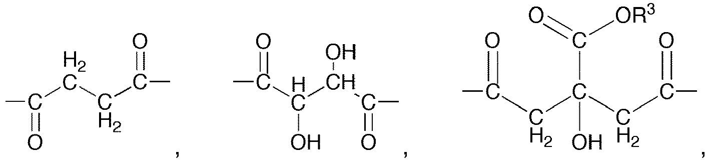 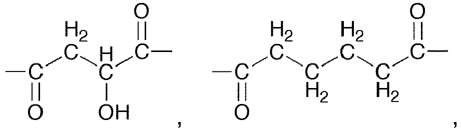 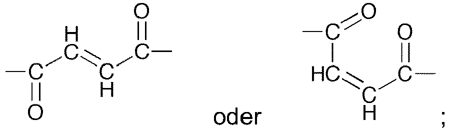 wobei in den vorstehenden Resten der Rest R³ Wasserstoff oder einen Rest - CH(CH₃) - CH₂ - C(O)OR¹ mit R¹ wie zuvor definiert oder einen gegebenenfalls substituierten Polyglycerinrest darstellt;
- Y einen von einem Polyglycerin abgeleiteten Rest, insbesondere einen Rest der allgemeinen Formel (IId) 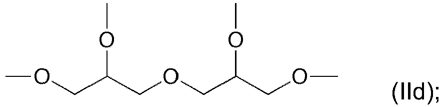
- Z einen Rest - C(O) - CH₂ - CH(OH) - CH₃ darstellt und die Variable q unabhängig voneinander eine ganze Zahl von 1 bis (p + 2) mit p wie zuvor definiert ist;
- Z' einen Rest - C(O) - CH₂ - CH(CH₃) - O - darstellt und die Variable a unabhängig voneinander 0 oder 1 ist;
- W unabhängig voneinander darstellt: Wasserstoff oder - X - OH mit X wie zuvor definiert oder aber einen oder mehrere Blöcke 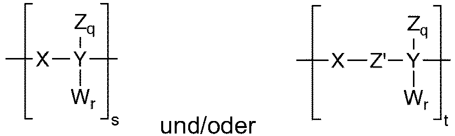 mit X, Y, Z, Z' und q jeweils wie zuvor definiert, wobei die Variablen s und t, jeweils unabhängig voneinander, eine ganze Zahl von 0 bis 30, insbesondere von 0 bis 25, vorzugsweise von 0 bis 20, besonders bevorzugt von 0 bis 10, ganz besonders bevorzugt von 0 bis 5, sind und die Variable r unabhängig voneinander eine ganze Zahl von 0 bis (p + 1) mit p wie zuvor definiert ist, wobei das Kettenende der Blöcke jeweils durch Wasserstoff, - X - OH oder Z gebildet ist.

Darüber hinaus können gemäß einer weiteren besonderen Ausführungsform des erfindungsgemäßen Verfahrens als Reaktionsprodukt (IV) ein oder mehrere mit Polycarbonsäuren vernetzte Polyglycerinester der 3-Hydroxybuttersäure, insbesondere ein oder mehrere ein- oder mehrwertige mit Polycarbonsäuren vernetzte Polyglycerinester der 3-Hydroxybuttersäure, der allgemeinen Formel (IVb) 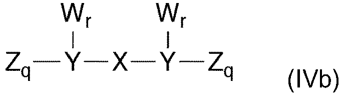 erhalten werden und/oder erhältlich sein,
wobei in der allgemeinen Formel (IVb)
- X einen Rest - C(O) - X' -C(O) - darstellt, wobei X' einen von einer Polycarbonsäure abgeleiteten Rest, insbesondere einen 1 bis 10, vorzugsweise 2 bis 6 Kohlenstoffatome enthaltenden und gegebenenfalls ein- oder mehrfach substituierten, insbesondere mit einem oder mehreren Hydroxyl-Resten und/oder Carboxyl-Resten substituierten, gesättigten oder ungesättigten organischen Rest, darstellt;
- Y einen von einem Polyglycerin abgeleiteten Rest, insbesondere einen Rest der allgemeinen Formel (IIc) 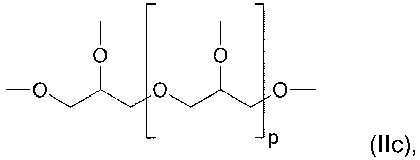 wobei die Variable p eine ganze Zahl von 1 bis 6, insbesondere von 1 bis 4, vorzugsweise 1 oder 2, besonders bevorzugt 1, ist, darstellt;
- Z einen Rest - C(O) - CH₂ - CH(OH) - CH₃ darstellt und die Variable q unabhängig voneinander eine ganze Zahl von 1 bis (p + 2) mit p wie zuvor definiert ist;
- W unabhängig voneinander darstellt: Wasserstoff oder - X - OH mit X wie zuvor definiert oder aber einen Block 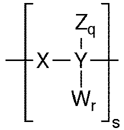 mit X, Y, Z und q jeweils wie zuvor definiert, wobei die Variable s eine ganze Zahl von 0 bis 30, insbesondere von 0 bis 25, vorzugsweise von 0 bis 20, besonders bevorzugt von 0 bis 10, ganz besonders bevorzugt von 0 bis 5, ist und die Variable r unabhängig voneinander eine ganze Zahl von 0 bis (p + 1) mit p wie zuvor definiert ist, wobei das Kettenende des Blocks durch Wasserstoff, - X - OH oder Z gebildet ist.

Bei dem Kettenende handelt es sich erfindungsgemäß um die Einheit, welche die Wiederholungseinheiten (d. h. die sich wiederholenden Blöcke) abschließt und somit ist das Kettenende eine Endständige Einheit im Reaktionsprodukt (IV).

Insbesondere können gemäß einer besonderen Ausführungsform des erfindungsgemäßen Verfahrens als Reaktionsprodukt (IV) ein oder mehrere mit Polycarbonsäuren vernetzte Polyglycerinester der 3-Hydroxybuttersäure, insbesondere ein oder mehrere ein- oder mehrwertige mit Polycarbonsäuren vernetzte Polyglycerinester der 3-Hydroxybuttersäure, der allgemeinen Formel (IVb) 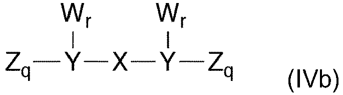 erhalten werden und/oder erhältlich sein,
wobei in der allgemeinen Formel (IVb)
- X einen Rest - C(O) - X' -C(O) - darstellt, wobei X' einen von einer Polycarbonsäure abgeleiteten Rest, insbesondere einen 1 bis 10, vorzugsweise 2 bis 6 Kohlenstoffatome enthaltenden und gegebenenfalls ein- oder mehrfach substituierten, insbesondere mit einem oder mehreren Hydroxyl-Resten und/oder Carboxyl-Resten substituierten, gesättigten oder ungesättigten organischen Rest, darstellt;
- Y einen von einem Polyglycerin abgeleiteten Rest, insbesondere einen Rest der allgemeinen Formel (IId) 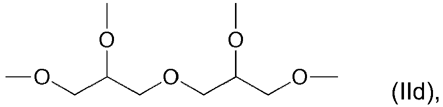 wobei die Variable p eine ganze Zahl von 1 bis 6, insbesondere von 1 bis 4, vorzugsweise 1 oder 2, besonders bevorzugt 1, ist, darstellt;
- Z einen Rest - C(O) - CH₂ - CH(OH) - CH₃ darstellt und die Variable q unabhängig voneinander eine ganze Zahl von 1 bis (p + 2) mit p wie zuvor definiert ist;
- W unabhängig voneinander darstellt: Wasserstoff oder - X - OH mit X wie zuvor definiert oder aber einen Block 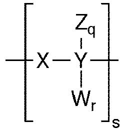 mit X, Y, Z und q jeweils wie zuvor definiert, wobei die Variable s eine ganze Zahl von 0 bis 30, insbesondere von 0 bis 25, vorzugsweise von 0 bis 20, besonders bevorzugt von 0 bis 10, ganz besonders bevorzugt von 0 bis 5, ist und die Variable r unabhängig voneinander eine ganze Zahl von 0 bis (p + 1) mit p wie zuvor definiert ist, wobei das Kettenende des Blocks durch Wasserstoff, - X - OH oder Z gebildet ist.

Weiterhin können gemäß einer zusätzlichen besonderen Ausführungsform des erfindungsgemäßen Verfahrens als Reaktionsprodukt (IV) ein oder mehrere mit Polycarbonsäuren vernetzte Polyglycerinester der 3-Hydroxybuttersäure, insbesondere ein oder mehrere ein- oder mehrwertige mit Polycarbonsäuren vernetzte Polyglycerinester der 3-Hydroxybuttersäure, der allgemeinen Formel (IVb) 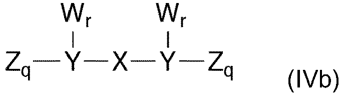 erhalten werden und/oder erhältlich sein,
wobei in der allgemeinen Formel (IVb)
- X einen Rest - C(O) - X' -C(O) - darstellt, wobei X' einen von einer Polycarbonsäure abgeleiteten Rest, insbesondere 2 bis 6 Kohlenstoffatome enthaltenden und gegebenenfalls ein- oder mehrfach substituierten, insbesondere mit einem oder mehreren Hydroxyl-Resten und/oder Carboxyl-Resten substituierten, gesättigten oder ungesättigten organischen Rest, darstellt;
- Y einen von einem Polyglycerin abgeleiteten Rest, insbesondere einen Rest der allgemeinen Formel (IId) 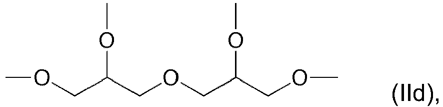 wobei die Variable p eine ganze Zahl von 1 bis 6, insbesondere von 1 bis 4, vorzugsweise 1 oder 2, besonders bevorzugt 1, ist, darstellt;
- Z einen Rest - C(O) - CH₂ - CH(OH) - CH₃ darstellt und die Variable q unabhängig voneinander eine ganze Zahl von 1 bis (p + 2) mit p wie zuvor definiert ist;
- W unabhängig voneinander darstellt: Wasserstoff oder - X - OH mit X wie zuvor definiert oder aber einen Block 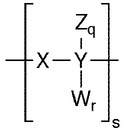 mit X, Y, Z und q jeweils wie zuvor definiert, wobei die Variable s eine ganze Zahl von 0 bis 30, insbesondere von 0 bis 25, vorzugsweise von 0 bis 20, besonders bevorzugt von 0 bis 10, ganz besonders bevorzugt von 0 bis 5, ist und die Variable r unabhängig voneinander eine ganze Zahl von 0 bis (p + 1) mit p wie zuvor definiert ist, wobei das Kettenende des Blocks durch Wasserstoff, - X - OH oder Z gebildet ist.

Insbesondere können gemäß einer besonderen Ausführungsform des erfindungsgemäßen Verfahrens als Reaktionsprodukt (IV) ein oder mehrere mit Polycarbonsäuren vernetzte Polyglycerinester der 3-Hydroxybuttersäure, insbesondere ein oder mehrere ein- oder mehrwertige mit Polycarbonsäuren vernetzte Polyglycerinester der 3-Hydroxybuttersäure, der allgemeinen Formel (IVb) 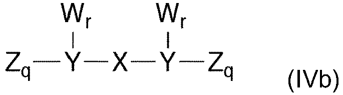 erhalten werden und/oder erhältlich sein,
wobei in der allgemeinen Formel (IVb)
- X abgeleitet ist von einer Polycarbonsäure, ausgewählt aus der Gruppe von Bernsteinsäure, Weinsäure, Citronensäure, Äpfelsäure, Adipinsäure, Fumarsäure und Maleinsäure sowie deren Kombinationen oder Mischungen, insbesondere ausgewählt aus der Gruppe von Bernsteinsäure, Weinsäure, Citronensäure, Äpfelsäure, Adipinsäure und Fumarsäure sowie deren Kombinationen oder Mischungen, bevorzugt ausgewählt aus der Gruppe von Bernsteinsäure und Adipinsäure und deren Anhydriden sowie deren Kombinationen oder Mischungen;
- Y einen von einem Polyglycerin abgeleiteten Rest, insbesondere einen Rest der allgemeinen Formel (IId) 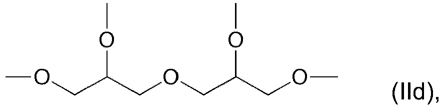 wobei die Variable p eine ganze Zahl von 1 bis 6, insbesondere von 1 bis 4, vorzugsweise 1 oder 2, besonders bevorzugt 1, ist, darstellt;
- Z einen Rest - C(O) - CH₂ - CH(OH) - CH₃ darstellt und die Variable q unabhängig voneinander eine ganze Zahl von 1 bis (p + 2) mit p wie zuvor definiert ist;
- W unabhängig voneinander darstellt: Wasserstoff oder - X - OH mit X wie zuvor definiert oder aber einen Block 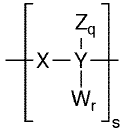 mit X, Y, Z und q jeweils wie zuvor definiert, wobei die Variable s eine ganze Zahl von 0 bis 30, insbesondere von 0 bis 25, vorzugsweise von 0 bis 20, besonders bevorzugt von 0 bis 10, ganz besonders bevorzugt von 0 bis 5, ist und die Variable r unabhängig voneinander eine ganze Zahl von 0 bis (p + 1) mit p wie zuvor definiert ist, wobei das Kettenende des Blocks durch Wasserstoff, - X - OH oder Z gebildet ist.

In diesem Zusammenhang bedeutet "abgeleitet von", dass X aus den genannten Carbonsäuren gebildet wird; insbesondere wird durch Veresterung des Wasserstoffs des Carboxyls verestert; d. h. also, es liegt jeweils der Dicarboxylatrest der entsprechenden Säure als X vor.

Weiterhin können gemäß einer besonderen Ausführungsform des erfindungsgemäßen Verfahrens als Reaktionsprodukt (IV) ein oder mehrere mit Polycarbonsäuren vernetzte Polyglycerinester der 3-Hydroxybuttersäure, insbesondere ein oder mehrere ein- oder mehrwertige mit Polycarbonsäuren vernetzte Polyglycerinester der 3-Hydroxybuttersäure, der allgemeinen Formel (IVb) 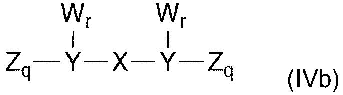 erhalten werden und/oder erhältlich sein,
wobei in der allgemeinen Formel (IVb)
- X einen der folgenden Reste darstellt: 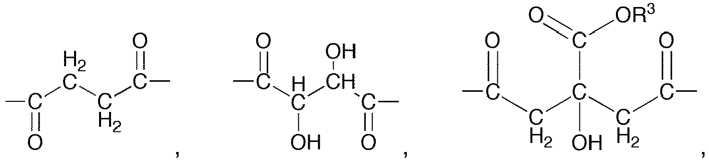 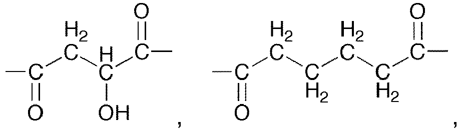 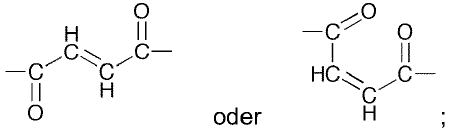 wobei in den vorstehenden Resten der Rest R³ Wasserstoff oder einen Rest - CH(CH₃) - CH₂ - C(O)OR¹ mit R¹ wie zuvor definiert oder einen gegebenenfalls substituierten Polyglycerinrest darstellt;
- Y einen von einem Polyglycerin abgeleiteten Rest, insbesondere einen Rest der allgemeinen Formel (IIc) 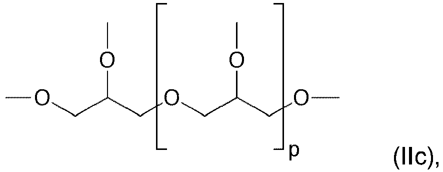 wobei die Variable p eine ganze Zahl von 1 bis 6, insbesondere von 1 bis 4, vorzugsweise 1 oder 2, besonders bevorzugt 1, ist, darstellt;
- Z einen Rest - C(O) - CH₂ - CH(OH) - CH₃ darstellt und die Variable q unabhängig voneinander eine ganze Zahl von 1 bis (p + 2) mit p wie zuvor definiert ist;
- W unabhängig voneinander darstellt: Wasserstoff oder - X - OH mit X wie zuvor definiert oder aber einen Block 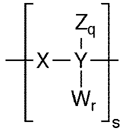 mit X, Y, Z und q jeweils wie zuvor definiert, wobei die Variable s eine ganze Zahl von 0 bis 30, insbesondere von 0 bis 25, vorzugsweise von 0 bis 20, besonders bevorzugt von 0 bis 10, ganz besonders bevorzugt von 0 bis 5, ist und die Variable r unabhängig voneinander eine ganze Zahl von 0 bis (p + 1) mit p wie zuvor definiert ist, wobei das Kettenende des Blocks durch Wasserstoff, - X - OH oder Z gebildet ist.

Darüber hinaus können gemäß einer besonderen Ausführungsform des erfindungsgemäßen Verfahrens als Reaktionsprodukt (IV) ein oder mehrere mit Polycarbonsäuren vernetzte Polyglycerinester der 3-Hydroxybuttersäure, insbesondere ein oder mehrere ein- oder mehrwertige mit Polycarbonsäuren vernetzte Polyglycerinester der 3-Hydroxybuttersäure, der allgemeinen Formel (IVb) 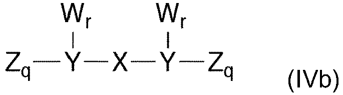 erhalten werden und/oder erhältlich sein,
wobei in der allgemeinen Formel (IVb)
- X einen der folgenden Reste darstellt: 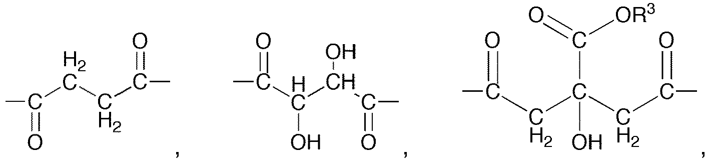 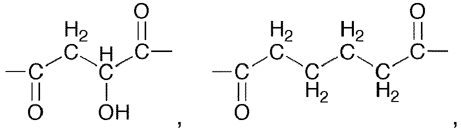 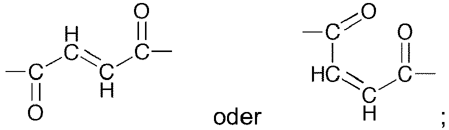 wobei in den vorstehenden Resten der Rest R³ Wasserstoff oder einen Rest - CH(CH₃) - CH₂ - C(O)OR¹ mit R¹ wie zuvor definiert oder einen gegebenenfalls substituierten Polyglycerinrest darstellt;
- Y einen von einem Polyglycerin abgeleiteten Rest, insbesondere einen Rest der allgemeinen Formel (IId) 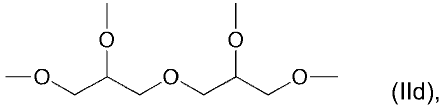 wobei die Variable p eine ganze Zahl von 1 bis 6, insbesondere von 1 bis 4, vorzugsweise 1 oder 2, besonders bevorzugt 1, ist, darstellt;
- Z einen Rest - C(O) - CH₂ - CH(OH) - CH₃ darstellt und die Variable q unabhängig voneinander eine ganze Zahl von 1 bis (p + 2) mit p wie zuvor definiert ist;
- W unabhängig voneinander darstellt: Wasserstoff oder - X - OH mit X wie zuvor definiert oder aber einen Block 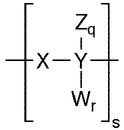 mit X, Y, Z und q jeweils wie zuvor definiert, wobei die Variable s eine ganze Zahl von 0 bis 30, insbesondere von 0 bis 25, vorzugsweise von 0 bis 20, besonders bevorzugt von 0 bis 10, ganz besonders bevorzugt von 0 bis 5, ist und die Variable r unabhängig voneinander eine ganze Zahl von 0 bis (p + 1) mit p wie zuvor definiert ist, wobei das Kettenende des Blocks durch Wasserstoff, - X - OH oder Z gebildet ist.

Weiterhin kann es erfindungsgemäß vorgesehen sein, dass als Reaktionsprodukt (IV) ein oder mehrere mit Polycarbonsäuren vernetzte Polyglycerinester der 3-Hydroxybuttersäure, insbesondere ein oder mehrere ein- oder mehrwertige mit Polycarbonsäuren vernetzte Polyglycerinester der 3-Hydroxybuttersäure, erhalten werden und/oder erhältlich sind,
wobei das Reaktionsprodukt (IV) und/oder der bzw. die mit Polycarbonsäuren vernetzten Polyglycerinester der 3-Hydroxybuttersäure, insbesondere der bzw. die ein- oder mehrwertigen mit Polycarbonsäuren vernetzten Polyglycerinester der 3-Hydroxybuttersäure, die folgenden Einheiten, insbesondere Molekülbausteine, umfasst/umfassen:
- mindestens eine Einheit - C(O) - X' -C(O) -, wobei X' einen von einer Polycarbonsäure abgeleiteten Rest, insbesondere einen 1 bis 10, vorzugsweise 2 bis 6 Kohlenstoffatome enthaltenden und gegebenenfalls ein- oder mehrfach substituierten, insbesondere mit einem oder mehreren Hydroxyl-Resten und/oder Carboxyl-Resten substituierten, gesättigten oder ungesättigten organischen Rest, darstellt;
- mindestens eine Einheit, vorzugsweise mindestens zwei Einheiten, abgeleitet von einem Polyglycerin, insbesondere mindestens eine Einheit, vorzugsweise mindestens zwei Einheiten, der allgemeinen Formel (IIc) 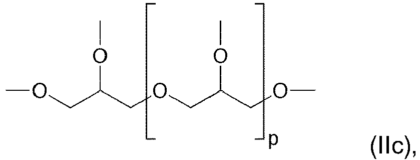 wobei die Variable p eine ganze Zahl von 1 bis 6, insbesondere von 1 bis 4, vorzugsweise 1 oder 2, besonders bevorzugt 1, ist, darstellt;
- mindestens zwei Einheiten, insbesondere mindestens drei Einheiten, vorzugsweise mindestens vier Einheiten - C(O) - CH₂ - CH(OH) - CH₃;
- gegebenenfalls mindestens eine Einheit - C(O) - CH₂ - CH(CH₃) - O -;
- gegebenenfalls mindestens eine Einheit - X' - COOH mit X' wie zuvor definiert.

In diesem Zusammenhang handelt es sich bei den zuvor genannten Einheiten um die Molekülbausteine, welche in ihrer Gesamtheit das Reaktionsprodukt (IV) bilden. Dabei ist zu beachten, dass im Fall der vorliegenden Erfindung die einzelnen Einheiten jeweils durch eine Veresterungsreaktion miteinander verbunden sind bzw. durch Estergruppen, sodass eine wahllose Anordnung nicht möglich ist. Jedoch ist dem Fachmann wohlbekannt, wie die einzelnen Einheiten anzuordnen sind.

Darüber hinaus kann es erfindungsgemäß auch vorgesehen sein, dass als Reaktionsprodukt (IV) ein oder mehrere mit Polycarbonsäuren vernetzte Polyglycerinester der 3-Hydroxybuttersäure, insbesondere ein oder mehrere ein- oder mehrwertige mit Polycarbonsäuren vernetzte Polyglycerinester der 3-Hydroxybuttersäure, erhalten werden und/oder erhältlich sind,
wobei das Reaktionsprodukt (IV) und/oder der bzw. die mit Polycarbonsäuren vernetzten Polyglycerinester der 3-Hydroxybuttersäure, insbesondere der bzw. die ein- oder mehrwertigen mit Polycarbonsäuren vernetzten Polyglycerinester der 3-Hydroxybuttersäure, die folgenden Einheiten, insbesondere Molekülbausteine, umfasst/umfassen:
- mindestens eine Einheit X" der folgenden Formeln: 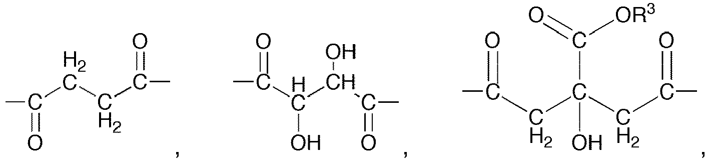 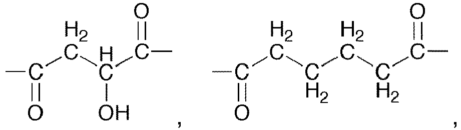 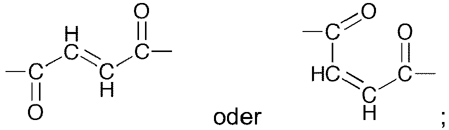 wobei in den vorstehenden Resten der Rest R³ Wasserstoff oder einen Rest - CH(CH₃) - CH₂ - C(O)OR¹ mit R¹ wie zuvor definiert oder einen gegebenenfalls substituierten Polyglycerinrest darstellt;
- mindestens eine Einheit, vorzugsweise mindestens zwei Einheiten, abgeleitet von einem Polyglycerin, insbesondere mindestens eine Einheit, vorzugsweise mindestens zwei Einheiten, der allgemeinen Formel (IIc) 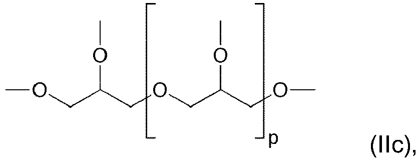 wobei die Variable p eine ganze Zahl von 1 bis 6, insbesondere von 1 bis 4, vorzugsweise 1 oder 2, besonders bevorzugt 1, ist, darstellt;
- mindestens zwei Einheiten, insbesondere mindestens drei Einheiten, vorzugsweise mindestens vier Einheiten - C(O) - CH₂ - CH(OH) - CH₃;
- gegebenenfalls mindestens eine Einheit - C(O) - CH₂ - CH(CH₃) - O -;
- gegebenenfalls mindestens eine Einheit - X" - OH mit X" wie zuvor definiert.

Erfindungsgemäß ist es insbesondere bevorzugt, wenn das Reaktionsprodukt (IV) ein Molekulargewicht, insbesondere ein mittleres Molekulargewicht, vorzugsweise ein gewichtsmittleres Molekulargewicht, im Bereich von 500 bis 50.000 g/mol, insbesondere im Bereich von 500 bis 30.000 g/mol, vorzugsweise im Bereich von 500 bis 25.000 g/mol, aufweist, insbesondere bestimmt durch Größenausschlusschromatographie (SEC), vorzugsweise Gelpermeationschromatographie (GPC), vorzugsweise gemäß DIN EN ISO 16014-5: 2019, insbesondere mit Polystyrol (PS) als Standard.

Im Fall von niedermolekularen Verbindungen kann es sich erfindungsgemäß insbesondere auch um absolute Molekulargewichte handeln, während bei höhermolekularen Verbindungen mittlere Molekulargewichte ermittelt werden.

Gemäß einer wiederum weiteren besonderen Ausführungsform des erfindungsgemäßen Verfahrens kann als Reaktionsprodukt (IV) ein Gemisch von mindestens zwei, insbesondere mindestens drei, vorzugsweise mindestens vier voneinander verschiedenen mit Polycarbonsäuren vernetzten Polyglycerinestern der 3-Hydroxybuttersäure, insbesondere ein- oder mehrwertigen mit Polycarbonsäuren vernetzten Polyglycerinestern der 3-Hydroxybuttersäure, erhalten werden und/oder erhältlich sein.

Weiterer Gegenstand - gemäß einem **zweiten** Aspekt der vorliegenden Erfindung - ist ein Reaktionsprodukt (IV) in Form eines mit Polycarbonsäuren vernetzten Polyglycerinesters der 3-Hydroxybuttersäure, insbesondere ein- oder mehrwertigen mit Polycarbonsäuren vernetzter Polyglycerinesters der 3-Hydroxybuttersäure, welches bzw. welcher erhältlich ist nach dem zuvor beschriebenen Verfahren.

Gemäß einer besonderen Ausführungsform kann der erfindungsgemäße bzw. erfindungsgemäß hergestellte mit Polycarbonsäuren vernetzte Polyglycerinester der 3-Hydroxybuttersäure, insbesondere der ein- oder mehrwertige mit Polycarbonsäuren vernetzte Polyglycerinester der 3-Hydroxybuttersäure, der allgemeinen Formel (IVa) 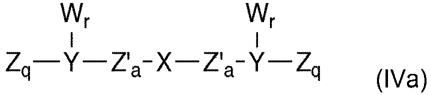 entsprechen,
wobei in der allgemeinen Formel (IVa)
- X einen Rest - C(O) - X' -C(O) - darstellt, wobei X' einen von einer Polycarbonsäure abgeleiteten Rest, insbesondere einen 1 bis 10, vorzugsweise 2 bis 6 Kohlenstoffatome enthaltenden und gegebenenfalls ein- oder mehrfach substituierten, insbesondere mit einem oder mehreren Hydroxyl-Resten und/oder Carboxyl-Resten substituierten, gesättigten oder ungesättigten organischen Rest, darstellt;
- Y einen von einem Polyglycerin abgeleiteten Rest, insbesondere einen Rest der allgemeinen Formel (IIc) 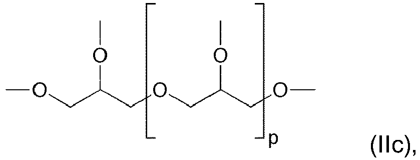 wobei die Variable p eine ganze Zahl von 1 bis 6, insbesondere von 1 bis 4, vorzugsweise 1 oder 2, besonders bevorzugt 1, ist, darstellt;
- Z einen Rest - C(O) - CH₂ - CH(OH) - CH₃ darstellt und die Variable q unabhängig voneinander eine ganze Zahl von 1 bis (p + 2) mit p wie zuvor definiert ist;
- Z' einen Rest - C(O) - CH₂ - CH(CH₃) - O - darstellt und die Variable a unabhängig voneinander 0 oder 1 ist;
- W unabhängig voneinander darstellt: Wasserstoff oder - X - OH mit X wie zuvor definiert oder aber einen oder mehrere Blöcke 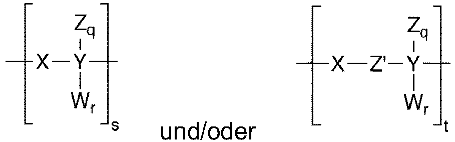 mit X, Y, Z, Z' und q jeweils wie zuvor definiert, wobei die Variablen s und t, jeweils unabhängig voneinander, eine ganze Zahl von 0 bis 30, insbesondere von 0 bis 25, vorzugsweise von 0 bis 20, besonders bevorzugt von 0 bis 10, ganz besonders bevorzugt von 0 bis 5, sind und die Variable r unabhängig voneinander eine ganze Zahl von 0 bis (p + 1) mit p wie zuvor definiert ist, wobei das Kettenende der Blöcke jeweils durch Wasserstoff, - X - OH oder Z gebildet ist.

Insgesamt handelt es sich bei dem erfindungsgemäßen Reaktionsprodukt bzw. der erfindungsgemäßen mit Polycarbonsäuren vernetzte Polyglycerinester der 3-Hydroxybuttersäure insbesondere um ein Netzwerk, bei welchem eine Vielzahl von Verzweigungen möglich ist. Dadurch können Wiederholungseinheiten auch innerhalb von Wiederholungseinheiten vorliegen bzw. ausgehend von Wiederholungseinheiten Verzweigungen zu weiteren Wiederholungseinheiten gebildet werden.

Gemäß einer wiederum weiteren besonderen Ausführungsform kann der erfindungsgemäße bzw. erfindungsgemäß hergestellte mit Polycarbonsäuren vernetzte Polyglycerinester der 3-Hydroxybuttersäure, insbesondere der ein- oder mehrwertige mit Polycarbonsäuren vernetzte Polyglycerinester der 3-Hydroxybuttersäure, der allgemeinen Formel (IVa) 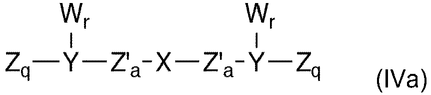 entsprechen,
wobei in der allgemeinen Formel (IVa)
- X einen Rest - C(O) - X' -C(O) - darstellt, wobei X' einen von einer Polycarbonsäure abgeleiteten Rest, insbesondere einen 1 bis 10, vorzugsweise 2 bis 6 Kohlenstoffatome enthaltenden und gegebenenfalls ein- oder mehrfach substituierten, insbesondere mit einem oder mehreren Hydroxyl-Resten und/oder Carboxyl-Resten substituierten, gesättigten oder ungesättigten organischen Rest, darstellt;
- Y einen von einem Polyglycerin abgeleiteten Rest, insbesondere einen Rest der allgemeinen Formel (IId) 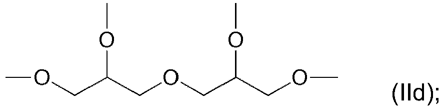
- Z einen Rest - C(O) - CH₂ - CH(OH) - CH₃ darstellt und die Variable q unabhängig voneinander eine ganze Zahl von 1 bis (p + 2) mit p wie zuvor definiert ist;
- Z' einen Rest - C(O) - CH₂ - CH(CH₃) - O - darstellt und die Variable a unabhängig voneinander 0 oder 1 ist;
- W unabhängig voneinander darstellt: Wasserstoff oder - X - OH mit X wie zuvor definiert oder aber einen oder mehrere Blöcke 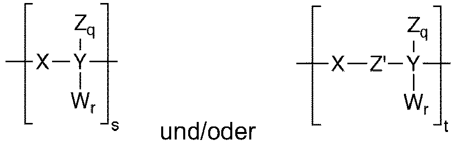 mit X, Y, Z, Z' und q jeweils wie zuvor definiert, wobei die Variablen s und t, jeweils unabhängig voneinander, eine ganze Zahl von 0 bis 30, insbesondere von 0 bis 25, vorzugsweise von 0 bis 20, besonders bevorzugt von 0 bis 10, ganz besonders bevorzugt von 0 bis 5, sind und die Variable r unabhängig voneinander eine ganze Zahl von 0 bis (p + 1) mit p wie zuvor definiert ist, wobei das Kettenende der Blöcke jeweils durch Wasserstoff, - X - OH oder Z gebildet ist.

Gemäß einer weiteren besonderen Ausführungsform der vorliegenden Erfindung kann der erfindungsgemäße bzw. erfindungsgemäß hergestellte mit Polycarbonsäuren vernetzte Polyglycerinester der 3-Hydroxybuttersäure, insbesondere der ein- oder mehrwertige mit Polycarbonsäuren vernetzte Polyglycerinester der 3-Hydroxybuttersäure, der allgemeinen Formel (IVa) 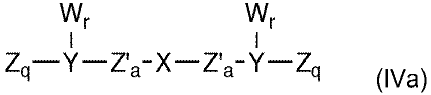 entsprechen,
wobei in der allgemeinen Formel (IVa)
- X einen Rest - C(O) - X' -C(O) - darstellt, wobei X' einen von einer Polycarbonsäure abgeleiteten Rest, insbesondere einen 2 bis 6 Kohlenstoffatome enthaltenden und gegebenenfalls ein- oder mehrfach substituierten, insbesondere mit einem oder mehreren Hydroxyl-Resten und/oder Carboxyl-Resten substituierten, gesättigten oder ungesättigten organischen Rest, darstellt;
- Y einen von einem Polyglycerin abgeleiteten Rest, insbesondere einen Rest der allgemeinen Formel (IId) 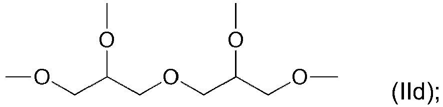
- Z einen Rest - C(O) - CH₂ - CH(OH) - CH₃ darstellt und die Variable q unabhängig voneinander eine ganze Zahl von 1 bis (p + 2) mit p wie zuvor definiert ist;
- Z' einen Rest - C(O) - CH₂ - CH(CH₃) - O - darstellt und die Variable a unabhängig voneinander 0 oder 1 ist;
- W unabhängig voneinander darstellt: Wasserstoff oder - X - OH mit X wie zuvor definiert oder aber einen oder mehrere Blöcke 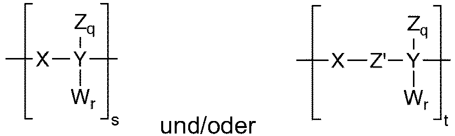 mit X, Y, Z, Z' und q jeweils wie zuvor definiert, wobei die Variablen s und t, jeweils unabhängig voneinander, eine ganze Zahl von 0 bis 30, insbesondere von 0 bis 25, vorzugsweise von 0 bis 20, besonders bevorzugt von 0 bis 10, ganz besonders bevorzugt von 0 bis 5, sind und die Variable r unabhängig voneinander eine ganze Zahl von 0 bis (p + 1) mit p wie zuvor definiert ist, wobei das Kettenende der Blöcke jeweils durch Wasserstoff, - X - OH oder Z gebildet ist.

Gemäß einer weiteren besonderen Ausführungsform der vorliegenden Erfindung kann der erfindungsgemäße bzw. erfindungsgemäß hergestellte mit Polycarbonsäuren vernetzte Polyglycerinester der 3-Hydroxybuttersäure, insbesondere der ein- oder mehrwertige mit Polycarbonsäuren vernetzte Polyglycerinester der 3-Hydroxybuttersäure, der allgemeinen Formel (IVa) 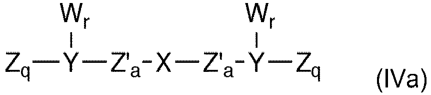 entsprechen,
wobei in der allgemeinen Formel (IVa)
- X abgeleitet ist von einer Polycarbonsäure, ausgewählt aus der Gruppe von Bernsteinsäure, Weinsäure, Citronensäure, Äpfelsäure, Adipinsäure, Fumarsäure und Maleinsäure sowie deren Kombinationen oder Mischungen, insbesondere ausgewählt aus der Gruppe von Bernsteinsäure, Weinsäure, Citronensäure, Äpfelsäure, Adipinsäure und Fumarsäure sowie deren Kombinationen oder Mischungen, bevorzugt ausgewählt aus der Gruppe von Bernsteinsäure und Adipinsäure und deren Anhydriden sowie deren Kombinationen oder Mischungen;
- Y einen von einem Polyglycerin abgeleiteten Rest, insbesondere einen Rest der allgemeinen Formel (IId) 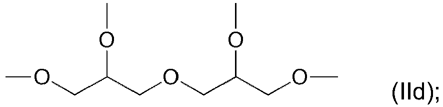
- Z einen Rest - C(O) - CH₂ - CH(OH) - CH₃ darstellt und die Variable q unabhängig voneinander eine ganze Zahl von 1 bis (p + 2) mit p wie zuvor definiert ist;
- Z' einen Rest - C(O) - CH₂ - CH(CH₃) - O - darstellt und die Variable a unabhängig voneinander 0 oder 1 ist;
- W unabhängig voneinander darstellt: Wasserstoff oder - X - OH mit X wie zuvor definiert oder aber einen oder mehrere Blöcke 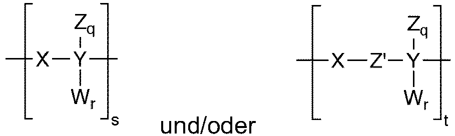 mit X, Y, Z, Z' und q jeweils wie zuvor definiert, wobei die Variablen s und t, jeweils unabhängig voneinander, eine ganze Zahl von 0 bis 30, insbesondere von 0 bis 25, vorzugsweise von 0 bis 20, besonders bevorzugt von 0 bis 10, ganz besonders bevorzugt von 0 bis 5, sind und die Variable r unabhängig voneinander eine ganze Zahl von 0 bis (p + 1) mit p wie zuvor definiert ist, wobei das Kettenende der Blöcke jeweils durch Wasserstoff, - X - OH oder Z gebildet ist.

In diesem Zusammenhang bedeutet "abgeleitet von", dass X aus den genannten Carbonsäuren gebildet wird; insbesondere wird durch Veresterung des Wasserstoffs des Carboxyls verestert; d. h. also, es liegt jeweils der Dicarboxylatrest der entsprechenden Säure als X vor.

Gemäß einer bevorzugten Ausführungsform der vorliegenden Erfindung kann der erfindungsgemäße bzw. erfindungsgemäß hergestellte mit Polycarbonsäuren vernetzte Polyglycerinester der 3-Hydroxybuttersäure, insbesondere der ein- oder mehrwertige mit Polycarbonsäuren vernetzte Polyglycerinester der 3-Hydroxybuttersäure, der allgemeinen Formel (IVa) 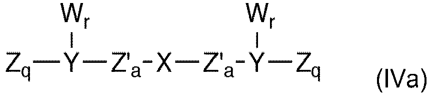 entsprechen,
wobei in der allgemeinen Formel (IVa)
- X einen der folgenden Reste darstellt: 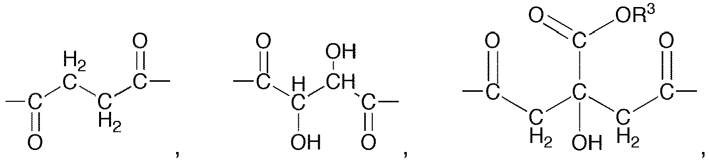 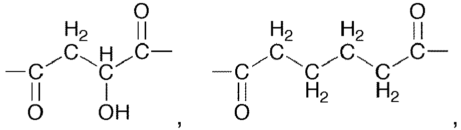 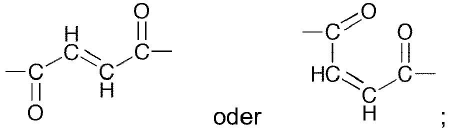 wobei in den vorstehenden Resten der Rest R³ Wasserstoff oder einen Rest - CH(CH₃) - CH₂ - C(O)OR¹ mit R¹ wie zuvor definiert oder einen gegebenenfalls substituierten Polyglycerinrest darstellt;
- Y einen von einem Polyglycerin abgeleiteten Rest, insbesondere einen Rest der allgemeinen Formel (IIc) 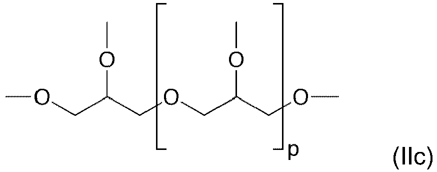 wobei die Variable p eine ganze Zahl von 1 bis 6, insbesondere von 1 bis 4, vorzugsweise 1 oder 2, besonders bevorzugt 1, ist, darstellt;;
- Z einen Rest - C(O) - CH₂ - CH(OH) - CH₃ darstellt und die Variable q unabhängig voneinander eine ganze Zahl von 1 bis (p + 2) mit p wie zuvor definiert ist;
- Z' einen Rest - C(O) - CH₂ - CH(CH₃) - O - darstellt und die Variable a unabhängig voneinander 0 oder 1 ist;
- W unabhängig voneinander darstellt: Wasserstoff oder - X - OH mit X wie zuvor definiert oder aber einen oder mehrere Blöcke 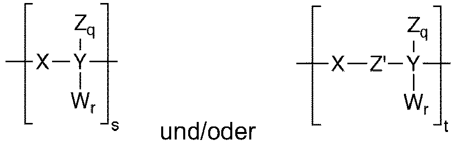 mit X, Y, Z, Z' und q jeweils wie zuvor definiert, wobei die Variablen s und t, jeweils unabhängig voneinander, eine ganze Zahl von 0 bis 30, insbesondere von 0 bis 25, vorzugsweise von 0 bis 20, besonders bevorzugt von 0 bis 10, ganz besonders bevorzugt von 0 bis 5, sind und die Variable r unabhängig voneinander eine ganze Zahl von 0 bis (p + 1) mit p wie zuvor definiert ist, wobei das Kettenende der Blöcke jeweils durch Wasserstoff, - X - OH oder Z gebildet ist.

Gemäß einer weiteren bevorzugten Ausführungsform dieses Erfindungsaspekts kann der erfindungsgemäße bzw. erfindungsgemäß hergestellte mit Polycarbonsäuren vernetzte Polyglycerinester der 3-Hydroxybuttersäure, insbesondere der ein- oder mehrwertige mit Polycarbonsäuren vernetzte Polyglycerinester der 3-Hydroxybuttersäure, der allgemeinen Formel (IVa) 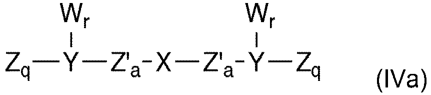 entsprechen,
wobei in der allgemeinen Formel (IVa)
- X einen der folgenden Reste darstellt: 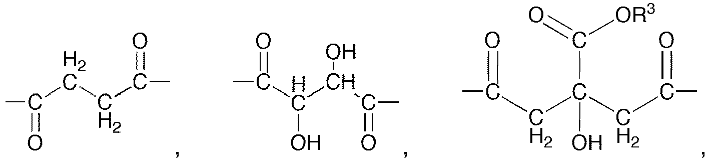 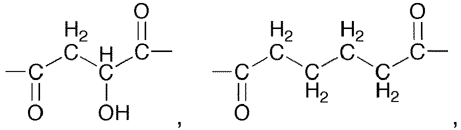 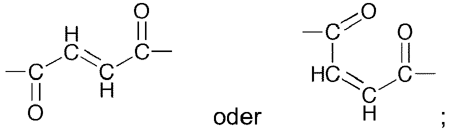 wobei in den vorstehenden Resten der Rest R³ Wasserstoff oder einen Rest - CH(CH₃) - CH₂ - C(O)OR¹ mit R¹ wie zuvor definiert oder einen gegebenenfalls substituierten Polyglycerinrest darstellt;
- Y einen von einem Polyglycerin abgeleiteten Rest, insbesondere einen Rest der allgemeinen Formel (IId) 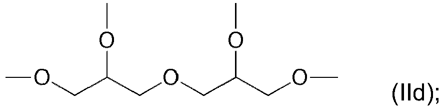
- Z einen Rest - C(O) - CH₂ - CH(OH) - CH₃ darstellt und die Variable q unabhängig voneinander eine ganze Zahl von 1 bis (p + 2) mit p wie zuvor definiert ist;
- Z' einen Rest - C(O) - CH₂ - CH(CH₃) - O - darstellt und die Variable a unabhängig voneinander 0 oder 1 ist;
- W unabhängig voneinander darstellt: Wasserstoff oder - X - OH mit X wie zuvor definiert oder aber einen oder mehrere Blöcke 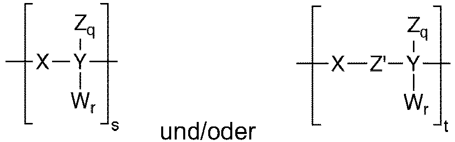 mit X, Y, Z, Z' und q jeweils wie zuvor definiert, wobei die Variablen s und t, jeweils unabhängig voneinander, eine ganze Zahl von 0 bis 30, insbesondere von 0 bis 25, vorzugsweise von 0 bis 20, besonders bevorzugt von 0 bis 10, ganz besonders bevorzugt von 0 bis 5, sind und die Variable r unabhängig voneinander eine ganze Zahl von 0 bis (p + 1) mit p wie zuvor definiert ist, wobei das Kettenende der Blöcke jeweils durch Wasserstoff, - X - OH oder Z gebildet ist.

Weiterhin kann gemäß einer besonderen Ausführungsform dieses Erfindungsaspekts der erfindungsgemäße bzw. erfindungsgemäß hergestellte mit Polycarbonsäuren vernetzte Polyglycerinester der 3-Hydroxybuttersäure, insbesondere der ein- oder mehrwertige mit Polycarbonsäuren vernetzte Polyglycerinester der 3-Hydroxybuttersäure, der allgemeinen Formel (IVb) 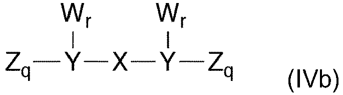 entsprechen,
wobei in der allgemeinen Formel (IVb)
- X einen Rest - C(O) - X' -C(O) - darstellt, wobei X' einen von einer Polycarbonsäure abgeleiteten Rest, insbesondere einen 1 bis 10, vorzugsweise 2 bis 6 Kohlenstoffatome enthaltenden und gegebenenfalls ein- oder mehrfach substituierten, insbesondere mit einem oder mehreren Hydroxyl-Resten und/oder Carboxyl-Resten substituierten, gesättigten oder ungesättigten organischen Rest, darstellt;
- Y einen von einem Polyglycerin abgeleiteten Rest, insbesondere einen Rest der allgemeinen Formel (IIc) 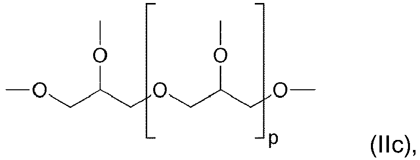 wobei die Variable p eine ganze Zahl von 1 bis 6, insbesondere von 1 bis 4, vorzugsweise 1 oder 2, besonders bevorzugt 1, ist, darstellt;
- Z einen Rest - C(O) - CH₂ - CH(OH) - CH₃ darstellt und die Variable q unabhängig voneinander eine ganze Zahl von 1 bis (p + 2) mit p wie zuvor definiert ist;
- W unabhängig voneinander darstellt: Wasserstoff oder - X - OH mit X wie zuvor definiert oder aber einen Block 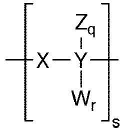 mit X, Y, Z und q jeweils wie zuvor definiert, wobei die Variable s eine ganze Zahl von 0 bis 30, insbesondere von 0 bis 25, vorzugsweise von 0 bis 20, besonders bevorzugt von 0 bis 10, ganz besonders bevorzugt von 0 bis 5, ist und die Variable r unabhängig voneinander eine ganze Zahl von 0 bis (p + 1) mit p wie zuvor definiert ist, wobei das Kettenende des Blocks durch Wasserstoff, - X - OH oder Z gebildet ist.

Darüber hinaus kann gemäß einer weiteren besonderen Ausführungsform dieses Erfindungsaspekts der erfindungsgemäße bzw. erfindungsgemäß hergestellte mit Polycarbonsäuren vernetzte Polyglycerinester der 3-Hydroxybuttersäure, insbesondere der ein- oder mehrwertige mit Polycarbonsäuren vernetzte Polyglycerinester der 3-Hydroxybuttersäure, der allgemeinen Formel (IVb) 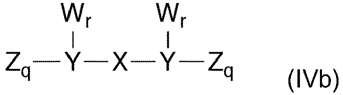 entsprechen,
wobei in der allgemeinen Formel (IVb)
- X einen Rest - C(O) - X' -C(O) - darstellt, wobei X' einen von einer Polycarbonsäure abgeleiteten Rest, insbesondere einen 1 bis 10, vorzugsweise 2 bis 6 Kohlenstoffatome enthaltenden und gegebenenfalls ein- oder mehrfach substituierten, insbesondere mit einem oder mehreren Hydroxyl-Resten und/oder Carboxyl-Resten substituierten, gesättigten oder ungesättigten organischen Rest, darstellt;
- Y einen von einem Polyglycerin abgeleiteten Rest, insbesondere einen Rest der allgemeinen Formel (IId) 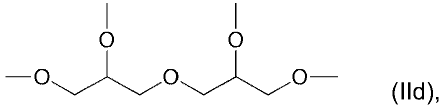 wobei die Variable p eine ganze Zahl von 1 bis 6, insbesondere von 1 bis 4, vorzugsweise 1 oder 2, besonders bevorzugt 1, ist, darstellt;
- Z einen Rest - C(O) - CH₂ - CH(OH) - CH₃ darstellt und die Variable q unabhängig voneinander eine ganze Zahl von 1 bis (p + 2) mit p wie zuvor definiert ist;
- W unabhängig voneinander darstellt: Wasserstoff oder - X - OH mit X wie zuvor definiert oder aber einen Block 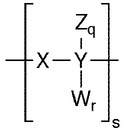 mit X, Y, Z und q jeweils wie zuvor definiert, wobei die Variable s eine ganze Zahl von 0 bis 30, insbesondere von 0 bis 25, vorzugsweise von 0 bis 20, besonders bevorzugt von 0 bis 10, ganz besonders bevorzugt von 0 bis 5, ist und die Variable r unabhängig voneinander eine ganze Zahl von 0 bis (p + 1) mit p wie zuvor definiert ist, wobei das Kettenende des Blocks durch Wasserstoff, - X - OH oder Z gebildet ist.

Darüber hinaus kann es gemäß einer besonderen Ausführungsform dieses Erfindungsaspekts vorgesehen sein, dass der erfindungsgemäße bzw. erfindungsgemäß hergestellte mit Polycarbonsäuren vernetzte Polyglycerinester der 3-Hydroxybuttersäure, insbesondere der ein- oder mehrwertige mit Polycarbonsäuren vernetzte Polyglycerinester der 3-Hydroxybuttersäure, der allgemeinen Formel (IVb) 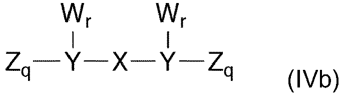 entspricht, wobei in der allgemeinen Formel (IVb)
- X einen Rest - C(O) - X' -C(O) - darstellt, wobei X' einen von einer Polycarbonsäure abgeleiteten Rest, insbesondere 2 bis 6 Kohlenstoffatome enthaltenden und gegebenenfalls ein- oder mehrfach substituierten, insbesondere mit einem oder mehreren Hydroxyl-Resten und/oder Carboxyl-Resten substituierten, gesättigten oder ungesättigten organischen Rest, darstellt;
- Y einen von einem Polyglycerin abgeleiteten Rest, insbesondere einen Rest der allgemeinen Formel (IId) 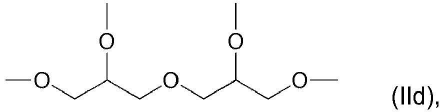 wobei die Variable p eine ganze Zahl von 1 bis 6, insbesondere von 1 bis 4, vorzugsweise 1 oder 2, besonders bevorzugt 1, ist, darstellt;
- Z einen Rest - C(O) - CH₂ - CH(OH) - CH₃ darstellt und die Variable q unabhängig voneinander eine ganze Zahl von 1 bis (p + 2) mit p wie zuvor definiert ist;
- W unabhängig voneinander darstellt: Wasserstoff oder - X - OH mit X wie zuvor definiert oder aber einen Block 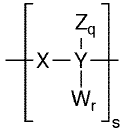 mit X, Y, Z und q jeweils wie zuvor definiert, wobei die Variable s eine ganze Zahl von 0 bis 30, insbesondere von 0 bis 25, vorzugsweise von 0 bis 20, besonders bevorzugt von 0 bis 10, ganz besonders bevorzugt von 0 bis 5, ist und die Variable r unabhängig voneinander eine ganze Zahl von 0 bis (p + 1) mit p wie zuvor definiert ist, wobei das Kettenende des Blocks durch Wasserstoff, - X - OH oder Z gebildet ist.

Auch kann es gemäß einer weiteren besonderen Ausführungsform dieses Erfindungsaspekts vorgesehen sein, dass der erfindungsgemäße bzw. erfindungsgemäß hergestellte mit Polycarbonsäuren vernetzte Polyglycerinester der 3-Hydroxybuttersäure, insbesondere der ein- oder mehrwertige mit Polycarbonsäuren vernetzte Polyglycerinester der 3-Hydroxybuttersäure, der allgemeinen Formel (IVb) 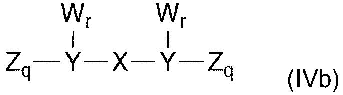 entspricht,
wobei in der allgemeinen Formel (IVb)
- X abgeleitet ist von einer Polycarbonsäure, ausgewählt aus der Gruppe von Bernsteinsäure, Weinsäure, Citronensäure, Äpfelsäure, Adipinsäure, Fumarsäure und Maleinsäure sowie deren Kombinationen oder Mischungen, insbesondere ausgewählt aus der Gruppe von Bernsteinsäure, Weinsäure, Citronensäure, Äpfelsäure, Adipinsäure und Fumarsäure sowie deren Kombinationen oder Mischungen, bevorzugt ausgewählt aus der Gruppe von Bernsteinsäure und Adipinsäure und deren Anhydriden sowie deren Kombinationen oder Mischungen;
- Y einen von einem Polyglycerin abgeleiteten Rest, insbesondere einen Rest der allgemeinen Formel (IId) 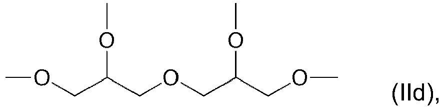 wobei die Variable p eine ganze Zahl von 1 bis 6, insbesondere von 1 bis 4, vorzugsweise 1 oder 2, besonders bevorzugt 1, ist, darstellt;
- Z einen Rest - C(O) - CH₂ - CH(OH) - CH₃ darstellt und die Variable q unabhängig voneinander eine ganze Zahl von 1 bis (p + 2) mit p wie zuvor definiert ist;
- W unabhängig voneinander darstellt: Wasserstoff oder - X - OH mit X wie zuvor definiert oder aber einen Block 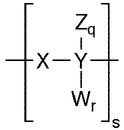 mit X, Y, Z und q jeweils wie zuvor definiert, wobei die Variable s eine ganze Zahl von 0 bis 30, insbesondere von 0 bis 25, vorzugsweise von 0 bis 20, besonders bevorzugt von 0 bis 10, ganz besonders bevorzugt von 0 bis 5, ist und die Variable r unabhängig voneinander eine ganze Zahl von 0 bis (p + 1) mit p wie zuvor definiert ist, wobei das Kettenende des Blocks durch Wasserstoff, - X - OH oder Z gebildet ist.

In diesem Zusammenhang bedeutet "abgeleitet von", dass X aus den genannten Carbonsäuren gebildet wird; insbesondere wird durch Veresterung des Wasserstoffs des Carboxyls verestert; d. h. also, es liegt jeweils der Dicarboxylatrest der entsprechenden Säure als X vor.

Darüber hinaus kann gemäß einer besonderen Ausführungsform dieses Erfindungsaspekts der erfindungsgemäße bzw. erfindungsgemäß hergestellte mit Polycarbonsäuren vernetzte Polyglycerinester der 3-Hydroxybuttersäure, insbesondere der ein- oder mehrwertige mit Polycarbonsäuren vernetzte Polyglycerinester der 3-Hydroxybuttersäure, der allgemeinen Formel (IVb) 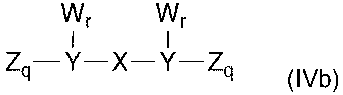 entsprechen, wobei in der allgemeinen Formel (IVb)
- X einen der folgenden Reste darstellt: 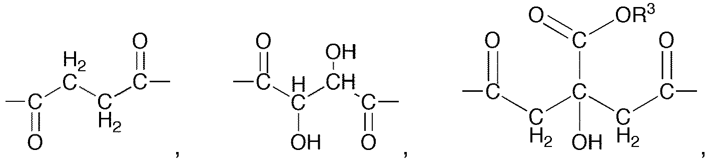 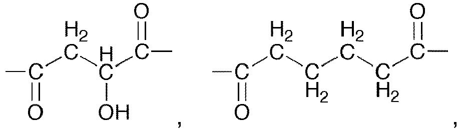 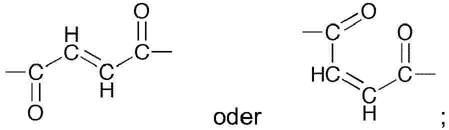 wobei in den vorstehenden Resten der Rest R³ Wasserstoff oder einen Rest - CH(CH₃) - CH₂ - C(O)OR¹ mit R¹ wie zuvor definiert oder einen gegebenenfalls substituierten Polyglycerinrest darstellt;
- Y einen von einem Polyglycerin abgeleiteten Rest, insbesondere einen Rest der allgemeinen Formel (IIc) 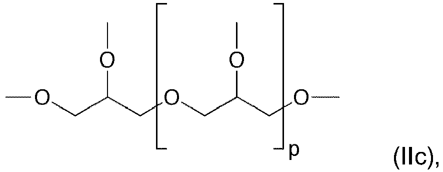 wobei die Variable p eine ganze Zahl von 1 bis 6, insbesondere von 1 bis 4, vorzugsweise 1 oder 2, besonders bevorzugt 1, ist, darstellt;
- Z einen Rest - C(O) - CH₂ - CH(OH) - CH₃ darstellt und die Variable q unabhängig voneinander eine ganze Zahl von 1 bis (p + 2) mit p wie zuvor definiert ist;
- W unabhängig voneinander darstellt: Wasserstoff oder - X - OH mit X wie zuvor definiert oder aber einen Block 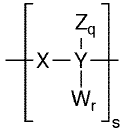 mit X, Y, Z und q jeweils wie zuvor definiert, wobei die Variable s eine ganze Zahl von 0 bis 30, insbesondere von 0 bis 25, vorzugsweise von 0 bis 20, besonders bevorzugt von 0 bis 10, ganz besonders bevorzugt von 0 bis 5, ist und die Variable r unabhängig voneinander eine ganze Zahl von 0 bis (p + 1) mit p wie zuvor definiert ist, wobei das Kettenende des Blocks durch Wasserstoff, - X - OH oder Z gebildet ist.

Auch kann es erfindungsgemäß vorgesehen sein, dass der erfindungsgemäße bzw. erfindungsgemäß hergestellte mit Polycarbonsäuren vernetzte Polyglycerinester der 3-Hydroxybuttersäure, insbesondere der ein- oder mehrwertige mit Polycarbonsäuren vernetzte Polyglycerinester der 3-Hydroxybuttersäure, der allgemeinen Formel (IVb) 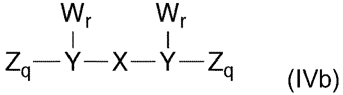 entspricht,
wobei in der allgemeinen Formel (IVb)
- X einen der folgenden Reste darstellt: 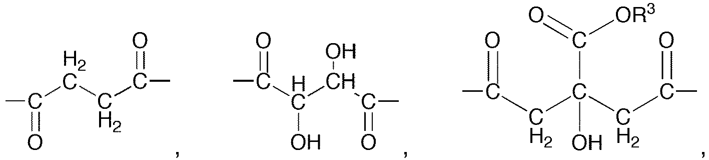 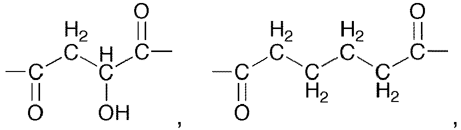 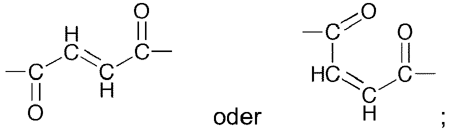 wobei in den vorstehenden Resten der Rest R³ Wasserstoff oder einen Rest - CH(CH₃) - CH₂ - C(O)OR¹ mit R¹ wie zuvor definiert oder einen gegebenenfalls substituierten Polyglycerinrest darstellt;
- Y einen von einem Polyglycerin abgeleiteten Rest, insbesondere einen Rest der allgemeinen Formel (IId) 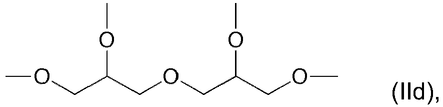 wobei die Variable p eine ganze Zahl von 1 bis 6, insbesondere von 1 bis 4, vorzugsweise 1 oder 2, besonders bevorzugt 1, ist, darstellt;
- Z einen Rest - C(O) - CH₂ - CH(OH) - CH₃ darstellt und die Variable q unabhängig voneinander eine ganze Zahl von 1 bis (p + 2) mit p wie zuvor definiert ist;
- W unabhängig voneinander darstellt: Wasserstoff oder - X - OH mit X wie zuvor definiert oder aber einen Block 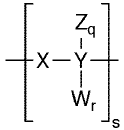 mit X, Y, Z und q jeweils wie zuvor definiert, wobei die Variable s eine ganze Zahl von 0 bis 30, insbesondere von 0 bis 25, vorzugsweise von 0 bis 20, besonders bevorzugt von 0 bis 10, ganz besonders bevorzugt von 0 bis 5, ist und die Variable r unabhängig voneinander eine ganze Zahl von 0 bis (p + 1) mit p wie zuvor definiert ist, wobei das Kettenende des Blocks durch Wasserstoff, - X - OH oder Z gebildet ist.

Darüber hinaus ist weiterer Gegenstand der vorliegenden Erfindung gemäß einer besonderen Ausführungsform dieses Erfindungsaspekts ein mit Polycarbonsäuren vernetzter Polyglycerinester der 3-Hydroxybuttersäure, insbesondere ein- oder mehrwertiger mit Polycarbonsäuren vernetzter Polyglycerinester der 3-Hydroxybuttersäure, insbesondere wie zuvor definiert, wobei der mit Polycarbonsäuren vernetzten Polyglycerinester der 3-Hydroxybuttersäure, insbesondere der ein- oder mehrwertigen mit Polycarbonsäuren vernetzten Polyglycerinester der 3-Hydroxybuttersäure, die folgenden Einheiten, insbesondere Molekülbausteine, umfasst/umfassen:
- mindestens eine Einheit - C(O) - X' -C(O) -, wobei X' einen von einer Polycarbonsäure abgeleiteten Rest, insbesondere einen 1 bis 10, vorzugsweise 2 bis 6 Kohlenstoffatome enthaltenden und gegebenenfalls ein- oder mehrfach substituierten, insbesondere mit einem oder mehreren Hydroxyl-Resten und/oder Carboxyl-Resten substituierten, gesättigten oder ungesättigten organischen Rest, darstellt;
- mindestens eine Einheit, vorzugsweise mindestens zwei Einheiten, abgeleitet von einem Polyglycerin, insbesondere mindestens eine Einheit, vorzugsweise mindestens zwei Einheiten, der allgemeinen Formel (IIc) 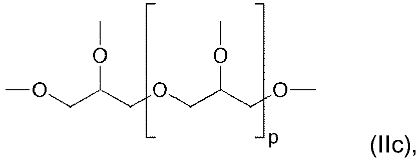 wobei die Variable p eine ganze Zahl von 1 bis 6, insbesondere von 1 bis 4, vorzugsweise 1 oder 2, besonders bevorzugt 1, ist, darstellt;
- mindestens zwei Einheiten, insbesondere mindestens drei Einheiten, vorzugsweise mindestens vier Einheiten - C(O) - CH₂ - CH(OH) - CH₃;
- gegebenenfalls mindestens eine Einheit - C(O) - CH₂ - CH(CH₃) - O -;
- gegebenenfalls mindestens eine Einheit - X' - COOH mit X' wie zuvor definiert.

In diesem Zusammenhang handelt es sich bei den zuvor genannten Einheiten um die Molekülbausteine bzw. Segmente, welche in ihrer Gesamtheit das Reaktionsprodukt (IV) bilden. Dabei ist zu beachten, dass im Fall der vorliegenden Erfindung die einzelnen Einheiten jeweils durch eine Veresterungsreaktion miteinander verbunden sind bzw. durch Estergruppen, sodass eine wahllose Anordnung nicht möglich ist. Jedoch ist dem Fachmann wohlbekannt, wie die einzelnen Einheiten anzuordnen sind.

Weiterhin ist auch Gegenstand der vorliegenden Erfindung gemäß einer besonderen Ausführungsform dieses Erfindungsaspekts ein mit Polycarbonsäuren vernetzter Polyglycerinester der 3-Hydroxybuttersäure, insbesondere ein- oder mehrwertiger mit Polycarbonsäuren vernetzter Polyglycerinester der 3-Hydroxybuttersäure, insbesondere wie zuvor definiert,
wobei der bzw. die mit Polycarbonsäuren vernetzten Polyglycerinester der 3-Hydroxybuttersäure, insbesondere der bzw. die ein- oder mehrwertigen mit Polycarbonsäuren vernetzten Polyglycerinester der 3-Hydroxybuttersäure, die folgenden Einheiten, insbesondere Molekülbausteine, umfasst/umfassen:
- mindestens eine Einheit X" der folgenden Formeln: 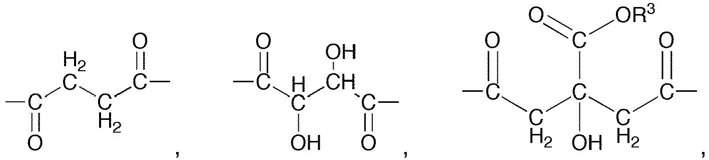 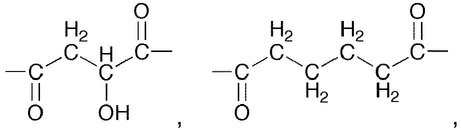 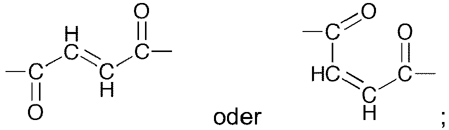 wobei in den vorstehenden Resten der Rest R³ Wasserstoff oder einen Rest - CH(CH₃) - CH₂ - C(O)OR¹ mit R¹ wie zuvor definiert oder einen gegebenenfalls substituierten Polyglycerinrest darstellt;
- mindestens eine Einheit, vorzugsweise mindestens zwei Einheiten, abgeleitet von einem Polyglycerin, insbesondere mindestens eine Einheit, vorzugsweise mindestens zwei Einheiten, der allgemeinen Formel (IIc) 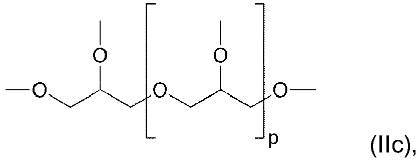 wobei die Variable p eine ganze Zahl von 1 bis 6, insbesondere von 1 bis 4, vorzugsweise 1 oder 2, besonders bevorzugt 1, ist, darstellt;
- mindestens zwei Einheiten, insbesondere mindestens drei Einheiten, vorzugsweise mindestens vier Einheiten - C(O) - CH₂ - CH(OH) - CH₃;
- gegebenenfalls mindestens eine Einheit - C(O) - CH₂ - CH(CH₃) - O -;
- gegebenenfalls mindestens eine Einheit - X" - OH mit X" wie zuvor definiert.

Auch ist Gegenstand der vorliegenden Erfindung gemäß einer besonderen Ausführungsform dieses Erfindungsaspekts ein mit Polycarbonsäuren vernetzter Polyglycerinester der 3-Hydroxybuttersäure, insbesondere ein- oder mehrwertiger mit Polycarbonsäuren vernetzter Polyglycerinester der 3-Hydroxybuttersäure, insbesondere wie zuvor definiert,
wobei der mit Polycarbonsäuren vernetzte Polyglycerinester der 3-Hydroxybuttersäure, insbesondere der ein- oder mehrwertige mit Polycarbonsäuren vernetzte Polyglycerinester der 3-Hydroxybuttersäure, ein Molekulargewicht, insbesondere ein mittleres Molekulargewicht, vorzugsweise ein gewichtsmittleres Molekulargewicht, im Bereich von 500 bis 50.000 g/mol, insbesondere im Bereich von 500 bis 30.000 g/mol, vorzugsweise im Bereich von 500 bis 25.000 g/mol, aufweist, insbesondere bestimmt durch Größenausschlusschromatographie (SEC), vorzugsweise Gelpermeationschromatographie (GPC), vorzugsweise gemäß DIN EN ISO 16014-5: 2019, insbesondere mit Polystyrol (PS) als Standard.

Im Fall von niedermolekularen Verbindungen kann es sich erfindungsgemäß insbesondere auch um absolute Molekulargewichte handeln, während bei höhermolekularen Verbindungen mittlere Molekulargewichte ermittelt werden.

Darüber hinaus ist weiterer Gegenstand der vorliegenden Erfindung gemäß einer besonderen Ausführungsform dieses Erfindungsaspekts ein erfindungsgemäßes Gemisch, umfassend mindestens zwei, insbesondere mindestens drei, vorzugsweise mindestens vier voneinander verschiedene mit Polycarbonsäuren vernetzte Polyglycerinester der 3-Hydroxybuttersäure, insbesondere ein- oder mehrwertige mit Polycarbonsäuren vernetzte Polyglycerinester der 3-Hydroxybuttersäure, insbesondere wie zuvor definiert.

Das nach dem erfindungsgemäßen Verfahren erhältliche bzw. erfindungsgemäße Reaktionsprodukt, wie zuvor definiert, und/oder der nach dem erfindungsgemäßen Herstellungsverfahren erhältliche bzw. erfindungsgemäße mit Polycarbonsäuren vernetzte Polyglycerinester der 3-Hydroxybuttersäure, insbesondere ein- oder mehrwertige mit Polycarbonsäuren vernetzte Polyglycerinester der 3-Hydroxybuttersäure, wie zuvor definiert, und/oder das nach dem erfindungsgemäßen Herstellungsverfahren erhältliche bzw. erfindungsgemäße Gemisch, wie zuvor definiert, weist gegenüber dem Stand der Technik eine Vielzahl von Vorteilen und Besonderheiten auf:
Wie die Anmelderin überraschend herausgefunden hat, eignet sich das nach dem erfindungsgemäßen Verfahren erhältliche bzw. erfindungsgemäße Reaktionsprodukt, wie zuvor definiert, und/oder der nach dem erfindungsgemäßen Herstellungsverfahren erhältliche bzw. erfindungsgemäße mit Polycarbonsäuren vernetzte Polyglycerinester der 3-Hydroxybuttersäure, insbesondere ein- oder mehrwertige mit Polycarbonsäuren vernetzte Polyglycerinester der 3-Hydroxybuttersäure, wie zuvor definiert, und/oder das nach dem erfindungsgemäßen Herstellungsverfahren erhältliche bzw. erfindungsgemäße Gemisch, wie zuvor definiert, insbesondere als Präkursor bzw. Metabolit von 3-Hydroxybuttersäure bzw. deren Salzen, da dieses bzw. dieser einerseits physiologisch, insbesondere im Magen/Darm-Trakt, zu 3-Hydroxybuttersäure bzw. deren Salzen umgesetzt wird und andererseits gleichzeitig eine gute physiologische Kompatibilität bzw. Verträglichkeit aufweist, insbesondere im Hinblick auf Nichttoxizität und akzeptable organoleptische Eigenschaften.

Darüber hinaus ist das nach dem erfindungsgemäßen Verfahren erhältliche bzw. erfindungsgemäße Reaktionsprodukt, wie zuvor definiert, und/oder der nach dem erfindungsgemäßen Herstellungsverfahren erhältliche bzw. erfindungsgemäße mit Polycarbonsäuren vernetzte Polyglycerinester der 3-Hydroxybuttersäure, insbesondere ein- oder mehrwertige mit Polycarbonsäuren vernetzte Polyglycerinester der 3-Hydroxybuttersäure, wie zuvor definiert, und/oder das nach dem erfindungsgemäßen Herstellungsverfahren erhältliche bzw. erfindungsgemäße Gemisch, wie zuvor definiert, ohne Weiteres auf synthetischem Wege auch in großtechnischem Maßstab zugänglich bzw. verfügbar, und zwar auch mit der erforderlichen pharmazeutischen bzw. pharmakologischen Qualität.

Zudem kann das nach dem erfindungsgemäßen Verfahren erhältliche bzw. erfindungsgemäße Reaktionsprodukt, wie zuvor definiert, und/oder der nach dem erfindungsgemäßen Herstellungsverfahren erhältliche bzw. erfindungsgemäße mit Polycarbonsäuren vernetzte Polyglycerinester der 3-Hydroxybuttersäure, insbesondere ein- oder mehrwertige mit Polycarbonsäuren vernetzte Polyglycerinester der 3-Hydroxybuttersäure, wie zuvor definiert, und/oder das nach dem erfindungsgemäßen Herstellungsverfahren erhältliche bzw. erfindungsgemäße Gemisch, wie zuvor definiert, erforderlichenfalls in enantiomerenreiner bzw. enantiomerenangereicherter Form bereitgestellt werden.

Das nach dem erfindungsgemäßen Verfahren erhältliche bzw. erfindungsgemäße Reaktionsprodukt, wie zuvor definiert, und/oder der nach dem erfindungsgemäßen Herstellungsverfahren erhältliche bzw. erfindungsgemäße mit Polycarbonsäuren vernetzte Polyglycerinester der 3-Hydroxybuttersäure, insbesondere ein- oder mehrwertige mit Polycarbonsäuren vernetzte Polyglycerinester der 3-Hydroxybuttersäure, wie zuvor definiert, und/oder das nach dem erfindungsgemäßen Herstellungsverfahren erhältliche bzw. erfindungsgemäße Gemisch, wie zuvor definiert, stellt somit ein effizientes pharmakologisches Wirkstoff-Target im Rahmen einer Ketokörper-Therapie des menschlichen oder tierischen Körpers dar.

Das nach dem erfindungsgemäßen Verfahren erhältliche bzw. erfindungsgemäße Reaktionsprodukt, wie zuvor definiert, und/oder der nach dem erfindungsgemäßen Herstellungsverfahren erhältliche bzw. erfindungsgemäße mit Polycarbonsäuren vernetzte Polyglycerinester der 3-Hydroxybuttersäure, insbesondere ein- oder mehrwertige mit Polycarbonsäuren vernetzte Polyglycerinester der 3-Hydroxybuttersäure, wie zuvor definiert, wird/werden nunmehr weiterführend anhand der nachfolgenden Beschreibung der Zeichnungen und den Zeichnungen selbst charakterisiert. Dabei bilden alle beschriebenen und/oder bildlich dargestellten Merkmale für sich oder in beliebiger Kombination den Gegenstand der vorliegenden Erfindung, unabhängig von ihrer Zusammenfassung in den Ansprüchen und deren Rückbeziehungen.

Es zeigt:
- Fig. 1: eine Darstellung von mit Bernsteinsäure vernetzten Tridiglycerinestern der 3-Hydroxybuttersäure gemäß einer besonderen und rein beispielhaften Ausführungsform,
- Fig. 2: eine schematische Darstellung eines erfindungsgemäßen Reaktionsprodukts gemäß einer weiteren besonderen und ebenfalls rein beispielhaften Ausführungsform,

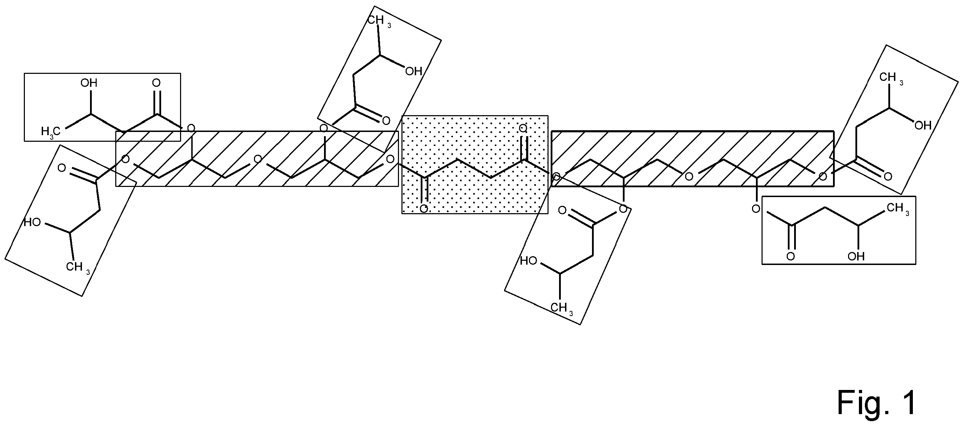

In Fig. 1 ist ein mit Bernsteinsäure vernetzter Tridiglycerinester der 3-Hydroxybuttersäure dargestellt, wobei die unterschiedlichen Einheiten bzw. Molekülbausteine unterschiedlich gekennzeichnet sind. Die Einheit bzw. der Molekülbaustein, welche/welcher auf der 3-Hydroxybuttersäure basiert ist, durch einen (leeren) Kasten gekennzeichnet. Die Einheit bzw. der Molekülbaustein, welche/welcher auf Diglycerin basiert ist durch einen schraffierten Kasten gekennzeichnet und die Einheit bzw. der Molekülbaustein, welche/welcher auf der Bernsteinsäure basiert ist, durch einen gepunkteten Kasten gekennzeichnet.

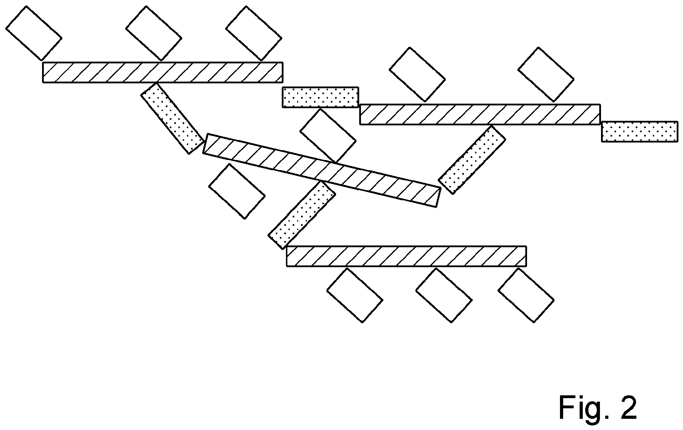

In Fig. 2 ist ein mögliches Reaktionsprodukt (IV), welches in Form eines Netzwerk vorliegt, schematisch dargestellt. In diesem Zusammenhang sind die Einheiten bzw. Molekülbausteine durch die in Fig. 1 gezeigten bzw. definierten Kästen dargestellt (d. h. ein (leerer) Kasten für die Einheit bzw. den Molekülbaustein auf Basis von 3-Hydroxybuttersäure, ein schraffierter Kasten für die Einheit bzw. den Molekülbaustein auf Basis von Diglycerin und ein gepunkteter Kasten für die Einheit bzw. den Molekülbaustein auf Basis von Bernsteinsäure).

Nachfolgend werden noch die übrigen Erfindungsaspekte weiterführende erläutert und im Detail beschrieben.

Weiterer Gegenstand der vorliegenden Erfindung - gemäß einem **dritten** Aspekt der vorliegenden Erfindung - ist eine pharmazeutische Zusammensetzung, insbesondere ein Arzneimittel oder Medikament, welche(s) ein nach dem erfindungsgemäßen Herstellungsverfahren erhältliches bzw. erfindungsgemäßes Reaktionsprodukt bzw. einen erfindungsgemäßen bzw. erfindungsgemäß hergestellten mit Polycarbonsäuren vernetzten Polyglycerinester der 3-Hydroxybuttersäure, insbesondere einen ein- oder mehrwertigen mit Polycarbonsäuren vernetzten Polyglycerinester der 3-Hydroxybuttersäure, wie zuvor definiert, und/oder ein nach dem erfindungsgemäßen Herstellungsverfahren erhältliches bzw. erfindungsgemäßes Gemisch, wie zuvor definiert, umfasst.

Insbesondere betrifft die vorliegende Erfindung gemäß diesem Erfindungsaspekt eine pharmazeutische Zusammensetzung zur prophylaktischen und/oder therapeutischen Behandlung bzw. zur Verwendung bei der prophylaktischen und/oder therapeutischen Behandlung von Erkrankungen des menschlichen oder tierischen Körpers. Hierbei kann es sich insbesondere um Erkrankungen im Zusammenhang mit einer Störung des Energiestoffwechsels, insbesondere Ketokörperstoffwechsels, wie insbesondere Schädel-Hirn-Trauma, Schlaganfall, Hypoxien, kardiovaskuläre Erkrankungen wie Myokardinfarkt, Refeeding-Syndrom, Anorexien, Epilepsie, neurodegenerative Erkrankungen wie Demenz, Morbus Alzheimer, Morbus Parkinson, Multiple Sklerose und Amyotrophe Lateralsklerose, Fettstoffwechselerkrankungen wie Glucosetransporter-Defekt (GLUT1-Defekt), VL-FAOD und Mitochondriopathien wie mitochondrialer Thiolase-Defekt, Chorea Huntington, Krebserkrankungen wie T-Zell-Lymphome, Astrozytome und Glioblastome, HIV, rheumatische Erkrankungen wie rheumatoide Arthritis und Arthritis urica, Erkrankungen des Gastrointestinaltrakts wie chronisch entzündliche Darmerkrankungen, insbesondere Colitis ulcerosa und Morbus Crohn, lyosomale Speicherkrankheiten wie Sphingolipidosen, insbesondere Niemann-Pick-Erkrankung, Diabetes mellitus und Auswirkungen oder Nebenwirkungen von Chemotherapien, Hauterkrankungen und Hautverletzungen, insbesondere zur Förderung der Wundheilung, zur Wundbehandlung oder zur Verminderung von Narbenbildung, handeln.

Wiederum weiterer Gegenstand der vorliegenden Erfindung - gemäß einem **vierten** Aspekt der vorliegenden Erfindung - ist ein nach dem erfindungsgemäßen Herstellungsverfahren erhältliches bzw. erfindungsgemäßes Reaktionsprodukt bzw. erfindungsgemäßer bzw. erfindungsgemäß hergestellter mit Polycarbonsäuren vernetzter Polyglycerinester der 3-Hydroxybuttersäure, insbesondere ein- oder mehrwertiger mit Polycarbonsäuren vernetzter Polyglycerinester der 3-Hydroxybuttersäure, wie zuvor definiert, und/oder ein nach dem erfindungsgemäßen Herstellungsverfahren erhältliches bzw. erfindungsgemäßes Gemisch, wie zuvor definiert, zur prophylaktischen und/oder therapeutischen Behandlung bzw. zur Verwendung bei der prophylaktischen und/oder therapeutischen Behandlung von Erkrankungen des menschlichen oder tierischen Körpers, insbesondere Erkrankungen im Zusammenhang mit einer Störung des Energiestoffwechsels, insbesondere Ketokörperstoffwechsels, wie insbesondere Schädel-Hirn-Trauma, Schlaganfall, Hypoxien, kardiovaskuläre Erkrankungen wie Myokardinfarkt, Refeeding-Syndrom, Anorexien, Epilepsie, neurodegenerative Erkrankungen wie Demenz, Morbus Alzheimer, Morbus Parkinson, Multiple Sklerose und Amyotrophe Lateralsklerose, Fettstoffwechselerkrankungen wie Glucosetransporter-Defekt (GLUT1-Defekt), VL-FAOD und Mitochondriopathien wie mitochondrialer Thiolase-Defekt, Chorea Huntington, Krebserkrankungen wie T-Zell-Lymphome, Astrozytome und Glioblastome, HIV, rheumatische Erkrankungen wie rheumatoide Arthritis und Arthritis urica, Erkrankungen des Gastrointestinaltrakts wie chronisch entzündliche Darmerkrankungen, insbesondere Colitis ulcerosa und Morbus Crohn, lyosomale Speicherkrankheiten wie Sphingolipidosen, insbesondere Niemann-Pick-Erkrankung, Diabetes mellitus und Auswirkungen oder Nebenwirkungen von Chemotherapien, Hauterkrankungen und Hautverletzungen, insbesondere zur Förderung der Wundheilung, zur Wundbehandlung oder zur Verminderung von Narbenbildung.

Außerdem kann die Verwendung eines nach dem erfindungsgemäßen Herstellungsverfahren erhältlichen bzw. erfindungsgemäßen Reaktionsprodukts bzw. eines erfindungsgemäßen bzw. erfindungsgemäß hergestellten mit Polycarbonsäuren vernetzten Polyglycerinesters der 3-Hydroxybuttersäure, insbesondere eines ein- oder mehrwertigen mit Polycarbonsäuren vernetzten Polyglycerinesters der 3-Hydroxybuttersäure, wie zuvor definiert, und/oder eines nach dem erfindungsgemäßen Herstellungsverfahren erhältlichen bzw. erfindungsgemäßen Gemischs, wie zuvor definiert, zur prophylaktischen und/oder therapeutischen Behandlung bzw. zur Herstellung eines Arzneimittels zur prophylaktischen und/oder therapeutischen Behandlung von Erkrankungen des menschlichen oder tierischen Körpers, insbesondere Erkrankungen im Zusammenhang mit einer Störung des Energiestoffwechsels, insbesondere Ketokörperstoffwechsels, wie insbesondere Schädel-Hirn-Trauma, Schlaganfall, Hypoxien, kardiovaskuläre Erkrankungen wie Myokardinfarkt, Refeeding-Syndrom, Anorexien, Epilepsie, neurodegenerative Erkrankungen wie Demenz, Morbus Alzheimer, Morbus Parkinson, Multiple Sklerose und Amyotrophe Lateralsklerose, Fettstoffwechselerkrankungen wie Glucosetransporter-Defekt (GLUT1-Defekt), VL-FAOD und Mitochondriopathien wie mitochondrialer Thiolase-Defekt, Chorea Huntington, Krebserkrankungen wie T-Zell-Lymphome, Astrozytome und Glioblastome, HIV, rheumatische Erkrankungen wie rheumatoide Arthritis und Arthritis urica, Erkrankungen des Gastrointestinaltrakts wie chronisch entzündliche Darmerkrankungen, insbesondere Colitis ulcerosa und Morbus Crohn, lyosomale Speicherkrankheiten wie Sphingolipidosen, insbesondere Niemann-Pick-Erkrankung, Diabetes mellitus und Auswirkungen oder Nebenwirkungen von Chemotherapien, Hauterkrankungen und Hautverletzungen, insbesondere zur Förderung der Wundheilung, zur Wundbehandlung oder zur Verminderung von Narbenbildung, vorgesehen sein.

Darüber hinaus kann die Verwendung eines nach dem erfindungsgemäßen Herstellungsverfahren erhältlichen bzw. erfindungsgemäßen Reaktionsprodukts bzw. eines erfindungsgemäßen bzw. erfindungsgemäß hergestellten mit Polycarbonsäuren vernetzten Polyglycerinesters der 3-Hydroxybuttersäure, insbesondere eines ein- oder mehrwertigen mit Polycarbonsäuren vernetzten Polyglycerinesters der 3-Hydroxybuttersäure, wie zuvor definiert, und/oder eines nach dem erfindungsgemäßen Herstellungsverfahren erhältlichen bzw. erfindungsgemäßen Gemischs, wie zuvor definiert, zur prophylaktischen und/oder therapeutischen Behandlung bzw. zur Herstellung eines Arzneimittels zur prophylaktischen und/oder therapeutischen Behandlung bzw. zur Anwendung von/bei katabolen Stoffwechsellagen, wie Hunger, Diäten oder kohlenhydratarmer Ernährung, vorgesehen sein.

Gleichermaßen weiterer Gegenstand der vorliegenden Erfindung - gemäß einem **fünften** Aspekt der vorliegenden Erfindung - ist die Verwendung eines nach dem erfindungsgemäßen Herstellungsverfahren erhältlichen bzw. erfindungsgemäßen Reaktionsprodukts bzw. eines erfindungsgemäßen bzw. erfindungsgemäß hergestellten mit Polycarbonsäuren vernetzten Polyglycerinesters der 3-Hydroxybuttersäure, insbesondere eines ein- oder mehrwertigen mit Polycarbonsäuren vernetzten Polyglycerinesters der 3-Hydroxybuttersäure, wie zuvor definiert, und/oder eines nach dem erfindungsgemäßen Herstellungsverfahren erhältlichen bzw. erfindungsgemäßen Gemischs, wie zuvor definiert, im Bereich der Kosmetik und/oder in Kosmetika, insbesondere kosmetischen Formulierungen, vorzugsweise zur Altersverhinderung (Anti-Aging), oder für die Gewebezüchtung oder Gewebekonstruktion (Tissue Engineering), insbesondere für die Angioneogenese.

Im Rahmen der erfindungsgemäßen Anwendungen bzw. Verwendungen (z. B. pharmazeutische Zusammensetzungen etc.) können die nach dem erfindungsgemäßen Herstellungsverfahren erhältlichen bzw. erfindungsgemäßen Reaktionsprodukte bzw. die erfindungsgemäßen bzw. erfindungsgemäß hergestellten mit Polycarbonsäuren vernetzten Polyglycerinester der 3-Hydroxybuttersäure, insbesondere die ein- oder mehrwertigen mit Polycarbonsäuren vernetzten Polyglycerinester der 3-Hydroxybuttersäure, wie zuvor definiert, und/oder die nach dem erfindungsgemäßen Herstellungsverfahren erhältlichen bzw. erfindungsgemäßen Gemische, wie zuvor definiert, in beliebiger Applikationsform und/oder in beliebiger Applikation angewendet bzw. verabreicht werden, insbesondere oral, parenteral oder topisch.

Gleichermaßen weiterer Gegenstand der vorliegenden Erfindung - gemäß einem **sechsten** Aspekt der vorliegenden Erfindung - ist ein Kosmetikum oder eine kosmetische Zusammensetzung, welche ein nach dem erfindungsgemäßen Herstellungsverfahren erhältliches bzw. erfindungsgemäßes Reaktionsprodukt bzw. einen erfindungsgemäßen bzw. erfindungsgemäß hergestellten mit Polycarbonsäuren vernetzten Polyglycerinester der 3-Hydroxybuttersäure, insbesondere einen ein- oder mehrwertigen mit Polycarbonsäuren vernetzten Polyglycerinester der 3-Hydroxybuttersäure,wie zuvor definiert, und/oder ein nach dem erfindungsgemäßen Herstellungsverfahren erhältliches bzw. erfindungsgemäßes Gemisch, wie zuvor definiert, umfasst.

Gleichermaßen weiterer Gegenstand der vorliegenden Erfindung - gemäß einem **siebten** Aspekt der vorliegenden Erfindung - ist ein Nahrungsmittel- und/oder Lebensmittelerzeugnis, welches ein nach dem erfindungsgemäßen Herstellungsverfahren erhältliches bzw. erfindungsgemäßes Reaktionsprodukt bzw. einen erfindungsgemäßen bzw. erfindungsgemäß hergestellten mit Polycarbonsäuren vernetzten Polyglycerinester der 3-Hydroxybuttersäure, insbesondere einen ein- oder mehrwertigen mit Polycarbonsäuren vernetzten Polyglycerinester der 3-Hydroxybuttersäure,wie zuvor definiert, und/oder ein nach dem erfindungsgemäßen Herstellungsverfahren erhältliches bzw. erfindungsgemäßes Gemisch, wie zuvor definiert, umfasst.

Gemäß einer besonderen Ausführungsform kann das Nahrungsmittel- und/oder Lebensmittelerzeugnis insbesondere ein Nahrungsergänzungsmittel, ein funktionelles Lebensmittel (*Functional Food*), ein *Novel Food,* ein Lebensmittelzusatzstoff, ein Nahrungszusatz, ein diätetisches Lebensmittel, ein Power-Snack, ein Appetitzügler oder ein Kraft- und/oder Ausdauersport-Supplement sein.

Auch kann die Verwendung eines nach dem erfindungsgemäßen Herstellungsverfahren erhältlichen Reaktionsprodukts bzw. eines erfindungsgemäßen bzw. erfindungsgemäß hergestellten mit Polycarbonsäuren vernetzten Polyglycerinesters der 3-Hydroxybuttersäure, insbesondere eines ein- oder mehrwertigen mit Polycarbonsäuren vernetzten Polyglycerinesters der 3-Hydroxybuttersäure, wie zuvor definiert, und/oder eines nach dem erfindungsgemäßen Herstellungsverfahren erhältlichen Gemischs, wie zuvor definiert, in einem Nahrungsmittel- und/oder Lebensmittelerzeugnis, vorgesehen sein.

In diesem Zusammenhang kann das Nahrungsmittel- und/oder Lebensmittelerzeugnis insbesondere ein Nahrungsergänzungsmittel, ein funktionelles Lebensmittel (*Functional Food*), ein *Novel Food,* ein Lebensmittelzusatzstoff, ein Nahrungszusatz, ein diätetisches Lebensmittel, ein Power-Snack, ein Appetitzügler oder ein Kraft- und/oder Ausdauersport-Supplement sein.

Weitere Ausgestaltungen, Abwandlungen und Variationen der vorliegenden Erfindung sind für den Fachmann beim Lesen der Beschreibung ohne Weiteres erkennbar oder realisierbar, ohne dass er dabei den Rahmen der vorliegenden Erfindung verlässt.

Die vorliegende Erfindung wird anhand der nachfolgenden Ausführungsbeispiele veranschaulicht, welche die vorliegende Erfindung jedoch keinesfalls beschränken sollen, sondern lediglich die beispielhafte und nichtlimitierende Durchführungsweise der Ausgestaltung der vorliegenden Erfindung erläutern sollen.

### AUSFÜHRUNGSBEISPIELE:

### I. Herstellungsbeispiele einer besonderen Ausführungsform des erfindungsgemäßen Verfahrens gemäß Syntheseroute (A)

### I. 1. Herstellung von mit Bernsteinsäure vernetzten Diglycerinestern der 3-Hydroxybuttersäure unter Verwendung von Bernsteinsäureanhydrid

In einem 500-ml-Mehrhalskolben mit Dephlegmator (Partialkondensator) und Destillationsbrücke werden 132 g (R)/(S)-3-Hydroxybuttersäureethylester (3-BHB-EE = Ethyl-3-hydroxybutanoat oder 4-Ethoxy-4-oxobutan-2-ol) (racemisch), 40 g Diglycerin und 1,7 g eines immobilisierten Enzyms (CALB-Lipase auf Polymerträger, abgeleitet von *Candida antarctica,* z. B. Novozym^{®} 435 von der Fa. Sigma-Aldrich bzw. Merck oder Lipozym^{®} 435 von der Fa. Strem Chemicals, Inc.) vorgelegt. Das Reaktionsgemisch wird unter Rühren bei 70 °C und unter Vakuum (<500 mbar) für 10 h zur Reaktion gebracht und der entstehende Ethanol wird kontinuierlich destillativ entfernt. Anschließend wird das Enzym abfiltriert und der überschüssige 3-Hydroxybuttersäureethylester unter Vakuum destillativ entfernt. Das entsprechende Reaktionszwischenproduktgemisch wird dann als Rückstand erhalten. Der erhaltene Rückstand kann bei Bedarf für 2 bis 4 Stunden im Vakuum mit Wasserdampf behandelt werden.

Als Reaktionszwischenprodukt wird ein Gemisch aus Monodiglycerinestern, Didiglycerinestern und Tridiglycerinestern der 3-Hydroxybuttersäure (d. h. ein-, zwei- und dreiwertige Diglycerinester der 3-Hydroxybuttersäure) erhalten.

Anschließend wird das erhaltene Gemisch mit 10 g Bernsteinsäureanhydrid unter Rühren bei 120 °C für 24 h zur Reaktion gebracht und das entstehende Wasser wird kontinuierlich destillativ entfernt. Es wird ein gelförmiges Reaktionsprodukt erhalten, welches aus mit Bernsteinsäure vernetzten Diglycerinestern der 3-Hydroxybuttersäure besteht. Die Strukturen sind veranschaulichend und rein beispielhaft in den obigen Reaktionsschemata der allgemeinen Beschreibung sowie in den Figurendarstellungen wiedergegeben.

Die Charakterisierung erfolgt mittels Massenspektrometrie (MS), Gelpermeationschromatographie (GPC) und Protonenresonanzspektroskopie (¹H-NMR).

### 1.2. Herstellung von mit Bernsteinsäure vernetzten Diglycerinestern der 3-Hydroxybuttersäure unter Verwendung der freien Bernsteinsäure

In einem 500-ml-Mehrhalskolben mit Dephlegmator (Partialkondensator) und Destillationsbrücke werden 132 g (R)/(S)-3-Hydroxybuttersäureethylester (3-BHB-EE = Ethyl-3-hydroxybutanoat oder 4-Ethoxy-4-oxobutan-2-ol) (racemisch), 40 g Diglycerin und 1,7 g eines immobilisierten Enzyms (CALB-Lipase auf Polymerträger, abgeleitet von *Candida antarctica,* z. B. Novozym^{®} 435 von der Fa. Sigma-Aldrich bzw. Merck oder Lipozym^{®} 435 von der Fa. Strem Chemicals, Inc.) vorgelegt. Das Reaktionsgemisch wird unter Rühren bei 70 °C und unter Vakuum (<500 mbar) für 10 h zur Reaktion gebracht und der entstehende Ethanol wird kontinuierlich destillativ entfernt. Anschließend wird das Enzym abfiltriert und der überschüssige 3-Hydroxybuttersäureethylester unter Vakuum destillativ entfernt. Das entsprechende Reaktionszwischenproduktgemisch wird dann als Rückstand erhalten. Der erhaltene Rückstand kann bei Bedarf für 2 bis 4 Stunden im Vakuum mit Wasserdampf behandelt werden.

Als Reaktionszwischenprodukt wird ein Gemisch aus Monodiglycerinestern, Didiglycerinestern und Tridiglycerinestern der 3-Hydroxybuttersäure (d. h. ein-, zwei- und dreiwertige Diglycerinester der 3-Hydroxybuttersäure) erhalten.

Anschließend wird das erhaltene Gemisch mit 11,8 g Bernsteinsäure unter Rühren bei 120 °C für 24 h zur Reaktion gebracht und das entstehende Wasser wird kontinuierlich destillativ entfernt. Es wird ein gelförmiges Reaktionsprodukt erhalten, welches aus mit Bernsteinsäure vernetzten Diglycerinestern der 3-Hydroxybuttersäure besteht.

Die Charakterisierung erfolgt mittels Massenspektrometrie (MS), Gelpermeationschromatographie (GPC) und Protonenresonanzspektroskopie (¹H-NMR).

### 1.3. Herstellung von mit Bernsteinsäure vernetzten Diglycerinestern der 3-Hydroxybuttersäure unter Verwendung von Bernsteinsäurediethylester

In einem 500-ml-Mehrhalskolben mit Dephlegmator (Partialkondensator) und Destillationsbrücke werden 132 g (R)/(S)-3-Hydroxybuttersäureethylester (3-BHB-EE = Ethyl-3-hydroxybutanoat oder 4-Ethoxy-4-oxobutan-2-ol) (racemisch), 40 g Diglycerin und 1,7 g eines immobilisierten Enzyms (CALB-Lipase auf Polymerträger, abgeleitet von *Candida antarctica,* z. B. Novozym^{®} 435 von der Fa. Sigma-Aldrich bzw. Merck oder Lipozym^{®} 435 von der Fa. Strem Chemicals, Inc.) vorgelegt. Das Reaktionsgemisch wird unter Rühren bei 70 °C und unter Vakuum (<500 mbar) für 10 h zur Reaktion gebracht und der entstehende Ethanol wird kontinuierlich destillativ entfernt. Anschließend wird das Enzym abfiltriert und der überschüssige 3-Hydroxybuttersäureethylester unter Vakuum destillativ entfernt. Das entsprechende Reaktionszwischenproduktgemisch wird dann als Rückstand erhalten. Der erhaltene Rückstand kann bei Bedarf für 2 bis 4 Stunden im Vakuum mit Wasserdampf behandelt werden.

Als Reaktionszwischenprodukt wird ein Gemisch aus Monodiglycerinestern, Didiglycerinestern und Tridiglycerinestern der 3-Hydroxybuttersäure (d. h. ein-, zwei- und dreiwertige Diglycerinester der 3-Hydroxybuttersäure) erhalten.

Anschließend wird das erhaltene Gemisch mit 17,4 g Bernsteinsäurediethylester unter Rühren bei 120 °C für 24 h zur Reaktion gebracht und der entstehende Ethanol wird kontinuierlich destillativ entfernt. Es wird ein gelförmiges Reaktionsprodukt erhalten, welches aus mit Bernsteinsäure vernetzten Diglycerinestern der 3-Hydroxybuttersäure besteht.

Die Charakterisierung erfolgt mittels Massenspektrometrie (MS), Gelpermeationschromatographie (GPC) und Protonenresonanzspektroskopie (¹H-NMR).

### I. 4. Herstellung weiterer mit Bernsteinsäure vernetzten Diglycerinester der 3-Hydroxybuttersäure

Die zuvor durchgeführten Synthesebeispiele gemäß I.1., I.2. und I.3. werden erneut durchgeführt, jedoch unter Verwendung der folgenden Polycarbonsäuren (erste Verfahrensvariante jeweils als freie Säuren) und deren jeweiligen Anhydriden (zweite Verfahrensvariante) sowie deren jeweiligen Ethylester (dritte Verfahrensvariante): Weinsäure, Citronensäure, Äpfelsäure, Adpinsäure, Fumarsäure und Maleinsäure. Es werden jeweils vergleichbare Ergebnisse erzielt.

### II. Herstellungsbeispiele einer besonderen Ausführungsform des erfindungsgemäßen Verfahrens gemäß Syntheseroute (B)

### II. 1. Herstellung von mit Bernsteinsäure vernetzten Diglycerinestern der 3-Hydroxybuttersäure unter Verwendung von Bernsteinsäureanhydrid

In einem 500-ml-Mehrhalskolben mit Dephlegmator (Partialkondensator) und Destillationsbrücke werden 40 g Diglycerin und 10 g Bernsteinsäureanhydrid vorgelegt. Das Reaktionsgemisch wird unter Rühren bei 120 °C für 24 h zur Reaktion gebracht und das entstehende Wasser wird kontinuierlich destillativ entfernt. Das entsprechende Reaktionszwischenproduktgemisch wird dann als Rückstand erhalten. Der erhaltene Rückstand kann bei Bedarf für 2 bis 4 Stunden im Vakuum mit Wasserdampf behandelt werden.

Als Reaktionszwischenprodukt wird ein Gemisch aus Polyglycerinestern der Bernsteinsäure und mit Bernsteinsäure vernetzten Polyglycerinestern der Bernsteinsäure erhalten.

Anschließend wird das erhaltene Gemisch mit 264 g (R)/(S)-3-Hydroxybuttersäureethylester (3-BHB-EE = Ethyl-3-hydroxybutanoat oder 4-Ethoxy-4-oxobutan-2-ol) (racemisch) und 1,7 g eines immobilisierten Enzyms (CALB-Lipase auf Polymerträger, abgeleitet von *Candida antarctica,* z. B. Novozym^{®} 435 von der Fa. Sigma-Aldrich bzw. Merck oder Lipozym^{®} 435 von der Fa. Strem Chemicals, Inc.) unter Rühren bei 70 °C und unter Vakuum (<500 mbar) für 10 h zur Reaktion gebracht und der entstehende Ethanol wird kontinuierlich destillativ entfernt. Anschließend wird das Enzym abfiltriert und der überschüssige 3-Hydroxybuttersäureethylester unter Vakuum destillativ entfernt. Das gewünschte Reaktionsproduktgemisch wird dann als Rückstand erhalten. Der erhaltene Rückstand kann bei Bedarf für 2 bis 4 Stunden im Vakuum mit Wasserdampf behandelt werden.

Es wird ein gelförmiges Reaktionsprodukt erhalten, welches aus mit Bernsteinsäure vernetzten Diglycerinestern der 3-Hydroxybuttersäure besteht.

Die Charakterisierung erfolgt mittels Massenspektrometrie (MS), Gelpermeationschromatographie (GPC) und Protonenresonanzspektroskopie (¹H-NMR).

### II. 2. Herstellung von mit Bernsteinsäure vernetzten Diglycerinestern der 3-Hydroxybuttersäure unter Verwendung der freien Bernsteinsäure

In einem 500-ml-Mehrhalskolben mit Dephlegmator (Partialkondensator) und Destillationsbrücke werden 40 g Diglycerin und 11,8 g Bernsteinsäure vorgelegt. Das Reaktionsgemisch wird unter Rühren bei 120 °C für 24 h zur Reaktion gebracht und das entstehende Wasser wird kontinuierlich destillativ entfernt. Das entsprechende Reaktionszwischenproduktgemisch wird dann als Rückstand erhalten. Der erhaltene Rückstand kann bei Bedarf für 2 bis 4 Stunden im Vakuum mit Wasserdampf behandelt werden.

Als Reaktionszwischenprodukt wird ein Gemisch aus Polyglycerinestern der Bernsteinsäure und mit Bernsteinsäure vernetzten Polyglycerinestern der Bernsteinsäure erhalten.

Anschließend wird das erhaltene Gemisch mit 264 g (R)/(S)-3-Hydroxybuttersäureethylester (3-BHB-EE = Ethyl-3-hydroxybutanoat oder 4-Ethoxy-4-oxobutan-2-ol) (racemisch) und 1,7 g eines immobilisierten Enzyms (CALB-Lipase auf Polymerträger, abgeleitet von *Candida antarctica,* z. B. Novozym^{®} 435 von der Fa. Sigma-Aldrich bzw. Merck oder Lipozym^{®} 435 von der Fa. Strem Chemicals, Inc.) unter Rühren bei 70 °C und unter Vakuum (<500 mbar) für 10 h zur Reaktion gebracht und der entstehende Ethanol wird kontinuierlich destillativ entfernt. Anschließend wird das Enzym abfiltriert und der überschüssige 3-Hydroxybuttersäureethylester unter Vakuum destillativ entfernt. Das gewünschte Reaktionsproduktgemisch wird dann als Rückstand erhalten. Der erhaltene Rückstand kann bei Bedarf für 2 bis 4 Stunden im Vakuum mit Wasserdampf behandelt werden.

Es wird ein gelförmiges Reaktionsprodukt erhalten, welches aus mit Bernsteinsäure vernetzten Diglycerinestern der 3-Hydroxybuttersäure besteht.

Die Charakterisierung erfolgt mittels Massenspektrometrie (MS), Gelpermeationschromatographie (GPC) und Protonenresonanzspektroskopie (¹H-NMR).

### II. 3. Herstellung von mit Bernsteinsäure vernetzten Diglycerinestern der 3-Hydroxybuttersäure unter Verwendung von Bernsteinsäurediethylester

In einem 500-ml-Mehrhalskolben mit Dephlegmator (Partialkondensator) und Destillationsbrücke werden 40 g Diglycerin und 17,4 g Bernsteinsäureadiethylester vorgelegt. Das Reaktionsgemisch wird unter Rühren bei 120 °C für 24 h zur Reaktion gebracht und das entstehende Wasser wird kontinuierlich destillativ entfernt. Das entsprechende Reaktionszwischenproduktgemisch wird dann als Rückstand erhalten. Der erhaltene Rückstand kann bei Bedarf für 2 bis 4 Stunden im Vakuum mit Wasserdampf behandelt werden.

Als Reaktionszwischenprodukt wird ein Gemisch aus Polyglycerinestern der Bernsteinsäure und mit Bernsteinsäure vernetzten Polyglycerinestern der Bernsteinsäure erhalten.

Anschließend wird das erhaltene Gemisch mit 264 g (R)/(S)-3-Hydroxybuttersäureethylester (3-BHB-EE = Ethyl-3-hydroxybutanoat oder 4-Ethoxy-4-oxobutan-2-ol) (racemisch) und 1,7 g eines immobilisierten Enzyms (CALB-Lipase auf Polymerträger, abgeleitet von *Candida antarctica,* z. B. Novozym^{®} 435 von der Fa. Sigma-Aldrich bzw. Merck oder Lipozym^{®} 435 von der Fa. Strem Chemicals, Inc.) unter Rühren bei 70 °C und unter Vakuum (<500 mbar) für 10 h zur Reaktion gebracht und der entstehende Ethanol wird kontinuierlich destillativ entfernt. Anschließend wird das Enzym abfiltriert und der überschüssige 3-Hydroxybuttersäureethylester unter Vakuum destillativ entfernt. Das gewünschte Reaktionsproduktgemisch wird dann als Rückstand erhalten. Der erhaltene Rückstand kann bei Bedarf für 2 bis 4 Stunden im Vakuum mit Wasserdampf behandelt werden.

Es wird ein gelförmiges Reaktionsprodukt erhalten, welches aus mit Bernsteinsäure vernetzten Diglycerinestern der 3-Hydroxybuttersäure besteht.

Die Charakterisierung erfolgt mittels Massenspektrometrie (MS), Gelpermeationschromatographie (GPC) und Protonenresonanzspektroskopie (¹H-NMR).

### II. 4. Herstellung weiterer mit Bernsteinsäure vernetzter Diglycerinester der 3-Hydroxybuttersäure

Die zuvor durchgeführten Synthesebeispiele gemäß II.1., II.2. und II.3. werden erneut durchgeführt, jedoch unter Verwendung der folgenden Polycarbonsäuren und deren jeweiligen Anhydriden sowie Ethylester: Weinsäure, Citronensäure, Äpfelsäure, Adpinsäure, Fumarsäure und Maleinsäure. Es werden vergleichbare Ergebnisse erzielt.

### III. Herstellungsbeispiele einer alternativen besonderen Ausführungsform des erfindungsgemäßen Verfahrens unter Verwendung eines Metallkatalysators

Alle zuvor unter Abschnitt I. und Abschnitt II. beschriebenen chemischen Synthesebeispiele werden erneut durchgeführt, jedoch unter Zugabe von Titantetrabutylat als Katalysator (Titan(IV)-Katalysator) in den jeweiligen Verfahrensschritten (a) und/oder (b). Der Titan(IV)-Katalysator wird zusammen mit den weiteren Reaktanden im Kolben vorgelegt und die Reaktionen erfolgen bei 120 °C. Es werden vergleichbare Ergebnisse erzielt. Der Katalysator wird nach Reaktionsende abgetrennt und rezykliert.

### IV. Herstellungsbeispiele einer weiteren alternativen besonderen Ausführungsform des erfindungsgemäßen Verfahrens unter Verwendung eines Enzymkatalysators

Alle zuvor unter Abschnitt I. und Abschnitt II. beschriebenen chemischen Synthesebeispiele werden erneut durchgeführt, jedoch unter Zugabe eines immobilisierten Enzyms (CALB-Lipase auf Polymerträger, abgeleitet von *Candida antarctica,* z. B. Novozym^{®} 435 von der Fa. Sigma-Aldrich bzw. Merck oder Lipozym^{®} 435 von der Fa. Strem Chemicals, Inc.) als Katalysators in den Verfahrensschritten (a) und (b). Das Enzym wird zusammen mit den weiteren Reaktanden im Kolben vorgelegt und die Reaktionen erfolgen bei 70 °C unter Vakuum. Es werden vergleichbare Ergebnisse erzielt. Das Enzym wird nach Reaktionsende abgetrennt und rezykliert.

### V. Herstellungsbeispiele einer wiederum weiteren alternativen besonderen Ausführungsform des erfindungsgemäßen Verfahrens ohne die Verwendung eines Katalysators

Alle zuvor unter Abschnitt I. und Abschnitt II. beschriebenen chemischen Synthesebeispiele werden erneut durchgeführt, jedoch ohne die Zugabe eines Katalysators. Die Reaktion erfolgt bei 120 °C und es werden vergleichbare Ergebnisse erzielt.

### VI. Strukturanalyse

Zur Strukturanalyse wird ein mit Bernsteinsäure vernetzter Monodiglycerinester der 3-Hydroxybuttersäure gemäß Syntheseroute (A) hergestellt und mittels Gelpermeationschromatographie (GPC) und Säurezahlbestimmung charakterisiert.

Im ersten Verfahrensschritt (a) werden in einem 1000-ml-Mehrhalskolben mit Dephlegmator (Partialkondensator) und Destillationsbrücke 264 g (R)/(S)-3-Hydroxybuttersäureethylester (3-BHB-EE = Ethyl-3-hydroxybutanoat oder 4-Ethoxy-4-oxobutan-2-ol) (racemisch), 80 g Diglycerin und 3,4 g eines immobilisierten Enzyms (CALB-Lipase auf Polymerträger, abgeleitet von *Candida antarctica,* z. B. Novozym^{®} 435 von der Fa. Sigma-Aldrich bzw. Merck oder Lipozym^{®} 435 von der Fa. Strem Chemicals, Inc.) vorgelegt. Das Reaktionsgemisch wird unter Rühren bei 70 °C und unter Vakuum (<500 mbar) für 10 h zur Reaktion gebracht und der entstehende Ethanol wird kontinuierlich destillativ entfernt. Anschließend wird das Enzym abfiltriert und der überschüssige 3-Hydroxybuttersäureethylester unter Vakuum destillativ entfernt.

Das entsprechende Reaktionszwischenproduktgemisch wird dann als Rückstand erhalten. Der erhaltene Rückstand wird für 2 bis 4 Stunden im Vakuum mit Wasserdampf behandelt. Anschließend wird das erhaltene Gemisch aus Monodiglycerinestern, Didiglycerinestern und Tridiglycerinestern der 3-Hydroxybuttersäure (d. h. ein-, zwei- und dreiwertige Diglycerinester der 3-Hydroxybuttersäure) destillativ fraktioniert und die einzelnen Ester (d. h. Monodiglycerinester, Didiglycerinester und Tridiglycerinester der 3-Hydroxybuttersäure) werden getrennt.

Anschließend werden in dem zweiten Verfahrensschritt (b) gemäß einem ersten Ansatz 100 g des Monodiglycerinestern der 3-Hydroxybuttersäure mit 10 g Bernsteinsäureanhydrid unter Rühren bei 80 °C für 20 h zur Reaktion gebracht und das entstehende Wasser wird kontinuierlich destillativ entfernt. Es wird eine Probe zur weiteren Analyse genommen (Probe A) und dann werden weitere 7 g Bernsteinsäureanhydrid zugegeben und bei 120 °C für weitere 6 h zur Reaktion gebracht. Anschließend wird eine weitere Probe zur Analyse genommen (Probe C).

Darüber hinaus werden in dem zweiten Verfahrensschritt (b) gemäß einem zweiten Ansatz 100 g des Monodiglycerinestern der 3-Hydroxybuttersäure mit 10 g Bernsteinsäureanhydrid unter Zugabe von 100 µL Titrantetrabutylat (Katalysator) unter Rühren bei 80 °C für 20 h zur Reaktion gebracht und das entstehende Wasser wird kontinuierlich destillativ entfernt. Es wird eine Probe zur weiteren Analyse genommen (Probe B) und dann werden weitere 7 g Bernsteinsäureanhydrid zugegeben und bei 80 °C für weitere 6 h zur Reaktion gebracht. Anschließend wird eine weitere Probe zur Analyse genommen (Probe D).

Die genommen Proben werden analysiert und die Ergebnisse sind in Tabelle 1 zusammengefasst.

**Tabelle 1: GC-Flächenanalyse [%] und Viskosität der Proben A, B, C und D sowie des Edukts (Monodiqlvcerinestern der 3 Hvdroxvbuttersäure)**

| | **Flächen-% Mn = 480 g/mol** | **Flächen-% Mn = 640 + 790 g/mol** | **Flächen-% Mn = 1200 g/mol** | **Mw/Mn [g/mol / g/mol]** | **Viskosität bei 25 °C [Pas]** |
|---|---|---|---|---|---|
| **Edukt** | 54,2 | 41,5 | - | 540/510 | 15.700 |
| **A** | 35,9 | 61,2 | - | 600 / 550 | 28.900 |
| **B** | 36,0 | 50,2 + 9,8 | 1,2 | 600 / 550 | 28.900 |
| **C** | 24,3 | 44,9 + 14,1 | 14,0 | 700 / 620 | 44.000 |
| **D** | 25,9 | 52,3 + 17,9 | 1,6 | 640 / 600 | 40.400 |

Darüber hinaus wird der Vernetzungsgrad der Proben mithilfe der Säurezahl berechnet. Die Berechnung ist in Tabelle 2 zusammengefasst. Je kleiner das Verhältnis SZᵢₛₜ / SZₜₕₑₒ, desto höher ist die Vernetzung.

**Tabelle 2: Ermittlung des Vernetzungsgrads der Proben A, B, C und D**

| | **SZᵢₛₜ [mg KOH/g]** | **SZₜₕₑₒ [mg KOH/g]** | **SZᵢₛₜ / SZₜₕₑₒ [%]** |
|---|---|---|---|
| **A** | 50,4 | 52,4 | 96,7 |
| **B** | 49,5 | 52,9 | 99,0 |
| **C** | 74,9 | 86,9 | 83,5 |
| **D** | 85,3 | 88,0 | 96,7 |

### VII. Physiologische Anwendungsversuche: in-vitro-Verdauversuche

### VII. 1. Verdauversuche (Spalt- bzw. Spaltungsversuche) von erfindungsgemäßen mit Polycarbonsäuren vernetzten Diglycerinen der 3-Hydroxybuttersäure

Mittels Spaltungsversuchen wird gezeigt, dass erfindungsgemäß hergestellte mit Polycarbonsäuren vernetzte Diglycerinester der 3-Hydroxybuttersäure bzw. deren Gemische (vgl. zuvor beschriebene Versuche gemäß I., II. III., IV. und V.), einschließlich der Reaktionsnebenprodukte, im menschlichen gastrointestinalen Trakt gespalten werden können.

Als Ausgangsgemisch werden jeweils aufgereinigte, nach dem erfindungsgemäßen Verfahren erhaltene Reaktionsprodukte eingesetzt:
- mit Weinsäure vernetzte Diglycerinester der 3-Hydroxybuttersäure,
- mit Citronensäure vernetzte Diglycerinester der 3-Hydroxybuttersäure,
- mit Äpfelsäure vernetzte Diglycerinester der 3-Hydroxybuttersäure,
- mit Adpinsäure vernetzte Diglycerinester der 3-Hydroxybuttersäure,
- mit Fumarsäure vernetzte Diglycerinester der 3-Hydroxybuttersäure und
- mit Maleinsäure vernetzte Diglycerinester der 3-Hydroxybuttersäure.

Für die Spaltungsversuche unter körpernahen Bedingungen werden zwei Medien untersucht:
- FaSSGF, welches den Magen simuliert
- FaSSIF, welches den Darmtrakt simuliert.

Beide Medien stammen von der Firma Biorelevant^{®}, Ltd., Großbritannien. Zusätzlich wird in einigen Experimenten beiden Medien jeweils Schweine-Pankrease zugesetzt (Panzytrat^{®} 40.000, Fa. Allergan).

Die Ergebnisse der Spaltungsversuche in einem FaSSGF- bzw. FaSSIF-Medium mit Panzytrat^{®} und ohne Panzytrat^{®} (jeweils 35 °C, 24 h) zeigen, dass die Proben unter FaSSGF-Bedingungen mit Panzytrat^{®} und ohne Panzytrat^{®} hydrolysieren; dies liegt hauptsächlich am niedrigen pH-Wert (pH = 1,6) des Mediums. Bei FaSSIF-Bedingungen findet eine geringere Umsetzung unter Verwendung von Panzytrat^{®} statt.

Bei allen Spaltungsversuchen ist zu erkennen, dass die Spaltung in Form einer Kaskade verläuft (d. h. der Tetradiglycerinester wird zum Tridiglycerinester, der Tridiglycerinester wird zum Didiglycerinester etc.). Weiterhin wird die Polycarbonsäure abgespalten. Insgesamt werden somit die vom Körper verwertbaren Polycarbonsäuren und die freie Buttersäure freigesetzt und weiterhin wird der untoxische, physiologisch kompatible Träger Diglycerin freigesetzt, welcher vom Körper ausgeschieden wird.

Insgesamt liegt somit ein Retardierungseffekt vor (d. h. die Freisetzung der 3-Hydroxybuttersäure und der Polycarbonsäure erfolgen verzögert bzw. kontinuierlich über einen längeren Zeitraum).

### VII. 2. Weitere Verdauversuche (Spaltungsversuche) von erfindungsgemäßen Carbonsäuren von 3-Hydroxybutanoat

### Spaltunqsversuche mit Pankreatin

2 g eines wie zuvor beschrieben hergestellten mit Polycarbonsäuren vernetzten Diglycerinesters der 3-Hydroxybuttersäure bzw. deren Mischung (Mischung aus entsprechenden mit Polycarbonsäuren vernetzten Monodiglycerin-, Didiglycerin-, Tridiglycerin- und/oder Tetradiglycerinester der 3-Hydroxybuttersäure) werden in 50 g Wasser gelöst und mit 0,5 g (1 Gew.-%) Pankreatin versetzt. Das Pankreatin wird in Form des kommerziell verfügbaren Produkts Panzytrat^{®} 40.000 von der Fa. Allergan eingesetzt. Das Ganze wird auf einer Heizplatte bei 50 °C gerührt; der Reaktionsverlauf wird mittels kontinuierlicher Erfassung der Säurezahl über die Zeit ermittelt und verfolgt. Die Säurezahl steigt über den Beobachtungszeitraum an (Spaltung der mit Polycarbonsäuren vernetzten Diglycerinester der 3-Hydroxybuttersäure). Der Umsatz/Zeit-Verlauf der wässrigen Spaltung der erfindungsgemäßen mit Polycarbonsäuren vernetzten Diglycerinester der 3-Hydroxybuttersäure mittels Pankreatin, einschließlich Zunahme der Säurezahl über die Zeit, belegt die gewünschte Zersetzung des Eduktgemischs zu der freien Polycarbonsäure und der freien 3-Hydroxybuttersäure. Dies wird durch entsprechende Analytik bestätigt. Der Versuch belegt, dass das erfindungsgemäße Ausgangsgemisch ein geeigneter physiologischer Präkursor für 3-Hydroxybuttersäure bzw. deren Ester (3-Hydroxybutanoate) für die entsprechenden Ketokörpertherapien darstellt.

### VII. 3. Schlussfolgerungen

Die zuvor geschilderten Spaltungsversuche belegen, dass die mit Polycarbonsäuren vernetzten Diglycerinester der 3-Hydroxybuttersäure effiziente Präkursoren bzw. Metabolite der freien Hydroxybuttersäure bzw. deren Estern (hier: Ethylester) darstellen, insbesondere im Hinblick auf ihre beabsichtigte Wirkung, welche in physiologisch verträglicher bzw. physiologisch kompatibler Form vorliegen. Gleichermaßen werden ebenfalls metabolisch verwertbare bzw. umsetzbare, im natürlichen Stoffwechsel (z. B. Citratzyklus) vorkommende Polycarbonsäuren bzw. deren Derivate, insbesondere Salze, gebildet (z. B. Citronensäure bzw. Citrate, Äpfelsäure bzw. Malate, Weinsäure bzw. Tartrate etc.). Das Diglycerin dient als physiologisch kompatibles, nicht-toxisches Träger- bzw. Carriermolekül für die Anbindung einer Vielzahl an Wirkstoffmolekülen (= 3-Hydroxybuttersäure), welches aber selbst ohne Weiteres ausgeschieden werden kann; es resultiert eine hohe Wirkstoffdichte einerseits und eine gewünschte kontrollierte, insbesondere retardierte Freisetzung andererseits.

### VIII. Weitere Testungen (Oraanoleptik und Toxizität)

Weitere Versuche und Testreihen werden in Bezug auf Organoleptik und Toxizität der erfindungsgemäßen mit Polycarbonsäuren vernetzten Diglycerinester der 3-Hydroxybuttersäure durchgeführt. Diese zeigen, dass die erfindungsgemäßen mit Polycarbonsäuren vernetzten Diglycerinester der 3-Hydroxybuttersäure organoleptisch akzeptabel und kompatibel sind, insbesondere im Vergleich zu reiner 3-Hydroxybuttersäure sowie deren Salzen und Estern signifikant verbesserte organoleptische Eigenschaften aufweisen, sowie zudem keine für die Anwendung entgegenstehende Toxizität aufweisen.

## Patentansprüche

1. Verfahren zur Herstellung von mit Polycarbonsäuren vernetzten Polyglycerinestern der 3-Hydroxybuttersäure,
wobei
(i) mindestens eine 3-Hydroxybuttersäureverbindung der allgemeinen Formel (I)
CH₃ - CH(OH) - CH₂ - C(O)OR¹ (I)
wobei in der allgemeinen Formel (I) der Rest R¹ Wasserstoff, einen Rest - (O)C - CH₂ - CH(OH) - CH₃ oder ein C₁-C₄-Alkyl, insbesondere ein C₁-C₄-Alkyl, bevorzugt Methyl oder Ethyl, besonders bevorzugt Ethyl, darstellt,
(ii) mindestens einem Polyglycerin (II) der allgemeinen Formel (IIa)
HO - CH₂ - CH(OH) - CH₂ - [O - CH₂ - CH(OH) - CH₂]ₚ - OH (IIa)
wobei in der allgemeinen Formel (IIa) die Variable p eine ganze Zahl von 1 bis 6 darstellt,
und
(iii) mindestens eine Polycarbonsäure (III), insbesondere mindestens eine mindestens zwei Carboxylgruppen enthaltende Polycarbonsäure, wobei die Polycarbonsäure (III) in Form der freien Polycarbonsäure, in Form eines Salzes der Polycarbonsäure, in Form eines Polycarbonsäureesters oder in Form des Polycarbonsäureanhydrids eingesetzt wird,
miteinander umgesetzt und/oder zur Reaktion gebracht werden,
wobei das Verfahren in Abwesenheit von Lösemitteln und/oder ohne jedwedes Lösemittel durchgeführt wird,
so dass als Reaktionsprodukt (IV) ein oder mehrere mit Polycarbonsäuren vernetzte Polyglycerinester der 3-Hydroxybuttersäure, insbesondere ein oder mehrere ein- oder mehrwertige mit Polycarbonsäuren vernetzte Polyglycerinester der 3-Hydroxybuttersäure, der allgemeinen Formel (IVa) 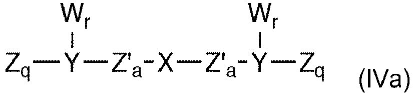
erhalten werden,
wobei in der allgemeinen Formel (IVa)
• X einen Rest - C(O) - X' -C(O) - darstellt, wobei X' einen von einer Polycarbonsäure abgeleiteten Rest, insbesondere einen 1 bis 10, vorzugsweise 2 bis 6 Kohlenstoffatome enthaltenden und gegebenenfalls ein- oder mehrfach substituierten, insbesondere mit einem oder mehreren Hydroxyl-Resten und/oder Carboxyl-Resten substituierten, gesättigten oder ungesättigten organischen Rest, darstellt;
• Y einen von einem Polyglycerin abgeleiteten Rest, insbesondere einen Rest der allgemeinen Formel (IIc) 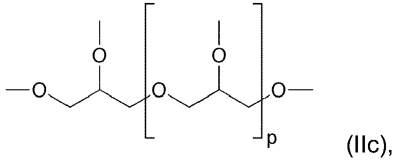 darstellt, wobei die Variable p eine ganze Zahl von 1 bis 6 ist;
• Z einen Rest - C(O) - CH₂ - CH(OH) - CH₃ darstellt und die Variable q unabhängig voneinander eine ganze Zahl von 1 bis (p + 2) mit p wie zuvor definiert ist;
• Z' einen Rest - C(O) - CH₂ - CH(CH₃) - O - darstellt und die Variable a unabhängig voneinander 0 oder 1 ist;
• W unabhängig voneinander darstellt: Wasserstoff oder - X - OH mit X wie zuvor definiert oder aber einen oder mehrere Blöcke 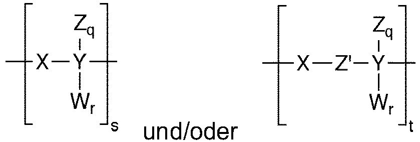 mit X, Y, Z, Z' und q jeweils wie zuvor definiert, wobei die Variablen s und t, jeweils unabhängig voneinander, eine ganze Zahl von 0 bis 30 sind und die Variable r unabhängig voneinander eine ganze Zahl von 0 bis (p + 1) mit p wie zuvor definiert ist, wobei das Kettenende der Blöcke jeweils durch Wasserstoff, - X - OH oder Z gebildet ist.

2. Verfahren nach Anspruch 1,
wobei das Verfahren mehrstufig, insbesondere zweistufig, durchgeführt wird;
insbesondere wobei zunächst mindestens eine 3-Hydroxybuttersäureverbindung der allgemeinen Formel (I) mit mindestens einem Polyglycerin (II) umgesetzt und/oder zur Reaktion gebracht wird, gefolgt von einer weiteren Umsetzung des resultierenden Reaktionszwischenprodukts (IV'A) mit mindestens einer Polycarbonsäure (III) (Syntheseroute (A)), oder aber insbesondere wobei zunächst mindestens ein Polyglycerin (II) mit mindestens einer Polycarbonsäure (III) umgesetzt und/oder zur Reaktion gebracht wird, gefolgt von einer weiteren Umsetzung des resultierenden Reaktionszwischenprodukts(IV'B) mit mindestens einer 3-Hydroxybuttersäureverbindung der allgemeinen Formel (I) (Syntheseroute (B)).

3. Verfahren nach Anspruch 1 oder Anspruch 2,
wobei gemäß einer (ersten) Syntheseroute (A):
(a) in einem ersten Verfahrensschritt (a) mindestens eine 3-Hydroxybuttersäureverbindung der allgemeinen Formel (I)
CH₃ - CH(OH) - CH₂ - C(O)OR¹ (I)
wobei in der allgemeinen Formel (I) der Rest R¹ Wasserstoff, einen Rest - (O)C - CH₂ - CH(OH) - CH₃ oder ein C₁-C₄-Alkyl, insbesondere ein C₁-C₄-Alkyl, bevorzugt Methyl oder Ethyl, besonders bevorzugt Ethyl, darstellt,
mit mindestens einem Polyglycerin (II) der allgemeinen Formel (IIa)
HO - CH₂ - CH(OH) - CH₂ - [O - CH₂ - CH(OH) - CH₂]ₚ - OH (IIa)
wobei in der allgemeinen Formel (IIa) die Variable p eine ganze Zahl von 1 bis 6 darstellt, umgesetzt und/oder zur Reaktion gebracht wird, insbesondere in einer Veresterungsreaktion und/oder unter Veresterungsbedingungen umgesetzt und/oder zur Reaktion gebracht wird,
insbesondere sodass als Reaktionszwischenprodukt (IVA') des Verfahrensschritts (a) ein oder mehrere Polyglycerinester der 3-Hydroxybuttersäure, insbesondere ein oder mehrere ein- oder mehrwertige Polyglycerinester der 3-Hydroxybuttersäure, erhalten werden; und
(b) nachfolgend in einem zweiten Verfahrensschritt (b) das in Verfahrensschritt (a) erhaltene Reaktionszwischenprodukt (IVA') mit mindestens einer Polycarbonsäure (III), insbesondere mit mindestens einer mindestens zwei Carboxylgruppen enthaltenden Polycarbonsäure, wobei die Polycarbonsäure (III) in Form der freien Polycarbonsäure, in Form eines Salzes der Polycarbonsäure, in Form eines Polycarbonsäureesters oder in Form des Polycarbonsäureanhydrids eingesetzt wird, umgesetzt und/oder zur Reaktion gebracht wird, insbesondere in einer Veresterungsreaktion und/oder unter Veresterungsbedingungen umgesetzt und/oder zur Reaktion gebracht wird,
so dass als Reaktionsprodukt (IV) ein oder mehrere mit Polycarbonsäuren vernetzte Polyglycerinester der 3-Hydroxybuttersäure, insbesondere ein oder mehrere ein- oder mehrwertige mit Polycarbonsäuren vernetzte Polyglycerinester der 3-Hydroxybuttersäure, der allgemeinen Formel (IVa) 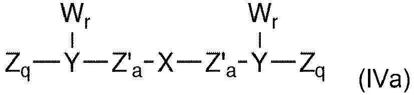 erhalten werden,
wobei in der allgemeinen Formel (IVa)
• X einen Rest - C(O) - X' -C(O) - darstellt, wobei X' einen von einer Polycarbonsäure abgeleiteten Rest, insbesondere einen 1 bis 10, vorzugsweise 2 bis 6 Kohlenstoffatome enthaltenden und gegebenenfalls ein- oder mehrfach substituierten, insbesondere mit einem oder mehreren Hydroxyl-Resten und/oder Carboxyl-Resten substituierten, gesättigten oder ungesättigten organischen Rest, darstellt;
• Y einen von einem Polyglycerin abgeleiteten Rest, insbesondere einen Rest der allgemeinen Formel (IIc) 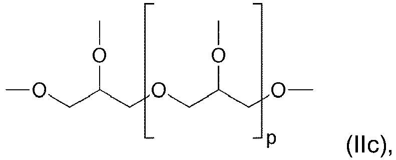 darstellt, wobei die Variable p eine ganze Zahl von 1 bis 6 ist;
• Z einen Rest - C(O) - CH₂ - CH(OH) - CH₃ darstellt und die Variable q unabhängig voneinander eine ganze Zahl von 1 bis (p + 2) mit p wie zuvor definiert ist;
• Z' einen Rest - C(O) - CH₂ - CH(CH₃) - O - darstellt und die Variable a unabhängig voneinander 0 oder 1 ist;
• W unabhängig voneinander darstellt: Wasserstoff oder - X - OH mit X wie zuvor definiert oder aber einen oder mehrere Blöcke 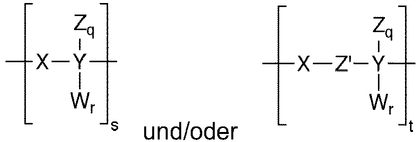 mit X, Y, Z, Z' und q jeweils wie zuvor definiert, wobei die Variablen s und t, jeweils unabhängig voneinander, eine ganze Zahl von 0 bis 30 sind und die Variable r unabhängig voneinander eine ganze Zahl von 0 bis (p + 1) mit p wie zuvor definiert ist, wobei das Kettenende der Blöcke jeweils durch Wasserstoff, - X - OH oder Z gebildet ist;
oder aber
wobei gemäß einer (zweiten, zu (A) alternativen) Syntheseroute (B):
(a) in einem ersten Verfahrensschritt (a) mindestens ein Polyglycerin (II) der allgemeinen Formel (IIa)
HO - CH₂ - CH(OH) - CH₂ - [O - CH₂ - CH(OH) - CH₂]ₚ - OH (IIa)
wobei in der allgemeinen Formel (IIa) die Variable p eine ganze Zahl von 1 bis 6 darstellt, mit mindestens einer Polycarbonsäure (III), insbesondere mit mindestens einer mindestens zwei Carboxylgruppen enthaltenden Polycarbonsäure, wobei die Polycarbonsäure (III) in Form der freien Polycarbonsäure, in Form eines Salzes der Polycarbonsäure, in Form eines Polycarbonsäureesters oder in Form des Polycarbonsäureanhydrids eingesetzt wird, umgesetzt und/oder zur Reaktion gebracht wird, insbesondere in einer Veresterungsreaktion und/oder unter Veresterungsbedingungen umgesetzt und/oder zur Reaktion gebracht wird,
insbesondere sodass als Reaktionszwischenprodukt (IVB') des Verfahrensschritts (a) ein oder mehrere Polyglycerinester der Polycarbonsäure (III), insbesondere ein oder mehrere ein- oder mehrwertige Polyglycerinester der Polycarbonsäure (III), erhalten werden; und
(b) nachfolgend in einem zweiten Verfahrensschritt (b) das in Verfahrensschritt (a) erhaltene Reaktionszwischenprodukt (IVB') mit mindestens einer 3-Hydroxybuttersäureverbindung der allgemeinen Formel (I)
CH₃ - CH(OH) - CH₂ - C(O)OR¹ (I)
wobei in der allgemeinen Formel (I) der Rest R¹ Wasserstoff, einen Rest - (O)C - CH₂ - CH(OH) - CH₃ oder ein C₁-C₄-Alkyl, insbesondere ein C₁-C₄-Alkyl, bevorzugt Methyl oder Ethyl, besonders bevorzugt Ethyl, darstellt, umgesetzt und/oder zur Reaktion gebracht wird, insbesondere in einer Veresterungsreaktion und/oder unter Veresterungsbedingungen umgesetzt und/oder zur Reaktion gebracht wird,
so dass als Reaktionsprodukt (IV) ein oder mehrere mit Polycarbonsäuren vernetzte Polyglycerinester der 3-Hydroxybuttersäure, insbesondere ein oder mehrere ein- oder mehrwertige mit Polycarbonsäuren vernetzte Polyglycerinester der 3-Hydroxybuttersäure, der allgemeinen Formel (IVa) 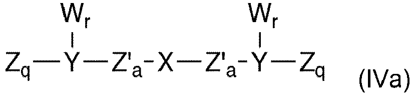 erhalten werden,
wobei in der allgemeinen Formel (IVa)
• X einen Rest - C(O) - X' -C(O) - darstellt, wobei X' einen von einer Polycarbonsäure abgeleiteten Rest, insbesondere einen 1 bis 10, vorzugsweise 2 bis 6 Kohlenstoffatome enthaltenden und gegebenenfalls ein- oder mehrfach substituierten, insbesondere mit einem oder mehreren Hydroxyl-Resten und/oder Carboxyl-Resten substituierten, gesättigten oder ungesättigten organischen Rest, darstellt;
• Y einen von einem Polyglycerin abgeleiteten Rest, insbesondere einen Rest der allgemeinen Formel (IIc) 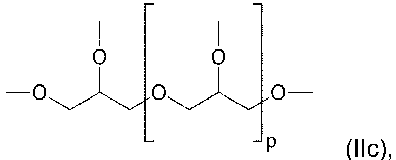 darstellt, wobei die Variable p eine ganze Zahl von 1 bis 6 ist;
• Z einen Rest - C(O) - CH₂ - CH(OH) - CH₃ darstellt und die Variable q unabhängig voneinander eine ganze Zahl von 1 bis (p + 2) mit p wie zuvor definiert ist;
• Z' einen Rest - C(O) - CH₂ - CH(CH₃) - O - darstellt und die Variable a unabhängig voneinander 0 oder 1 ist;
• W unabhängig voneinander darstellt: Wasserstoff oder - X - OH mit X wie zuvor definiert oder aber einen oder mehrere Blöcke 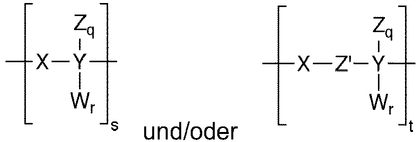 mit X, Y, Z, Z' und q jeweils wie zuvor definiert, wobei die Variablen s und t, jeweils unabhängig voneinander, eine ganze Zahl von 0 bis 30 sind und die Variable r unabhängig voneinander eine ganze Zahl von 0 bis (p + 1) mit p wie zuvor definiert ist, wobei das Kettenende der Blöcke jeweils durch Wasserstoff, - X - OH oder Z gebildet ist.

4. Verfahren nach einem der vorangehenden Ansprüche,
wobei das Polyglycerin (II) ein Diglycerin der Formel (IIb)
HO - CH₂ - CH(OH) - CH₂ - O - CH₂ - CH(OH) - CH₂ - OH (IIb)
ist.

5. Verfahren nach einem der vorangehenden Ansprüche,
wobei die Polycarbonsäure (III) ausgewählt ist aus der Gruppe von Bernsteinsäure, Weinsäure, Citronensäure, Äpfelsäure, Adipinsäure, Fumarsäure und Maleinsäure und deren Anhydriden sowie deren Kombinationen oder Mischungen, insbesondere ausgewählt ist aus der Gruppe von Bernsteinsäure, Weinsäure, Citronensäure, Äpfelsäure, Adipinsäure und Fumarsäure und deren Anhydriden sowie deren Kombinationen oder Mischungen, bevorzugt ausgewählt ist aus der Gruppe von Bernsteinsäure und Adipinsäure und deren Anhydriden sowie deren Kombinationen oder Mischungen; und/oder
wobei die Polycarbonsäure (III) eine natürlich vorkommende Carbonsäure oder deren Anhydrid oder Derivat, insbesondere Umsetzungsprodukt, ist, insbesondere eine im menschlichen und/oder tierischen Stoffwechsel vorkommende Carbonsäure oder deren Anhydrid oder Derivat, insbesondere Umsetzungsprodukt; und/oder
wobei die Polycarbonsäure (III) ein lebensmittelrechtlich zugelassener Inhaltsstoff, insbesondere Zusatzstoff, ist.

6. Verfahren nach einem der vorangehenden Ansprüche,
wobei gemäß einer (ersten) Syntheseroute (A):
(a) in einem ersten Verfahrensschritt (a) mindestens eine 3-Hydroxybuttersäureverbindung der allgemeinen Formel (I)
CH₃ - CH(OH) - CH₂ - C(O)OR¹ (I)
wobei in der allgemeinen Formel (I) der Rest R¹ Wasserstoff, einen Rest - (O)C - CH₂ - CH(OH) - CH₃ oder ein C₁-C₄-Alkyl, insbesondere ein C₁-C₄-Alkyl, bevorzugt Methyl oder Ethyl, besonders bevorzugt Ethyl, darstellt,
mit mindestens einem Polyglycerin (II) der allgemeinen Formel (IIa)
HO - CH₂ - CH(OH) - CH₂ - [O - CH₂ - CH(OH) - CH₂]ₚ - OH (IIa)
wobei in der allgemeinen Formel (IIa) die Variable p eine ganze Zahl von 1 bis 6, insbesondere von 1 bis 4, vorzugsweise 1 oder 2, besonders bevorzugt 1, darstellt,
umgesetzt und/oder zur Reaktion gebracht wird, insbesondere in einer Veresterungsreaktion und/oder unter Veresterungsbedingungen umgesetzt und/oder zur Reaktion gebracht wird,
insbesondere sodass als Reaktionszwischenprodukt (IVA') des Verfahrensschritts (a) ein oder mehrere Polyglycerinester der 3-Hydroxybuttersäure, insbesondere ein oder mehrere ein- oder mehrwertige Polyglycerinester der 3-Hydroxybuttersäure, erhalten werden; und
(b) nachfolgend in einem zweiten Verfahrensschritt (b) das in Verfahrensschritt (a) erhaltene Reaktionszwischenprodukt (IVA') mit mindestens einer Polycarbonsäure (III), ausgewählt aus der Gruppe von Bernsteinsäure, Weinsäure, Citronensäure, Äpfelsäure, Adipinsäure, Fumarsäure und Maleinsäure und deren Anhydriden sowie deren Kombinationen oder Mischungen, insbesondere ausgewählt aus der Gruppe von Bernsteinsäure, Weinsäure, Citronensäure, Äpfelsäure, Adipinsäure und Fumarsäure und deren Anhydriden sowie deren Kombinationen oder Mischungen, bevorzugt ausgewählt aus der Gruppe von Bernsteinsäure und Adipinsäure und deren Anhydriden sowie deren Kombinationen oder Mischungen, wobei die Polycarbonsäure (III) in Form der freien Polycarbonsäure, in Form eines Salzes der Polycarbonsäure, in Form eines Polycarbonsäureesters oder in Form des Polycarbonsäureanhydrids eingesetzt wird, umgesetzt und/oder zur Reaktion gebracht wird, insbesondere in einer Veresterungsreaktion und/oder unter Veresterungsbedingungen umgesetzt und/oder zur Reaktion gebracht wird,
so dass als Reaktionsprodukt (IV) ein oder mehrere mit Polycarbonsäuren vernetzte Polyglycerinester der 3-Hydroxybuttersäure, insbesondere ein oder mehrere ein- oder mehrwertige mit Polycarbonsäuren vernetzte Polyglycerinester der 3-Hydroxybuttersäure, der allgemeinen Formel (IVa) 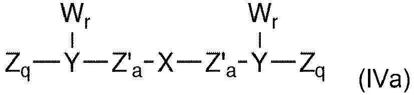 erhalten werden,
wobei in der allgemeinen Formel (IVa)
• X einen Rest - C(O) - X' -C(O) - darstellt, wobei X' einen von einer Polycarbonsäure abgeleiteten Rest, insbesondere einen 1 bis 10, vorzugsweise 2 bis 6 Kohlenstoffatome enthaltenden und gegebenenfalls ein- oder mehrfach substituierten, insbesondere mit einem oder mehreren Hydroxyl-Resten und/oder Carboxyl-Resten substituierten, gesättigten oder ungesättigten organischen Rest, darstellt;
• Y einen von einem Polyglycerin abgeleiteten Rest, insbesondere einen Rest der allgemeinen Formel (IIc) 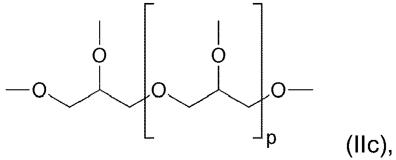 darstellt, wobei die Variable p eine ganze Zahl von 1 bis 6 ist;
• Z einen Rest - C(O) - CH₂ - CH(OH) - CH₃ darstellt und die Variable q unabhängig voneinander eine ganze Zahl von 1 bis (p + 2) mit p wie zuvor definiert ist;
• Z' einen Rest - C(O) - CH₂ - CH(CH₃) - O - darstellt und die Variable a unabhängig voneinander 0 oder 1 ist;
• W unabhängig voneinander darstellt: Wasserstoff oder - X - OH mit X wie zuvor definiert oder aber einen oder mehrere Blöcke 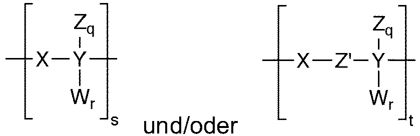 mit X, Y, Z, Z' und q jeweils wie zuvor definiert, wobei die Variablen s und t, jeweils unabhängig voneinander, eine ganze Zahl von 0 bis 30 sind und die Variable r unabhängig voneinander eine ganze Zahl von 0 bis (p + 1) mit p wie zuvor definiert ist, wobei das Kettenende der Blöcke jeweils durch Wasserstoff, - X - OH oder Z gebildet ist;
oder aber
wobei gemäß einer (zweiten, zu (A) alternativen) Syntheseroute (B):
(a) in einem ersten Verfahrensschritt (a) mindestens ein Polyglycerin (II) der allgemeinen Formel (IIa)
HO - CH₂ - CH(OH) - CH₂ - [O - CH₂ - CH(OH) - CH₂]ₚ - OH (IIa)
wobei in der allgemeinen Formel (IIa) die Variable p eine ganze Zahl von 1 bis 6, insbesondere von 1 bis 4, vorzugsweise 1 oder 2, besonders bevorzugt 1, darstellt, mit mindestens einer Polycarbonsäure (III), ausgewählt aus der Gruppe von Bernsteinsäure, Weinsäure, Citronensäure, Äpfelsäure, Adipinsäure, Fumarsäure und Maleinsäure und deren Anhydriden sowie deren Kombinationen oder Mischungen, insbesondere ausgewählt aus der Gruppe von Bernsteinsäure, Weinsäure, Citronensäure, Äpfelsäure, Adipinsäure und Fumarsäure und deren Anhydriden sowie deren Kombinationen oder Mischungen, bevorzugt ausgewählt aus der Gruppe von Bernsteinsäure und Adipinsäure und deren Anhydriden sowie deren Kombinationen oder Mischungen, wobei die Polycarbonsäure (III) in Form der freien Polycarbonsäure, in Form eines Salzes der Polycarbonsäure, in Form eines Polycarbonsäureesters oder in Form des Polycarbonsäureanhydrids eingesetzt wird, umgesetzt und/oder zur Reaktion gebracht wird, insbesondere in einer Veresterungsreaktion und/oder unter Veresterungsbedingungen umgesetzt und/oder zur Reaktion gebracht wird,
insbesondere sodass als Reaktionszwischenprodukt (IVB') des Verfahrensschritts (a) ein oder mehrere Polyglycerinester der Polycarbonsäure (III), insbesondere ein oder mehrere ein- oder mehrwertige Polyglycerinester der Polycarbonsäure (III), erhalten werden; und
(b) nachfolgend in einem zweiten Verfahrensschritt (b) das in Verfahrensschritt (a) erhaltene Reaktionszwischenprodukt (IVB') mit mindestens einer 3-Hydroxybuttersäureverbindung der allgemeinen Formel (I)
CH₃ - CH(OH) - CH₂ - C(O)OR¹ (I)
wobei in der allgemeinen Formel (I) der Rest R¹ Wasserstoff, einen Rest - (O)C - CH₂ - CH(OH) - CH₃ oder ein C₁-C₄-Alkyl, insbesondere ein C₁-C₄-Alkyl, bevorzugt Methyl oder Ethyl, besonders bevorzugt Ethyl, darstellt, umgesetzt und/oder zur Reaktion gebracht wird, insbesondere in einer Veresterungsreaktion und/oder unter Veresterungsbedingungen umgesetzt und/oder zur Reaktion gebracht wird,
so dass als Reaktionsprodukt (IV) ein oder mehrere mit Polycarbonsäuren vernetzte Polyglycerinester der 3-Hydroxybuttersäure, insbesondere ein oder mehrere ein- oder mehrwertige mit Polycarbonsäuren vernetzte Polyglycerinester der 3-Hydroxybuttersäure, der allgemeinen Formel (IVa) 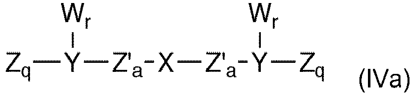 erhalten werden,
wobei in der allgemeinen Formel (IVa)
• X einen Rest - C(O) - X' -C(O) - darstellt, wobei X' einen von einer Polycarbonsäure abgeleiteten Rest, insbesondere einen 1 bis 10, vorzugsweise 2 bis 6 Kohlenstoffatome enthaltenden und gegebenenfalls ein- oder mehrfach substituierten, insbesondere mit einem oder mehreren Hydroxyl-Resten und/oder Carboxyl-Resten substituierten, gesättigten oder ungesättigten organischen Rest, darstellt;
• Y einen von einem Polyglycerin abgeleiteten Rest, insbesondere einen Rest der allgemeinen Formel (IIc) 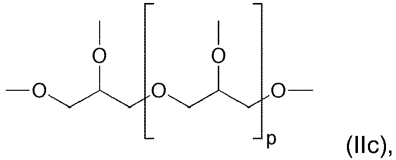 darstellt, wobei die Variable p eine ganze Zahl von 1 bis 6 ist;
• Z einen Rest - C(O) - CH₂ - CH(OH) - CH₃ darstellt und die Variable q unabhängig voneinander eine ganze Zahl von 1 bis (p + 2) mit p wie zuvor definiert ist;
• Z' einen Rest - C(O) - CH₂ - CH(CH₃) - O - darstellt und die Variable a unabhängig voneinander 0 oder 1 ist;
• W unabhängig voneinander darstellt: Wasserstoff oder - X - OH mit X wie zuvor definiert oder aber einen oder mehrere Blöcke 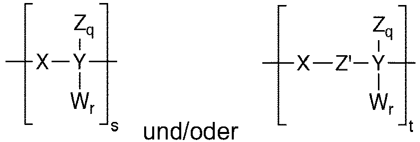 mit X, Y, Z, Z' und q jeweils wie zuvor definiert, wobei die Variablen s und t, jeweils unabhängig voneinander, eine ganze Zahl von 0 bis 30 sind und die Variable r unabhängig voneinander eine ganze Zahl von 0 bis (p + 1) mit p wie zuvor definiert ist, wobei das Kettenende der Blöcke jeweils durch Wasserstoff, - X - OH oder Z gebildet ist.

7. Verfahren nach einem der vorangehenden Ansprüche,
wobei im Reaktionsprodukt (IV) nach erfolgter Umsetzung noch vorhandene Hydroxylgruppen und/oder Carboxylgruppen zumindest teilweise, vorzugsweise vollständig, funktionalisiert, insbesondere verestert werden; und/oder
wobei sich der Umsetzung eine teilweise, insbesondere vollständige Funktionalisierung, insbesondere Veresterung, noch vorhandener Hydroxylgruppen und/oder Carboxylgruppen anschließt.

8. Reaktionsprodukt (IV) in Form eines mit Polycarbonsäuren vernetzten Polyglycerinesters der 3-Hydroxybuttersäure, insbesondere ein- oder mehrwertigen mit Polycarbonsäuren vernetzten Polyglycerinesters der 3-Hydroxybuttersäure, erhältlich nach einem Verfahren gemäß einem der vorangehenden Ansprüche.

9. Mit Polycarbonsäuren vernetzter Polyglycerinester der 3-Hydroxybuttersäure, insbesondere ein- oder mehrwertiger mit Polycarbonsäuren vernetzter Polyglycerinester der 3-Hydroxybuttersäure,
wobei der mit Polycarbonsäuren vernetzte Polyglycerinester der 3-Hydroxybuttersäure, insbesondere der ein- oder mehrwertige mit Polycarbonsäuren vernetzte Polyglycerinester der 3-Hydroxybuttersäure, der allgemeinen Formel (IVa) 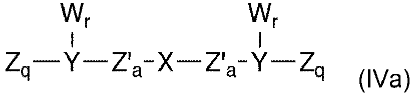 entspricht,
wobei in der allgemeinen Formel (IVa)
• X einen Rest - C(O) - X' -C(O) - darstellt, wobei X' einen von einer Polycarbonsäure abgeleiteten Rest, insbesondere einen 1 bis 10, vorzugsweise 2 bis 6 Kohlenstoffatome enthaltenden und gegebenenfalls ein- oder mehrfach substituierten, insbesondere mit einem oder mehreren Hydroxyl-Resten und/oder Carboxyl-Resten substituierten, gesättigten oder ungesättigten organischen Rest, darstellt;
• Y einen von einem Polyglycerin abgeleiteten Rest, insbesondere einen Rest der allgemeinen Formel (IIc) 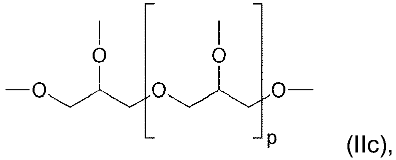 wobei die Variable p eine ganze Zahl von 1 bis 6, insbesondere von 1 bis 4, vorzugsweise 1 oder 2, besonders bevorzugt 1, ist, darstellt;
• Z einen Rest - C(O) - CH₂ - CH(OH) - CH₃ darstellt und die Variable q unabhängig voneinander eine ganze Zahl von 1 bis (p + 2) mit p wie zuvor definiert ist;
• Z' einen Rest - C(O) - CH₂ - CH(CH₃) - O - darstellt und die Variable a unabhängig voneinander 0 oder 1 ist;
• W unabhängig voneinander darstellt: Wasserstoff oder - X - OH mit X wie zuvor definiert oder aber einen oder mehrere Blöcke 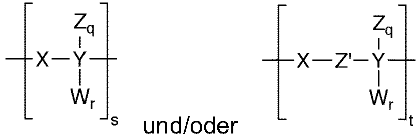 mit X, Y, Z, Z' und q jeweils wie zuvor definiert, wobei die Variablen s und t, jeweils unabhängig voneinander, eine ganze Zahl von 0 bis 30, insbesondere von 0 bis 25, vorzugsweise von 0 bis 20, besonders bevorzugt von 0 bis 10, ganz besonders bevorzugt von 0 bis 5, sind und die Variable r unabhängig voneinander eine ganze Zahl von 0 bis (p + 1) mit p wie zuvor definiert ist, wobei das Kettenende der Blöcke jeweils durch Wasserstoff, - X - OH oder Z gebildet ist.

10. Mit Polycarbonsäuren vernetzter Polyglycerinester der 3-Hydroxybuttersäure nach Anspruch 8 oder Anspruch 9,
wobei der mit Polycarbonsäuren vernetzte Polyglycerinester der 3-Hydroxybuttersäure, insbesondere der ein- oder mehrwertige mit Polycarbonsäuren vernetzte Polyglycerinester der 3-Hydroxybuttersäure, der allgemeinen Formel (IVa) 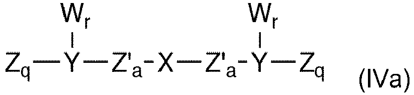 entspricht,
wobei in der allgemeinen Formel (IVa)
• X einen Rest - C(O) - X' -C(O) - darstellt, wobei X' einen von einer Polycarbonsäure abgeleiteten Rest, insbesondere einen 1 bis 10, vorzugsweise 2 bis 6 Kohlenstoffatome enthaltenden und gegebenenfalls ein- oder mehrfach substituierten, insbesondere mit einem oder mehreren Hydroxyl-Resten und/oder Carboxyl-Resten substituierten, gesättigten oder ungesättigten organischen Rest, darstellt;
• Y einen von einem Polyglycerin abgeleiteten Rest, insbesondere einen Rest der allgemeinen Formel (IId) 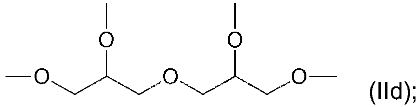
• Z einen Rest - C(O) - CH₂ - CH(OH) - CH₃ darstellt und die Variable q unabhängig voneinander eine ganze Zahl von 1 bis (p + 2) mit p wie zuvor definiert ist;
• Z' einen Rest - C(O) - CH₂ - CH(CH₃) - O - darstellt und die Variable a unabhängig voneinander 0 oder 1 ist;
• W unabhängig voneinander darstellt: Wasserstoff oder - X - OH mit X wie zuvor definiert oder aber einen oder mehrere Blöcke 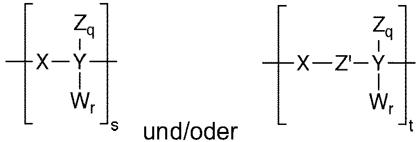 mit X, Y, Z, Z' und q jeweils wie zuvor definiert, wobei die Variablen s und t, jeweils unabhängig voneinander, eine ganze Zahl von 0 bis 30, insbesondere von 0 bis 25, vorzugsweise von 0 bis 20, besonders bevorzugt von 0 bis 10, ganz besonders bevorzugt von 0 bis 5, sind und die Variable r unabhängig voneinander eine ganze Zahl von 0 bis (p + 1) mit p wie zuvor definiert ist, wobei das Kettenende der Blöcke jeweils durch Wasserstoff, - X - OH oder Z gebildet ist.

11. Mit Polycarbonsäuren vernetzter Polyglycerinester der 3-Hydroxybuttersäure nach einem der Ansprüche 8 bis 10,
wobei der mit Polycarbonsäuren vernetzte Polyglycerinester der 3-Hydroxybuttersäure, insbesondere der ein- oder mehrwertige mit Polycarbonsäuren vernetzte Polyglycerinester der 3-Hydroxybuttersäure, der allgemeinen Formel (IVa) 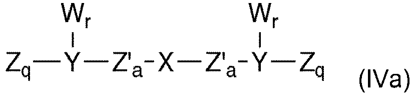 entspricht,
wobei in der allgemeinen Formel (IVa)
• X einen Rest - C(O) - X' -C(O) - darstellt, wobei X' einen von einer Polycarbonsäure abgeleiteten Rest, insbesondere einen 2 bis 6 Kohlenstoffatome enthaltenden und gegebenenfalls ein- oder mehrfach substituierten, insbesondere mit einem oder mehreren Hydroxyl-Resten und/oder Carboxyl-Resten substituierten, gesättigten oder ungesättigten organischen Rest, darstellt;
• Y einen von einem Polyglycerin abgeleiteten Rest, insbesondere einen Rest der allgemeinen Formel (IId) 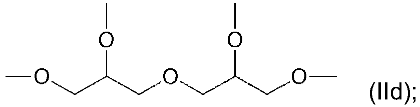
• Z einen Rest - C(O) - CH₂ - CH(OH) - CH₃ darstellt und die Variable q unabhängig voneinander eine ganze Zahl von 1 bis (p + 2) mit p wie zuvor definiert ist;
• Z' einen Rest - C(O) - CH₂ - CH(CH₃) - O - darstellt und die Variable a unabhängig voneinander 0 oder 1 ist;
• W unabhängig voneinander darstellt: Wasserstoff oder - X - OH mit X wie zuvor definiert oder aber einen oder mehrere Blöcke 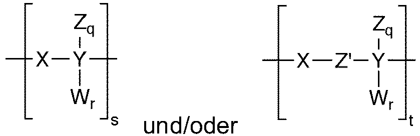 mit X, Y, Z, Z' und q jeweils wie zuvor definiert, wobei die Variablen s und t, jeweils unabhängig voneinander, eine ganze Zahl von 0 bis 30, insbesondere von 0 bis 25, vorzugsweise von 0 bis 20, besonders bevorzugt von 0 bis 10, ganz besonders bevorzugt von 0 bis 5, sind und die Variable r unabhängig voneinander eine ganze Zahl von 0 bis (p + 1) mit p wie zuvor definiert ist, wobei das Kettenende der Blöcke jeweils durch Wasserstoff, - X - OH oder Z gebildet ist.

12. Mit Polycarbonsäuren vernetzter Polyglycerinester der 3-Hydroxybuttersäure nach einem der Ansprüche 8 bis 11,
wobei der mit Polycarbonsäuren vernetzte Polyglycerinester der 3-Hydroxybuttersäure, insbesondere der ein- oder mehrwertige mit Polycarbonsäuren vernetzte Polyglycerinester der 3-Hydroxybuttersäure, der allgemeinen Formel (IVa) 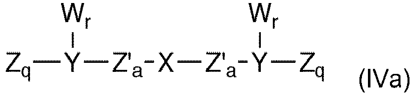 entspricht,
wobei in der allgemeinen Formel (IVa)
• X abgeleitet ist von einer Polycarbonsäure, ausgewählt aus der Gruppe von Bernsteinsäure, Weinsäure, Citronensäure, Äpfelsäure, Adipinsäure, Fumarsäure und Maleinsäure sowie deren Kombinationen oder Mischungen, insbesondere ausgewählt aus der Gruppe von Bernsteinsäure, Weinsäure, Citronensäure, Äpfelsäure, Adipinsäure und Fumarsäure sowie deren Kombinationen oder Mischungen, bevorzugt ausgewählt aus der Gruppe von Bernsteinsäure und Adipinsäure und deren Anhydriden sowie deren Kombinationen oder Mischungen;
• Y einen von einem Polyglycerin abgeleiteten Rest, insbesondere einen Rest der allgemeinen Formel (IId) 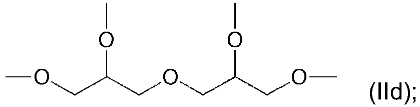
• Z einen Rest - C(O) - CH₂ - CH(OH) - CH₃ darstellt und die Variable q unabhängig voneinander eine ganze Zahl von 1 bis (p + 2) mit p wie zuvor definiert ist;
• Z' einen Rest - C(O) - CH₂ - CH(CH₃) - O - darstellt und die Variable a unabhängig voneinander 0 oder 1 ist;
• W unabhängig voneinander darstellt: Wasserstoff oder - X - OH mit X wie zuvor definiert oder aber einen oder mehrere Blöcke 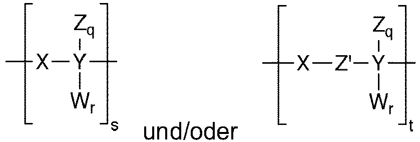 mit X, Y, Z, Z' und q jeweils wie zuvor definiert, wobei die Variablen s und t, jeweils unabhängig voneinander, eine ganze Zahl von 0 bis 30, insbesondere von 0 bis 25, vorzugsweise von 0 bis 20, besonders bevorzugt von 0 bis 10, ganz besonders bevorzugt von 0 bis 5, sind und die Variable r unabhängig voneinander eine ganze Zahl von 0 bis (p + 1) mit p wie zuvor definiert ist, wobei das Kettenende der Blöcke jeweils durch Wasserstoff, - X - OH oder Z gebildet ist.

13. Mit Polycarbonsäuren vernetzter Polyglycerinester der 3-Hydroxybuttersäure nach einem der Ansprüche 8 bis 12,
wobei der mit Polycarbonsäuren vernetzte Polyglycerinester der 3-Hydroxybuttersäure, insbesondere der ein- oder mehrwertige mit Polycarbonsäuren vernetzte Polyglycerinester der 3-Hydroxybuttersäure, der allgemeinen Formel (IVa) 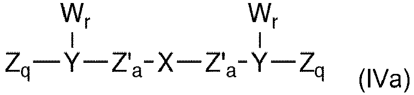 entspricht,
wobei in der allgemeinen Formel (IVa)
• X einen der folgenden Reste darstellt: 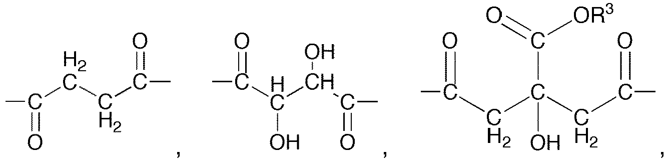 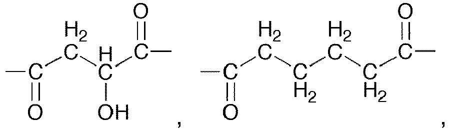 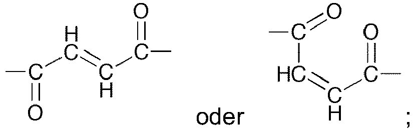 wobei in den vorstehenden Resten der Rest R³ Wasserstoff oder einen Rest - CH(CH₃) - CH₂ - C(O)OR¹ mit R¹ wie zuvor definiert oder einen gegebenenfalls substituierten Polyglycerinrest darstellt;
• Y einen von einem Polyglycerin abgeleiteten Rest, insbesondere einen Rest der allgemeinen Formel (IIc) 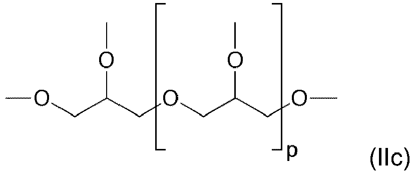 wobei die Variable p eine ganze Zahl von 1 bis 6, insbesondere von 1 bis 4, vorzugsweise 1 oder 2, besonders bevorzugt 1, ist, darstellt;;
• Z einen Rest - C(O) - CH₂ - CH(OH) - CH₃ darstellt und die Variable q unabhängig voneinander eine ganze Zahl von 1 bis (p + 2) mit p wie zuvor definiert ist;
• Z' einen Rest - C(O) - CH₂ - CH(CH₃) - O - darstellt und die Variable a unabhängig voneinander 0 oder 1 ist;
• W unabhängig voneinander darstellt: Wasserstoff oder - X - OH mit X wie zuvor definiert oder aber einen oder mehrere Blöcke 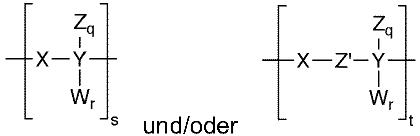 mit X, Y, Z, Z' und q jeweils wie zuvor definiert, wobei die Variablen s und t, jeweils unabhängig voneinander, eine ganze Zahl von 0 bis 30, insbesondere von 0 bis 25, vorzugsweise von 0 bis 20, besonders bevorzugt von 0 bis 10, ganz besonders bevorzugt von 0 bis 5, sind und die Variable r unabhängig voneinander eine ganze Zahl von 0 bis (p + 1) mit p wie zuvor definiert ist, wobei das Kettenende der Blöcke jeweils durch Wasserstoff, - X - OH oder Z gebildet ist.

14. Mit Polycarbonsäuren vernetzter Polyglycerinester der 3-Hydroxybuttersäure nach einem der Ansprüche 8 bis 13,
wobei der mit Polycarbonsäuren vernetzte Polyglycerinester der 3-Hydroxybuttersäure, insbesondere der ein- oder mehrwertige mit Polycarbonsäuren vernetzte Polyglycerinester der 3-Hydroxybuttersäure, der allgemeinen Formel (IVa) 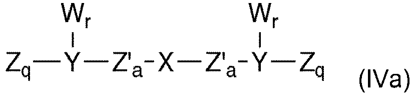 entspricht,
wobei in der allgemeinen Formel (IVa)
• X einen der folgenden Reste darstellt: 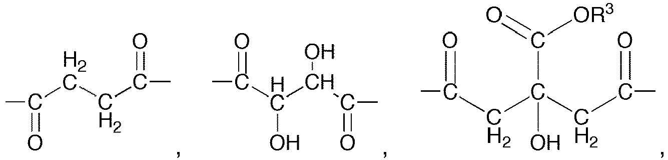 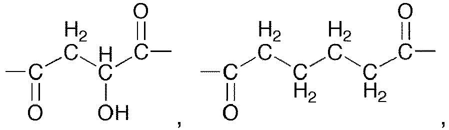 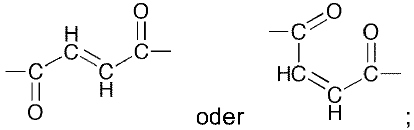 wobei in den vorstehenden Resten der Rest R³ Wasserstoff oder einen Rest - CH(CH₃) - CH₂ - C(O)OR¹ mit R¹ wie zuvor definiert oder einen gegebenenfalls substituierten Polyglycerinrest darstellt;
• Y einen von einem Polyglycerin abgeleiteten Rest, insbesondere einen Rest der allgemeinen Formel (IId) 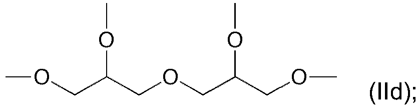
• Z einen Rest - C(O) - CH₂ - CH(OH) - CH₃ darstellt und die Variable q unabhängig voneinander eine ganze Zahl von 1 bis (p + 2) mit p wie zuvor definiert ist;
• Z' einen Rest - C(O) - CH₂ - CH(CH₃) - O - darstellt und die Variable a unabhängig voneinander 0 oder 1 ist;
• W unabhängig voneinander darstellt: Wasserstoff oder - X - OH mit X wie zuvor definiert oder aber einen oder mehrere Blöcke 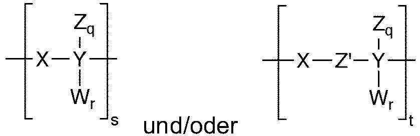 mit X, Y, Z, Z' und q jeweils wie zuvor definiert, wobei die Variablen s und t, jeweils unabhängig voneinander, eine ganze Zahl von 0 bis 30, insbesondere von 0 bis 25, vorzugsweise von 0 bis 20, besonders bevorzugt von 0 bis 10, ganz besonders bevorzugt von 0 bis 5, sind und die Variable r unabhängig voneinander eine ganze Zahl von 0 bis (p + 1) mit p wie zuvor definiert ist, wobei das Kettenende der Blöcke jeweils durch Wasserstoff, - X - OH oder Z gebildet ist.

15. Mit Polycarbonsäuren vernetzter Polyglycerinester der 3-Hydroxybuttersäure nach einem der Ansprüche 8 bis 14,
wobei der mit Polycarbonsäuren vernetzte Polyglycerinester der 3-Hydroxybuttersäure, insbesondere der ein- oder mehrwertige mit Polycarbonsäuren vernetzte Polyglycerinester der 3-Hydroxybuttersäure, der allgemeinen Formel (IVb) 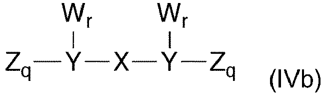 entspricht,
wobei in der allgemeinen Formel (IVb)
• X einen Rest - C(O) - X' -C(O) - darstellt, wobei X' einen von einer Polycarbonsäure abgeleiteten Rest, insbesondere einen 1 bis 10, vorzugsweise 2 bis 6 Kohlenstoffatome enthaltenden und gegebenenfalls ein- oder mehrfach substituierten, insbesondere mit einem oder mehreren Hydroxyl-Resten und/oder Carboxyl-Resten substituierten, gesättigten oder ungesättigten organischen Rest, darstellt;
• Y einen von einem Polyglycerin abgeleiteten Rest, insbesondere einen Rest der allgemeinen Formel (IIc) 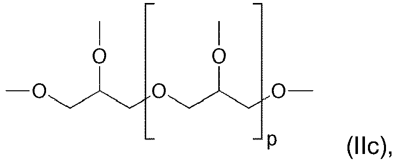 wobei die Variable p eine ganze Zahl von 1 bis 6, insbesondere von 1 bis 4, vorzugsweise 1 oder 2, besonders bevorzugt 1, ist, darstellt;
• Z einen Rest - C(O) - CH₂ - CH(OH) - CH₃ darstellt und die Variable q unabhängig voneinander eine ganze Zahl von 1 bis (p + 2) mit p wie zuvor definiert ist;
• W unabhängig voneinander darstellt: Wasserstoff oder - X - OH mit X wie zuvor definiert oder aber einen Block 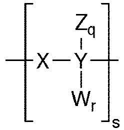 mit X, Y, Z und q jeweils wie zuvor definiert, wobei die Variable s eine ganze Zahl von 0 bis 30, insbesondere von 0 bis 25, vorzugsweise von 0 bis 20, besonders bevorzugt von 0 bis 10, ganz besonders bevorzugt von 0 bis 5, ist und die Variable r unabhängig voneinander eine ganze Zahl von 0 bis (p + 1) mit p wie zuvor definiert ist, wobei das Kettenende des Blocks durch Wasserstoff, - X - OH oder Z gebildet ist.

16. Mit Polycarbonsäuren vernetzter Polyglycerinester der 3-Hydroxybuttersäure nach einem der Ansprüche 8 bis 15,
wobei der mit Polycarbonsäuren vernetzte Polyglycerinester der 3-Hydroxybuttersäure, insbesondere der ein- oder mehrwertige mit Polycarbonsäuren vernetzte Polyglycerinester der 3-Hydroxybuttersäure, der allgemeinen Formel (IVb) 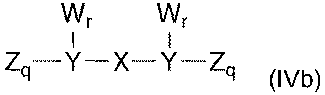
entspricht,
wobei in der allgemeinen Formel (IVb)
• X einen der folgenden Reste darstellt: 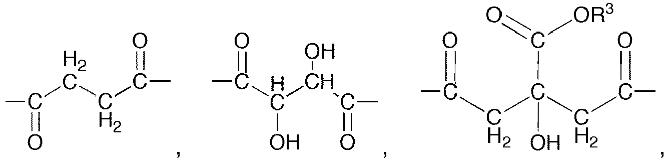 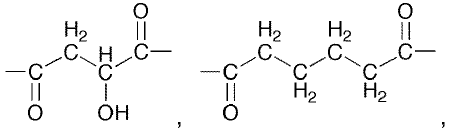 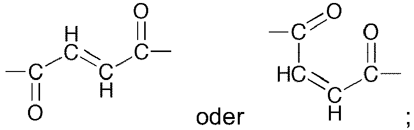 wobei in den vorstehenden Resten der Rest R³ Wasserstoff oder einen Rest - CH(CH₃) - CH₂ - C(O)OR¹ mit R¹ wie zuvor definiert oder einen gegebenenfalls substituierten Polyglycerinrest darstellt;
• Y einen von einem Polyglycerin abgeleiteten Rest, insbesondere einen Rest der allgemeinen Formel (IIc) 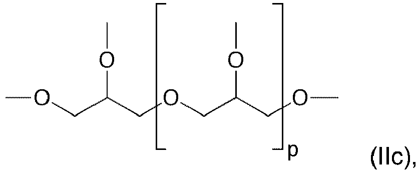 wobei die Variable p eine ganze Zahl von 1 bis 6, insbesondere von 1 bis 4, vorzugsweise 1 oder 2, besonders bevorzugt 1, ist, darstellt;
• Z einen Rest - C(O) - CH₂ - CH(OH) - CH₃ darstellt und die Variable q unabhängig voneinander eine ganze Zahl von 1 bis (p + 2) mit p wie zuvor definiert ist;
• W unabhängig voneinander darstellt: Wasserstoff oder - X - OH mit X wie zuvor definiert oder aber einen Block 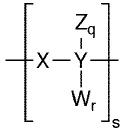 mit X, Y, Z und q jeweils wie zuvor definiert, wobei die Variable s eine ganze Zahl von 0 bis 30, insbesondere von 0 bis 25, vorzugsweise von 0 bis 20, besonders bevorzugt von 0 bis 10, ganz besonders bevorzugt von 0 bis 5, ist und die Variable r unabhängig voneinander eine ganze Zahl von 0 bis (p + 1) mit p wie zuvor definiert ist, wobei das Kettenende des Blocks durch Wasserstoff, - X - OH oder Z gebildet ist.

17. Mit Polycarbonsäuren vernetzter Polyglycerinester der 3-Hydroxybuttersäure nach einem der Ansprüche 8 bis 16,
wobei der bzw. die mit Polycarbonsäuren vernetzten Polyglycerinester der 3-Hydroxybuttersäure, insbesondere der bzw. die ein- oder mehrwertigen mit Polycarbonsäuren vernetzten Polyglycerinester der 3-Hydroxybuttersäure, die folgenden Einheiten, insbesondere Molekülbausteine, umfasst/umfassen:
• mindestens eine Einheit X" der folgenden Formeln: 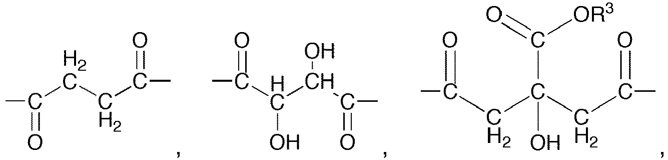 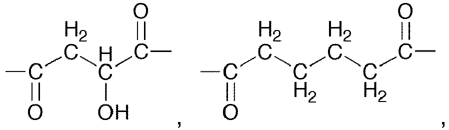 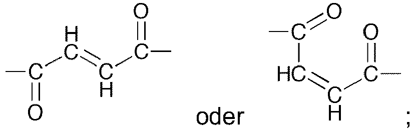 wobei in den vorstehenden Resten der Rest R³ Wasserstoff oder einen Rest - CH(CH₃) - CH₂ - C(O)OR¹ mit R¹ wie zuvor definiert oder einen gegebenenfalls substituierten Polyglycerinrest darstellt;
• mindestens eine Einheit, vorzugsweise mindestens zwei Einheiten, abgeleitet von einem Polyglycerin, insbesondere mindestens eine Einheit, vorzugsweise mindestens zwei Einheiten, der allgemeinen Formel (IIc) 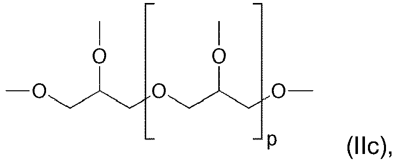 wobei die Variable p eine ganze Zahl von 1 bis 6, insbesondere von 1 bis 4, vorzugsweise 1 oder 2, besonders bevorzugt 1, ist, darstellt;
• mindestens zwei Einheiten, insbesondere mindestens drei Einheiten, vorzugsweise mindestens vier Einheiten - C(O) - CH₂ - CH(OH) - CH₃;
• gegebenenfalls mindestens eine Einheit - C(O) - CH₂ - CH(CH₃) - O -; gegebenenfalls mindestens eine Einheit - X" - OH mit X" wie zuvor definiert.

18. Mit Polycarbonsäuren vernetzter Polyglycerinester der 3-Hydroxybuttersäure nach einem der Ansprüche 8 bis 17,
wobei der mit Polycarbonsäuren vernetzte Polyglycerinester der 3-Hydroxybuttersäure, insbesondere der ein- oder mehrwertige mit Polycarbonsäuren vernetzte Polyglycerinester der 3-Hydroxybuttersäure, ein Molekulargewicht, insbesondere ein mittleres Molekulargewicht, vorzugsweise ein gewichtsmittleres Molekulargewicht, im Bereich von 500 bis 50.000 g/mol, insbesondere im Bereich von 500 bis 30.000 g/mol, vorzugsweise im Bereich von 500 bis 25.000 g/mol, aufweist, insbesondere bestimmt durch Größenausschlusschromatographie (SEC), vorzugsweise Gelpermeationschromatographie (GPC), vorzugsweise gemäß DIN EN ISO 16014-5: 2019, insbesondere mit Polystyrol (PS) als Standard.

19. Gemisch, umfassend mindestens zwei, insbesondere mindestens drei, vorzugsweise mindestens vier voneinander verschiedene mit Polycarbonsäuren vernetzte Polyglycerinester der 3-Hydroxybuttersäure, insbesondere ein- oder mehrwertige mit Polycarbonsäuren vernetzte Polyglycerinester der 3-Hydroxybuttersäure, insbesondere wie zuvor definiert.

20. Pharmazeutische Zusammensetzung, insbesondere Arzneimittel oder Medikament, umfassend ein Reaktionsprodukt bzw. einen mit Polycarbonsäuren vernetzten Polyglycerinester der 3-Hydroxybuttersäure, insbesondere einen ein- oder mehrwertigen mit Polycarbonsäuren vernetzten Polyglycerinester der 3-Hydroxybuttersäure, gemäß einem der Ansprüche 8 bis 18 und/oder ein Gemisch gemäß Anspruch 19.

21. Reaktionsprodukt bzw. mit Polycarbonsäuren vernetzter Polyglycerinester der 3-Hydroxybuttersäure, insbesondere ein- oder mehrwertiger mit Polycarbonsäuren vernetzter Polyglycerinester der 3-Hydroxybuttersäure, gemäß einem der Ansprüche 8 bis 18 und/oder ein Gemisch gemäß Anspruch 19 zur Verwendung bei der prophylaktischen und/oder therapeutischen Behandlung von Erkrankungen des menschlichen oder tierischen Körpers, insbesondere Erkrankungen im Zusammenhang mit einer Störung des Energiestoffwechsels, insbesondere Ketokörperstoffwechsels, wie insbesondere Schädel-Hirn-Trauma, Schlaganfall, Hypoxien, kardiovaskuläre Erkrankungen wie Myokardinfarkt, Refeeding-Syndrom, Anorexien, Epilepsie, neurodegenerative Erkrankungen wie Demenz, Morbus Alzheimer, Morbus Parkinson, Multiple Sklerose und Amyotrophe Lateralsklerose, Fettstoffwechselerkrankungen wie Glucosetransporter-Defekt (GLUT1-Defekt), VL-FAOD und Mitochondriopathien wie mitochondrialer Thiolase-Defekt, Chorea Huntington, Krebserkrankungen wie T-Zell-Lymphome, Astrozytome und Glioblastome, HIV, rheumatische Erkrankungen wie rheumatoide Arthritis und Arthritis urica, Erkrankungen des Gastrointestinaltrakts wie chronisch entzündliche Darmerkrankungen, insbesondere Colitis ulcerosa und Morbus Crohn, lyosomale Speicherkrankheiten wie Sphingolipidosen, insbesondere Niemann-Pick-Erkrankung, Diabetes mellitus und Auswirkungen oder Nebenwirkungen von Chemotherapien, Hauterkrankungen und Hautverletzungen, insbesondere zur Förderung der Wundheilung, zur Wundbehandlung oder zur Verminderung von Narbenbildung.

22. Verwendung eines Reaktionsprodukts bzw. eines mit Polycarbonsäuren vernetzten Polyglycerinesters der 3-Hydroxybuttersäure, insbesondere eines ein- oder mehrwertigen mit Polycarbonsäuren vernetzten Polyglycerinesters der 3-Hydroxybuttersäure, gemäß einem der Ansprüche 8 bis 18 und/oder ein Gemisch gemäß Anspruch 19 im Bereich der Kosmetik und/oder in Kosmetika, insbesondere kosmetischen Formulierungen, vorzugsweise zur Altersverhinderung (Anti-Aging), oder für die Gewebezüchtung oder Gewebekonstruktion (Tissue Engineering), insbesondere für die Angioneogenese.

23. Kosmetikum oder kosmetische Zusammensetzung, umfassend ein Reaktionsprodukt bzw. einen mit Polycarbonsäuren vernetzten Polyglycerinester der 3-Hydroxybuttersäure, insbesondere einen ein- oder mehrwertigen mit Polycarbonsäuren vernetzten Polyglycerinester der 3-Hydroxybuttersäure, gemäß einem der Ansprüche 8 bis 18 und/oder ein Gemisch gemäß Anspruch 19.

24. Nahrungsmittel- und/oder Lebensmittelerzeugnis, umfassend ein Reaktionsprodukt bzw. einen mit Polycarbonsäuren vernetzten Polyglycerinester der 3-Hydroxybuttersäure, insbesondere einen ein- oder mehrwertigen mit Polycarbonsäuren vernetzten Polyglycerinester der 3-Hydroxybuttersäure, gemäß einem der Ansprüche 8 bis 18 und/oder ein Gemisch gemäß Anspruch 19.

## Claims

1. A method for producing polyglycerol esters of 3-hydroxybutyric acid crosslinked with polycarboxylic acids,
wherein
(i) at least one 3-hydroxybutyric acid compound of the general formula (I)
CH₃ - CH(OH) - CH₂ - C(O)OR¹ (I)
wherein, in the general formula (I), the radical R¹ represents hydrogen, a radical - (O)C - CH₂ - CH(OH) - CH₃ or C₁-C₄-alkyl, especially C₁-C₄-alkyl, preferably methyl or ethyl, more preferably ethyl,
(ii) at least one polyglycerol (II) of the general formula (IIa)
HO - CH₂ - CH(OH) - CH₂ - [O - CH₂ - CH(OH) - CH₂]ₚ - OH (IIa)
wherein, in the general formula (IIa), the variable p represents an integer from 1 to 6,
and
(iii) at least one polycarboxylic acid (III), especially at least one polycarboxylic acid comprising at least two carboxyl groups, wherein the polycarboxylic acid (III) is used in the form of the free polycarboxylic acid, in the form of a salt of the polycarboxylic acid, in the form of a polycarboxylic acid ester or in the form of the polycarboxylic acid anhydride,
are reacted and/or caused to react with one another,
wherein the method is carried out in the absence of solvents and/or without any solvent,
so that, as a reaction product (IV), one or more polyglycerol esters of 3-hydroxybutyric acid crosslinked with polycarboxylic acids, especially one or more mono- or polyvalent polyglycerol esters of 3-hydroxybutyric acid crosslinked with polycarboxylic acids, of the general formula (IVa) 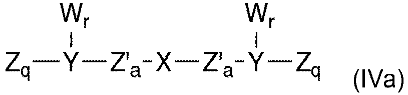 are obtained,
wherein, in the general formula (IVa),
• X represents a radical - C(O) - X' -C(O) -, wherein X' represents a radical derived from a polycarboxylic acid, especially a saturated or unsaturated and optionally mono- or polysubstituted, especially substituted with one or more hydroxyl radicals and/or carboxyl radicals, organic radical comprising 1 to 10, preferentially 2 to 6 carbon atoms;
• Y represents a radical derived from a polyglycerol, especially a radical of the general formula (IIc) 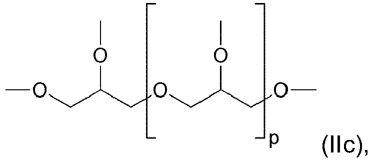 wherein the variable p is an integer from 1 to 6;
• Z represents a radical - C(O) - CH₂ - CH(OH) - CH₃ and the variable q, independently of one another, is an integer from 1 to (p + 2) with p as defined hereinabove;
• Z' represents a radical - C(O) - CH₂ - CH(CH₃) - O - and the variable a, independently of one another, is 0 or 1;
• W, independently of one another, represents: hydrogen or - X - OH with X as defined hereinabove or else one or more blocks 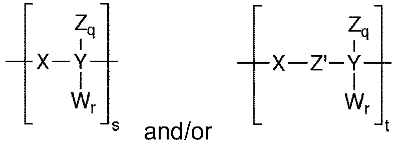 with X, Y, Z, Z' and q each as defined hereinabove, wherein the variables s and t, each independently of one another, are an integer from 0 to 30 and the variable r, independently of one another, is an integer from 0 to (p + 1) with p is as defined hereinabove, wherein the chain end of each of the blocks is formed by hydrogen, - X - OH or Z.

2. The method according to claim 1,
wherein the method is carried out in several stages, especially in two stages;
especially wherein first at least one 3-hydroxybutyric acid compound of the general formula (I) is reacted and/or caused to react with at least one polyglycerol (II), followed by further reaction of the resulting reaction intermediate product (IV'A) with at least one polycarboxylic acid (III) (synthesis route (A)) or else especially wherein at least one polyglycerol (II) is first reacted and/or caused to react with at least one polycarboxylic acid (III), followed by further reaction of the resulting reaction intermediate product (IV'B) with at least one 3-hydroxybutyric acid compound of the general formula (I) (synthesis route (B)).

3. The method according to claim 1 or claim 2,
wherein, according to a (first) synthesis route (A):
(a) in a first method step (a), at least one 3-hydroxybutyric acid compound of the general formula (I)
CH₃ - CH(OH) - CH₂ - C(O)OR¹ (I)
wherein, in the general formula (I), the radical R¹ represents hydrogen, a radical - (O)C - CH₂ - CH(OH) - CH₃ or C₁-C₄-alkyl, especially C₁-C₄-alkyl, preferably methyl or ethyl, more preferably ethyl,
is reacted and/or caused to react, especially reacted and/or caused to react in an esterification reaction and/or under esterification conditions, with at least one polyglycerol (II) of the general formula (IIa)
HO - CH₂ - CH(OH) - CH₂ - [O - CH₂ - CH(OH) - CH₂]ₚ - OH (IIa)
wherein, in the general formula (IIa), the variable p represents an integer from 1 to 6,
especially so that, as a reaction intermediate product (IVA') of the method step (a), one or more polyglycerol esters of 3-hydroxybutyric acid, especially one or more mono- or polyvalent polyglycerol esters of 3hydroxybutyric acid, are obtained; and
(b) subsequently, in a second method step (b), the reaction intermediate product (IVA') obtained in method step (a) is reacted and/or caused to react, especially reacted and/or caused to react in an esterification reaction and/or under esterification conditions, with at least one polycarboxylic acid (III), especially with at least one polycarboxylic acid comprising at least two carboxyl groups, wherein the polycarboxylic acid (III) is used in the form of the free polycarboxylic acid, in the form of a salt of the polycarboxylic acid, in the form of a polycarboxylic acid ester or in the form of the polycarboxylic acid anhydride,
so that, as a reaction product (IV), one or more polyglycerol esters of 3-hydroxybutyric acid crosslinked with polycarboxylic acids, especially one or more mono- or polyvalent polyglycerol esters of 3-hydroxybutyric acid crosslinked with polycarboxylic acids, of the general formula (IVa) 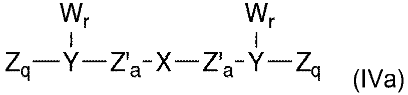 are obtained,
wherein, in the general formula (IVa),
• X represents a radical - C(O) - X' -C(O) -, wherein X' represents a radical derived from a polycarboxylic acid, especially a saturated or unsaturated and optionally mono- or polysubstituted, especially substituted by one or more hydroxyl radicals and/or carboxyl radicals, organic radical comprising 1 to 10, preferentially 2 to 6 carbon atoms;
• Y represents a radical derived from a polyglycerol, especially a radical of the general formula (IIc) 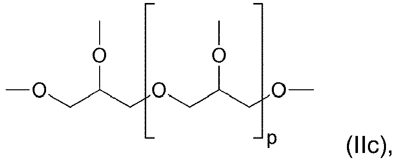 wherein the variable p is an integer from 1 to 6;
• Z represents a radical - C(O) - CH₂ - CH(OH) - CH₃ and the variable q, independently of one another, is an integer from 1 to (p + 2) with p as defined hereinabove;
• Z' represents a radical - C(O) - CH₂ - CH(CH₃) - O - and the variable a, independently of one another, is 0 or 1;
• W, independently of one another, represents: hydrogen or - X - OH with X as defined hereinabove or else one or more blocks 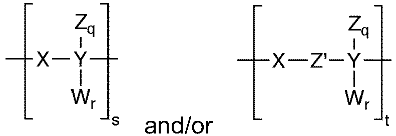 with X, Y, Z, Z' and q each as defined hereinabove, wherein the variables s and t, each independently of one another, are an integer from 0 to 30 and the variable r, independently of one another, is an integer from 0 to (p + 1) with p as defined hereinabove, wherein the chain end of the blocks is in each case formed by hydrogen, - X - OH or Z;
or else
wherein, according to a (second, alternative to (A)) synthesis route (B):
(a) in a first method step (a), at least one polyglycerol (II) of the general formula (Ila)
HO - CH₂ - CH(OH) - CH₂ - [O - CH₂ - CH(OH) - CH₂]ₚ - OH (IIa)
wherein, in the general formula (IIa), the variable p represents an integer from 1 to 6, is reacted and/or caused to react, especially reacted and/or caused to react in an esterification reaction and/or under esterification conditions, with at least one polycarboxylic acid (III), especially with at least one polycarboxylic acid comprising at least two carboxyl groups, wherein the polycarboxylic acid (III) is used in the form of the free polycarboxylic acid, in the form of a salt of the polycarboxylic acid, in the form of a polycarboxylic acid ester or in the form of the polycarboxylic acid anhydride,
especially so that, as a reaction intermediate product (IVB') of the method step (a), one or more polyglycerol esters of the polycarboxylic acid (III), especially one or more mono- or polyvalent polyglycerol esters of the polycarboxylic acid (III), are obtained; and
(b) subsequently, in a second method step (b), the reaction intermediate product (IVB') obtained in method step (a) is reacted and/or caused to react, especially reacted and/or caused to react in an esterification reaction and/or under esterification conditions, with at least one 3-hydroxybutyric acid compound of the general formula (I)
CH₃ - CH(OH) - CH₂ - C(O)OR¹ (I)
wherein, in the general formula (I), the radical R¹ represents hydrogen, a radical - (O)C - CH₂ - CH(OH) - CH₃ or C₁-C₄-alkyl, especially C₁-C₄-alkyl, preferably methyl or ethyl, more preferably ethyl,
so that, as a reaction product (IV), one or more polyglycerol esters of 3-hydroxybutyric acid crosslinked with polycarboxylic acids, especially one or more mono- or polyvalent polyglycerol esters of 3-hydroxybutyric acid crosslinked with polycarboxylic acids, of the general formula (IVa) 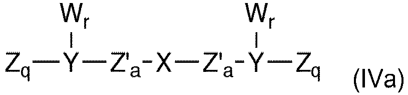 are obtained,
wherein, in the general formula (IVa),
• X represents a radical - C(O) - X' -C(O) -, wherein X' represents a radical derived from a polycarboxylic acid, especially a saturated or unsaturated and optionally mono- or polysubstituted, especially substituted by one or more hydroxyl radicals and/or carboxyl radicals, organic radical comprising 1 to 10, preferentially 2 to 6 carbon atoms;
• Y represents a radical derived from a polyglycerol, especially a radical of the general formula (IIc) 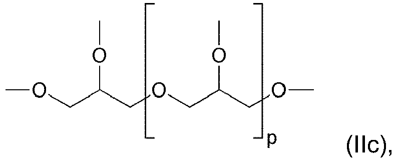 wherein the variable p is an integer from 1 to 6;
• Z represents a radical - C(O) - CH₂ - CH(OH) - CH₃ and the variable q, independently of one another, is an integer from 1 to (p + 2) with p as defined hereinabove;
• Z' represents a radical - C(O) - CH₂ - CH(OH) - CH₃ and the variable a, independently of one another, is 0 or 1;
• W, independently of one another, represents: hydrogen or - X - OH with X as defined hereinabove or else one or more blocks 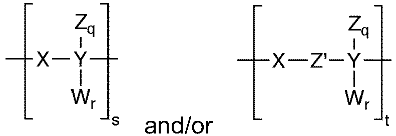 with X, Y, Z, Z' and q each as defined hereinabove, wherein the variables s and t, each independently of one another, are an integer from 0 to 30 and the variable r, independently of one another, is an integer from 0 to (p + 1) with p as defined hereinabove, wherein the chain end of the blocks is in each case formed by hydrogen, - X - OH or Z.

4. The method according to any of the preceding claims,
wherein the polyglycerol (II) is a diglycerol of formula (IIb)
HO - CH₂ - CH(OH) - CH₂ - O - CH₂ - CH(OH) - CH₂ - OH. (IIb)

5. The method according to any of the preceding claims,
wherein the polycarboxylic acid (III) is selected from the group of succinic acid, tartaric acid, citric acid, malic acid, adipic acid, fumaric acid and maleic acid and their anhydrides as well as combinations or mixtures thereof, especially selected from the group of succinic acid, tartaric acid, citric acid, malic acid, adipic acid and fumaric acid and their anhydrides as well as combinations or mixtures thereof, preferably selected from the group of succinic acid and adipic acid and their anhydrides as well as combinations or mixtures thereof; and/or
wherein the polycarboxylic acid (III) is a naturally occurring carboxylic acid or its anhydride or derivative, especially reaction product, especially a carboxylic acid or its anhydride or derivative, especially reaction product, occurring in human and/or animal metabolism; and/or
wherein the polycarboxylic acid (III) is an ingredient, especially an additive, approved under food law.

6. The method according to any one of the preceding claims,
wherein, according to a (first) synthesis route (A):
(a) in a first method step (a), at least one 3-hydroxybutyric acid compound of the general formula (I)
CH₃ - CH(OH) - CH₂ - C(O)OR¹ (I)
wherein, in the general formula (I), the radical R¹ represents hydrogen, a radical - (O)C - CH₂ - CH(OH) - CH₃ or C₁-C₄-alkyl, especially C₁-C₄-alkyl, preferably methyl or ethyl, more preferably ethyl,
is reacted and/or caused to react, especially reacted and/or caused to react in an esterification reaction and/or under esterification conditions, with at least one polyglycerol (II) of the general formula (IIa)
HO - CH₂ - CH(OH) - CH₂ - [O - CH₂ - CH(OH) - CH₂]ₚ - OH (IIa)
wherein, in the general formula (IIa), the variable p represents an integer from 1 to 6, especially from 1 to 4, preferentially 1 or 2, more preferably 1,
especially so that, as a reaction intermediate product (IVA') of the method step (a), one or more polyglycerol esters of 3-hydroxybutyric acid, especially one or more mono- or polyvalent polyglycerol esters of 3-hydroxybutyric acid, are obtained; and
(b) subsequently, in a second method step (b), the reaction intermediate product (IVA') obtained in method step (a) is reacted and/or caused to react, especially reacted and/or caused to react in an esterification reaction and/or under esterification conditions, with at least one polycarboxylic acid (III) selected from the group of succinic acid, tartaric acid, citric acid, malic acid, adipic acid, fumaric acid and maleic acid and their anhydrides as well as combinations or mixtures thereof, especially selected from the group of succinic acid, tartaric acid, citric acid, malic acid, adipic acid and fumaric acid and their anhydrides as well as combinations or mixtures thereof, preferably selected from the group of succinic acid and adipic acid and their anhydrides as well as combinations or mixtures thereof, wherein the polycarboxylic acid (III) is used in the form of the free polycarboxylic acid, in the form of a salt of the polycarboxylic acid, in the form of a polycarboxylic acid ester or in the form of the polycarboxylic acid anhydride,
so that, as a reaction product (IV), one or more polyglycerol esters of 3-hydroxybutyric acid crosslinked with polycarboxylic acids, especially one or more mono- or polyvalent polyglycerol esters of 3-hydroxybutyric acid crosslinked with polycarboxylic acids, of the general formula (IVa) 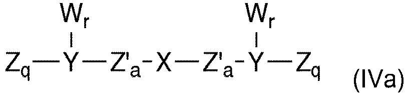 are obtained,
wherein, in the general formula (IVa),
• X represents a radical - C(O) - X' -C(O) -, wherein X' represents a radical derived from a polycarboxylic acid, especially a saturated or unsaturated and optionally mono- or polysubstituted, especially substituted by one or more hydroxyl radicals and/or carboxyl radicals, organic radical comprising 1 to 10, preferentially 2 to 6 carbon atoms;
• Y represents a radical derived from a polyglycerol, especially a radical of the general formula (IIc) 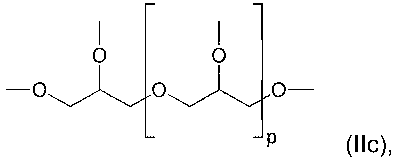 wherein the variable p is an integer from 1 to 6;
• Z represents a radical - C(O) - CH₂ - CH(OH) - CH₃ and the variable q, independently of one another, is an integer from 1 to (p + 2) with p as defined hereinabove;
• Z' represents a radical - C(O) - CH₂ - CH(CH₃) - O - and the variable a, independently of one another, is 0 or 1;
• W, independently of one another, represents: hydrogen or - X - OH with X as defined hereinabove or else one or more blocks 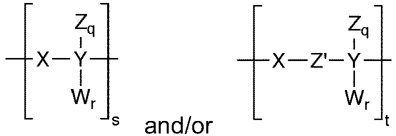 with X, Y, Z, Z' and q each as defined hereinabove, wherein the variables s and t, each independently of one another, are an integer from 0 to 30 and the variable r, independently of one another, is an integer from 0 to (p + 1) with p as defined hereinabove, wherein the chain end of the blocks is in each case formed by hydrogen, - X - OH or Z;
or else
wherein, according to a (second, alternative to (A)) synthesis route (B):
(a) in a first method step (a), at least one polyglycerol (II) of the general formula (Ila)
HO - CH₂ - CH(OH) - CH₂ - [O - CH₂ - CH(OH) - CH₂]ₚ - OH (IIa)
wherein, in the general formula (IIa), the variable p represents an integer from 1 to 6, especially from 1 to 4, preferentially 1 or 2, more preferably 1,
is reacted and/or caused to react, especially reacted and/or caused to react in an esterification reaction and/or under esterification conditions, with at least one polycarboxylic acid (III) selected from the group of succinic acid, tartaric acid, citric acid, malic acid, adipic acid, fumaric acid and maleic acid and their anhydrides as well as combinations or mixtures thereof, especially selected from the group of succinic acid, tartaric acid, citric acid, malic acid, adipic acid and fumaric acid and their anhydrides as well as combinations or mixtures thereof, preferably selected from the group of succinic acid and adipic acid and their anhydrides as well as combinations or mixtures thereof, wherein the polycarboxylic acid (III) is used in the form of the free polycarboxylic acid, in the form of a salt of the polycarboxylic acid, in the form of a polycarboxylic acid ester or in the form of the polycarboxylic acid anhydride,
especially so that, as a reaction intermediate product (IVB') of the method step (a), one or more polyglycerol esters of the polycarboxylic acid (III), especially one or more mono- or polyvalent polyglycerol esters of the polycarboxylic acid (III), are obtained; and
(b) subsequently, in a second method step (b), the reaction intermediate product (IVB') obtained in method step (a) is reacted and/or caused to react, especially reacted and/or caused to react in an esterification reaction and/or under esterification conditions, with at least one 3-hydroxybutyric acid compound of the general formula (I)
CH₃ - CH(OH) - CH₂ - C(O)OR¹ (I)
wherein, in the general formula (I), the radical R¹ represents hydrogen, a radical - (O)C - CH₂ - CH(OH) - CH₃ or C₁-C₄-alkyl, especially C₁-C₄-alkyl, preferably methyl or ethyl, more preferably ethyl,
so that, as a reaction product (IV), one or more polyglycerol esters of 3-hydroxybutyric acid crosslinked with polycarboxylic acids, especially one or more mono- or polyvalent polyglycerol esters of 3-hydroxybutyric acid crosslinked with polycarboxylic acids, of the general formula (IVa) 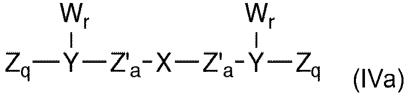 are obtained,
wherein, in the general formula (IVa),
• X represents a radical - C(O) - X' -C(O) -, wherein X' represents a radical derived from a polycarboxylic acid, especially a saturated or unsaturated and optionally mono- or polysubstituted, especially substituted by one or more hydroxyl radicals and/or carboxyl radicals, organic radical comprising 1 to 10, preferentially 2 to 6 carbon atoms;
• Y represents a radical derived from a polyglycerol, especially a radical of the general formula (He) 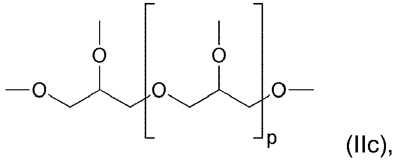 wherein the variable p is an integer from 1 to 6;
• Z represents a radical - C(O) - CH₂ - CH(OH) - CH₃ and the variable q, independently of one another, is an integer from 1 to (p + 2) with p as defined hereinabove;
• Z' represents a radical - C(O) - CH₂ - CH(CH₃) - O - and the variable a, independently of one another, is 0 or 1;
• W, independently of one another, represents: hydrogen or - X - OH with X as defined hereinabove or else one or more blocks 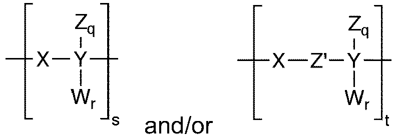 with X, Y, Z, Z' and q each as defined hereinabove, wherein the variables s and t, each independently of one another, are an integer from 0 to 30 and the variable r, independently of one another, is an integer from 0 to (p + 1) with p as defined hereinabove, wherein the chain end of the blocks is in each case formed by hydrogen, - X - OH or Z.

7. The method according to any of the preceding claims,
wherein hydroxyl groups and/or carboxyl groups still present in the reaction product (IV) after the reaction has been performed are at least partially, preferentially completely, functionalized, especially esterified; and/or
wherein the reaction is followed by a partial, especially complete functionalization, especially esterification, of hydroxyl groups and/or carboxyl groups still present.

8. A reaction product (IV) in the form of a polyglycerol ester of 3-hydroxybutyric acid crosslinked with polycarboxylic acids, especially mono- or polyvalent polyglycerol ester of 3-hydroxybutyric acid crosslinked with polycarboxylic acids, obtainable by a method according to any of the preceding claims.

9. A polyglycerol ester of 3-hydroxybutyric acid crosslinked with polycarboxylic acids, especially mono- or polyvalent polyglycerol ester of 3-hydroxybutyric acid crosslinked with polycarboxylic acids,
wherein the polyglycerol ester of 3-hydroxybutyric acid crosslinked with polycarboxylic acids, especially the mono- or polyvalent polyglycerol ester of 3-hydroxybutyric acid crosslinked with polycarboxylic acids, corresponds to the general formula (IVa) 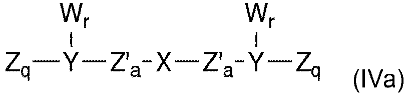
wherein, in the general formula (IVa),
• X represents a radical - C(O) - X' -C(O) -, wherein X' represents a radical derived from a polycarboxylic acid, especially a saturated or unsaturated and optionally mono- or polysubstituted, especially substituted by one or more hydroxyl radicals and/or carboxyl radicals, organic radical comprising 1 to 10, preferentially 2 to 6 carbon atoms;
• Y represents a radical derived from a polyglycerol, especially a radical of the general formula (IIc) 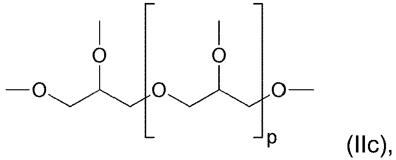 wherein the variable p represents an integer from 1 to 6, especially from 1 to 4, preferentially 1 or 2, more preferably 1;
• Z represents a radical - C(O) - CH₂ - CH(OH) - CH₃ and the variable q, independently of one another, is an integer from 1 to (p + 2) with p as defined hereinabove;
• Z' represents a radical - C(O) - CH₂ - CH(CH₃) - O - and the variable a, independently of one another, is 0 or 1;
• W, independently of one another, represents: hydrogen or - X - OH with X as defined hereinabove or else one or more blocks 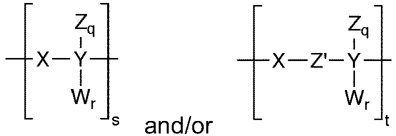 with X, Y, Z, Z' and q each as defined hereinabove, wherein the variables s and t, each independently of one another, are an integer from 0 to 30, especially from 0 to 25, preferentially from 0 to 20, more preferably from 0 to 10, even more preferably from 0 to 5, and the variable r, independently of one another, is an integer from 0 to (p + 1) with p as defined hereinabove, wherein the chain end of the blocks is in each case formed by hydrogen, - X - OH or Z.

10. The polyglycerol ester of 3-hydroxybutyric acid crosslinked with polycarboxylic acids according to claim 8 or claim 9,
wherein the polyglycerol ester of 3-hydroxybutyric acid crosslinked with polycarboxylic acids, especially the mono- or polyvalent polyglycerol ester of 3-hydroxybutyric acid crosslinked with polycarboxylic acids, corresponds to the general formula (IVa) 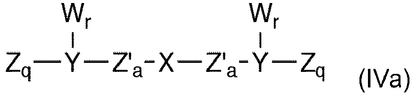
wherein, in the general formula (IVa),
• X represents a radical - C(O) - X' -C(O) -, wherein X' represents a radical derived from a polycarboxylic acid, especially a saturated or unsaturated and optionally mono- or polysubstituted, especially substituted by one or more hydroxyl radicals and/or carboxyl radicals, organic radical comprising 1 to 10, preferentially 2 to 6 carbon atoms;
• Y represents a radical derived from a polyglycerol, especially a radical of the general formula (IId) 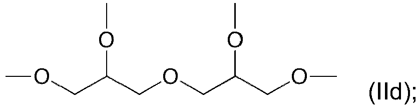
• Z represents a radical - C(O) - CH₂ - CH(OH) - CH₃ and the variable q, independently of one another, is an integer from 1 to (p + 2) with p as defined hereinabove;
• Z' represents a radical - C(O) - CH₂ - CH(CH₃) - O - and the variable a, independently of one another, is 0 or 1;
• W, independently of one another, represents: hydrogen or - X - OH with X as defined hereinabove or else one or more blocks 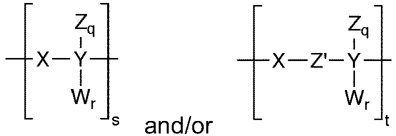 with X, Y, Z, Z' and q each as defined hereinabove, wherein the variables s and t, each independently of one another, are an integer from 0 to 30, especially from 0 to 25, preferentially from 0 to 20, more preferably from 0 to 10, even more preferably from 0 to 5, and the variable r, independently of one another, is an integer from 0 to (p + 1) with p as defined hereinabove, wherein the chain end of the blocks is in each case formed by hydrogen, - X - OH or Z.

11. The polyglycerol ester of 3-hydroxybutyric acid crosslinked with polycarboxylic acids according to any of claims 8 to 10,
where the polyglycerol ester of 3-hydroxybutyric acid crosslinked with polycarboxylic acids, especially the mono- or polyvalent polyglycerol ester of 3-hydroxybutyric acid crosslinked with polycarboxylic acids, corresponds to the general formula (IVa) 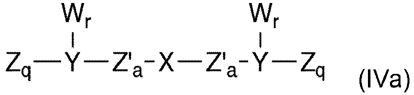
wherein, in the general formula (IVa),
• X represents a radical - C(O) - X' -C(O) -, wherein X' represents a radical derived from a polycarboxylic acid, especially a saturated or unsaturated and optionally mono- or polysubstituted, especially substituted by one or more hydroxyl radicals and/or carboxyl radicals, organic radical comprising 2 to 6 carbon atoms;
• Y represents a radical derived from a polyglycerol, especially a radical of the general formula (IId) 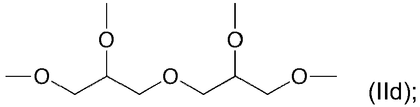
• Z represents a radical - C(O) - CH₂ - CH(OH) - CH₃ and the variable q, independently of one another, is an integer from 1 to (p + 2) with p as defined hereinabove;
• Z' represents a radical - C(O) - CH₂ - CH(CH₃) - O - and the variable a, independently of one another, is 0 or 1;
• W, independently of one another, represents: hydrogen or - X - OH with X as defined hereinabove or else one or more blocks 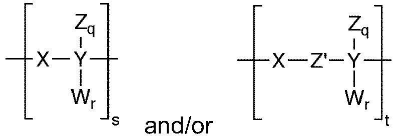 with X, Y, Z, Z' and q each as defined hereinabove, wherein the variables s and t, each independently of one another, are an integer from 0 to 30, especially from 0 to 25, preferentially from 0 to 20, more preferably from 0 to 10, even more preferably from 0 to 5, and the variable r, independently of one another, is an integer from 0 to (p + 1) with p as defined hereinabove, wherein the chain end of the blocks is in each case formed by hydrogen, - X - OH or Z.

12. The polyglycerol ester of 3-hydroxybutyric acid crosslinked with polycarboxylic acids according to any of claims 8 to 11,
wherein the polyglycerol ester of 3-hydroxybutyric acid crosslinked with polycarboxylic acids, especially the mono- or polyvalent polyglycerol ester of 3-hydroxybutyric acid crosslinked with polycarboxylic acids, corresponds to the general formula (IVa) 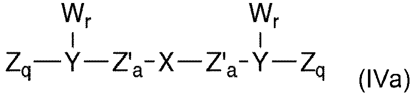
wherein, in the general formula (IVa),
• X is derived from a polycarboxylic acid selected from the group of succinic acid, tartaric acid, citric acid, malic acid, adipic acid, fumaric acid and maleic acid as well as combinations or mixtures thereof, especially selected from the group of succinic acid, tartaric acid, citric acid, malic acid, adipic acid and fumaric acid as well as combinations or mixtures thereof, preferably selected from the group of succinic acid and adipic acid and their anhydrides as well as combinations or mixtures thereof;
• Y represents a radical derived from a polyglycerol, especially a radical of the general formula (IId) 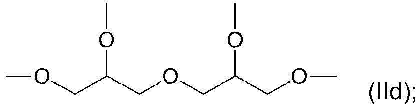
• Z represents a radical - C(O) - CH₂ - CH(OH) - CH₃ and the variable q, independently of one another, is an integer from 1 to (p + 2) with p as defined hereinabove;
• Z' represents a radical - C(O) - CH₂ - CH(CH₃) - O - and the variable a, independently of one another, is 0 or 1;
• W, independently of one another, represents: hydrogen or - X - OH with X as defined hereinabove or else one or more blocks 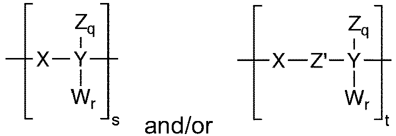 with X, Y, Z, Z' and q each as defined hereinabove, wherein the variables s and t, each independently of one another, are an integer from 0 to 30, especially from 0 to 25, preferentially from 0 to 20, more preferably from 0 to 10, even more preferably from 0 to 5, and the variable r, independently of one another, is an integer from 0 to (p + 1) with p as defined hereinabove, wherein the chain end of the blocks is in each case formed by hydrogen, - X - OH or Z.

13. The polyglycerol ester of 3-hydroxybutyric acid crosslinked with polycarboxylic acids according to any of claims 8 to 12,
wherein the polyglycerol ester of 3-hydroxybutyric acid crosslinked with polycarboxylic acids, especially the mono- or polyvalent polyglycerol ester of 3-hydroxybutyric acid crosslinked with polycarboxylic acids, corresponds to the general formula (IVa) 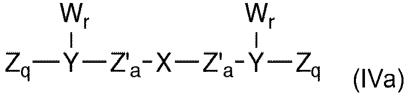
wherein, in the general formula (IVa),
• X represents one of the following radicals: 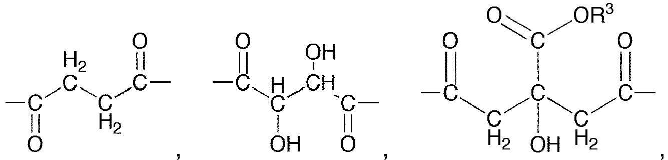 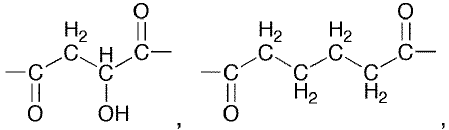 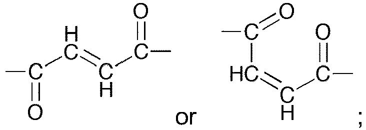 wherein, in the above radicals, the radical R³ represents hydrogen or a radical - CH(CH₃) - CH₂ - C(O)OR¹ with R¹ as defined hereinabove or an optionally substituted polyglycerol radical;
• Y represents a radical derived from a polyglycerol, especially a radical of the general formula (IIc) 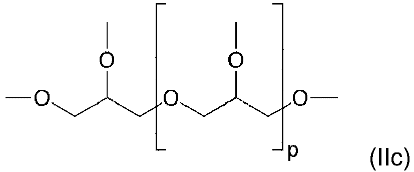 wherein the variable p represents an integer from 1 to 6, especially from 1 to 4, preferentially 1 or 2, more preferably 1;
• Z represents a radical - C(O) - CH₂ - CH(OH) - CH₃ and the variable q, independently of one another, is an integer from 1 to (p + 2) with p as defined hereinabove;
• Z' represents a radical - C(O) - CH₂ - CH(CH₃) - O - and the variable a, independently of one another, is 0 or 1;
• W, independently of one another, represents: hydrogen or - X - OH with X as defined hereinabove or else one or more blocks 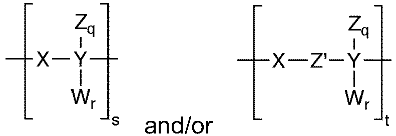 with X, Y, Z, Z' and q each as defined hereinabove, wherein the variables s and t, each independently of one another, are an integer from 0 to 30, especially from 0 to 25, preferentially from 0 to 20, more preferably from 0 to 10, even more preferably from 0 to 5, and the variable r, independently of one another, is an integer from 0 to (p + 1) with p is as defined hereinabove, wherein the chain end of the blocks is in each case formed by hydrogen, - X - OH or Z.

14. The polyglycerol ester of 3-hydroxybutyric acid crosslinked with polycarboxylic acids according to any of claims 8 to 13,
wherein the polyglycerol ester of 3-hydroxybutyric acid crosslinked with polycarboxylic acids, especially the mono- or polyvalent polyglycerol ester of 3-hydroxybutyric acid crosslinked with polycarboxylic acids, corresponds to the general formula (IVa) 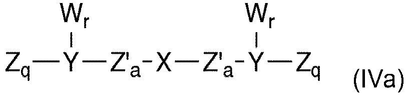
wherein, in the general formula (IVa),
• X represents one of the following radicals: 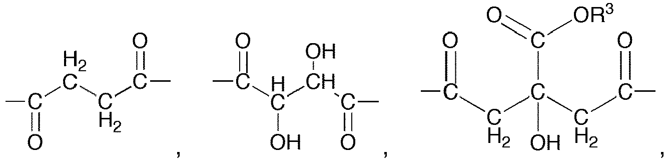 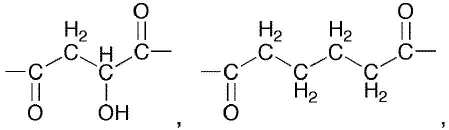 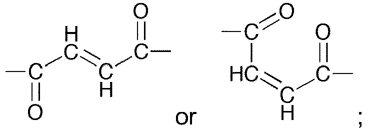 wherein, in the above radicals, the radical R³ represents hydrogen or a radical - CH(CH₃) - CH₂ - C(O)OR¹ with R¹ as defined hereinabove or an optionally substituted polyglycerol radical;
• Y represents a radical derived from a polyglycerol, especially a radical of the general formula (IId) 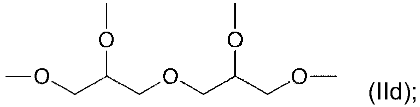
• Z represents a radical - C(O) - CH₂ - CH(OH) - CH₃ and the variable q, independently of one another, is an integer from 1 to (p + 2) with p as defined hereinabove;
• Z' represents a radical - C(O) - CH₂ - CH(CH₃) - O - and the variable a, independently of one another, is 0 or 1;
• W, independently of one another, represents: hydrogen or - X - OH with X as defined hereinabove or else one or more blocks 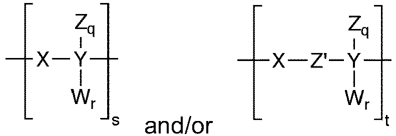 with X, Y, Z, Z' and q each as defined hereinabove, wherein the variables s and t, each independently of one another, are an integer from 0 to 30, especially from 0 to 25, preferentially from 0 to 20, more preferably from 0 to 10, even more preferably from 0 to 5, and the variable r, independently of one another, is an integer from 0 to (p + 1) with p as defined hereinabove, wherein the chain end of the blocks is in each case formed by hydrogen, - X - OH or Z.

15. The polyglycerol ester of 3-hydroxybutyric acid crosslinked with polycarboxylic acids according to any of claims 8 to 14,
wherein the polyglycerol ester of 3-hydroxybutyric acid crosslinked with polycarboxylic acids, especially the mono- or polyvalent polyglycerol ester of 3-hydroxybutyric acid crosslinked with polycarboxylic acids, corresponds to the general formula (IVb) 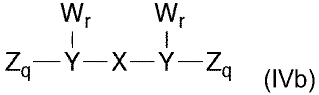
wherein, in the general formula (IVb),
• X represents a radical - C(O) - X' -C(O) -, wherein X' represents a radical derived from a polycarboxylic acid, especially a saturated or unsaturated and optionally mono- or polysubstituted, especially substituted by one or more hydroxyl radicals and/or carboxyl radicals, organic radical comprising 1 to 10, preferentially 2 to 6 carbon atoms;
• Y represents a radical derived from a polyglycerol, especially a radical of the general formula (IIc) 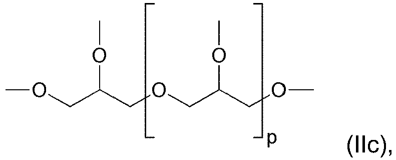 wherein the variable p represents an integer from 1 to 6, especially from 1 to 4, preferentially 1 or 2, more preferably 1;
• Z represents a radical - C(O) - CH₂ - CH(OH) - CH₃ and the variable q, independently of one another, is an integer from 1 to (p + 2) with p as defined hereinabove;
• W, independently of one another, represents: hydrogen or - X - OH with X as defined hereinabove or else a block 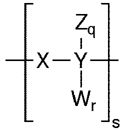 with X, Y, Z and q each as defined hereinabove, wherein the variable s is an integer from 0 to 30, especially from 0 to 25, preferentially from 0 to 20, more preferably from 0 to 10, even more preferably from 0 to 5, and the variable r, independently of one another, is an integer from 0 to (p + 1) with p as defined hereinabove, wherein the chain end of the block is formed by hydrogen, - X - OH or Z.

16. The polyglycerol ester of 3-hydroxybutyric acid crosslinked with polycarboxylic acids according to any of claims 8 to 15,
wherein the polyglycerol ester of 3-hydroxybutyric acid crosslinked with polycarboxylic acids, especially the mono- or polyvalent polyglycerol ester of 3-hydroxybutyric acid crosslinked with polycarboxylic acids, corresponds to the general formula (IVb) 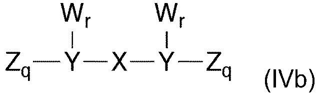
wherein, in the general formula (IVb),
• X represents one of the following radicals: 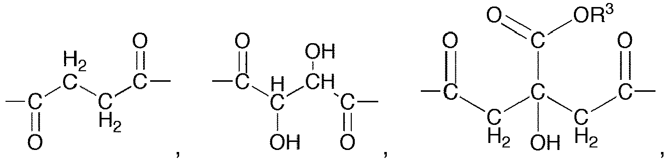 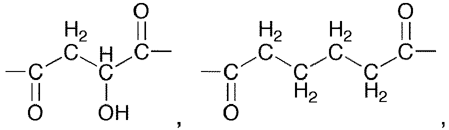 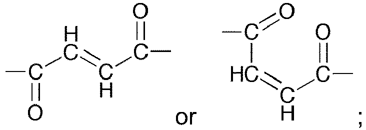 wherein, in the above radicals, the radical R³ represents hydrogen or a radical - CH(CH₃) - CH₂ - C(O)OR¹ with R¹ as defined hereinabove or an optionally substituted polyglycerol radical;
• Y represents a radical derived from a polyglycerol, especially a radical of the general formula (IIc) 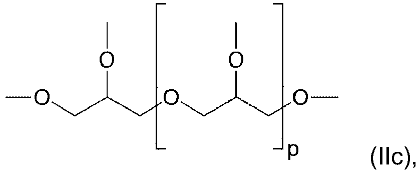 wherein the variable p represents an integer from 1 to 6, especially from 1 to 4, preferentially 1 or 2, more preferably 1;
• Z represents a radical - C(O) - CH₂ - CH(OH) - CH₃ and the variable q, independently of one another, is an integer from 1 to (p + 2) with p as defined hereinabove;
• W, independently of one another, represents: hydrogen or - X - OH with X as defined hereinabove or else a block 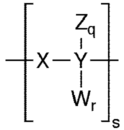 with X, Y, Z and q each as defined hereinabove, wherein the variable s is an integer from 0 to 30, especially from 0 to 25, preferentially from 0 to 20, more preferably from 0 to 10, even more preferably from 0 to 5, and the variable r, independently of one another, is an integer from 0 to (p + 1) with p as defined hereinabove, wherein the chain end of the block is formed by hydrogen, - X - OH or Z.

17. The polyglycerol ester of 3-hydroxybutyric acid crosslinked with polycarboxylic acids according to any of claims 8 to 16,
wherein the polyglycerol ester(s) of 3-hydroxybutyric acid crosslinked with polycarboxylic acids, especially the mono- or polyvalent polyglycerol ester(s) of 3-hydroxybutyric acid crosslinked with polycarboxylic acids, comprise(s) the following units, especially molecular units:
• at least one unit X" of the following formulae: 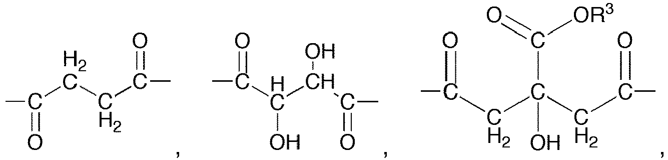 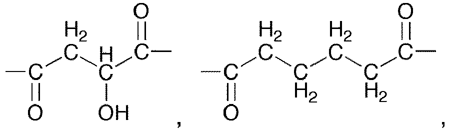 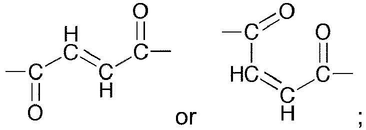 wherein, in the above radicals, the radical R³ represents hydrogen or a radical - CH(CH₃) - CH₂ - C(O)OR¹ with R¹ as defined hereinabove or an optionally substituted polyglycerol radical;
• at least one unit, preferentially at least two units, derived from a polyglycerol, especially at least one unit, preferentially at least two units, of the general formula (IIc) 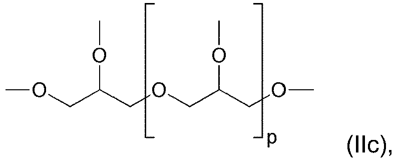 wherein the variable p represents an integer from 1 to 6, especially from 1 to 4, preferentially 1 or 2, more preferably 1;
• at least two units, especially at least three units, preferentially at least four units - C(O) - CH₂ - CH(OH) - CH₃;
• optionally at least one unit - C(O) - CH₂ - CH(CH₃) - O -;
• optionally at least one unit - X" - OH with X" as defined hereinabove.

18. The polyglycerol ester of 3-hydroxybutyric acid crosslinked with polycarboxylic acids according to any of claims 8 to 17,
wherein the polyglycerol ester of 3-hydroxybutyric acid crosslinked with polycarboxylic acids, especially the mono- or polyvalent polyglycerol ester of 3-hydroxybutyric acid crosslinked with polycarboxylic acids, has a molecular weight, especially an average molecular weight, preferentially a weight-average molecular weight, in the range of from 500 to 50,000 g/mol, especially in the range of from 500 to 30,000 g/mol, preferentially in the range of from 500 to 25,000 g/mol, especially determined by size exclusion chromatography (SEC), preferentially gel permeation chromatography (GPC), preferentially according to DIN EN ISO 16014-5: 2019, especially with polystyrene (PS) as standard.

19. A mixture comprising at least two, especially at least three, preferentially at least four different polyglycerol esters of 3-hydroxybutyric acid crosslinked with polycarboxylic acids, especially mono- or polyvalent polyglycerol esters of 3-hydroxybutyric acid crosslinked with polycarboxylic acids, especially as defined hereinabove.

20. A pharmaceutical composition, especially a drug or medicament, comprising a reaction product or a polyglycerol ester of 3-hydroxybutyric acid crosslinked with polycarboxylic acids, especially a mono- or polyvalent polyglycerol ester of 3-hydroxybutyric acid crosslinked with polycarboxylic acids, according to any of claims 8 to 18 and/or a mixture according to claim 19.

21. A reaction product or polyglycerol ester of 3-hydroxybutyric acid crosslinked with polycarboxylic acids, especially mono- or polyvalent polyglycerol ester of 3-hydroxybutyric acid crosslinked with polycarboxylic acids, according to any of claims 8 to 18 and/or a mixture according to claim 19 for use in the prophylactic and/or therapeutic treatment of diseases of the human or animal body, especially diseases associated with a disorder of the energy metabolism, especially keto-body metabolism, such as especially craniocerebral trauma, stroke, hypoxia, cardiovascular diseases such as myocardial infarction, refeeding syndrome, anorexia, epilepsy, neurodegenerative diseases such as dementia, Alzheimer's disease, Parkinson's disease, multiple sclerosis and amyotrophic lateral sclerosis, fat metabolic diseases such as glucose transporter defect (GLUT1 defect), VL-FAOD and mitochondriopathies such as mitochondrial thiolase defect, Huntington's disease, cancers such as T-cell lymphomas, astrocytomas and glioblastomas, HIV, rheumatic diseases such as rheumatoid arthritis and arthritis urica, diseases of the gastrointestinal tract such as chronic inflammatory bowel diseases, especially ulcerative colitis and Crohn's disease, lyosomal storage diseases such as sphingolipidosis, especially Niemann-Pick disease, diabetes mellitus and effects or side-effects of chemotherapy, skin diseases and skin injuries, especially to promote wound healing, to treat wounds or to reduce scarring.

22. Use of a reaction product or of a polyglycerol ester of 3-hydroxybutyric acid crosslinked with polycarboxylic acids, especially a mono- or polyvalent polyglycerol ester of 3-hydroxybutyric acid crosslinked with polycarboxylic acids, according to any of claims 8 to 18 and/or a mixture according to claim 19 in the field of cosmetics and/or in cosmetics, especially cosmetic formulations, preferentially for age prevention (anti-aging), or for tissue engineering, especially for angioneogenesis.

23. A cosmetic or cosmetic composition comprising a reaction product or a polyglycerol ester of 3-hydroxybutyric acid crosslinked with polycarboxylic acids, especially a mono- or polyvalent polyglycerol ester of 3-hydroxybutyric acid crosslinked with polycarboxylic acids, according to any of claims 8 to 18 and/or a mixture according to claim 19.

24. Food and/or food product comprising a reaction product or a polyglycerol ester of 3-hydroxybutyric acid crosslinked with polycarboxylic acids, especially a mono- or polyvalent polyglycerol ester of 3-hydroxybutyric acid crosslinked with polycarboxylic acids, according to any of claims 8 to 18 and/or a mixture according to claim 19.

## Revendications

1. Procédé de préparation d'esters de polyglycérol de l'acide 3-hydroxybutyrique réticulés avec des acides polycarboxyliques,
où
(i) au moins un composé d'acide 3-hydroxybutyrique de formule générale (I)
CH₃ - CH(OH) - CH₂ - C(O)OR¹ (I)
où, dans la formule générale (I), le radical R¹ représente un hydrogène, un radical - (O)C - CH₂ - CH(OH) - CH₃ ou un C₁-C₄-alkyle, en particulier un C₁-C₄-alkyle, de préférence méthyle ou éthyle, de manière particulièrement préférée éthyle,
(ii) au moins un polyglycérol (II) de formule générale (IIa)
HO - CH₂ - CH(OH) - CH₂ - [O - CH₂ - CH(OH) - CH₂]ₚ - OH (IIa)
où, dans la formule générale (IIa), la variable p représente un nombre entier de 1 à 6,
et
(iii) au moins un acide polycarboxylique (III), en particulier au moins un acide polycarboxylique contenant au moins deux groupes carboxyle, l'acide polycarboxylique (III) étant utilisé sous forme d'acide polycarboxylique libre, sous forme d'un sel de l'acide polycarboxylique, sous forme d'un ester d'acide polycarboxylique ou sous forme de l'anhydride d'acide polycarboxylique,
sont amenés à réagir et/ou à réagir entre eux,
le procédé étant mis en oeuvre en l'absence de solvant et/ou sans aucun solvant,
de sorte que l'on obtient comme produit de réaction (IV) un ou plusieurs esters de polyglycérol de l'acide 3-hydroxybutyrique réticulés avec des acides polycarboxyliques, en particulier un ou plusieurs esters de polyglycérol de l'acide 3-hydroxybutyrique mono- ou polyvalents réticulés avec des acides polycarboxyliques, de formule générale (IVa) 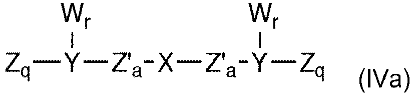
où, dans la formule générale (IVa)
• X représente un radical - C(O) - X' -C(O) -, où X' représente un radical dérivé d'un acide polycarboxylique, en particulier un radical organique saturé ou insaturé contenant 1 à 10, de préférence 2 à 6 atomes de carbone et éventuellement substitué une ou plusieurs fois, en particulier substitué par un ou plusieurs radicaux hydroxyle et/ou radicaux carboxyle;
• Y représente un radical dérivé d'un polyglycérol, en particulier un radical de formule générale (Ilc) 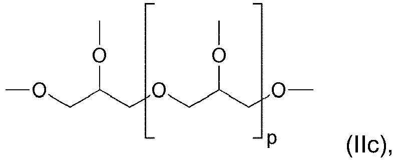 où la variable p est un nombre entier de 1 à 6;
• Z représente un radical - C(O) - CH₂ - CH(OH) - CH₃ et la variable q est indépendamment un nombre entier de 1 à (p + 2) avec p tel que défini précédemment;
• Z' représente un radical - C(O) - CH₂ - CH(CH₃) - O - et la variable a est indépendamment 0 ou 1;
• W représente indépendamment l'un de l'autre : l'hydrogène ou - X - OH avec X tel que défini précédemment ou bien un ou plusieurs blocs 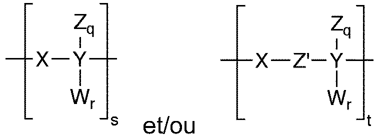 avec X, Y, Z, Z' et q sont chacun tels que définis ci-dessus, les variables s et t, chacune indépendamment l'une de l'autre, étant un nombre entier de 0 à 30 et la variable r étant indépendamment un nombre entier de 0 à (p + 1), p étant tel que défini ci-dessus, l'extrémité de la chaîne des blocs étant formée par l'hydrogène, - X - OH ou Z, respectivement.

2. Procédé selon la revendication 1,
le procédé étant réalisé en plusieurs étapes, notamment en deux étapes;
en particulier où l'on fait d'abord réagir au moins un composé d'acide 3-hydroxybutyrique de formule générale (I) avec au moins un polyglycérol (II), suivi d'une autre réaction du produit intermédiaire de réaction (IV'A) résultant avec au moins un acide polycarboxylique (III) (voie de synthèse (A)), ou plus particulièrement où l'on fait d'abord réagir au moins un polyglycérol (II) avec au moins un acide polycarboxylique (III), suivi d'une autre réaction du produit réactionnel intermédiaire résultant (IV'B) avec au moins un composé d'acide 3-hydroxybutyrique de formule générale (I) (voie de synthèse (B)).

3. Procédé selon la revendication 1 ou la revendication 2,
où, selon une (première) route de synthèse (A):
(a) dans une première étape de procédé (a), au moins un composé d'acide 3-hydroxybutyrique de formule générale (I)
CH₃ - CH(OH) - CH₂ - C(O)OR¹ (I)
où, dans la formule générale (I), le radical R¹ représente un hydrogène, un radical - (O)C - CH₂ - CH(OH) - CH₃ ou un C₁-C₄-alkyle, en particulier un C₁-C₄-alkyle, de préférence méthyle ou éthyle, de manière particulièrement préférée éthyle,
avec au moins un polyglycérol (II) de formule générale (IIa)
HO - CH₂ - CH(OH) - CH₂ - [O - CH₂ - CH(OH) - CH₂]ₚ - OH (IIa)
où dans la formule générale (IIa), la variable p représente un nombre entier de 1 à 6, est mis à réagir et/ou est amené à réagir, en particulier dans une réaction d'estérification et/ou dans des conditions d'estérification,
en particulier de manière à -obtenir comme produit réactionnel intermédiaire (IVA') du procédé étape (a) un ou plusieurs esters polyglycériques de l'acide 3-hydroxybutyrique, en particulier un ou plusieurs esters polyglycériques mono- ou polyvalents de l'acide 3-hydroxybutyrique; et
(b) ensuite, dans une deuxième étape de procédé (b), on fait réagir le produit intermédiaire de réaction (IVA') obtenu dans l'étape de procédé (a) avec au moins un acide polycarboxylique (III), en particulier avec au moins un acide polycarboxylique contenant au moins deux groupes carboxyle, l'acide polycarboxylique (III) étant utilisé sous forme d'acide polycarboxylique libre, sous forme d'un sel de l'acide polycarboxylique, sous forme d'un ester d'acide polycarboxylique ou sous forme de l'anhydride d'acide polycarboxylique est utilisé, est mis en réaction et/ou amené à réagir, en particulier est mis en réaction et/ou amené à réagir dans une réaction d'estérification et/ou dans des conditions d'estérification,
de sorte que l'on obtient comme produit de réaction (IV) un ou plusieurs esters de polyglycérol de l'acide 3-hydroxybutyrique réticulés avec des acides polycarboxyliques, en particulier un ou plusieurs esters de polyglycérol de l'acide 3-hydroxybutyrique mono- ou polyvalents réticulés avec des acides polycarboxyliques, de formule générale (IVa) 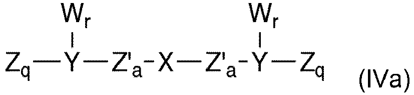
où, dans la formule générale (IVa)
• X représente un radical - C(O) - X' -C(O) -, où X' représente un radical dérivé d'un acide polycarboxylique, en particulier un radical organique saturé ou insaturé contenant 1 à 10, de préférence 2 à 6 atomes de carbone et éventuellement substitué une ou plusieurs fois, en particulier substitué par un ou plusieurs radicaux hydroxyle et/ou radicaux carboxyle;
• Y représente un radical dérivé d'un polyglycérol, en particulier un radical de formule générale (IIc) 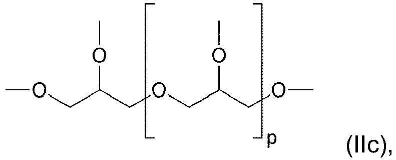 où la variable p est un nombre entier de 1 à 6;
• Z représente un radical - C(O) - CH₂ - CH(OH) - CH₃ et la variable q est indépendamment un nombre entier de 1 à (p + 2) avec p tel que défini précédemment;
• Z' représente un radical - C(O) - CH₂ - CH(CH₃) - O - et la variable a est indépendamment 0 ou 1;
• W représente indépendamment l'un de l'autre : l'hydrogène ou - X - OH avec X tel que défini précédemment ou bien un ou plusieurs blocs 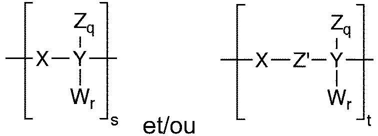 avec X, Y, Z, Z' et q sont chacun tels que définis ci-dessus, les variables s et t, chacune indépendamment l'une de l'autre, étant un nombre entier de 0 à 30, et la variable r étant indépendamment un nombre entier de 0 à (p + 1), p étant tel que défini ci-dessus, l'extrémité de chaîne des blocs étant formée par l'hydrogène, - X - OH ou Z, respectivement;
ou alors
où, selon une (deuxième) voie de synthèse (B) alternative à (A):
(a) dans une première étape de procédé (a), au moins un polyglycérol (II) de formule générale (IIa)
HO - CH₂ - CH(OH) - CH₂ - [O - CH₂ - CH(OH) - CH₂]ₚ - OH (IIa)
dans la formule générale (IIa), la variable p représente un nombre entier de 1 à 6, avec au moins un acide polycarboxylique (III), en particulier avec au moins un acide polycarboxylique contenant au moins deux groupes carboxyle, l'acide polycarboxylique (III) étant utilisé sous la forme de l'acide polycarboxylique libre, sous la forme d'un sel de l'acide polycarboxylique, sous la forme d'un ester d'acide polycarboxylique ou sous la forme de l'anhydride d'acide polycarboxylique, est mis à réagir et/ou est amené à réagir, en particulier dans une réaction d'estérification et/ou dans des conditions d'estérification,
en particulier de manière à obtenir comme produit intermédiaire de réaction (IVB') de l'étape de procédé (a) un ou plusieurs esters de polyglycérol de l'acide polycarboxylique (III), en particulier un ou plusieurs esters de polyglycérol mono- ou polyvalents de l'acide polycarboxylique (III); et
(b) ensuite, dans une deuxième étape de procédé (b), on fait réagir le produit intermédiaire de réaction (IVB') obtenu dans l'étape de procédé (a) avec au moins un composé d'acide -3-hydroxybutyrique de formule générale (I)
CH₃- CH(OH) - CH₂- C(O)OR¹ (I)
où, dans la formule générale (I), le radical R¹ représente un hydrogène, un radical - (O)C - CH₂ - CH(OH) - CH₃ ou un C₁-C₄-alkyle, en particulier un C₁-C₄-alkyle, de préférence méthyle ou éthyle, de manière particulièrement préférée éthyle, est mis en réaction et/ou amené à réagir, en particulier est mis en réaction et/ou amené à réagir dans une réaction d'estérification et/ou dans des conditions d'estérification,
de sorte que l'on obtient comme produit de réaction (IV) un ou plusieurs esters de polyglycérol de l'acide 3-hydroxybutyrique réticulés avec des acides polycarboxyliques, en particulier un ou plusieurs esters de polyglycérol de l'acide 3-hydroxybutyrique mono- ou polyvalents réticulés avec des acides polycarboxyliques, de formule générale (IVa) 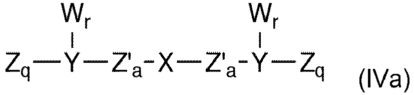
où, dans la formule générale (IVa)
• X représente un radical - C(O) - X' -C(O) -, où X' représente un radical dérivé d'un acide polycarboxylique, en particulier un radical organique saturé ou insaturé contenant 1 à 10, de préférence 2 à 6 atomes de carbone et éventuellement substitué une ou plusieurs fois, en particulier substitué par un ou plusieurs radicaux hydroxyle et/ou radicaux carboxyle;
• Y représente un radical dérivé d'un polyglycérol, en particulier un radical de formule générale (IIc) 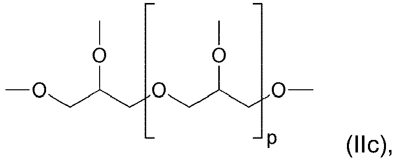 où la variable p est un nombre entier de 1 à 6;
• Z représente un radical - C(O) - CH₂ - CH(OH) - CH₃ et la variable q est indépendamment un nombre entier de 1 à (p + 2) avec p tel que défini précédemment;
• Z' représente un radical - C(O) - CH₂ - CH(CH₃) - O - et la variable a est indépendamment 0 ou 1;
• W représente indépendamment l'un de l'autre : l'hydrogène ou - X - OH avec X tel que défini précédemment ou bien un ou plusieurs blocs 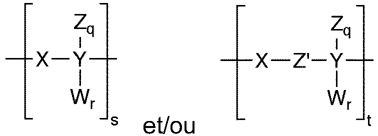 avec X, Y, Z, Z' et q sont chacun tels que définis ci-dessus, les variables s et t, chacune indépendamment l'une de l'autre, étant un nombre entier de 0 à 30, et la variable r étant indépendamment un nombre entier de 0 à (p + 1), p étant tel que défini ci-dessus, l'extrémité de chaîne des blocs étant formée par l'hydrogène, - X - OH ou Z, respectivement.

4. Procédé selon l'une quelconque des revendications précédentes,
où le polyglycérol (II) est un diglycérol de formule (IIb)
HO - CH₂ - CH(OH) - CH₂ - O - CH₂ - CH(OH) - CH₂ - OH (IIb)

5. Procédé selon l'une quelconque des revendications précédentes,
où l'acide polycarboxylique (III) est choisi dans le groupe de l'acide succinique, de l'acide tartrique, de l'acide citrique, de l'acide malique, de l'acide adipique, de l'acide fumarique et de l'acide maléique et de leurs anhydrides ainsi que de leurs combinaisons ou mélanges, en particulier choisi dans le groupe de l'acide succinique, l'acide tartrique, l'acide citrique, l'acide malique, l'acide adipique et l'acide fumarique et leurs anhydrides ainsi que leurs combinaisons ou mélanges, de préférence est choisi dans le groupe de l'acide succinique et de l'acide adipique et leurs anhydrides ainsi que leurs combinaisons ou mélanges; et/ou où l'acide polycarboxylique (III) est un acide carboxylique d'origine naturelle ou son anhydride ou dérivé, en particulier un produit de réaction, en particulier un acide carboxylique présent dans le métabolisme humain et/ou animal ou son anhydride ou dérivé, en particulier un produit de réaction; et/ou
où l'acide polycarboxylique (III) est un ingrédient, en particulier un additif, autorisé par la législation sur les denrées alimentaires.

6. Procédé selon l'une quelconque des revendications précédentes,
où, selon une (première) route de synthèse (A):
(a) dans une première étape de procédé (a), au moins un composé d'acide 3-hydroxybutyrique de formule générale (I)
CH₃ - CH(OH) - CH₂ - C(O)OR¹ (I)
où, dans la formule générale (I), le radical R¹ représente un hydrogène, un radical - (O)C - CH₂ - CH(OH) - CH₃ ou un C₁-C₄-alkyle, en particulier un C₁-C₄-alkyle, de préférence méthyle ou éthyle, de manière particulièrement préférée éthyle,
avec au moins un polyglycérol (II) de formule générale (IIa)
HO - CH₂ - CH(OH) - CH₂ - [O - CH₂ - CH(OH) - CH₂]ₚ - OH (IIa)
où, dans la formule générale (IIa), la variable p représente un nombre entier de 1 à 6, en particulier de 1 à 4, de préférence 1 ou 2, de manière particulièrement préférée 1,
est mis en réaction et/ou amené à réagir, en particulier dans une réaction d'estérification et/ou dans des conditions d'estérification,
en particulier de manière à -obtenir comme produit intermédiaire de réaction (IVA') de l'étape de procédé (a) un ou plusieurs esters de polyglycérol de l'acide 3-hydroxybutyrique, en particulier un ou plusieurs esters de polyglycérol mono- ou polyvalents de l'acide 3-hydroxybutyrique; et
(b) ensuite, dans une deuxième étape de procédé (b), on fait réagir le produit intermédiaire de réaction (IVA') obtenu dans l'étape de procédé (a) avec au moins un acide polycarboxylique (III), choisi dans le groupe de l'acide succinique, de l'acide tartrique, de l'acide citrique, de l'acide malique, de l'acide adipique, de l'acide sulfurique, de l'acide sulfurique et de l'acide sulfurique, acide fumarique et acide maléique et leurs anhydrides ainsi que leurs combinaisons ou mélanges, en particulier choisi dans le groupe de l'acide succinique, de l'acide tartrique, de l'acide citrique, de l'acide malique, de l'acide adipique et de l'acide fumarique et leurs anhydrides ainsi que leurs combinaisons ou mélanges, de préférence choisi dans le groupe de l'acide succinique et de l'acide adipique et de leurs anhydrides ainsi que de leurs combinaisons ou mélanges, l'acide polycarboxylique (III) étant utilisé sous la forme de l'acide polycarboxylique libre, sous la forme d'un sel de l'acide polycarboxylique, sous la forme d'un ester d'acide polycarboxylique ou sous la forme de l'anhydride d'acide polycarboxylique, étant transformé et/ou amené à réagir, en particulier étant transformé et/ou amené à réagir dans une réaction d'estérification et/ou dans des conditions d'estérification,
de sorte que l'on obtient comme produit de réaction (IV) un ou plusieurs esters de polyglycérol de l'acide 3-hydroxybutyrique réticulés avec des acides polycarboxyliques, en particulier un ou plusieurs esters de polyglycérol de l'acide 3-hydroxybutyrique mono- ou polyvalents réticulés avec des acides polycarboxyliques, de formule générale (IVa) 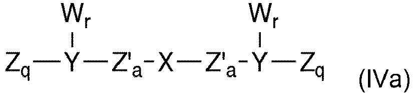
où, dans la formule générale (IVa)
• X représente un radical - C(O) - X' -C(O) -, où X' représente un radical dérivé d'un acide polycarboxylique, en particulier un radical organique saturé ou insaturé contenant 1 à 10, de préférence 2 à 6 atomes de carbone et éventuellement substitué une ou plusieurs fois, en particulier substitué par un ou plusieurs radicaux hydroxyle et/ou radicaux carboxyle;
• Y représente un radical dérivé d'un polyglycérol, en particulier un radical de formule générale (IIc) 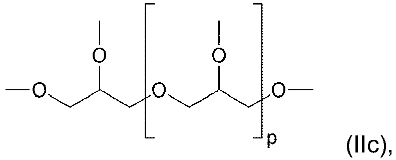 où la variable p est un nombre entier de 1 à 6;
• Z représente un radical - C(O) - CH₂ - CH(OH) - CH₃ et la variable q est indépendamment un nombre entier de 1 à (p + 2) avec p tel que défini précédemment;
• Z' représente un radical - C(O) - CH₂ - CH(CH₃) - O - et la variable a est indépendamment 0 ou 1;
• W représente indépendamment l'un de l'autre : l'hydrogène ou - X - OH avec X tel que défini précédemment ou bien un ou plusieurs blocs 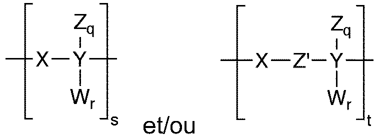 avec X, Y, Z, Z' et q sont chacun tels que définis ci-dessus, les variables s et t, chacune indépendamment, étant un nombre entier de 0 à 30, et la variable r étant indépendamment un nombre entier de 0 à (p + 1), p étant tel que défini ci-dessus, l'extrémité de la chaîne des blocs étant formée par l'hydrogène, - X - OH ou Z, respectivement;
ou alors
où, selon une (deuxième) voie de synthèse (B) alternative à (A):
(a) dans une première étape de procédé (a), au moins un polyglycérol (II) de formule générale (IIa)
HO - CH₂ - CH(OH) - CH₂ - [O - CH₂ - CH(OH) - CH₂]ₚ - OH (IIa)
où, dans la formule générale (IIa), la variable p représente un nombre entier de 1 à 6, en particulier de 1 à 4, de préférence 1 ou 2, de manière particulièrement préférée 1,
avec au moins un acide polycarboxylique (III), choisi dans le groupe de l'acide succinique, de l'acide tartrique, de l'acide citrique, de l'acide malique, de l'acide adipique, de l'acide fumarique et de l'acide maléique et de leurs anhydrides ainsi que de leurs combinaisons ou mélanges, en particulier choisi dans le groupe de l'acide succinique, de l'acide tartrique, de l'acide citrique, de l'acide malique, de l'acide adipique et de l'acide fumarique et de leurs anhydrides ainsi que de leurs combinaisons ou mélanges, de préférence choisi dans le groupe de l'acide succinique et de l'acide adipique et de leurs anhydrides ainsi que de leurs combinaisons ou mélanges, l'acide polycarboxylique (III) étant utilisé sous la forme de l'acide polycarboxylique libre, sous la forme d'un sel de l'acide polycarboxylique, sous la forme d'un ester d'acide polycarboxylique ou sous la forme de l'anhydride d'acide polycarboxylique, étant transformé et/ou amené à réagir, en particulier étant transformé et/ou amené à réagir dans une réaction d'estérification et/ou dans des conditions d'estérification,
en particulier de manière à obtenir comme produit intermédiaire de réaction (IVB') de l'étape de procédé (a) un ou plusieurs esters de polyglycérol de l'acide polycarboxylique (III), en particulier un ou plusieurs esters de polyglycérol mono- ou polyvalents de l'acide polycarboxylique (III); et
(b) ensuite, dans une deuxième étape de procédé (b), on fait réagir le produit intermédiaire de réaction (IVB') obtenu dans l'étape de procédé (a) avec au moins un composé d'acide -3-hydroxybutyrique de formule générale (I)
CH₃ - CH(OH) - CH₂ - C(O)OR¹ (I)
où, dans la formule générale (I), le radical R¹ représente un hydrogène, un radical - (O)C - CH₂ - CH(OH) - CH₃ ou un C₁-C₄-alkyle, en particulier un C₁-C₄-alkyle, de préférence méthyle ou éthyle, de manière particulièrement préférée éthyle, est mis en réaction et/ou amené à réagir, en particulier est mis en réaction et/ou amené à réagir dans une réaction d'estérification et/ou dans des conditions d'estérification,
de sorte que l'on obtient comme produit de réaction (IV) un ou plusieurs esters de polyglycérol de l'acide 3-hydroxybutyrique réticulés avec des acides polycarboxyliques, en particulier un ou plusieurs esters de polyglycérol de l'acide 3-hydroxybutyrique mono- ou polyvalents réticulés avec des acides polycarboxyliques, de formule générale (IVa) 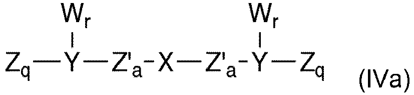
où, dans la formule générale (IVa)
• X représente un radical - C(O) - X' -C(O) -, où X' représente un radical dérivé d'un acide polycarboxylique, en particulier un radical organique saturé ou insaturé contenant 1 à 10, de préférence 2 à 6 atomes de carbone et éventuellement substitué une ou plusieurs fois, en particulier substitué par un ou plusieurs radicaux hydroxyle et/ou radicaux carboxyle;
• Y représente un radical dérivé d'un polyglycérol, en particulier un radical de formule générale (IIc) 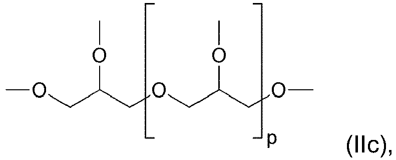 où la variable p est un nombre entier de 1 à 6;
• Z représente un radical - C(O) - CH₂ - CH(OH) - CH₃ et la variable q est indépendamment un nombre entier de 1 à (p + 2) avec p tel que défini précédemment;
• Z' représente un radical - C(O) - CH₂ - CH(CH₃) - O - et la variable a est indépendamment 0 ou 1;
• W représente indépendamment l'un de l'autre: l'hydrogène ou - X - OH avec X tel que défini précédemment ou bien un ou plusieurs blocs 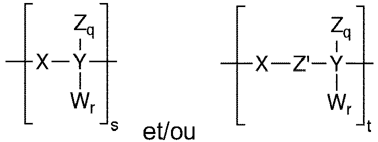 avec X, Y, Z, Z' et q sont chacun tels que définis ci-dessus, les variables s et t, chacune indépendamment, étant un nombre entier de 0 à 30, et la variable r étant indépendamment un nombre entier de 0 à (p + 1), p étant tel que défini ci-dessus, l'extrémité de la chaîne des blocs étant formée par l'hydrogène, - X - OH ou Z, respectivement.

7. Procédé selon l'une quelconque des revendications précédentes,
où les groupes hydroxyle et/ou les groupes carboxyle encore présents dans le produit de réaction (IV) après la réalisation de la réaction sont au moins partiellement, de préférence complètement, fonctionnalisés, en particulier estérifiés; et/ou
où la réaction est suivie d'une fonctionnalisation partielle, en particulier complète, en particulier d'une estérification, de groupes hydroxyle et/ou de groupes carboxyle encore présents.

8. Produit de réaction (IV) sous forme d'un ester de polyglycérol (ester polyglycérique) de l'acide 3-hydroxybutyrique réticulé avec des acides polycarboxyliques, en particulier d'un ester de polyglycérol (ester polyglycérique) de l'acide 3-hydroxybutyrique mono- ou polyvalent réticulé avec des acides polycarboxyliques, pouvant être obtenu par un procédé selon l'une des revendications précédentes.

9. Ester de polyglycérol (ester polyglycérique) de l'acide 3-hydroxybutyrique réticulé avec des acides polycarboxyliques, en particulier ester de polyglycérol (ester polyglycérique) de l'acide 3-hydroxybutyrique monovalents ou polyvalents réticulés avec des acides polycarboxyliques,
où l'ester de polyglycérol de l'acide 3-hydroxybutyrique réticulé avec des acides polycarboxyliques, en particulier l'ester de polyglycérol de l'acide 3-hydroxybutyrique mono- ou polyvalent réticulé avec des acides polycarboxyliques, correspond à la formule générale (IVa) 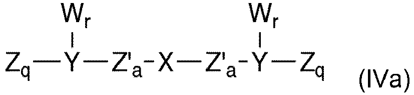
où, dans la formule générale (IVa)
• X représente un radical - C(O) - X' -C(O) -, où X' représente un radical dérivé d'un acide polycarboxylique, en particulier un radical organique saturé ou insaturé contenant 1 à 10, de préférence 2 à 6 atomes de carbone et éventuellement substitué une ou plusieurs fois, en particulier substitué par un ou plusieurs radicaux hydroxyle et/ou radicaux carboxyle;
• Y représente un radical dérivé d'un polyglycérol, en particulier un radical de formule générale (Ilc) 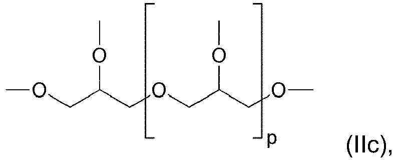 la variable p étant un nombre entier de 1 à 6, en particulier de 1 à 4, de préférence 1 ou 2, de manière particulièrement préférée 1;
• Z représente un radical - C(O) - CH₂ - CH(OH) - CH₃ et la variable q est indépendamment un nombre entier de 1 à (p + 2) avec p tel que défini précédemment;
• Z' représente un radical - C(O) - CH₂ - CH(CH₃) - O - et la variable a est indépendamment 0 ou 1;
• W représente indépendamment l'un de l'autre : l'hydrogène ou - X - OH avec X tel que défini précédemment ou bien un ou plusieurs blocs 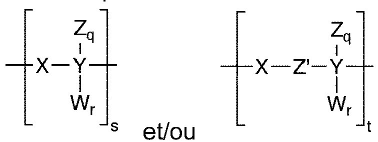 avec X, Y, Z, Z' et q respectivement définis comme précédemment, les variables s et t, respectivement indépendantes l'une de l'autre, étant un nombre entier de 0 à 30, en particulier de 0 à 25, de préférence de 0 à 20, de manière particulièrement préférée de 0 à 10, de manière tout particulièrement préférée de 0 à 5, et la variable r, indépendamment l'une de l'autre, étant un nombre entier de 0 à (p + 1) avec p défini comme précédemment, l'extrémité de cha ne des blocs étant formée respectivement par l'hydrogène, - X - OH ou Z.

10. Ester de polyglycérol de l'acide 3-hydroxybutyrique réticulé par des acides polycarboxyliques -selon la revendication 8 ou la revendication 9,
où l'ester de polyglycérol de l'acide 3-hydroxybutyrique réticulé avec des acides polycarboxyliques, en particulier l'ester de polyglycérol de l'acide 3-hydroxybutyrique mono- ou polyvalent réticulé avec des acides polycarboxyliques, correspond à la formule générale (IVa) 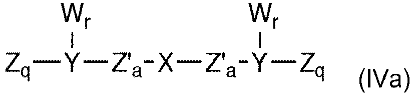
où, dans la formule générale (IVa)
• X représente un radical - C(O) - X' -C(O) -, où X' représentant un radical dérivé d'un acide polycarboxylique, en particulier un radical organique saturé ou insaturé contenant 1 à 10, de préférence 2 à 6 atomes de carbone et éventuellement substitué une ou plusieurs fois, en particulier substitué par un ou plusieurs radicaux hydroxyle et/ou radicaux carboxyle;
• Y représente un radical dérivé d'un polyglycérol, en particulier un radical de formule générale (IId) 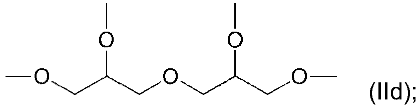
• Z représente un radical - C(O) - CH₂ - CH(OH) - CH₃ et la variable q est indépendamment un nombre entier de 1 à (p + 2) avec p tel que défini précédemment;
• Z' représente un radical - C(O) - CH₂ - CH(CH₃) - O - et la variable a est indépendamment 0 ou 1;
• W représente indépendamment l'un de l'autre: l'hydrogène ou - X - OH avec X tel que défini précédemment ou bien un ou plusieurs blocs 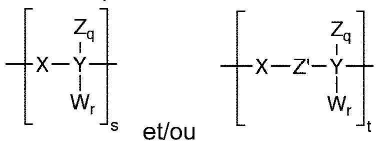 avec X, Y, Z, Z' et q respectivement définis comme précédemment, les variables s et t, respectivement indépendantes l'une de l'autre, étant un nombre entier de 0 à 30, en particulier de 0 à 25, de préférence de 0 à 20, de manière particulièrement préférée de 0 à 10, de manière tout particulièrement préférée de 0 à 5, et la variable r, indépendamment l'une de l'autre, étant un nombre entier de 0 à (p + 1) avec p défini comme précédemment, l'extrémité de cha ne des blocs étant formée respectivement par l'hydrogène, - X - OH ou Z.

11. Ester de polyglycérol de l'acide 3-hydroxybutyrique réticulé par des acides polycarboxyliques -selon l'une quelconque des revendications 8 à 10,
où l'ester de polyglycérol de l'acide 3-hydroxybutyrique réticulé avec des acides polycarboxyliques, en particulier l'ester de polyglycérol de l'acide 3-hydroxybutyrique mono- ou polyvalent réticulé avec des acides polycarboxyliques, correspond à la formule générale (IVa) 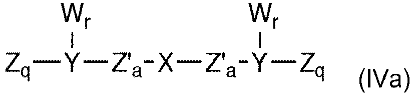
où, dans la formule générale (IVa)
• X représente un radical - C(O) - X' -C(O) -, où X' représente un radical dérivé d'un acide polycarboxylique, en particulier un radical organique saturé ou insaturé contenant de 2 à 6 atomes de carbone et éventuellement substitué une ou plusieurs fois, en particulier substitué par un ou plusieurs radicaux hydroxyle et/ou radicaux carboxyle;
• Y représente un radical dérivé d'un polyglycérol, en particulier un radical de formule générale (IId) 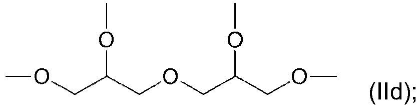
• Z représente un radical - C(O) - CH₂ - CH(OH) - CH₃ et la variable q est indépendamment un nombre entier de 1 à (p + 2) avec p tel que défini précédemment;
• Z' représente un radical - C(O) - CH₂ - CH(CH₃) - O - et la variable a est indépendamment 0 ou 1;
• W représente indépendamment l'un de l'autre: l'hydrogène ou - X - OH avec X tel que défini précédemment ou bien un ou plusieurs blocs 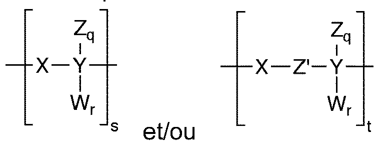 avec X, Y, Z, Z' et q respectivement définis comme précédemment, les variables s et t, respectivement indépendantes l'une de l'autre, étant un nombre entier de 0 à 30, en particulier de 0 à 25, de préférence de 0 à 20, de manière particulièrement préférée de 0 à 10, de manière tout particulièrement préférée de 0 à 5, et la variable r, indépendamment l'une de l'autre, étant un nombre entier de 0 à (p + 1) avec p défini comme précédemment, l'extrémité de cha ne des blocs étant formée respectivement par l'hydrogène, - X - OH ou Z.

12. Ester de polyglycérol de l'acide 3-hydroxybutyrique réticulé par des acides polycarboxyliques -selon l'une quelconque des revendications 8 à 11,
où l'ester de polyglycérol de l'acide 3-hydroxybutyrique réticulé avec des acides polycarboxyliques, en particulier l'ester de polyglycérol de l'acide 3-hydroxybutyrique mono- ou polyvalent réticulé avec des acides polycarboxyliques, correspond à la formule générale (IVa) 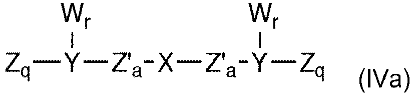
où, dans la formule générale (IVa)
• X est dérivé d'un acide polycarboxylique choisi dans le groupe de l'acide succinique, de l'acide tartrique, de l'acide citrique, de l'acide malique, de l'acide adipique, de l'acide fumarique et de l'acide maléique ainsi que leurs combinaisons ou mélanges, en particulier choisi dans le groupe de l'acide succinique, de l'acide tartrique, de l'acide citrique, de l'acide malique, de l'acide adipique et de l'acide fumarique ainsi que leurs combinaisons ou mélanges, de préférence choisi dans le groupe de l'acide succinique et de l'acide adipique et de leurs anhydrides ainsi que leurs combinaisons ou mélanges;
• Y représente un radical dérivé d'un polyglycérol, en particulier un radical de formule générale (IId) 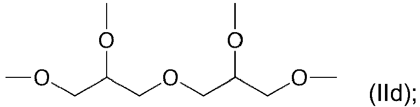
• Z représente un radical - C(O) - CH₂ - CH(OH) - CH₃ et la variable q est indépendamment un nombre entier de 1 à (p + 2) avec p tel que défini précédemment;
• Z' représente un radical - C(O) - CH₂ - CH(CH₃) - O - et la variable a est indépendamment 0 ou 1;
• W représente indépendamment l'un de l'autre : l'hydrogène ou - X - OH avec X tel que défini précédemment ou bien un ou plusieurs blocs 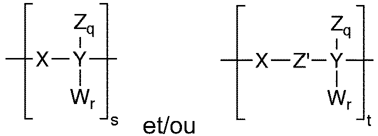 avec X, Y, Z, Z' et q respectivement définis comme précédemment, les variables s et t, respectivement indépendantes l'une de l'autre, étant un nombre entier de 0 à 30, en particulier de 0 à 25, de préférence de 0 à 20, de manière particulièrement préférée de 0 à 10, de manière tout particulièrement préférée de 0 à 5, et la variable r, indépendamment l'une de l'autre, étant un nombre entier de 0 à (p + 1) avec p défini comme précédemment, l'extrémité de cha ne des blocs étant formée respectivement par l'hydrogène, - X - OH ou Z.

13. Ester de polyglycérol de l'acide 3-hydroxybutyrique réticulé par des acides polycarboxyliques -selon l'une quelconque des revendications 8 à 12,
où l'ester de polyglycérol de l'acide 3-hydroxybutyrique réticulé avec des acides polycarboxyliques, en particulier l'ester de polyglycérol de l'acide 3-hydroxybutyrique mono- ou polyvalent réticulé avec des acides polycarboxyliques, correspond à la formule générale (IVa) 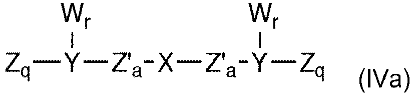
où, dans la formule générale (IVa)
• X représente l'un des radicaux suivants: 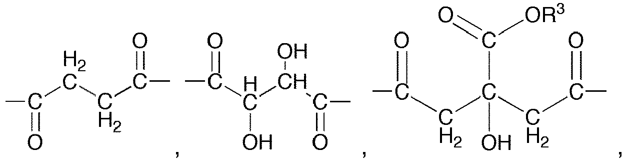 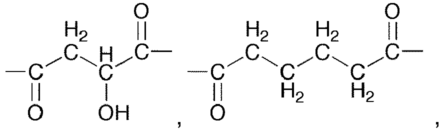 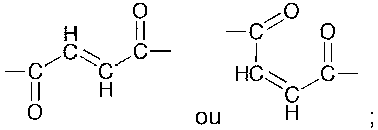 où, dans les radicaux précédents, le radical R³ représente l'hydrogène ou un radical - CH(CH₃) - CH₂ - C(O)OR¹ avec R¹ tel que défini précédemment ou un radical polyglycérol éventuellement substitué;
• Y représente un radical dérivé d'un polyglycérol, en particulier un radical de formule générale (Ilc) 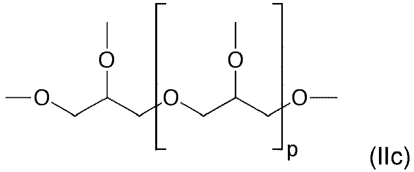 la variable p étant un nombre entier de 1 à 6, en particulier de 1 à 4, de préférence de 1 ou 2, de préférence encore de 1;
• Z représente un radical - C(O) - CH₂ - CH(OH) - CH₃ et la variable q est indépendamment un nombre entier de 1 à (p + 2) avec p tel que défini précédemment;
• Z' représente un radical - C(O) - CH₂ - CH(CH₃) - O - et la variable a est indépendamment 0 ou 1;
• W représente indépendamment l'un de l'autre : l'hydrogène ou - X - OH avec X tel que défini précédemment ou bien un ou plusieurs blocs 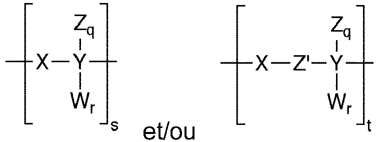 avec X, Y, Z, Z' et q respectivement définis comme précédemment, les variables s et t, respectivement indépendantes l'une de l'autre, étant un nombre entier de 0 à 30, en particulier de 0 à 25, de préférence de 0 à 20, de manière particulièrement préférée de 0 à 10, de manière tout particulièrement préférée de 0 à 5, et la variable r, indépendamment l'une de l'autre, étant un nombre entier de 0 à (p + 1) avec p défini comme précédemment, l'extrémité de cha ne des blocs étant formée respectivement par l'hydrogène, - X - OH ou Z.

14. Ester de polyglycérol de l'acide 3-hydroxybutyrique réticulé par des acides polycarboxyliques -selon l'une quelconque des revendications 8 à 13,
où l'ester de polyglycérol de l'acide 3-hydroxybutyrique réticulé avec des acides polycarboxyliques, en particulier l'ester de polyglycérol de l'acide 3-hydroxybutyrique mono- ou polyvalent réticulé avec des acides polycarboxyliques, correspond à la formule générale (IVa) 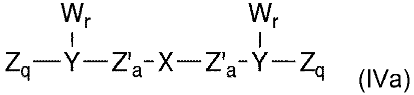
où, dans la formule générale (IVa)
• X représente l'un des radicaux suivants : 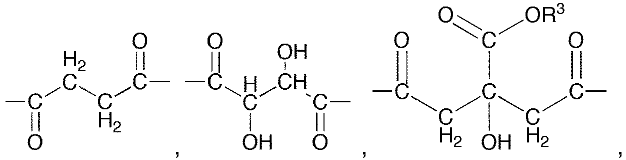 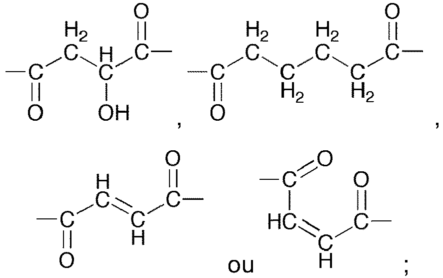 où, dans les radicaux précédents, le radical R³ représente l'hydrogène ou un radical - CH(CH₃) - CH₂ - C(O)OR¹ avec R¹ tel que défini précédemment ou un radical polyglycérol éventuellement substitué;
• Y représente un radical dérivé d'un polyglycérol, en particulier un radical de formule générale (IId) 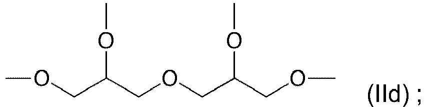
• Z représente un radical - C(O) - CH₂ - CH(OH) - CH₃ et la variable q est indépendamment un nombre entier de 1 à (p + 2) avec p tel que défini précédemment;
• Z' représente un radical - C(O) - CH₂ - CH(CH₃) - O - et la variable a est indépendamment 0 ou 1;
• W représente indépendamment l'un de l'autre : l'hydrogène ou - X - OH avec X tel que défini précédemment ou bien un ou plusieurs blocs 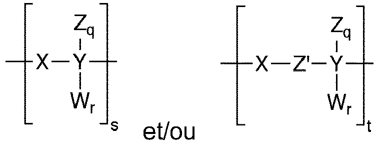 avec X, Y, Z, Z' et q respectivement définis comme précédemment, les variables s et t, respectivement indépendantes l'une de l'autre, étant un nombre entier de 0 à 30, en particulier de 0 à 25, de préférence de 0 à 20, de manière particulièrement préférée de 0 à 10, de manière tout particulièrement préférée de 0 à 5, et la variable r, indépendamment l'une de l'autre, étant un nombre entier de 0 à (p + 1) avec p défini comme précédemment, l'extrémité de cha ne des blocs étant formée respectivement par l'hydrogène, - X - OH ou Z.

15. Ester de polyglycérol de l'acide 3-hydroxybutyrique réticulé par des acides polycarboxyliques -selon l'une quelconque des revendications 8 à 14,
où l'ester de polyglycérol de l'acide 3-hydroxybutyrique réticulé avec des acides polycarboxyliques, en particulier l'ester de polyglycérol de l'acide 3-hydroxybutyrique mono- ou polyvalent réticulé avec des acides polycarboxyliques, correspond à la formule générale (IVb) 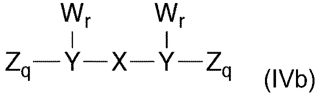
où, dans la formule générale (IVb)
• X représente un radical - C(O) - X' -C(O) -, où X' représente un radical dérivé d'un acide polycarboxylique, en particulier un radical organique saturé ou insaturé contenant 1 à 10, de préférence 2 à 6 atomes de carbone et éventuellement substitué une ou plusieurs fois, en particulier substitué par un ou plusieurs radicaux hydroxyle et/ou radicaux carboxyle;
• Y représente un radical dérivé d'un polyglycérol, en particulier un radical de formule générale (Ilc) 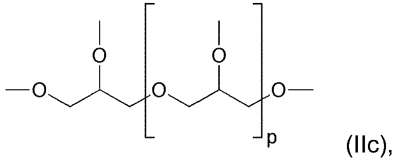 la variable p étant un nombre entier de 1 à 6, en particulier de 1 à 4, de préférence 1 ou 2, de manière particulièrement préférée 1;
• Z représente un radical - C(O) - CH₂ - CH(OH) - CH₃ et la variable q est indépendamment un nombre entier de 1 à (p + 2) avec p tel que défini précédemment;
• W représente indépendamment l'un de l'autre: l'hydrogène ou - X - OH avec X tel que défini précédemment ou bien un bloc 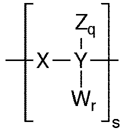 avec X, Y, Z et q respectivement tels que définis précédemment, la variable s étant un nombre entier de 0 à 30, en particulier de 0 à 25, de préférence de 0 à 20, plus préférentiellement de 0 à 10, tout particulièrement de 0 à 5, et la variable r étant indépendamment un nombre entier de 0 à (p + 1) avec p tel que défini précédemment, l'extrémité de chaîne du bloc étant formée par l'hydrogène, - X - OH ou Z.

16. Ester de polyglycérol de l'acide 3-hydroxybutyrique réticulé par des acides polycarboxyliques -selon l'une quelconque des revendications 8 à 15,
où l'ester de polyglycérol de l'acide 3-hydroxybutyrique réticulé avec des acides polycarboxyliques, en particulier l'ester de polyglycérol de l'acide 3-hydroxybutyrique mono- ou polyvalent réticulé avec des acides polycarboxyliques, correspond à la formule générale (IVb) 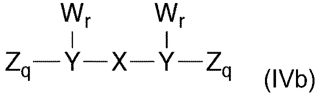
où, dans la formule générale (IVb)
• X représente l'un des radicaux suivants: 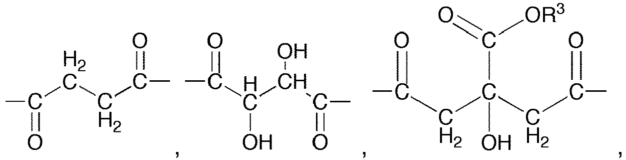 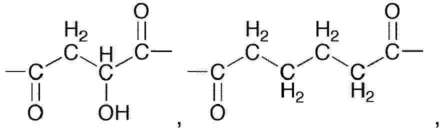 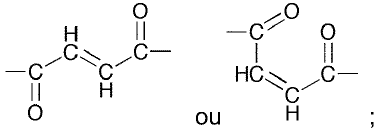 où, dans les radicaux précédents, le radical R³ représente un atome d'hydrogène ou un radical - CH(CH₃) - CH₂ - C(O)OR¹ avec R¹ tel que défini précédemment ou un résidu de polyglycérol éventuellement substitué;
• Y représente un radical dérivé d'un polyglycérol, en particulier un radical de formule générale (IIc) 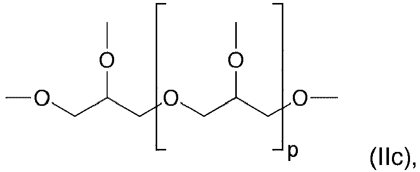 la variable p étant un nombre entier de 1 à 6, en particulier de 1 à 4, de préférence 1 ou 2, de manière particulièrement préférée 1;
• Z représente un radical - C(O) - CH₂ - CH(OH) - CH₃ et la variable q est indépendamment un nombre entier de 1 à (p + 2) avec p tel que défini précédemment;
• W représente indépendamment l'un de l'autre: l'hydrogène ou - X - OH avec X tel que défini précédemment ou bien un bloc 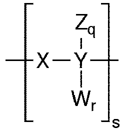 avec X, Y, Z et q respectivement tels que définis précédemment, la variable s étant un nombre entier de 0 à 30, en particulier de 0 à 25, de préférence de 0 à 20, plus préférentiellement de 0 à 10, tout particulièrement de 0 à 5, et la variable r étant indépendamment un nombre entier de 0 à (p + 1) avec p tel que défini précédemment, l'extrémité de chaîne du bloc étant formée par l'hydrogène, - X - OH ou Z.

17. Ester de polyglycérol de l'acide -3-hydroxybutyrique réticulé par des acides polycarboxyliques selon l'une quelconque des revendications 8 à 16,
le ou les esters de polyglycérol de l'acide 3-hydroxybutyrique réticulés avec des acides polycarboxyliques, en particulier le ou les esters de polyglycérol de l'acide 3-hydroxybutyrique monovalents ou polyvalents réticulés avec des acides polycarboxyliques, comprenant les unités suivantes, en particulier des éléments constitutifs de la molécule:
• au moins une unité X" des formules suivantes: 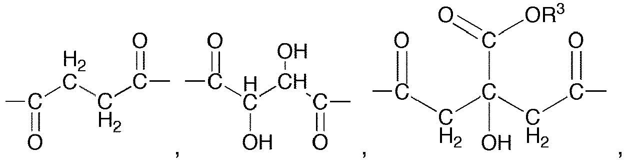 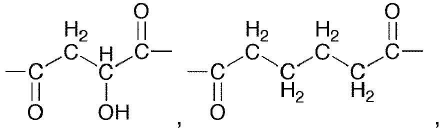 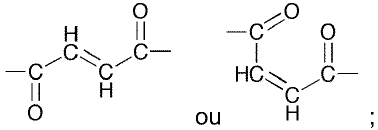 où, dans les radicaux précédents, le radical R³ représente un atome d'hydrogène ou un radical - CH(CH₃) - CH₂ - C(O)OR¹ avec R¹ tel que défini précédemment ou un résidu de polyglycérol éventuellement substitué;
• au moins un motif, de préférence au moins deux motifs, dérivé d'un polyglycérol, en particulier au moins un motif, de préférence au moins deux motifs, de formule générale (IIc) 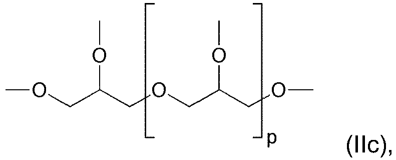 la variable p étant un nombre entier de 1 à 6, en particulier de 1 à 4, de préférence 1 ou 2, de manière particulièrement préférée 1;
• au moins deux unités, en particulier au moins trois unités, de préférence au moins quatre unités - C(O) - CH₂ - CH(OH) - CH₃;
• éventuellement au moins un motif - C(O) - CH₂ - CH(CH₃) - O -;
• éventuellement au moins un motif - X" - OH avec X" tel que défini précédemment.

18. Ester de polyglycérol de l'acide 3-hydroxybutyrique réticulé par des acides polycarboxyliques -selon l'une quelconque des revendications 8 à 17,
où l'ester de polyglycérol de l'acide 3-hydroxybutyrique réticulé avec des acides polycarboxyliques, en particulier l'ester de polyglycérol de l'acide 3-hydroxybutyrique mono- ou polyvalent réticulé avec des acides polycarboxyliques, a un poids moléculaire, en particulier un poids moléculaire moyen, de préférence un poids moléculaire moyen en poids, dans la plage de 500 à 50.000 g/mol, en particulier dans la plage de 500 à 30.000 g/mol, de préférence dans la plage de 500 à 25.000 g/mol, en particulier déterminé par chromatographie d'exclusion de taille (SEC), de préférence par chromatographie de perméation sur gel (GPC), de préférence selon DIN EN ISO 16014-5:2019, en particulier avec du polystyrène (PS) comme standard.

19. Mélange comprenant au moins deux, en particulier au moins trois, de préférence au moins quatre esters de polyglycérol de l'acide 3-hydroxybutyrique réticulés avec des acides polycarboxyliques, différents les uns des autres, en particulier des esters de polyglycérol de l'acide 3-hydroxybutyrique monovalents ou polyvalents réticulés avec des acides polycarboxyliques, en particulier comme défini précédemment.

20. Composition pharmaceutique, en particulier médicament ou médicament, comprenant un produit de réaction ou un ester de polyglycérol de l'-acide 3-hydroxybutyrique réticulé par des acides polycarboxyliques, en particulier un ester de polyglycérol de l'acide 3-hydroxybutyrique mono- ou polyvalent réticulé par des acides polycarboxyliques, selon l'une quelconque des revendications 8 à 18 et/ou un mélange selon la revendication 19.

21. Produit de réaction ou esters polyglycériques de l'acide 3-hydroxybutyrique réticulés avec des acides polycarboxyliques, en particulier esters polyglycériques de l'acide 3-hydroxybutyrique monovalents ou polyvalents réticulés avec des acides polycarboxyliques, selon l'une des revendications 8 à 18 et/ou un mélange selon la revendication 19, pour une utilisation dans le traitement prophylactique et/ou thérapeutique de maladies du corps humain ou animal, notamment les maladies liées à une perturbation du métabolisme énergétique, en particulier du métabolisme des corps cétoniques, telles que notamment les traumatismes crâniens, les accidents vasculaires cérébraux, les hypoxies, les maladies cardiovasculaires telles que l'infarctus du myocarde, le syndrome de réalimentation, les anorexies, l'épilepsie, les maladies neurodégénératives telles que la démence, la maladie d'Alzheimer, la maladie de Parkinson, sclérose en plaques et sclérose latérale amyotrophique, maladies du métabolisme lipidique telles que le déficit en transporteur de glucose (déficit GLUT1), VL-FAOD et mitochondriopathies telles que le déficit en thiolase mitochondriale, chorée de Huntington, maladies cancéreuses telles que lymphomes à cellules T, astrocytomes et glioblastomes, VIH, maladies rhumatismales telles que polyarthrite rhumatoïde et arthrite urique, les maladies du tractus gastrointestinal telles que les maladies inflammatoires chroniques de l'intestin, en particulier la colite ulcéreuse et la maladie de Crohn, les maladies du stockage lyosomique telles que les sphingolipidoses, en particulier la maladie de Niemann-Pick, le diabète sucré et les effets ou effets secondaires des chimiothérapies, les maladies de la peau et les lésions cutanées, en particulier pour favoriser la cicatrisation, traiter les plaies ou réduire la formation de cicatrices.

22. Utilisation d'un produit de réaction ou d'un ester de polyglycérol de l'acide 3-hydroxybutyrique réticulé par des acides polycarboxyliques, en particulier d'un ester de polyglycérol de l'acide 3-hydroxybutyrique mono- ou polyvalent réticulé par des acides polycarboxyliques, selon l'une des revendications 8 à 18 et/ou un mélange selon la revendication 19 dans le domaine de la cosmétique et/ou dans des produits cosmétiques, en particulier des formulations cosmétiques, de préférence pour la prévention du vieillissement (anti-aging), ou pour la culture ou la construction de tissus (tissue engineering), en particulier pour l'angioneogenèse.

23. Produit cosmétique ou composition cosmétique comprenant un produit de réaction ou un ester de polyglycérol réticulé par des acides polycarboxyliques de l'acide 3-hydroxybutyrique, en particulier un ester de polyglycérol mono- ou polyvalent réticulé par des acides polycarboxyliques de l'acide 3-hydroxybutyrique, selon l'une des revendications 8 à 18 et/ou un mélange selon la revendication 19.

24. Produit alimentaire et/ou nutritionnel comprenant un produit de réaction ou un ester de polyglycérol réticulé par des acides polycarboxyliques de l'acide 3-hydroxybutyrique, en particulier un ester de polyglycérol mono- ou polyvalent réticulé par des acides polycarboxyliques de l'acide 3-hydroxybutyrique, selon l'une quelconque des revendications 8 à 18 et/ou un mélange selon la revendication 19.
